(19) Europäisches Patentamt
European Patent Office
Office européen des brevets

(11) EP 4 316 854 A1

(12) EUROPEAN PATENT APPLICATION
published in accordance with Art. 153(4) EPC

(43) Date of publication:
**07.02.2024 Bulletin 2024/06**

(21) Application number: **22781240.1**

(22) Date of filing: **31.03.2022**

(51) International Patent Classification (IPC):
***B41J 2/01*** *(2006.01)* ***B41J 2/175*** *(2006.01)*
***C09D 11/322*** *(2014.01)* ***C09D 11/36*** *(2014.01)*
***B41M 5/00*** *(2006.01)*

(52) Cooperative Patent Classification (CPC):
**B41J 2/01; B41J 2/175; B41M 5/00; C09B 47/10; C09B 47/14; C09B 57/00; C09B 57/12; C09B 67/0033; C09B 67/006; C09D 11/033; C09D 11/037; C09D 11/322; C09D 11/36; C09D 11/38**

(86) International application number:
**PCT/JP2022/016546**

(87) International publication number:
**WO 2022/211030 (06.10.2022 Gazette 2022/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.03.2021 JP 2021062455**
**31.03.2021 JP 2021062476**
**01.04.2021 JP 2021062477**

(71) Applicant: **DNP Fine Chemicals Co., Ltd.**
**Yokohama-shi, Kanagawa 226-0022 (JP)**

(72) Inventors:
- **ORIKASA Yuka**
  **Yokohama-shi, Kanagawa 226-0022 (JP)**
- **YOSHIMORI Keishiro**
  **Yokohama-shi, Kanagawa 226-0022 (JP)**
- **MATSUMOTO Kisei**
  **Yokohama-shi, Kanagawa 226-0022 (JP)**
- **UTAKA Koujun**
  **Yokohama-shi, Kanagawa 226-0022 (JP)**
- **TAMURA Mitsuyoshi**
  **Yokohama-shi, Kanagawa 226-0022 (JP)**

(74) Representative: **Hasegawa, Kan**
**Patentanwaltskanzlei Hasegawa**
**Untere Hauptstraße 56**
**85354 Freising (DE)**

# (54) NONAQUEOUS INK COMPOSITION, INK SET, RECORDING METHOD USING SAME, METHOD FOR PRODUCING RECORDED MATTER, RECORDED MATTER, AND INKJET RECORDING DEVICE

(57) The present invention provides a nonaqueous ink composition which is suitable for use as a nonaqueous ink composition to be ejected by means of an inkjet method even though at least one pigment that is selected from the group consisting of a perinone pigment, a diketopyrrolopyrrole pigment and a halogenated phthalocyanine pigment is contained therein.

A nonaqueous ink composition to be ejected by means of an inkjet method, the nonaqueous ink composition containing a pigment, a pigment dispersant and an organic solvent, wherein: the pigment contains at least one of a pigment A1 represented by formula (1-1), a pigment A2 represented by formula (1-2) and a halogenated phthalocyanine pigment A3; and the pH values of the pigment A1 and the pigment A2 are within the range of 3 to 9.

EP 4 316 854 A1

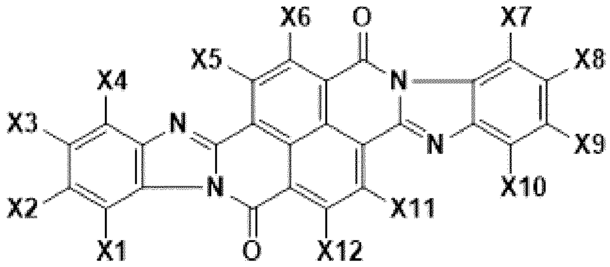

...(1-1)

(In formula (1-1), each of X1 to X12 independently represents a hydrogen atom, a halogen atom, an optionally branched alkyl group having 1 to 5 carbon atoms, an aromatic hydrocarbon group in which hydrogen atom may be replaced, a cyano group, a nitro group, an amino group, -OH, -COOH, $-COO-M^+$, $-SO_3H$, $-SO_3-M^+$, a phthalimide group which may be substituted by a hydrogen atom, a phthalimide methyl group, or a heterocyclic compound; and M+ represents a cation.)

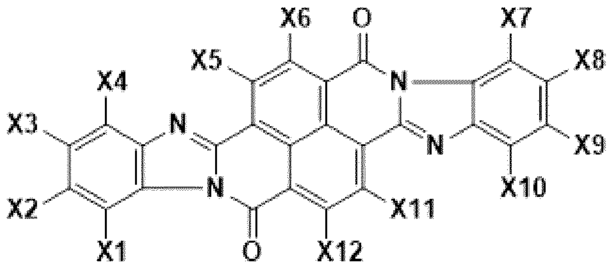

...(1-2)

(In formula (1-2), each of X1 to X10 independently represents a hydrogen atom, a halogen atom, an optionally branched alkyl group having 1 to 5 carbon atoms, an aromatic hydrocarbon group in which hydrogen atom may be replaced, a cyano group, a nitro group, an amino group, -OH, -COOH, $-COO-M^+$, $-SO_3H$, $-SO_3-M^+$, a phthalimide group which may be substituted by a hydrogen atom, a phthalimide methyl group, or a heterocyclic compound; and M+ represents a cation.)

## Description

TECHNICAL FIELD

The present invention relates to a nonaqueous ink composition, an ink set, a recording method using the same, a method for producing a recorded matter, a recorded matter, and an inkjet recording device.

BACKGROUND ART

As an ink composition, an aqueous ink composition in which a colorant is dissolved or dispersed in water or a mixed liquid of water and an organic solvent, or a nonaqueous ink composition in which a colorant is dissolved or dispersed in an organic solvent not containing water is widely used.
For example, Patent Document 1 describes an aqueous pigment containing a perinone pigment and an azo compound as a pigment, and an aqueous ink composition for inkjet recording using the aqueous pigment.
According to Patent Document 1, it is described that the nonaqueous ink composition has good storage stability by containing the perinone pigment and the azo compound.
Patent Document 2 discloses a nonaqueous ink composition containing a pigment containing a diketopyrrolopyrrole pigment as a pigment, an organic solvent, and an inorganic metal, and containing a predetermined amount of a metal element. According to Patent Document 2, it is described that the nonaqueous ink composition has excellent chroma of a recorded matter and has excellent storage stability.
Patent Document 3 discloses an ink composition for inkjet recording containing a copper complex dye (copper phthalocyanine), in which a free copper ion concentration in the ink composition is 10 ppm or less.
According to Patent Document 3, it is described that the ink composition has high various characteristics required for the ink composition for inkjet recording without a precipitate.
Patent Document 1: Japanese Unexamined Patent Application, Publication No. 2012-172070
Patent Document 2: Japanese Unexamined Patent Application, Publication No. 2017-132891
Patent Document 3: Japanese Unexamined Patent Application, Publication No. 2000-355665

DISCLOSURE OF THE INVENTION

Problems to be Solved by the Invention

Since the perinone pigment has weather resistance, the ink composition containing the perinone pigment is particularly suitable for producing a recorded matter used outdoors.
However, the present inventors have found that the perinone pigment is easy to aggregate in the nonaqueous ink composition.
Thus, there are cases where a characteristic required for a nonaqueous ink composition that is ejected by an inkjet method is not satisfied, such as clogging of a nozzle that ejects ink in an inkjet printer and a decrease in an inkjet ejecting property or the like.
In addition, when the ink composition is ejected through an inkjet head by the inkjet method, a solid component such as a resin contained in the nonaqueous ink composition may clog the nozzle in the inkjet head.
Therefore, the inkjet recording device has a cleaning recovery function of eliminating clogging of the nozzle in such an inkjet head.
However, the present inventors have found that clogging of the nozzle cannot be sufficiently eliminated even when a nonaqueous ink composition containing the diketopyrrolopyrrole pigment is ejected by the inkjet method and then the clogging of the nozzle in the inkjet head is eliminated by the cleaning recovery function.
In the present specification, performance capable of eliminating the clogging of the nozzle in the inkjet head by the cleaning recovery function is referred to as a cleaning recovery property.
In addition, a halogenated phthalocyanine pigment in which a part of hydrogen of a pigment having a phthalocyanine structure is substituted with halogen is known.
The phthalocyanine pigment is halogenated, resulting in a pigment that exhibits green.
By using a green ink containing the pigment that exhibits green in addition to normal four color inks, chroma is improved as compared with a case where green is reproduced by two colors, a yellow ink and a cyan ink, so that color reproducibility can be improved.
In addition, the phthalocyanine pigment has higher weather resistance than a yellow pigment generally used

in the yellow ink.

Therefore, by using the green ink containing the halogenated phthalocyanine pigment, the weather resistance of the obtained recorded matter can be improved as compared with a case of using two colors, the yellow ink and the cyan ink.

However, the present inventors have found that the nonaqueous ink composition containing the halogenated phthalocyanine pigment has a problem in that the pigment is easily precipitated in the nonaqueous ink composition and storage stability is poor.

Such a nonaqueous ink composition having poor storage stability may not be able to sufficiently eliminate the clogging of the nozzle even when the clogging of the nozzle in the inkjet head is eliminated by the cleaning recovery function of the inkjet recording device.

In addition, the present inventors have found out a problem that when the nonaqueous ink composition containing the halogenated phthalocyanine pigment is left to stand for a long time, the pigment is precipitated, resulting in a change in color tone and a decrease in color tone stability.

An object of the present invention is to provide a nonaqueous ink composition which is suitable for use as a nonaqueous ink composition to be ejected by an inkjet method even though a perinone pigment is contained therein.

Another object of the present invention is to provide a nonaqueous ink composition which has high storage stability and a high cleaning recovery property even though a diketopyrrolopyrrole pigment is contained therein.

Another object of the present invention is to provide a nonaqueous ink composition which has high storage stability, color tone stability, and a cleaning recovery property even though a halogenated phthalocyanine pigment is contained therein.

Means for Solving the Problems

As a result of intensive studies to solve the above problem, the present inventors have found that the above problem can be solved by a nonaqueous ink composition containing a perinone pigment having a pH within a predetermined range, and completed the present invention.

In addition, as a result of intensive studies to solve the above problem, the present inventors have found that the above problem can be solved by a nonaqueous ink composition containing a diketopyrrolopyrrole pigment having a pH within a predetermined range, and completed the present invention.

In addition, as a result of intensive studies to solve the above problem, the present inventors have found that the above problem can be solved by a nonaqueous ink composition containing a halogenated phthalocyanine pigment and a predetermined organic solvent, and completed the present invention.

Specifically, the present invention provides the following.

(1) A nonaqueous ink composition to be ejected by an inkjet method, the nonaqueous ink composition including: a pigment; a pigment dispersant; and an organic solvent,

the pigment containing at least one of a pigment A1 represented by the following formula (1-1) or a pigment A2 represented by the following formula (1-2),

the pigment A1 and the pigment A2 having a pH within a range of 3 or more and 9 or less.

[Chem. 1]

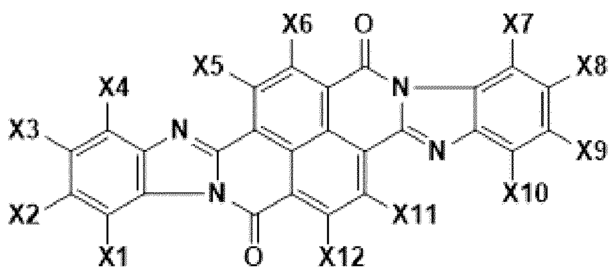

...(1-1)

wherein X1 to X12 each independently represent hydrogen, a halogen atom, an optionally branched alkyl group having 1 or more and 5 or less carbon atoms, an aromatic hydrocarbon group in which a hydrogen atom may be replaced, a cyano group, a nitro group, an amino group, - OH, -COOH, $-COO^-M^+$, $-SO_3H$, $-SO_3^-M^+$, a

phthalimide group in which hydrogen atom may be replaced, a phthalimidomethyl group, or a heterocyclic compound; and $M^+$ represents a cation,

[Chem. 2]

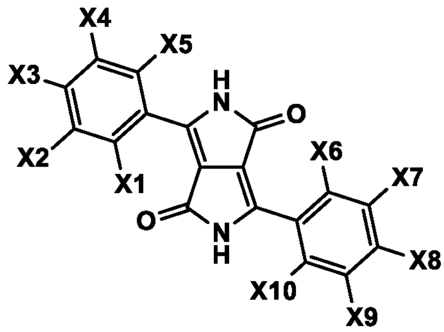

...(1-2)

wherein X1 to X10 each independently represent hydrogen, a halogen atom, an optionally branched alkyl group having 1 or more and 5 or less carbon atoms, an aromatic hydrocarbon group in which hydrogen atom may be replaced, a cyano group, a nitro group, an amino group, - OH, -COOH, $-COO^-M^+$, $-SO_3H$, $-SO_3^-M^+$, a phthalimide group in which a hydrogen atom may be replaced, a phthalimidomethyl group, or a heterocyclic compound; and $M^+$ represents a cation.

(2) The nonaqueous ink composition as described in aspect (1), in which the pigment A1 and the pigment A2 have a volume-based cumulative 90% particle diameter (D90) of 500 nm or less.
(3) The nonaqueous ink composition as described in aspect (1) or (2), in which a content of the pigment A1 and the pigment A2 is 0.1% by mass or more and 8.0% by mass or less in a total amount of the nonaqueous ink composition.
(4) The nonaqueous ink composition as described in any one of aspects (1) to (3), in which the organic solvent contains the following organic solvent B,
wherein the Organic solvent B is at least one selected from the group consisting of an alkyl amide-based solvent (b1), a cyclic amide-based solvent (b2), and a lactone-based solvent (b3).
(5) A nonaqueous ink composition to be ejected by an inkjet method, the nonaqueous ink composition comprising: a pigment; a pigment dispersant; and an organic solvent, the pigment containing a halogenated phthalocyanine pigment A3, the organic solvent containing the following organic solvent B.
Organic solvent B: at least one selected from the group consisting of an alkyl amide-based solvent (b1), a cyclic amide-based solvent (b2), and a lactone-based solvent (b3).
(6) The nonaqueous ink composition as described in aspect (5), in which the pigment A3 has a volume-based cumulative 50% particle diameter (D50) of 30 nm or more and 150 nm or less.
(7) The nonaqueous ink composition as described in aspect (5) or (6), in which the pigment A3 has a volume-based cumulative 90% particle diameter (D90) of 50 nm or more and 300 nm or less.
(8) The nonaqueous ink composition as described in any one of aspects (5) to (7), in which a content of the pigment A3 is 0.1% by mass or more and 8.0% by mass or less in a total amount of the nonaqueous ink composition.
(9) The nonaqueous ink composition as described in any one of aspects (5) to (8), in which the pigment A3 is at least one selected from the group consisting of a chlorinated phthalocyanine pigment, a brominated phthalocyanine pigment, and a chlorinated and brominated phthalocyanine pigment.
(10) The nonaqueous ink composition as described in any one of aspects (5) to (9), in which the pigment A3 is at least one selected from the group consisting of a halogenated copper phthalocyanine pigment and a halogenated zinc phthalocyanine pigment.
(11) The nonaqueous ink composition as described in any one of aspects (5) to (10), in which the organic solvent contains a glycol ether-based solvent.
(12) The nonaqueous ink composition as described in any one of aspects (5) to (11), in which a content of water is in a range of 1.0% by mass or less in the total amount of the nonaqueous ink composition.
(13) The nonaqueous ink composition as described in any one of aspects (4) to (12), in which the organic solvent B contains an alkyl amide-based solvent (b1).
(14) The nonaqueous ink composition as described in aspect (13), in which the alkyl amide-based solvent (b1) is represented by the following general formula (2).

[Chem. 3]

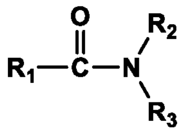

...(2)

wherein $R_1$ represents hydrogen or an alkyl group having 1 or more and 4 or less carbon atoms, and $R_2$ and $R_3$ each independently represent hydrogen or an alkyl group having 1 or more and 4 or less carbon atoms.

(15) The nonaqueous ink composition as described in aspect (14), in which the alkyl amide-based solvent (b1) contains at least one selected from the group consisting of N,N-diethylformamide, N,N-diethylpropanamide, and N,N-diethylacetamide.

(16) The nonaqueous ink composition as described in any one of aspects (4) to (12), in which the organic solvent contains a cyclic amide-based solvent (b2).

(17) The nonaqueous ink composition as described in aspect (16), in which the cyclic amide-based solvent (b2) is represented by the following general formula (3).

[Chem. 4]

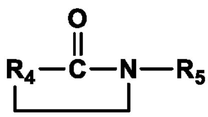

...(3)

wherein $R_4$ represents an alkylene group having 3 or more and 5 or less carbon atoms, and $R_5$ represents hydrogen or an alkyl group or an unsaturated hydrocarbon group having 1 or more and 4 or less carbon atoms.

(18) The nonaqueous ink composition as described in aspect (17), in which the cyclic amide-based solvent (b2) contains at least one selected from the group consisting of ε-caprolactam, N-methylcaprolactam, and N-vinylcaprolactam.

(19) The nonaqueous ink composition as described in any one of aspects (4) to (12), in which the organic solvent contains a lactone-based solvent (b3).

(20) The nonaqueous ink composition as described in aspect (19), in which the lactone-based solvent (b3) is represented by the following general formula (4).

[Chem. 5]

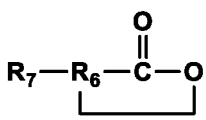

...(4)

wherein $R_6$ represents an alkylene group having 3 or more and 5 or less carbon atoms, and $R_7$ represents hydrogen or an alkyl group having 1 or more and 2 or less carbon atoms.

(21) The nonaqueous ink composition as described in aspect (20), in which the lactone-based solvent (b3) contains at least one selected from the group consisting of γ-butyrolactone, γ-valerolactone, and ε-caprolactone.

(22) The nonaqueous ink composition as described in any one of aspects (4) to (21), in which a content of the organic solvent B is in a range of 1% by mass or more and 90% by mass or less in the total amount of the nonaqueous ink composition.

(23) The nonaqueous ink composition as described in any one of aspects (1) to (22), in which the pigment dispersant has a basic group.

(24) The nonaqueous ink composition as described in any one of (1) to (23), in which the pigment dispersant has an amine value in a range of 20 mgKOH/g or more and 100 mgKOH/g or less.

(25) The nonaqueous ink composition as described in any one of aspects (1) to (24), in which a content of the pigment dispersant is in a range of 5 parts by mass or more and 150 parts by mass or less with respect to 100 parts

by mass of the pigment in the nonaqueous ink composition.

(26) The nonaqueous ink composition as described in any one of aspects 1 to 25, further comprising: a resin, in which the resin contains a resin having an intrinsic viscosity at 25°C of 90 mL/g or more in a range of 5% by mass or less in a total amount of the resin.

(27) The nonaqueous ink composition as described in aspect (26), in which the resin contains at least one or more selected from the group consisting of an acrylic resin, a vinyl chloride resin, a cellulose resin, a polyester resin, and a polyurethane resin.

(28) The nonaqueous ink composition as described in any one of aspects (1) to (27), further comprising: a surfactant, in which the surfactant contains a surfactant having a siloxane skeleton.

(29) The nonaqueous ink composition as described in any one of aspects (1) to (28), which is used in an inkjet recording device including a storage mechanism capable of storing a nonaqueous ink composition, an inkjet ejecting port, and a tube that allows the nonaqueous ink composition to flow therethrough, in which the tube is connected to the storage mechanism and the inkjet ejecting port, and includes a valve mechanism that adjusts a flow path of the nonaqueous ink composition.

(30) A recording method including: ejecting the nonaqueous ink composition as described in any one of aspects (1) to (29) onto a surface of a substrate by an inkjet method.

(31) A method for producing a recorded matter including: ejecting the nonaqueous ink composition as described in any one of aspects (1) to (29) onto a surface of a substrate by an inkjet method.

(32) An ink set including: at least the nonaqueous ink composition as described in any one of aspects (1) to (29).

(33) A recorded matter including a printed layer of the nonaqueous ink composition as described in any one of aspects (1) to (29) formed on a surface of a substrate.

(34) An inkjet recording device that ejects the nonaqueous ink composition as described in any one of aspects (1) to (29) by an inkjet method, the inkjet recording device including: a storage mechanism capable of storing the nonaqueous ink composition; an inkjet ejecting port; and a tube that allows the nonaqueous ink composition to flow therethrough, the tube being connected to the storage mechanism and the inkjet ejecting port and including a valve mechanism that adjusts a flow path of the nonaqueous ink composition.

## Effects of the Invention

The nonaqueous ink composition of the present invention can be suitably used as a nonaqueous ink composition ejected by the inkjet method even when a pigment containing a perinone pigment is used as a pigment.

The nonaqueous ink composition of the present invention has high storage stability and a high cleaning recovery property even when a pigment containing a diketopyrrolopyrrole pigment is used as a pigment.

In addition, even when the nonaqueous ink composition of the present invention contains a halogenated phthalocyanine pigment, the storage stability, color tone stability, and the cleaning recovery property are high.

## PREFERRED MODE FOR CARRYING OUT THE INVENTION

Hereinafter, specific embodiments of the present invention will be described in detail, but the present invention is not limited to the following embodiments at all, and can be implemented with appropriate modifications within the scope of the purpose of the present invention.

### «1. Summary»

A nonaqueous ink composition of one embodiment of the present invention (for example, nonaqueous ink compositions of first, second, and third embodiments) is a nonaqueous ink composition to be ejected by an inkjet method and containing a pigment, a pigment dispersant, and an organic solvent.

Here, in the present specification, the "nonaqueous ink composition" means an ink composition containing an organic solvent produced without intentionally containing water unlike an aqueous ink composition containing water as a main component.

In addition, the ink composition according to the present embodiment (containing the nonaqueous ink compositions of the following first, second, and third embodiments) is preferably an ink composition capable of obtaining a recorded matter by drying (volatilizing) an organic solvent.

Specifically, in such an ink composition, volatile components such as an organic solvent contained in the ink composition are dried (volatilized), and a residue thereof is deposited on a surface of a substrate to form the recorded matter.

The ink composition is different from an active energy ray-curable ink composition which is polymerized and cured on a substrate by irradiation with an active energy ray such as an ultraviolet ray. The active energy ray-curable

ink composition contains a polymerizable compound as an essential component, and the ink composition capable of obtaining the recorded matter by drying (volatilizing) the organic solvent contains the organic solvent, but does not contain the polymerizable compound as the essential component, and may contain the polymerizable compound or may not contain the polymerizable compound.

The pigment contained in the nonaqueous ink composition contains at least one of a pigment A1 represented by the following formula (1-1) and a pigment A2 represented by the following formula (1-2), and the pigments A1 and A2 have a pH within a range of 3 or more and 9 or less.

[Chem. 6]

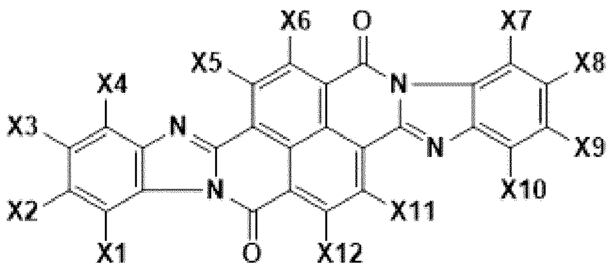

...(1-1)

wherein X1 to X12 are substituents containing hydrogen. X1 to X12 each independently represent hydrogen, a halogen atom, an optionally branched alkyl group having 1 or more and 5 or less carbon atoms, an aromatic hydrocarbon group in which hydrogen atom may be replaced, a cyano group, a nitro group, an amino group, -OH, -COOH, - $COO\text{-}M^+$, $-SO_3H$, $-SO_3^-M^+$, a phthalimide group in which a hydrogen atom may be replaced, a phthalimidomethyl group, or a heterocyclic compound; and $M^+$ represents a cation.

[Chem. 7]

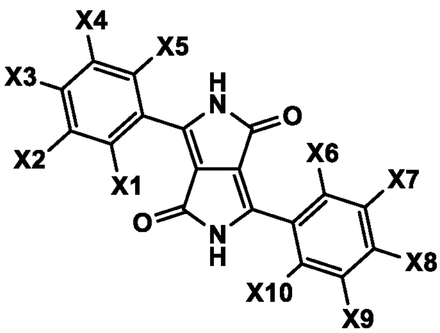

...(1-2)

wherein X1 to X10 each independently represent hydrogen, a halogen atom, an optionally branched alkyl group having 1 or more and 5 or less carbon atoms, an aromatic hydrocarbon group in which a hydrogen atom may be replaced, a cyano group, a nitro group, an amino group, - OH, -COOH, $-COO^-M^+$, $-SO_3H$, $-SO_3^-M^+$, a phthalimide group in which a hydrogen atom may be replaced, a phthalimidomethyl group, or a heterocyclic compound; and $M^+$ represents a cation.

In addition, a nonaqueous ink composition of one embodiment of the present invention is a nonaqueous ink composition to be ejected by the inkjet method and containing a pigment, a pigment dispersant, and an organic solvent.

The pigment contained in the nonaqueous ink composition contains a halogenated phthalocyanine pigment A3, and the organic solvent contains the following organic solvent B.

Organic solvent B: at least one selected from the group consisting of an alkyl amide-based solvent (b1), a cyclic amide-based solvent (b2), and a lactone-based solvent (b3).

Hereinafter, specific embodiments of the present invention will be described in detail.

«1-1. Nonaqueous Ink Composition of First Embodiment»

A nonaqueous ink composition of the first embodiment according to the present embodiment is a nonaqueous ink composition to be ejected by an inkjet method and containing a pigment, a pigment dispersant, and an organic solvent.

Here, the "nonaqueous ink composition" means an ink composition containing an organic solvent produced without intentionally containing water unlike an aqueous ink composition containing water as a main component.

The pigment contained in the nonaqueous ink composition contains a pigment A1 represented by the following formula (1-1), and the pigment A1 has a pH within a range of 3 or more and 9 or less.

[Chem. 8]

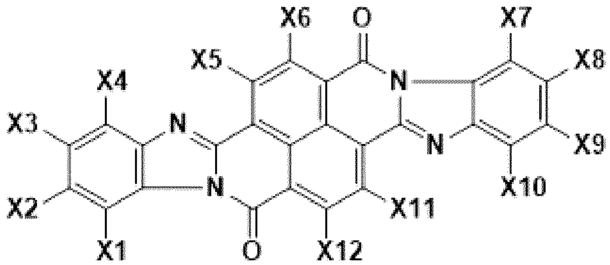

...(1-1)

wherein X1 to X12 are substituents containing hydrogen. X1 to X12 each independently represent hydrogen, a halogen atom, an optionally branched alkyl group having 1 or more and 5 or less carbon atoms, an aromatic hydrocarbon group in which a hydrogen atom may be replaced, a cyano group, a nitro group, an amino group, -OH, -COOH, - COO-$M^+$, -$SO_3H$, -$SO_3^-M^+$, a phthalimide group in which a hydrogen atom may be replaced, a phthalimidomethyl group, or a heterocyclic compound; and $M^+$ represents a cation.

By containing the pigment A1 having a pH controlled within the range of 3 or more and 9 or less, aggregation of the pigments can be prevented in the nonaqueous ink composition.

Accordingly, various characteristics required for the nonaqueous ink composition ejected by the inkjet method are satisfied.

The pigment A1 having a pH of 3 or more and 9 or less is obtained by, for example, washing the pigment A1 with a solution (an acid solution, an alkali solution, or a neutral solution) to treat a surface of the pigment, or changing a type of substituents (X1 to X12) in a benzene ring in a structure of the formula (1-1), or performing both treatments.

Examples of a method of changing the type of the substituents (X1 to X12) in the benzene ring include a method of dispersing the pigment in the organic solvent and introducing a desired substituent with an additive capable of introducing a specific substituent.

For example, a pH of the pigment can be adjusted by a method described in Japanese Patent No. 2993392.

When the type of the substituents (X1 to X12) in the benzene ring is changed, positions at which the substituents (X1 to X12) are substituted are not particularly limited in any 12 substitution positions of the benzene ring as long as the pigment A1 has the pH within a range of 3 or more and 9 or less, and the number of substituents is also not particularly limited.

In the present specification, the pH of the pigment A1 is a pH measured by a test method of JIS K5101-17-1:2004.

A measurement method for a pH of the pigment A2 to be described below is also the same.

An upper limit of the pH of the pigment A1 is preferably 9 or less, more preferably 8 or less, and even more preferably 7 or less.

A lower limit of the pH of the pigment A1 is preferably 3 or more, and more preferably 5 or more.

In particular, when the pH of the pigment A1 is 9 or less, the pigment dispersant is more easily attached, and thus aggregation of the pigment A1 in the nonaqueous ink composition can be more effectively prevented.

Accordingly, ejection stability and color tone stability of the nonaqueous ink composition can be improved.

Water in the nonaqueous ink composition according to the present embodiment has preferably a content of 5.0% by mass or less, more preferably 1.0% by mass or less, and even more preferably 0.5% by mass or less in a total amount of the nonaqueous ink composition. Since the pigment A1 has high hydrophobicity, in a nonaqueous inkjet composition containing the pigment, dispersibility of the pigment is likely to be deteriorated by contact with water, and storage stability is likely to be deteriorated.

By reducing the content of the water in the nonaqueous ink composition so that the nonaqueous ink composition does not contain water as much as possible (so that the nonaqueous ink composition does not contain water intentionally), the storage stability, the cleaning recovery property, and the like can be improved.

The same applies to the nonaqueous ink compositions of the second and third embodiments to be described below.

An average particle diameter of the pigment A1 is not particularly limited, and an upper limit of a volume-based cumulative 90% particle diameter (D90) is preferably 500 nm or less, more preferably 450 nm or less, and even more

preferably 400 nm.

Accordingly, aggregation of the pigment A1 in the nonaqueous ink composition can be more effectively prevented, and the nonaqueous ink composition can be more suitably used as the nonaqueous ink composition ejected by the inkjet method.

A lower limit of the volume-based cumulative 90% particle diameter (D90) is preferably 50 nm or more, and more preferably 100 nm or more.

The pigment A1 has a volume-based cumulative 90% particle diameter (D90) in such a range, so that the storage stability of the nonaqueous ink composition can be improved.

The same applies to a preferred average particle diameter of the pigment A2 in the nonaqueous ink composition of the second embodiment to be described below.

In the present specification, a "volume-based cumulative 50% particle diameter (D50)" means a particle diameter at which a cumulative volume calculated from a small diameter side is 50%.

The "volume-based cumulative 50% particle diameter (D50)" may be referred to as a "volume average particle diameter D50" or a "median diameter".

The "volume-based cumulative 90% particle diameter (D90)" means a particle diameter at which the cumulative volume calculated from the small diameter side is 90%.

The "volume-based cumulative 50% particle diameter (D50)" and the "volume-based cumulative 90% particle diameter (D90)" can be measured using a particle diameter distribution measurement device (a particle size analyzer NANOTRACWAVE manufactured by Microtrac BEL Co., Ltd.). The same applies to the nonaqueous ink compositions of the second and third embodiments to be described below.

A content of the pigment A1 is not particularly limited, and a lower limit of the content of the pigment A1 is preferably 0.1% by mass or more, more preferably 0.3% by mass or more, and even more preferably 0.5% by mass or more in the total amount of the nonaqueous ink composition.

The pigment A1 has a content of 0.1% by mass or more in the total amount of the nonaqueous ink composition, so that a printing density may be improved, and a color reproduction range of a recorded matter obtained by combining with nonaqueous ink compositions of other colors may be increased.

In addition, an upper limit of the content of the pigment A1 is preferably 8.0% by mass or less, more preferably 6.0% by mass or less, and even more preferably 5.0% by mass or less.

The pigment A1 has a content of 8.0% by mass or less in the total amount of the nonaqueous ink composition, so that a content of other additives may be relatively increased, and further, an increase in a viscosity due to an increase in the content of the pigment A1 may be prevented, thereby preventing clogging in a nozzle of an inkjet head.

Examples of the pigment A1 represented by the formula (1-1) include C. I. Pigment Orange 43. The pigment A1 represented by the formula (1-1) may be synthesized, and may be obtained, for example, by washing the C. I. Pigment Orange 43 which is a commercially available product with a solution (an acid solution, an alkali solution, or a neutral solution) to treat a surface of the pigment, or changing the type of the substituents (X1 to X12) in the benzene ring in the structure of the formula (1-1), or performing both treatments. Examples of the commercially available product include A-76 manufactured by Arimoto Chemical Co., Ltd., Hostaperm Orange GR and PV Gast Orange GRL manufactured by Clariant Co., Ltd., Fasogen Super Orange 6200 manufactured by DIC Co., Ltd, and Lionogen Orange GR-F manufactured by Toyo Ink Co., Ltd..

In addition, the nonaqueous ink composition according to the present embodiment may further contain a colorant (including a pigment and a dye) other than the pigment A1 described above. Examples of such a colorant include a pigment and a dye having a hue similar to that of the pigment A1 (for example, orange, magenta, yellow, and red).

Examples of an organic pigment other than the pigment A1 described above include, by color index (C. I.) numbers, C. I. Pigment Yellow 1, 2, 3, 12, 13, 14, 16, 17, 20, 24, 73, 74, 75, 83, 93, 95, 97, 98, 109, 110, 114, 117, 120, 125, 128, 129, 130, 137, 138, 139, 147, 148, 150, 151, 153, 154, 155, 166, 168, 180, 185, 213, and 214, C. I. Pigment Red 5, 7, 9, 12, 48, 49, 52, 53, 57:1, 97, 112, 122, 123, 146, 149, 150, 168, 177, 180, 184, 192, 202, 206, 208, 209, 215, 216, 217, 220, 223, 224, 226, 227, 228, 238, 240, 254, 255, 269, and 291, C. I. Pigment Orange 16, 36, 43, 51, 55, 59, 61, 64, 71, and 73, C. I. Pigment Violet 19, 23, 29, 30, 37, 40, and 50, and C. I. Pigment Brown 23, 25, and 26.

In addition, a dispersion aid (pigment derivative) to be described below may be used together with the pigment dispersant. Accordingly, dispersion stability of the pigment can be improved.

Next, each component contained in the nonaqueous ink composition according to the present embodiment will be described.

[Organic Solvent]

The organic solvent can disperse or dissolve each component contained in the nonaqueous ink composition according to the present embodiment. The organic solvent is not particularly limited, and preferably contains an organic solvent B (at least one selected from the group consisting of the alkyl amide-based solvent (b1), the cyclic amide-based

solvent (b2), and the lactone-based solvent (b3)) from a viewpoint of dispersing a pigment containing the pigment A1 and more effectively exhibiting an effect of the present invention.

Hereinafter, the alkyl amide-based solvent (b1), the cyclic amide-based solvent (b2), and the lactone-based solvent (b3) contained in the organic solvent B will be described.

(1) Alkyl Amide-Based Solvent

The alkyl amide-based solvent is a solvent composed of a compound having hydrogen or an alkyl group and a -C(=O)-N- group, which is a compound having an alkyl group ($C_nH_{2n+1}$-) and a -C(=O)-N- group (amide bond). For example, the alkyl amide-based solvent having the following structure can be preferably used.

[Chem. 9]

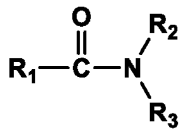

...(2)

wherein $R_1$ represents hydrogen or an alkyl group having 1 or more and 4 or less carbon atoms, and $R_2$ and $R_3$ each independently represent hydrogen or an alkyl group having 1 or more and 4 or less carbon atoms.

$R_2$ and $R_3$ in the formula (2) are each preferably an alkyl group having 1 or more and 4 or less carbon atoms, and more preferably an alkyl group having 2 or more and 4 or less carbon atoms.

Specific examples of the alkyl amide-based solvent include N, N-diethylformamide, N,N-diethylacetamide, N,N-dipropylformamide, N,N-dibutylformamide, N,N-diethylpropane amide, N,N-dipropylpropanamide, N-ethylformamide, N-ethylacetamide, and the like. Among them, from a viewpoint of particularly achieving the effect of the present invention, it is preferable to contain at least one selected from the group consisting of N,N-diethylformamide, N,N-diethylpropane amide, and N,N-diethylacetamide.

A content of the alkyl amide-based solvent (b1) is not particularly limited, and a lower limit of the content of the alkyl amide-based solvent (b1) is preferably in a range of 1% by mass or more, more preferably in a range of 5% by mass or more, and even more preferably in a range of 8% by mass or more in the total amount of the nonaqueous ink composition.

An upper limit of the content of the alkyl amide-based solvent (b1) is preferably 90% by mass or less, more preferably 80% by mass or less, and even more preferably 75% by mass or less in the total amount of the nonaqueous ink composition.

(2) Cyclic Amide-Based Solvent

The cyclic amide-based solvent (b2) is a solvent having a cyclic structure and having a -C(=O)-N- group in the cyclic structure thereof. For example, a cyclic amide-based solvent having the following structure can be preferably used.

[Chem. 10]

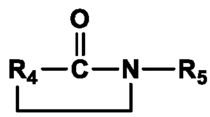

...(3)

wherein $R_4$ represents an alkylene group having 3 or more and 5 or less carbon atoms, and $R_5$ represents hydrogen or an alkyl group or an unsaturated hydrocarbon group having 1 or more and 4 or less carbon atoms.

Specific examples of the cyclic amide-based solvent (b2) include N-methylcaprolactam, N-acetyl caprolactam, ε-caprolactam, N-vinyl caprolactam, 2-pyrolidone, N-methyl-2-pyrolidone, N-ethyl-2-pyrolidone, N-propyl-2-pyrolidone, N-ethyl-ε-caprolactam, N-propyl-ε-caprolactam, and N-methyl-ε-caprolactam.

Among them, it is preferable to contain at least one selected from the group consisting of ε-caprolactam, N N-methylcaprolactam, and N-vinyl caprolactam.

A content of the cyclic amide-based solvent (b2) is not particularly limited, and a lower limit of the content of

the cyclic amide-based solvent (b2) is preferably in a range of 1% by mass or more, more preferably in a range of 5% by mass or more, and even more preferably in a range of 8% by mass or more in the total amount of the nonaqueous ink composition.

An upper limit of the content of the cyclic amide-based solvent (b2) is preferably 90% by mass or less, more preferably 80% by mass or less, and even more preferably 75% by mass or less in the total amount of the nonaqueous ink composition.

(3) Lactone-Based Solvent

The lactone-based solvent is a solvent having a cyclic ester structure. For example, the lactone-based solvent having the following structure can be preferably used.

[Chem. 11]

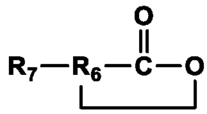

...(4)

wherein $R_6$ represents an alkylene group having 3 or more and 5 or less carbon atoms, and $R_7$ represents hydrogen or an alkyl group having 1 or more and 2 or less carbon atoms. $R_6$ is more preferably an alkylene group having 4 or more and 5 or less carbon atoms, and even more preferably an alkylene group having 5 carbon atoms.

Examples of the lactone-based solvent (b3) include γ-butyrolactone, δ-valerolactone, δ-hexanolactone, ε-caprolactone, γ-valerolactone, γ-hexalactone, γ-heptalactone, γ-octalactone, γ-nonalactone, γ-decalactone, γ-undecalactone, δ-heptalactone, δ-octalactone, δ-nonalactone, δ-decalactone, and δ-undecalacton. Among these, γ-butyrolactone, δ-valerolactone, δ-hexanolactone, ε-caprolactone, and γ-valerolactone are more preferable, and ε-caprolactone is more preferable.

A content of the lactone-based solvent (b3) is not particularly limited, and a lower limit of the content of the lactone-based solvent (b3) is preferably in a range of 1% by mass or more, more preferably in a range of 5% by mass or more, and even more preferably in a range of 8% by mass or more in the total amount of the nonaqueous ink composition.

An upper limit of the content of the lactone-based solvent (b3) is preferably 90% by mass or less, more preferably 70% by mass or less, and even more preferably 50% by mass or less in the total amount of the nonaqueous ink composition.

Among the organic solvents B, "those containing the alkyl amide-based solvent (b1)" and "those containing the cyclic amide-based solvent (b2)" are preferable, and "those containing the alkyl amide-based solvent (b1)" are more preferable. Accordingly, the pigment containing the pigment A1 can be more effectively dispersed, and the storage stability and the cleaning recovery property of the nonaqueous ink composition can be improved. Furthermore, since a nonaqueous ink composition having a high surface drying property on a substrate is obtained, bleeding in printing is reduced, and printing becomes clear.

The organic solvents B exhibit a sufficient effect when at least one of the alkyl amide-based solvent (b1), the cyclic amide-based solvent (b2), and the lactone-based solvent (b3) is contained, but two or more kinds of solvents of the organic solvents B may be mixed. By mixing two or more kinds of solvents, balance between the storage stability, suitability of members, the surface drying property, and the cleaning recovery property can be freely set. When two or more kinds of solvents are mixed, a lower limit of a total content of the organic solvent B is preferably in a range of 1% by mass or more, more preferably in a range of 5% by mass or more, and even more preferably in a range of 10% by mass or more in the total amount of the nonaqueous ink composition. An upper limit of the total content of the organic solvent B is preferably 90% by mass or less in the total amount of the nonaqueous ink composition.

[Other Organic Solvents]

The nonaqueous ink composition according to the present embodiment may contain an organic solvent other than the above organic solvent B. Specific examples thereof include glycol ether dialkyl in which OH groups at both ends of glycol are alkyl-substituted, glycol ether monoalkyl in which one OH group of glycol is alkyl-substituted, and carbonic acid ester.

Examples of a glycol ether-based solvent include the glycol ether dialkyl in which OH groups at both ends of glycol are alkyl-substituted, and the glycol ether monoalkyl in which one OH group of glycol is alkyl-substituted. Examples of the glycol ether-based solvent include those containing at least one or more of glycol ether dialkyl and glycol ether

monoalkyl represented by the following formula (5).

$$R_8\text{-}(\text{-O-}R_9)\text{-O-}R_{10} \ldots \quad (5)$$

(in the formula (5), $R_8$ and $R_{10}$ each independently represent hydrogen or an optionally branched alkyl group having 1 or more and 8 or less carbon atoms, and $R_9$ represents an optionally branched alkylene group having 1 or more and 4 or less carbon atoms; n represents an integer of 1 or more and 6 or less).

Examples of the glycol ether-based solvent include: alkylene glycol monoalkyl ether such as ethylene glycol mono-n-butyl ether, ethylene glycol mono-isobutyl ether, ethylene glycol mono-t-butyl ether, ethylene glycol mono-2-ethylhexyl ether, diethylene glycol monomethyl (or ethyl, propyl, isopropyl, n-butyl, isobutyl, t-butyl, and 2-ethylhexyl) ether, triethylene glycol monomethyl (or ethyl, propyl, isopropyl, n-butyl, isobutyl, t-butyl, and 2-ethylhexyl) ether, tetraethylene glycol monomethyl ether, propylene glycol mono-n-butyl ether, propylene glycol mono-isobutyl ether, propylene glycol mono-t-butyl ether, propylene glycol mono-2-ethylhexyl ether, dipropylene glycol monomethyl (or ethyl, propyl, isopropyl, n-butyl, isobutyl, t-butyl, and 2-ethylhexyl) ether, tripropylene glycol monomethyl (or ethyl, propyl, isopropyl, n-butyl, isobutyl, and t-butyl) ether, tetrapropylene glycol monomethyl ether (or ethyl, propyl, isopropyl, n-butyl, isobutyl, t-butyl, and 2-ethylhexyl); and dialkyl ethers of polyhydric alcohols such as ethylene glycol dibutyl ether, ethylene glycol dipropyl ether, diethylene glycol dimethyl ether, diethylene glycol diethyl ether, diethylene glycol methyl ethyl ether, diethylene glycol dipropyl ether, diethylene glycol propyl methyl ether, diethylene glycol dibutyl ether, diethylene glycol butyl methyl ether, diethylene glycol butyl ethyl ether, diethylene glycol methyl-2-ethyl hexyl ether, triethylene glycol dimethyl ether, triethylene glycol diethyl ether, triethylene glycol ethyl methyl ether, tetraethylene glycol dimethyl ether, tetraethylene glycol diethyl ether, tetraethylene glycol ethyl methyl ether, propylene glycol diethyl ether, propylene glycol ethyl methyl ether, propylene glycol methyl propyl ether, propylene glycol methyl butyl ether, propylene glycol methyl-2-ethylhexyl ether, dipropylene glycol dimethyl ether, dipropylene glycol diethyl ether, dipropylene glycol ethyl methyl ether, dipropylene glycol methyl propyl ether, dipropylene glycol dipropyl ether, dipropylene glycol methyl butyl ether, tripropylene glycol dimethyl ether, tripropylene glycol diethyl ether, and tripropylene glycol ethyl methyl ether.

Among them, preferred examples include diethylene glycol dimethyl ether, diethylene glycol diethyl ether, diethylene glycol monobutyl ether, diethylene glycol ethyl methyl ether, diethylene glycol dipropyl ether, diethylene glycol propyl methyl ether, diethylene glycol dibutyl ether, diethylene glycol butyl methyl ether, diethylene glycol butyl ethyl ether, diethylene glycol methyl-2-ethylhexyl ether, triethylene glycol dimethyl ether, triethylene glycol diethyl ether, triethylene glycol ethyl methyl ether, tetraethylene glycol dimethyl ether, propylene glycol diethyl ether, propylene glycol ethyl methyl ether, propylene glycol methyl propyl ether, propylene glycol methyl butyl ether, propylene glycol methyl-2-ethylhexyl ether, dipropylene glycol dimethyl ether, dipropylene glycol diethyl ether, dipropylene glycol ethyl methyl ether, dipropylene glycol methyl propyl ether, dipropylene glycol dipropyl ether, tripropylene glycol dimethyl ether, and tripropylene glycol ethyl methyl ether.

In addition, among these glycol ether-based solvents, two or more kinds of glycol ether-based solvents having different flash points are preferably combined. By containing a glycol ether-based solvent having a high flash point (for example, a flash point of 70°C or higher), a nonaqueous ink composition having a high cleaning recovery property is obtained. By containing a glycol ether-based solvent having a low flash point (for example, a flash point of less than 70°C), a nonaqueous ink composition having a high surface drying property on the substrate is obtained. By containing a glycol ether-based solvent having a flash point of 70°C or higher and a glycol ether-based solvent having a flash point of lower than 70°C, both the high cleaning recovery property and the high surface drying property on the substrate may be achieved, and a nonaqueous ink composition that particularly effectively exhibits the effect of the present invention can be obtained.

In addition, solvents other than the glycol ether-based solvent may be contained. Specific examples thereof include: alkyl alcohol having 1 to 5 carbon atoms such as carbonic acid ester such as propylene carbonate and ethylene carbonate, an oxazolidinone-based solvent such as 3-methyl-2-oxazolidinone, 3-ethyl-2-oxazolidinone, and N-vinylmethyl oxazolidinone, an acetate-based solvent such as triethylene glycol butyl ether acetate, ethylene glycol butyl ether acetate, diethylene glycol ethyl ether acetate, diethylene glycol methyl ether acetate, diethylene glycol butyl ether acetate, propylene glycol methyl ether acetate, dipropylene glycol methyl ether acetate, and 1-methoxy-2-propyl acetate, the alkyl amide-based solvent (b1) such as 3-methoxy propane amide, 3-butoxy propane amide, N,N-dimethyl-3-methoxy propane amide, N,N-dimethyl-3-methoxy propane amide, N,N-dimethyl-3-butoxy propane amide, and N,N-dimethyl-3-butoxy propane amide, an amide-based solvent different from the cyclic amide-based solvent (b2), methyl alcohol, ethyl alcohol, n-propyl alcohol, isopropyl alcohol, n-butyl alcohol, sec-butyl alcohol, tert-butyl alcohol, isobutyl alcohol, n-pentanol; ketone or keto alcohol such as a monovalent alcohol-based solvent such as 3-methoxy-3-methyl-1-butanol, 3-methoxy-1-propanol, 1-methoxy-2-propanol, and 3-methoxy-n-butanol, acetone, and diacetone alcohol; ether such as tetrahydrofuran and dioxane; an oxyethylene or oxypropylene copolymer such as polyethylene glycol and polypropylene glycol; diols such as ethylene glycol, propylene glycol, diethylene glycol, dipropylene glycol, 1,3-propanediol, isobutylene glycol, triethylene glycol, tripropylene glycol, tetraethylene glycol, 1,3-propanediol, 2-methyl-1,2-propanediol,

2-methyl-1,2-propanediol, 1,2-butanediol, 1,3-butanediol, 1,4-butanediol, 1,2-pentanediol, 1,2-hexanediol, 1,5-pentanediol, 1,6-hexanediol, 2-methyl-2,4-pentanediol, 3-methyl-1,3-butanediol, 3-methyl-1,5-pentanediol, and 2-methyl-2,4-pentanediol; triols such as glycerin, trimethylolethane, trimethylolpropane, and 1,2,6-hexanetriol; tetravalent alcohol such as mesoerythritol and pentaerythritol; and alkanol amines such as monoethanolamine, diethanolamine, triethanol amine, N-methyl ethanol amine, N-ethyl ethanol amine, N-butyl ethanol amine, N-methyl diethanolamine, N-ethyl diethanolamine, and N-butyl diethanolamine. It is preferable to select a solvent having an appropriate HLB value according to a resin, a dispersant, and the like to be combined.

A content of the other organic solvents is not particularly limited, and a lower limit of the content of the other organic solvents is preferably in a range of 10% by mass or more, more preferably in a range of 20% by mass or more, and even more preferably in a range of 30% by mass or more. An upper limit of the content of the other organic solvents is preferably in a range of 85% by mass or less, more preferably in a range of 80% by mass or less, and even more preferably in a range of 75% by mass or less.

[Pigment Dispersant]

A dispersant may be used in the nonaqueous ink composition according to the present embodiment, if necessary. As the dispersant, any dispersant used in the nonaqueous ink composition can be used.

As the dispersant, a polymeric dispersant may be used. Such a dispersant has a main chain formed of polyester, polyacrylic, polyurethane, polyamine, polycaprolactone, or the like, and a polar group such as an amino group, a carboxyl group, a sulfone group, or a hydroxyl group as a side chain. As a polyacrylic-based dispersant, Disperbyk-2000, 2001, 2008, 2009, 2010, 2020, 2020N, 2022, 2025, 2050, 2070, 2095, 2150, 2151, 2155, 2163, 2164, BYKJET-9130, 9131, 9132, 9133, 9151 (manufactured by BYK Japan KK), Efka PX4310, PX4320, PX4330, PA4401, 4402, PA4403, 4570, 7411, 7477, PX4700, PX4701 (manufactured by BASF SE), TREPLUS D-1200, D-1410, D-1420, MD-1000 (manufactured by Otsuka Chemical Co., Ltd.), Floren DOPA-15BHFS, 17HF, 22, G-700, 900, NC-500, GW-1500 (manufactured by KYOEISHA CHEMICAL Co., LTD.), and the like are used. As a polycaprolactonebased dispersant, Adisper PB821, PB822, PB881 (manufactured by Ajinomoto Fine-Techno Co., Ltd.), HINOACT KF-1000, T-6000, T-7000, T-8000, T-8000E, T-9050 (manufactured by Kawaken Fine Chemicals Co., Ltd.), Solsperse 20000, 24000, 32000, 32500, 32550, 32600, 33000, 33500, 34000, 35200, 36000, 37500, 39000, 71000, 76400, 76500, 86000, 88000, J180, J200 (manufactured by Lubrizol Co., Ltd.), TEGO Dispers 652, 655, 685, 688, 690 (manufactured by Evonik Japan Co., Ltd.), and the like are used. As a preferred dispersant, BYKJET-9130, 9131, 9132, 9133, 9151, Efka PX4310, PX4320, PX4330, PX4700, PX4701, Solsperse 20000, 24000, 32000, 33000, 33500, 34000, 35200, 39000, 71000, 76500, 86000, 88000, J180, J200, TEGO Dispers 655, 685, 688, 690, and the like are used. These may be used alone or a mixture thereof may be used.

In particular, in the nonaqueous ink composition according to the present embodiment containing the pigment A1 having a pH of 3 or more and 9 or less, it is preferable to use a pigment dispersant having a basic group among the above. Since the pigment A1 has a pH within a range of 3 or more and 9 or less, aggregation of the pigment A1 in the nonaqueous ink composition can be more effectively prevented by using the pigment dispersant having the basic group. The same applies to a nonaqueous ink composition containing the pigment A2 having a pH of 3 or more and 9 or less to be described below.

In particular, when the pH of the pigment A1 is 8 or less, the pigment dispersant having the basic group is more easily attached to a surface of the pigment A1, and thus aggregation of the pigment A1 in the nonaqueous ink composition can be more effectively prevented.

Among them, a pigment dispersant having an amine value in a range of 20 mgKOH/g or more and 100 mgKOH/g or less is preferably used. Aggregation of the pigment A1 in the nonaqueous ink composition can be more effectively prevented. In particular, when the pH of the pigment A1 is 8 or less, the pigment dispersant having an amine value in a predetermined range is more easily attached to a surface of the pigment A1, and thus aggregation of the pigment A1 in the nonaqueous ink composition can be further effectively prevented. The same applies to a nonaqueous ink composition containing the pigment A2 having a pH of 3 or more and 9 or less to be described below.

A content of the pigment dispersant is not particularly limited, and a lower limit of the content of the pigment dispersant is preferably 5 parts by mass or more, more preferably 15 parts by mass or more, and even more preferably 20 parts by mass or more with respect to 100 parts by mass of the pigment in the nonaqueous ink composition. An upper limit of the content of the pigment dispersant is preferably 150 parts by mass or less, more preferably 125 parts by mass or less, and even more preferably 100 parts by mass or less with respect to 100 parts by mass of the pigment in the nonaqueous ink composition.

[Dispersion Aid]

A dispersion aid may be used in the nonaqueous ink composition according to the present embodiment, if

necessary. The dispersion aid adheres to a surface of a colorant (pigment), and a functional group of the dispersion aid increase affinity with the organic solvent and a dispersant in the nonaqueous ink composition, thereby improving the dispersion stability. As the dispersion aid, a derivative of the pigment described above is preferable, and a known pigment derivative having a functional group such as an acidic group, a basic group, or a neutral group in an organic pigment residue can be used. The same applies to the nonaqueous ink compositions of the second and third embodiments to be described below.

[Resin]

The nonaqueous ink composition according to the present embodiment may not contain a resin or may contain a resin. By containing the resin, fixability, water resistance, and stretchability of a recording layer formed by the nonaqueous ink composition can be improved. Further, glossiness of the obtained recorded matter can be improved. The same applies to the nonaqueous ink compositions of the second and third embodiments to be described below.

The resin is not particularly limited, and examples thereof include an acrylic resin, a polystyrene resin, a polyester resin, a vinyl chloride resin, a vinyl acetate resin, a vinyl chloride-vinyl acetate copolymer resin, a polyethylene resin, a polyurethane resin, a rosin modified resin, a phenol resin, a terpene resin, a polyamide resin, a vinyl toluene-$\alpha$-methylstyrene copolymer, an ethylene-vinyl acetate-based copolymer, cellulose acetate butyrate, cellulose acetate propionate, a silicone (silicon) resin, an acrylic amide resin, an epoxy resin, and a copolymer resin and a mixture thereof. Among them, those containing the acrylic resin, the vinyl chloride resin, the cellulose resin, the polyester resin, and the polyurethane resin are preferable.

The acrylic resin is not particularly limited as long as it is contained as a main component of a monomer that constitutes a (meth) acrylic acid ester monomer. The acrylic resin may be a homopolymer of one type of radical polymerizable monomer or may be any of copolymers in which two or more types of radical polymerizable monomers are selected and used. In particular, a preferred acrylic resin for the nonaqueous ink composition according to the present embodiment is a homopolymer of methyl methacrylate or a copolymer of methyl methacrylate and at least one compound selected from the group consisting of butyl methacrylate, ethoxyethyl methacrylate, and benzyl methacrylate. Further, examples of a commercially available (meth)acrylic resin include "Paraloid B99N", "Paraloid B60", "Paraloid B66", and "Paraloid B82" manufactured by Rohm and Haas company.

The vinyl chloride resin may be a homopolymer formed of a vinyl chloride monomer or may be any of copolymers in which two or more types of polymerizable monomers are selected and used. Examples of a vinyl chloride resin copolymer include the vinyl chloride-vinyl acetate copolymer resin. The vinyl chloride-vinyl acetate copolymer resin is a polymer of a vinyl chloride monomer and a vinyl acetate monomer. Examples of the vinyl chloride-vinyl acetate copolymer resin include a vinyl chloride-vinyl acetate copolymer, a vinyl chloride/vinyl acetate/maleic acid copolymer, a vinyl chloride/vinyl acetate/vinyl alcohol copolymer, a vinyl chloride/vinyl acetate/hydroxyalkyl acrylate copolymer, and a mixture thereof. The above vinyl chloride-vinyl acetate copolymer resin can be obtained and used from Nissin Chemical Industry Co., Ltd. under trade names such as "Solbin C", "Solbin CL", "Solbin CNL", "Solbin CLL", "Solbin CLL2", "Solbin C5R", "Solbin TA2", "Solbin TA3", "Solbin A", "Solbin AL", "Solbin TA5R", and "Solbin M5".

The vinyl chloride-vinyl acetate copolymer resin can be obtained by polymerization of the vinyl chloride monomer and the vinyl acetate monomer. A method for polymerization can be any well-known polymerization method. The method for polymerization is preferably emulsion polymerization or suspension polymerization, and more preferably suspension polymerization.

The cellulose resin is a resin having a cellulose skeleton obtained by biologically or chemically introducing a functional group using cellulose as a raw material. For example, examples of the cellulose resin include a cellulose acetate alkylate resin such as a cellulose acetate butyrate resin, a cellulose acetate propionate resin, and a cellulose acetate propionate butyrate resin, a cellulose acetate resin, a nitrocellulose resin, and a mixture thereof. The cellulose resin can be obtained and used under trade names such as "CAB 551-0.01", "CAB 551-0.2", "CAB 553-0.4", "CAB 531-1", "CAB 381-0.1", "CAB 381-0.5", "CAB 381-2", "CAB 381-20", "CAP 504", and "CAP 482-0.5" manufactured by EASTMAN company.

The polyester resin includes at least a structural unit obtained by polycondensation of an alcohol component and a carboxylic acid component. The polyester resin may contain a modified polyester resin. The polyester resin can be obtained and used from TOYOBO CO., Ltd. under trade names such as "VYLON 226", "VYLON 270", "VYLON 560", "VYLON 600", "VYLON 630", "VYLON 660", "VYLON 885", "VYLONGK 250", "VYLONGK 810", "VYLONGK 890", and from UNITICA Ltd. under trade names such as "elitleUE-3200", "elitleUE-3285", "elitleUE-3320", "elitleUE-9800", and "elitleUE-9885".

The polyurethane resin includes at least a structural unit obtained by copolymerization of the alcohol component and an isocyanate component. The polyurethane resin may contain a polyurethane resin modified with polyester, polyether, or caprolactone. The above polyurethane resin can be obtained and used from Arakawa Chemical Industries, Ltd. under trade names such as "UREARNO KL-424", "UREARNO KL-564", "UREARNO KL-593", and "UREARNO

3262", and from DIC Corporation under trade names such as "PANDEX 372E", "PANDEX 390E", "PANDEX 394E", "PANDEX 304", "PANDEX 305E", "PANDEX P-870", "PANDEX P-910", "PANDEX P-895", "PANDEX 4030", and "PANDEX 4110".

Further, these acrylic resin, vinyl chloride resin, cellulose resin, polyester resin, and polyurethane resin may be used alone, but a mixture of two kinds of these is preferable, and a resin obtained by mixing the acrylic resin and the vinyl chloride resin is more preferable. A content ratio of the acrylic resin to the vinyl chloride resin can be controlled so as to satisfy requirements of color development, a drying property, a coating property, printability, and the like required for a nonaqueous ink composition. When the acrylic resin and the vinyl chloride resin are mixed, a mixing ratio is not particularly limited and can be appropriately changed.

The resin contained in the nonaqueous ink composition is not particularly limited, and is preferably contained in a range of 0.05% by mass or more, more preferably contained in a range of 0.1% by mass or more, and even more preferably contained in a range of 0.5% by mass or more in the total amount of the nonaqueous ink composition. Accordingly, the surface drying property of the obtained recorded matter can be further improved. The resin contained in the nonaqueous ink composition is preferably contained in a range of 20.0% by mass or less, more preferably contained in a range of 15.0% by mass or less, and even more preferably contained in a range of 10.0% by mass or less in the total amount of the nonaqueous ink composition. Accordingly, clogging in the nozzle of the inkjet head can be more effectively eliminated and the storage stability of the nonaqueous ink composition can be improved.

In addition, the resin contained in the nonaqueous ink composition according to the present embodiment preferably contains a resin having an intrinsic viscosity at 25°C of 90 mL/g or more in a range of 5% by mass or less in a total amount of the resin. Accordingly, occurrence of white spots in a portion where solid printing is performed can be prevented (solid filling becomes good). Furthermore, since the nonaqueous ink composition according to the present embodiment contains a perinone pigment having a pH within a predetermined range, the nonaqueous ink composition has high storage stability and a high cleaning recovery property. Further, when a resin having an intrinsic viscosity of 90 mL/g or more has a content within a range of 5% by mass or less in the total amount of the resin, clogging in the nozzle of the inkjet head can be more effectively eliminated, and the storage stability, the cleaning recovery property, and the ejection stability of the nonaqueous ink composition can be extremely improved.

In the present specification, the intrinsic viscosity can be obtained by obtaining a relative viscosity $[\eta_{SP}]((\eta - \eta_0)/\eta_0$ ($\eta_0$: solvent viscosity, $\eta$: solution viscosity)) and a concentration C after dispersing a target resin in a dispersion solvent, and separating molecules contained in the resin by a column filled with a granular gel in gel permeation chromatography (GPC), and extrapolating the concentration C to 0 ($C \to 0$) in an expression Lim ($[\eta_{SP}]/C$). The dispersion solvent is not particularly limited, and for example, tetrahydrofuran can be used. The same applies to the nonaqueous ink compositions of the second and third embodiments to be described below.

A content of the resin having the intrinsic viscosity at 25°C of 90 mL/g or more is preferably in a range of 5.0% by mass or less, more preferably in a range of 4.0% by mass or less, and even more preferably in a range of 3.0% by mass or less in the total amount of the resin.

[Surfactant]

In the nonaqueous ink composition according to the present embodiment, a surfactant may be added for a purpose of preventing volatilization of a nonaqueous ink composition in a device such as a nozzle portion or a tube, preventing solidification of the nonaqueous ink composition, and resolubility when the nonaqueous ink composition is solidified, for a purpose of reducing surface tension to improve wettability with a recording medium (substrate), for a purpose of preventing bleeding of the ink composition on the substrate, for a purpose of improving rubbing resistance of a coated film, and for a purpose of further improving glossiness of a recorded matter. The same applies to the nonaqueous ink compositions of the second and third embodiments to be described below.

Among them, the surfactant preferably contains a surfactant having a siloxane skeleton. The pigment A1 tends to aggregate in the nonaqueous ink composition, and a volume average particle diameter tends to increase. In this case, the glossiness of the obtained recorded matter may be reduced. By containing the surfactant having the siloxane skeleton in the nonaqueous ink composition according to the present embodiment, the glossiness of a recorded matter obtained even when the pigment A1 is contained can be improved. Furthermore, in a case of a nonaqueous ink containing the surfactant having the siloxane skeleton, a recorded matter having less bleeding of printing and improved rubbing resistance is obtained.

As the surfactant having the siloxane skeleton, it is preferable to use a polyester-modified silicon or a polyether-modified silicon, and specific examples thereof include BYK-313, 315N, 322, 326, 331, 347, 348, BYK-UV3500, 3510, 3530, and 3570 (all manufactured by BYK Japan KK) .

In addition, the nonaqueous ink composition according to the present embodiment may contain a surfactant different from the surfactant having the siloxane skeleton. Examples of the surfactant include, for example, nonionic P-208, P-210, P-213, E-202S, E-205S, E-215, K-204, K-220, S-207, S-215, A-10R, A-13P, NC-203, NC-207 (manufactured

by NOF CORPORATION), Emulgen 106, 108, 707, 709, A-90, A-60 (manufactured by Kao Corporation), Floren G-70, D-90, TG-740W (manufactured by KYOEISHA CHEMICAL Co., LTD.), Poem J-0081HV (manufactured by Riken Vitamin Co., Ltd.), Adekatol NP-620, NP-650, NP-660, NP-675, NP-683, NP-686, Adekacol CS-141E, TS-230E (manufactured by Adeka Co., Ltd.), Sorgen 30V, 40, TW-20, TW-80, Neugen CX-100 (manufactured by DKS Co. Ltd.), and the like, which are polyoxyalkylene alkyl ethers. As a fluorine-based surfactant, it is preferable to use a fluorine-modified polymer, and specific examples thereof include BYK-340 (manufactured by BYK Japan KK), and the like. Specific examples of an acetylene glycol-based surfactant include Surfynol (registered trademark) 82, 104, 465, 485, TG (all manufactured by Air Products and Chemicals, Inc.), Olfine (registered trademark) STG, E1010 (all manufactured by Nissin Chemical Industry CO., Ltd.), and the like. The surfactant is not limited to those described above, an anionic surfactant, a cationic surfactant, an amphoteric surfactant, or a nonionic surfactant may be used.

The nonaqueous ink composition according to the present embodiment may contain the surfactant having the siloxane skeleton as well as these surfactants, or may contain these surfactants without containing the surfactant having the siloxane skeleton.

In the nonaqueous ink composition according to the present embodiment, a content of the surfactant is not particularly limited, and a lower limit of the content of the surfactant is preferably in a range of 0.01% by mass or more, more preferably in a range of 0.05% by mass or more, and even more preferably in a range of 0.1% by mass or more. A upper limit of the content of the surfactant is preferably 5.0% by mass or less, more preferably 4.0% by mass or less, and even more preferably 3.0% by mass or less.

[Other Components]

The nonaqueous ink composition according to the present embodiment may contain, as optional components, known additives such as a stabilizer (an antioxidant and an ultraviolet absorber), an epoxidized product, a polycarboxylic acid, a surface conditioner, a leveling agent (acrylic-based leveling agent and silicone-based leveling agent), an antifoaming agent, a pH adjuster, a bactericide, a preservative, a deodorant, a charge adjuster, and a wetting agent. Specific examples of the antioxidant include a hindered phenol-based antioxidant, an amine-based antioxidant, a phosphorus-based antioxidant, a sulfur-based antioxidant, and a hydrazine-based antioxidant. Specific examples thereof include BHA (2,3-butyl-4-oxyanisole) and BHT (2,6-di-t-butyl-p-cresol). In addition, a benzophenone compound or a benzotriazole compound can be used as the ultraviolet absorber. In addition, specific examples of the epoxidized product include epoxy glyceride, epoxy fatty acid monoester, and epoxyhexahydrophthalate, and specific examples thereof include ADK CIZER O-130P and ADK CIZER O-180A (manufactured by ADEKA Corporation). Specific examples of the polycarboxylic acid include citric acid and maleic acid.

«1-2. Nonaqueous Ink Composition of Second Embodiment»

A nonaqueous ink composition of the second embodiment according to the present embodiment is a nonaqueous ink composition to be ejected by an inkjet method and containing a pigment, a pigment dispersant, and an organic solvent.

The pigment contained in the nonaqueous ink composition contains a pigment A2 represented by the following formula (1-2), and the pigment A2 has a pH within a range of 3 or more and 9 or less.

[Chem. 12]

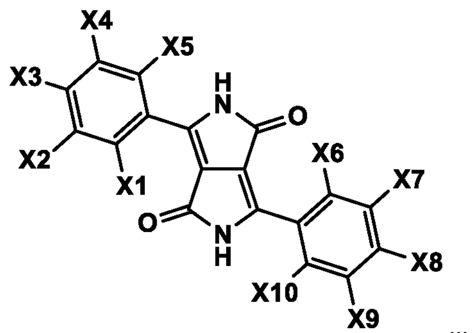

...(1-2)

wherein X1 to X10 each independently represent hydrogen, a halogen atom, an optionally branched alkyl group having 1 or more and 5 or less carbon atoms, an aromatic hydrocarbon group in which a hydrogen atom may be replaced, a cyano group, a nitro group, an amino group, - OH, -COOH, $-COO^{-}M^{+}$, $-SO_3H$, $-SO_3^{-}M^{+}$, a phthalimide group in which a

hydrogen atom may be replaced, a phthalimidomethyl group, or a heterocyclic compound; and $M^+$ represents a cation.

By containing the pigment A2 having a pH controlled within a range of 3 or more and 9 or less, aggregation of the pigments in the nonaqueous ink composition can be prevented, and storage stability and a cleaning recovery property can be improved.

The pigment A2 having a pH of 3 or more and 9 or less is obtained by washing with a solution in the same manner as the pigment A1 described above to treat a surface of the pigment, or changing a type of substituents (X1 to X10) in a benzene ring in a structure of the formula (1-2), or performing both treatments. A method of changing the type of the substituents (X1 to X10) in the benzene ring is the same as that of the pigment A1 described above. Positions at which the substituents X1 to X10 are substituted are not particularly limited in any 10 substitution positions of the benzene ring as long as the pigment A2 has a pH within a range of 3 or more and 9 or less, and the number of substituents is also not particularly limited.

An upper limit of the pH of the pigment A2 is preferably 9 or less, more preferably 8 or less, even more preferably 7 or less, and still more preferably 6 or less. A lower limit of the pH of the pigment A2 is preferably 3 or more, and more preferably 4 or more. In particular, when the pH of the pigment A2 is 9 or less, the pigment dispersant is more easily attached, and thus aggregation of the pigment A2 in the nonaqueous ink composition can be more effectively prevented. Accordingly, the ejection stability and the color tone stability of the nonaqueous ink composition can be improved.

Preferred ranges of a content of water and an average particle diameter of the pigment A2 in the nonaqueous ink composition according to the present embodiment are the same as the preferred ranges of the content of water and the average particle diameter of the pigment A1 in the nonaqueous ink composition according to the first embodiment described above.

The preferred range of the content of the pigment A2 contained in the nonaqueous ink composition according to the present embodiment is the same as the preferred range of the content of the pigment A1 contained in the nonaqueous ink composition of the first embodiment described above. The content of the pigment A2 is 8.0% by mass or less in the total amount of the nonaqueous ink composition, so that aggregation of the pigment A2 in the nonaqueous ink composition can be more effectively prevented. Accordingly, a content of other additives may be relatively increased, and further, an increase in a viscosity due to an increase in the content of the pigment A2 may be prevented, thereby preventing clogging in a nozzle of an inkjet head and further improving the cleaning recovery property.

Examples of the pigment A2 represented by the formula (1-2) include C.I. Pigment Red 254, C. I. Pigment Red 255, C. I. Pigment Red 264, C. I. Pigment Red 270, C. I. Pigment Red 272, C. I. Pigment Red 283, C. I. Pigment Red 291, C. I. Pigment Orange 71, C. I. Pigment Orange 73, and C. I. Pigment Orange 81.

In addition, the pigment A2 represented by the formula (1-2) may be synthesized, and may be obtained, for example, by washing a diketopyrrolopyrrole pigment which is a commercially available product with a solution (an acid solution, an alkali solution, or a neutral solution) to treat the surface of the pigment, or changing the type of the substituents (X1 to X10) in the benzene ring in the structure of the formula (1-2), or performing both treatments. Examples of the commercially available product include: IRGAPHOR RED BT-CF, and CROMOPHTAL DPP Red BP (both of which are C. I. Pigment Red 254) manufactured by BASF Ltd.; CHROMOFINE RED 6156 EC (both of which are C. I. Pigment Red 254) manufactured by Dainichiseika Color & Chemicals Mfg, Co., Ltd.; Pigment Red 254 (C. I. Pigment Red 254) manufactured by Tokyo Chemical Industry Co., Ltd.; Cinilex DPP Red SR-2P (C. I. Pigment Red 254) manufactured by CINIC Ltd.; CROMOPHTAL DPP ORANGE TR, IRAGIN ORANGE D2905 (C. I. Pigment Orange 71) manufactured by BASF Corp.; and Irgazin Orange L 2990 HD (C. I. Pigment Orange 73) manufactured by BASF Corp.

The nonaqueous ink composition according to the present embodiment may further contain a colorant (including a pigment and a dye) other than the pigment A2 described above. Examples of such a colorant include a pigment and a dye having a hue similar to that of the pigment A2 (for example, orange, magenta, yellow, and red).

Examples of the organic pigment include, by color index (C. I.) numbers, C.I. Pigment Yellow 1, 2, 3, 12, 13, 14, 16, 17, 20, 24, 73, 74, 75, 83, 93, 95, 97, 98, 109, 110, 114, 117, 120, 125, 128, 129, 130, 137, 138, 139, 147, 148, 150, 151, 153, 154, 155, 166, 168, 180, 185, 213, and 214; C.I. Pigment Red 5, 7, 9, 12, 48, 49, 52, 53, 57:1, 97, 112, 122, 123, 146, 149, 150, 168, 177, 180, 184, 192, 202, 206, 208, 209, 215, 216, 217, 220, 223, 224, 226, 227, 228, 238, 240, 269, and 291; C.I. Pigment Orange 16, 36, 43, 51, 55, 59, 61, and 64; C.I. Pigment Violet 19, 23, 29, 30, 37, 40, and 50; and C. I. Pigment Brown 23, 25, and 26.

In addition, a dispersion aid (pigment derivative) to be described below may be used together with the pigment dispersant. Accordingly, the dispersion stability of the pigment can be improved.

Next, each component contained in the nonaqueous ink composition according to the present embodiment will be described.

[Organic Solvent]

The organic solvent can disperse or dissolve each component contained in the nonaqueous ink composition according to the present embodiment. The organic solvent is not particularly limited, and preferably contains the organic

solvent B (at least one selected from the group consisting of the alkyl amide-based solvent (b1), the cyclic amide-based solvent (b2), and the lactone-based solvent (b3)) from a viewpoint of dispersing the pigment containing the pigment A2 and more effectively exhibiting the effect of the present invention.

For example, when a glycol ether-based solvent to be described below is contained as an organic solvent, affinity between the glycol ether-based solvent and the "pigment A2" is poor, and thus the pigment A2 is aggregated in the nonaqueous ink composition, and the cleaning recovery property may be deteriorated. Therefore, by containing the organic solvent B (at least one selected from the group consisting of an alkyl amide-based solvent (b1), a cyclic amide-based solvent (b2), and a lactone-based solvent (b3)), deterioration of the cleaning recovery property due to aggregation of the pigment A2 can be effectively prevented. Therefore, the organic solvent contained in the nonaqueous ink composition of the present invention is not particularly limited. In particular, when the glycol ether-based solvent is contained, by containing the organic solvent B (at least one selected from the group consisting of the alkyl amide-based solvent (b1), the cyclic amide-based solvent (b2), and the lactone-based solvent (b3)) together with the glycol ether-based solvent, a nonaqueous ink composition having high storage stability and a high cleaning recovery property is obtained.

A preferred type of solvents in the alkyl amide-based solvent (b1), the cyclic amide-based solvent (b2), and the lactone-based solvent (b3) is the same as that in the alkyl amide-based solvent (b1), the cyclic amide-based solvent (b2), and the lactone-based solvent (b3) in the nonaqueous ink composition of the first embodiment described above.

A content of the cyclic amide-based solvent (b2) is not particularly limited, and a lower limit of the content of the cyclic amide-based solvent (b2) is preferably in a range of 1% by mass or more, more preferably in a range of 10% by mass or more, and even more preferably in a range of 15% by mass or more in the total amount of the nonaqueous ink composition. Preferred ranges of contents in the alkyl amide-based solvent (b1), the cyclic amide-based solvent (b2), and the lactone-based solvent (b3) contained in the nonaqueous ink composition other than the "lower limit of the content of the cyclic amide-based solvent (b2)" are the same as those in the alkyl amide-based solvent (b1), the cyclic amide-based solvent (b2), and the lactone-based solvent (b3) in the nonaqueous ink composition of the first embodiment described above.

Among the organic solvents B, "those containing the alkyl amide-based solvent (b1)" and "those containing the cyclic amide-based solvent (b2)" are preferable, and "those containing the alkyl amide-based solvent (b1)" are more preferable. The organic solvents B exhibit a sufficient effect when at least one of the alkyl amide-based solvent

(b1), the cyclic amide-based solvent (b2), and the lactone-based solvent (b3) is contained, but two or more kinds of solvents of the organic solvents B may be mixed. When two or more kinds of organic solvents B are mixed, a preferred range of a total content of the organic solvents B contained in the nonaqueous ink composition is the same as that of the nonaqueous ink composition of the first embodiment described above.

[Other Organic Solvents]

The nonaqueous ink composition according to the present embodiment may contain an organic solvent other than the above organic solvent B. Specific examples thereof include glycol ether dialkyl in which OH groups at both ends of glycol are alkyl-substituted, glycol ether monoalkyl in which one OH group of glycol is alkyl-substituted, carbonic acid ester, and other solvents (an oxazolidinone-based solvent, an acetate-based solvent, amide-based solvents different from the alkyl amide-based solvent (b1) and the cyclic amide-based solvent (b2), alkyl alcohol, ketone or keto alcohol, ether, an oxyethylene or oxypropylene copolymer, diol, tetravalent alcohol, alkanol amine, and the like). A type of a preferred solvent contained in the other organic solvents is the same as the glycol ether dialkyl, the glycol ether monoalkyl, or the carbonic acid ester contained in the nonaqueous ink composition of the first embodiment described above. A preferred range of a total content of the other organic solvents contained in the nonaqueous ink composition is the same as that of the nonaqueous ink composition of the first embodiment described above.

[Pigment Dispersant]

A dispersant may be used in the nonaqueous ink composition according to the present embodiment, if necessary. A type of a preferred pigment dispersant is the same as that of the pigment dispersant in the nonaqueous ink composition of the first embodiment described above.

In particular, in the nonaqueous ink composition according to the present embodiment containing the pigment A2 having a pH of 3 or more and 9 or less, it is preferable to use a pigment dispersant having a basic group among the above. Among them, a pigment dispersant having an amine value in a range of 20 mgKOH/g or more and 100 mgKOH/g or less is preferably used.

A preferred range of a content of the pigment dispersant contained in the nonaqueous ink composition is the same as that of the nonaqueous ink composition of the first embodiment described above.

[Dispersion Aid]

A dispersion aid may be used in the nonaqueous ink composition according to the present embodiment, if necessary.

[Resin]

The nonaqueous ink composition according to the present embodiment may not contain a resin or may contain a resin. A type of a preferred resin is the same as that of the resin in the nonaqueous ink composition of the first embodiment described above. A content of the resin contained in the nonaqueous ink composition and a preferred range of a resin having an intrinsic viscosity at 25°C of 90 mL/g or more are the same as those of the nonaqueous ink composition of the first embodiment described above.

[Surfactant]

A surfactant may be added to the nonaqueous ink composition according to the present embodiment.

Examples of the surfactant include: NONION P-208, P-210, P-213, E-202S, E-205S, E-215, K-204, K-220, S-207, S-215, A-10R, A-13P, NC-203, and NC-207 (manufactured by NOF CORPORATION), Emulgen 106, 108, 707, 709, A-90, and A-60 (manufactured by Kao Corporation), Floren G-70, D-90, and TG-740W (manufactured by KYOEISHA CHEMICAL Co., Ltd.), Poem J-0081HV (manufactured by Riken Vitamin Co., Ltd.), Adekatol NP-620, NP-650, NP-660, NP-675, NP-683, and NP-686, Adekacol CS-141E, and TS-230E (manufactured by ADEKA Co., Ltd.), Sorgen 30V, 40, TW-20, and TW-80, Noigen CX-100 (manufactured by DKS Co. Ltd.), which are polyoxyalkylene alkyl ethers. As a fluorine-based surfactant, it is preferable to use a fluorine-modified polymer, and specific examples thereof include BYK-340 (manufactured by BYK-Chemie Japan). As a silicon-based surfactant having a siloxane skeleton, it is preferable to use polyester-modified silicon or polyether-modified silicon, and specific examples thereof include BYK-313, 315N, 322, 326, 331, 347, and 348, and BYK-UV3500, 3510, 3530, and 3570 (all manufactured by BYK-Chemie Japan). Specific examples of an acetylene glycol-based surfactant include Surfynol (registered trademark) 82, 104, 465, and 485, and TG (all manufactured by Air Products Japan), Olfine (registered trademark) STG, and E1010 (all manufactured by Nissin Chemical Industry CO., Ltd.).

The surfactant is not limited to those described above, an anionic surfactant, a cationic surfactant, an amphoteric surfactant, or a nonionic surfactant may be used. Among them, the surfactant preferably contains a surfactant having a siloxane skeleton. In a case of a nonaqueous ink containing the surfactant having the siloxane skeleton, a recorded matter having less bleeding of printing and improved rubbing resistance is obtained. The same applies to a nonaqueous ink compositions of the third embodiment to be described below.

A range of a content of the surfactant contained in the nonaqueous ink composition is the same as that of the nonaqueous ink composition of the first embodiment described above.

[Other Components]

The nonaqueous ink composition according to the present embodiment may contain other components as optional components. Types of other components contained in the nonaqueous ink composition are the same as those in the nonaqueous ink composition of the first embodiment described above.

«1-3. Nonaqueous Ink Composition of Third Embodiment»

A nonaqueous ink composition according to the present embodiment is a nonaqueous ink composition to be ejected by an inkjet method and containing a pigment, a pigment dispersant, and an organic solvent.

The pigment contained in the nonaqueous ink composition contains a halogenated phthalocyanine pigment A3, and the organic solvent contains the following organic solvent B.

Organic solvent B: at least one selected from the group consisting of an alkyl amide-based solvent (b1), a cyclic amide-based solvent (b2), and a lactone-based solvent (b3).

The halogenated phthalocyanine pigment A3 is a compound in which at least part of hydrogen of a benzene ring in a phthalocyanine skeleton is substituted with a halogen atom (fluorine, chlorine, bromine, and iodine).

[Chem. 13]

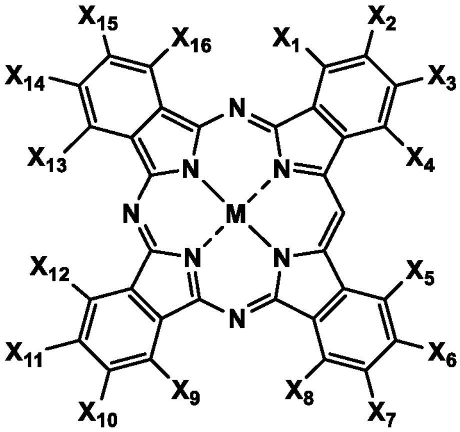

...(1-3)

wherein each of X1 to X16 independently represents a halogen atom or a hydrogen atom. M represents two hydrogen atoms or a metal atom which may have a ligand.

The halogenated phthalocyanine pigment is a pigment having a structure in which at most 16 halogen atoms in total are bonded to one phthalocyanine molecule.

The phthalocyanine pigment is halogenated, resulting in a pigment that exhibits green. In order to express green in a generally obtained recorded matter, one of the following methods is considered: (I) using a green ink using a green pigment, (II) using a green ink using a yellow pigment and a blue pigment, and (III) expressing green in two colors, a yellow ink using a yellow pigment and a cyan ink using a blue pigment. Among them, in (II) in which a plurality of pigments are used and (III) in which a plurality of inks are used, as a result, green is expressed by the yellow pigment and the blue pigment, and thus chroma is likely to decrease. On the other hand, in (I), the green ink using the green pigment originally exhibiting green is used without using a plurality of pigments or a plurality of inks, and thus the chroma and color reproducibility can be improved compared with the methods of (II) and (III).

Furthermore, a phthalocyanine pigment generally has higher weather resistance than the yellow pigment. Therefore, by using the green ink containing the halogenated phthalocyanine pigment, the weather resistance of the obtained recorded matter can be improved as compared with a case of using the yellow pigment and the blue pigment as in the methods (II) and (III).

However, in the halogenated phthalocyanine pigment A3, since a halogen element is substituted, a density (weight per unit volume) of the entire pigment increases, and it is difficult to disperse the halogenated phthalocyanine pigment A3 in the nonaqueous ink composition for a long period of time. Therefore, the present inventors have found that when a nonaqueous ink composition containing the halogenated phthalocyanine pigment is stored for a long period of time, the pigment precipitates in the nonaqueous ink composition, and storage stability, color tone stability, and a cleaning recovery property are reduced.

Therefore, by containing the organic solvent B (at least one selected from the group consisting of the alkyl amide-based solvent (b1), the cyclic amide-based solvent (b2), and the lactone-based solvent (b3)), the storage stability, the color tone stability, and the cleaning recovery property can be improved.

A preferred range of a content of water in the nonaqueous ink composition according to the present embodiment is the same as the preferred range of the content of water contained in the nonaqueous ink composition of the first embodiment described above.

Since the pigment A3 has high hydrophobicity, in a nonaqueous inkjet composition containing the pigment, dispersibility of the pigment is likely to be deteriorated by contact with water, and the storage stability is likely to be deteriorated. In addition to containing the organic solvent B, by reducing the content of water in the nonaqueous ink composition so as not to contain water as much as possible (intentionally not to contain water), precipitation of the halogenated phthalocyanine pigment A3 can be more effectively prevented, and the storage stability and ejection stability can be more effectively improved.

Hereinafter, each component contained in the nonaqueous ink composition according to the present embodiment will be described.

[Pigment]

The pigment contained in the nonaqueous ink composition according to the present embodiment contains the

halogenated phthalocyanine pigment A3. The halogenated phthalocyanine pigment A3 is a compound having a phthalocyanine skeleton represented by the following formula.

[Chem. 14]

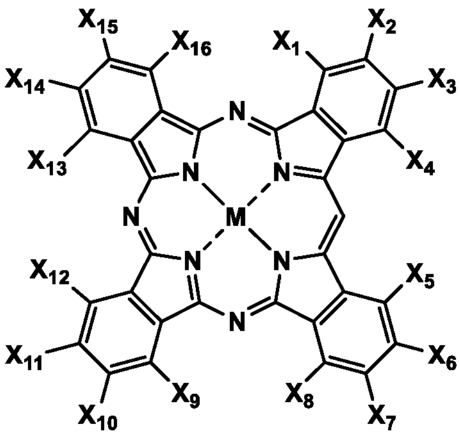

...(1-3)

wherein each of X1 to X16 independently represents a halogen atom or a hydrogen atom. M represents two hydrogen atoms or a metal atom which may have a ligand.

The halogenated phthalocyanine pigment refers to a pigment in which at least one or more of X1 to X16 is replaced with a halogen atom. That is, the halogenated phthalocyanine pigment is a pigment having a structure in which one halogen atom in total is bonded at minimum and 16 halogen atoms in total are bonded at maximum per phthalocyanine molecule. A halogenated phthalocyanine pigment having a larger number of halogen groups is closer to green. The number of halogen atoms substituted by the halogenated phthalocyanine pigment is preferably 1 or more, more preferably 8 or more, even more preferably 12 or more, and still more preferably 14 or more in order to exhibit a green hue.

The halogenated phthalocyanine pigment A3 may be a halogenated metal phthalocyanine pigment in which the center M of the phthalocyanine skeleton thereof is two hydrogen atoms or M is a metal atom. When M is the metal atom, a type of metal is not particularly limited, and is particularly preferably manganese (Mn), iron (Fe), cobalt (Co), nickel (Ni), copper (Cu), zinc (Zn), or aluminum (Al) . When M is the metal atom, M may have a ligand.

Specific examples of the halogenated phthalocyanine pigment A3 (containing a halogenated metal phthalocyanine pigment) include C. I. Pigment Green 7, 36, 58, 59, 62, and 63. The halogenated phthalocyanine pigment A3 may be produced by a conventionally known method, or may be a commercially available product such as FASTGEN GREEN 2YK (C. I. Pigment Green 36) manufactured by DIC Co., Ltd., Cyanine Green 5370 (C. I. Pigment Green 36) manufactured by Dainichiseika Color & Chemicals Mfg, Co., Ltd., FASTGEN GREEN 5740 (C. I. Pigment Green 7) manufactured by DIC Co., Ltd., and Fastogen GREEN A110 (C. I. Pigment Green 58) manufactured by DIC Co., Ltd.

A volume-based cumulative 50% particle diameter (D50) of the pigment A3 is not particularly limited, and a lower limit of the volume-based cumulative 50% particle diameter (D50) is preferably 30 nm or more, more preferably 40 nm or more, and even more preferably 50 nm or more. Accordingly, weather resistance of the halogenated phthalocyanine pigment A3 can be improved. An upper limit of the volume-based cumulative 50% particle diameter (D50) is preferably 150 nm or less, more preferably 140 nm or less, and even more preferably 130 nm or less. Accordingly, precipitation of the halogenated phthalocyanine pigment A3 in the nonaqueous ink composition can be more effectively prevented, and the color tone stability is improved.

A volume-based cumulative 90% particle diameter (D90) of the pigment A3 is not particularly limited, and a lower limit of the volume-based cumulative 90% particle diameter (D90) is preferably 50 nm or more, more preferably 60 nm or more, and even more preferably 70 nm or more. Accordingly, the weather resistance of the halogenated phthalocyanine pigment A3 can be improved. An upper limit of the volume-based cumulative 90% particle diameter (D90) is preferably 300 nm or less, more preferably 290 nm or less, and even more preferably 280 nm or less. Accordingly, the precipitation of the halogenated phthalocyanine pigment A3 in the nonaqueous ink composition can be more effectively prevented, and the color tone stability is improved.

A content of the pigment A3 is not particularly limited, and a lower limit of the content of the pigment A3 is preferably 0.5% by mass or more, more preferably 1.0% by mass or more, and even more preferably 1.5% by mass or more in the total amount of the nonaqueous ink composition. Accordingly, a printing density becomes sufficient, and the color reproducibility of the recorded matter can be improved.

An upper limit of the content of the pigment A3 is preferably 8.0% by mass or less, more preferably 6.0% by mass or less, and even more preferably 5.0% by mass or less in the total amount of the nonaqueous ink composition. Accordingly, a content of other additives may be relatively increased, and further, an increase in a viscosity due to an increase in the content of the pigment (the halogenated phthalocyanine pigment) may be prevented, thereby preventing clogging in a nozzle of an inkjet head and further improving the cleaning recovery property.

The nonaqueous ink composition according to the present embodiment may further contain a colorant (including a pigment and a dye) other than the halogenated phthalocyanine pigment A3 described above. Examples of such a colorant include a pigment and a dye having a skeleton or hue (cyan, green, yellow) similar to that of the halogenated phthalocyanine pigment A3.

Examples of the organic pigment include, by color index (C. I.) numbers, pigments such as C. I. Pigment Blue 15, 15:1, 15:3, 15:4, 15:6, 16, 22, 60, and 64, and C. I. Pigment Yellow 1, 2, 3, 12, 13, 14, 16, 17, 20, 24, 73, 74, 75, 83, 93, 95, 97, 98, 109, 110, 114, 117, 120, 125, 128, 129, 130, 137, 138, 139, 147, 148, 150, 151, 153, 154, 155, 166, 168, 180, 185, 213, and 214.

In addition, a dispersion aid (pigment derivative) to be described below may be used together with the pigment dispersant. Accordingly, the dispersion stability of the pigment can be improved, and the storage stability of the nonaqueous ink composition can be improved.

Next, each component contained in the nonaqueous ink composition according to the present embodiment will be described.

[Organic Solvent]

An organic solvent can disperse or dissolve each component contained in the nonaqueous ink composition according to the present embodiment. The organic solvent contains the organic solvent B (at least one selected from the group consisting of the alkyl amide-based solvent (b1), the cyclic amide-based solvent (b2), and the lactone-based solvent (b3)).

The present inventors have found that by containing the alkyl amide-based solvent (b1), the halogenated phthalocyanine pigment A3 can be dispersed in the nonaqueous ink composition for a long period of time, and the storage stability, the color tone stability, and the cleaning recovery property can be improved. Although the reason for this is unclear, it is considered that this is because affinity with the pigment dispersant that disperses the halogenated phthalocyanine pigment A3 is improved, and the halogenated phthalocyanine pigment A3 can be effectively dispersed in the nonaqueous ink composition containing the alkyl amide-based solvent, and precipitation of the halogenated phthalocyanine pigment A3 can be prevented.

In addition, the present inventors have found that by containing the cyclic amide-based solvent (b2) or the lactone-based solvent (b3), the halogenated phthalocyanine pigment A3 can be dispersed in the nonaqueous ink composition for a long period of time, and the storage stability, the color tone stability, and the cleaning recovery property can be improved.

A preferred type of solvents in the alkyl amide-based solvent (b1), the cyclic amide-based solvent (b2), and the lactone-based solvent (b3) is the same as that in the alkyl amide-based solvent (b1), the cyclic amide-based solvent (b2), and the lactone-based solvent (b3) in the nonaqueous ink composition of the first embodiment described above.

Among the organic solvents B, "those containing the alkyl amide-based solvent (b1)" and "those containing the cyclic amide-based solvent (b2)" are preferable, and "those containing the alkyl amide-based solvent (b1)" are more preferable. The organic solvents B exhibit a sufficient effect when at least one of the alkyl amide-based solvent (b1), the cyclic amide-based solvent (b2), and the lactone-based solvent (b3) is contained, but two or more kinds of solvents of the organic solvents B may be mixed. When two or more kinds of organic solvents B are mixed, a preferred range of a total content of the organic solvents B contained in the nonaqueous ink composition is the same as that of the nonaqueous ink composition of the first embodiment described above.

[Other Organic Solvents]

The nonaqueous ink composition according to the present embodiment may contain an organic solvent other than the above organic solvent B. Specific examples thereof include glycol ether dialkyl in which OH groups at both ends of glycol are alkyl-substituted, glycol ether monoalkyl in which one OH group of glycol is alkyl-substituted, carbonic acid ester, and other solvents (an oxazolidinone-based solvent, an acetate-based solvent, amide-based solvents different from the alkyl amide-based solvent (b1) and the cyclic amide-based solvent (b2), alkyl alcohol, ketone or keto alcohol, ether, an oxyethylene or oxypropylene copolymer, diol, tetravalent alcohol, alkanol amine, and the like). A type of a preferred solvent contained in the other organic solvents is the same as the glycol ether dialkyl, the glycol ether monoalkyl, or the carbonic acid ester contained in the nonaqueous ink composition of the first embodiment described above. A preferred range of a total content of the other organic solvents contained in the nonaqueous ink composition is the same

as that of the nonaqueous ink composition of the first embodiment described above.

[Pigment Dispersant]

A pigment dispersant may be used in the nonaqueous ink composition according to the present embodiment, if necessary. In particular, the pigment dispersant having a basic group is preferably used in the nonaqueous ink composition according to the present embodiment containing the pigment A3. By using the pigment dispersant having the basic group, aggregation of the halogenated phthalocyanine pigment A3 in the nonaqueous ink composition can be more effectively prevented. A type of a preferred pigment dispersant is the same as that of the pigment dispersant in the nonaqueous ink composition of the first embodiment described above.
Among them, a pigment dispersant having an amine value in a range of 20 mgKOH/g or more and 100 mgKOH/g or less is preferably used. Aggregation of the pigment A3 in the nonaqueous ink composition can be more effectively prevented.
A preferred range of a content of the pigment dispersant contained in the nonaqueous ink composition is the same as that of the nonaqueous ink composition of the first embodiment described above.

[Dispersion Aid]

A dispersion aid may be used in the nonaqueous ink composition according to the present embodiment, if necessary.

[Resin]

The nonaqueous ink composition according to the present embodiment may not contain a resin or may contain a resin. A type of a preferred resin is the same as that of the resin in the nonaqueous ink composition of the first embodiment described above. A preferred range of a content of the resin contained in the nonaqueous ink composition is the same as that of the nonaqueous ink composition of the first embodiment described above.
In addition, the resin contained in the nonaqueous ink composition according to the present embodiment preferably contains a resin having an intrinsic viscosity at 25°C of 90 mL/g or more in a range of 5% by mass or less in a total amount of the resin. Accordingly, excellent printing performance such as continuous ejection stability can be obtained, and the cleaning recovery property of the obtained recorded matter can be more effectively improved.
A content of the resin having the intrinsic viscosity at 25°C of 90 mL/g or more is preferably 4.0% by mass or less, more preferably 3.5% by mass or less, and even more preferably 2.5% by mass or less in a total amount of the resin.

[Surfactant]

A surfactant may be added to the nonaqueous ink composition according to the present embodiment. A preferred type of the surfactant is the same as that of the surfactant in the nonaqueous ink composition of the second embodiment described above. A preferred range of a content of the surfactant contained in the nonaqueous ink composition is the same as that of the nonaqueous ink composition of the second embodiment described above.

[Other Components]

The nonaqueous ink composition according to the present embodiment may contain other components as optional components. Types of other components contained in the nonaqueous ink composition are the same as those in the nonaqueous ink composition of the first embodiment described above.

[Method for Producing Nonaqueous Ink Composition]

A method for producing a nonaqueous ink composition according to the present embodiment can be produced by mixing an organic solvent, a pigment containing the pigment A1 or A2, and other components (for example, a resin) using a paint shaker. At this time, each component may be dispersed with a zirconia bead.
The obtained nonaqueous ink composition may be adjusted to have a desired dissolved oxygen amount or a desired dissolved nitrogen amount by, for example, performing a degassing treatment as necessary.
When a pigment containing the pigment A3 is used, the nonaqueous ink composition can be produced by mixing an organic solvent containing the organic solvent B (at least one selected from the group consisting of the alkyl amide-based solvent (b1), the cyclic amide-based solvent (b2), and the lactone-based solvent (b3)), a pigment containing the halogenated phthalocyanine pigment A3, and other components (for example, a resin) using the paint shaker.

The nonaqueous ink composition according to the present embodiment (the nonaqueous ink compositions of the first, second, and third embodiments) is a nonaqueous ink composition that does not intentionally contain water, but water may be mixed from a raw material in a production process. A content of water in the nonaqueous ink composition is preferably as small as possible. When water is excessively contained, the storage stability and a ejection property are poor, and further, a risk of generation of a solid component and the like increases. An upper limit of the content of water in the nonaqueous ink composition is preferably 5.0% by mass or less, more preferably 1.0% by mass or less, and particularly preferably 0.5% by mass or less in the total amount of the nonaqueous ink composition.
In this case, the organic solvent is preferably dried in advance.
By drying the organic solvent in advance, an amount of water contained in a nonaqueous composition can be reduced. Examples of a method for drying the organic solvent include a method of spraying an inert gas (for example, a nitrogen gas), which is dried in an inert gas atmosphere such as nitrogen, for a predetermined time, a method of distilling and refining the organic solvent, a method of allowing the organic solvent to permeate a semi-permeable membrane that selectively permeates water, and a method of selectively adsorbing water mixed in the organic solvent with a water adsorbent that adsorbs water.

«3. Recording Method Using Ink Composition»

The recording method according to the present embodiment is a recording method including ejecting the above nonaqueous ink composition onto a surface of a substrate by an inkjet method.
The nonaqueous ink compositions of the first and second embodiments, among the above nonaqueous ink compositions, satisfy characteristics required for the nonaqueous ink composition ejected by the inkjet method by containing the pigment A1 or A2 in which a substituent in a structure is changed so that a pH thereof is in a range of 3 or more and 9 or less, and satisfy characteristics required for the nonaqueous ink composition ejected by the inkjet method even in the recording method according to the present embodiment. The nonaqueous ink composition of the third embodiment, among the above nonaqueous ink compositions, has high storage stability and color tone stability even when containing the halogenated phthalocyanine pigment A3, and also has high color tone stability even in a recorded matter obtained by using the recording method according to the present embodiment.
A method of ejecting ink by the inkjet method may be a piezo method using a piezoelectric element or a thermal method using a heating element, and is not particularly limited.

«4. Method for Producing Recorded Matter»

The recording method using the above ink composition can also be defined as a method for producing a recorded matter. By producing a recorded matter using the nonaqueous ink composition of the first embodiment among the above nonaqueous ink compositions, a recorded matter can be produced in a state in which the characteristics required for the nonaqueous ink composition ejected by the inkjet method are satisfied. In addition, by producing a recorded matter using the nonaqueous ink composition of the second embodiment among the above nonaqueous ink compositions, a recorded matter can be produced in a state in which the characteristics of high storage stability and high cleaning recovery property are satisfied. In addition, by producing a recorded matter using the nonaqueous ink composition of the third embodiment among the above nonaqueous ink compositions, a recorded matter having high color tone stability can be obtained.

«5. Recorded Matter»

Each layer constituting the recorded matter manufactured by the method for producing the recorded matter described above according to the present embodiment will be described.

[Medium (Recording Medium)]

The substrate (recording medium) that can be used in the recording method according to the present embodiment is not particularly limited, and a resin substrate, a non-absorbent substrate such as metal and a plate glass, an absorbent substrate such as paper or cloth, or a surface-coated substrate such as a substrate with a receiving layer, and various substrates can be used.
Among them, since the above nonaqueous ink composition is a nonaqueous ink composition containing no water, a nonaqueous ink composition having a surface mainly made of a resin is preferable.
In particular, when the nonaqueous ink composition contains the alkyl amide-based solvent (b) having permeability with respect to the resin substrate, bleeding in printing on a medium (recording medium) having a surface made of a resin is reduced, and printing is clear. Examples of the resin include a polyvinyl chloride-based polymer, acryl, PET,

polycarbonate, PE, and PP. In addition, the resin may also be used for a resin substrate (so-called resin substrate for lamination) on a premise that a film is attached to a recording surface of a recorded matter. In particular, a substrate (recording medium) having a hard or soft polyvinyl chloride-based polymer surface is preferable. Examples of the substrate (recording medium) whose surface is made of a polyvinyl chloride polymer include a polyvinyl chloride substrate (film or sheet).

[Recording Layer]

A recording layer (also referred to as a printed layer) is a layer formed by volatilization of a solvent contained in the nonaqueous ink composition, and is a layer that forms a desired image. By ejecting the nonaqueous ink composition of the first embodiment among the above nonaqueous ink compositions, the characteristics required for the nonaqueous ink composition ejected by the inkjet method are satisfied. Among the above nonaqueous ink compositions, the nonaqueous ink composition of the second embodiment has high storage stability and high cleaning recovery property, and therefore, a desired image can be formed even with a nonaqueous ink composition stored for a long period of time. By ejecting the nonaqueous ink composition of the third embodiment among the above nonaqueous ink compositions, a recording layer having high color tone stability is obtained. Since the nonaqueous ink composition has the high storage stability, a desired image can be formed even with a nonaqueous ink composition stored for a long period of time.

[Other Layers]

The recorded matter according to the present embodiment may further include a layer having a desired function on an upper surface of the recording layer (printed layer). For example, an overcoat layer containing at least one of a resin and a wax may be formed for a purpose of further imparting rubbing resistance and glossiness to the recorded matter. In addition, a layer expressing a feeling of unevenness (matte surface) may be formed on the surface by containing a filler or changing a film thickness for each pixel. Further, in order to impart weather resistance to the recorded matter, a weather resistant layer containing an ultraviolet absorber, a light stabilizer, or the like, a brilliant layer containing a brilliant pigment, or the like may be formed.

«6. Ink Set»

An ink set according to the present embodiment is an ink set containing at least the above nonaqueous ink composition. For example, when the nonaqueous ink composition is a red ink, an orange ink, or a green ink, by combining a conventionally known yellow ink, magenta ink, cyan ink, and black ink, color reproducibility can be expanded in addition to the effect of the present invention is achieved.

In addition, the above nonaqueous ink composition may be used as an ink set containing a brilliant ink such as a white ink, a metallic ink, or a pearl ink, or may be used as an ink set containing a clear ink containing no pigment.

«7. Inkjet Recording Device»

As an inkjet recording device that ejects the above nonaqueous ink composition by the inkjet method, a known device in the related art can be used. For example, an inkjet printer such as VersaArt RE-640 manufactured by Rowland DG Co., Ltd. can be used.

As an example of a configuration of the inkjet recording device, an on-carriage type and a serial printer type inkjet recording device will be described. However, the inkjet recording device capable of implementing the recording method according to the present embodiment may be an off-carriage type inkjet recording device in which an ink cartridge is fixed to an outside, or may be a line printer type inkjet recording device in which an ink composition is ejected onto a recording medium (substrate) without moving an inkjet head.

Further, the inkjet recording device preferably includes a heating mechanism and a fixing mechanism that fixes the substrate. The organic solvent contained in the nonaqueous ink composition can be volatilized by controlling a surface temperature of the substrate by the heating mechanism provided in the inkjet recording device to dry the nonaqueous ink composition landed on the substrate (recording medium).

Further, by the fixing mechanism that fixes the substrate, the nonaqueous ink composition can be dried in a state in which the substrate (recording medium) is fixed, and uneven application of heat due to bending of the substrate by heating can be prevented. Accordingly, the nonaqueous ink composition landed on the substrate (recording medium) can be effectively dried.

The heating mechanism provided in the inkjet recording device may be a preheater, a platen heater, an after-heater, or the like, or may be a mechanism that blows warm air to the recorded matter. In addition, a plurality of these heating mechanisms may be combined.

A surface temperature of the substrate heated by the heating mechanism is not particularly limited as long as the organic solvent contained in the nonaqueous ink composition can be volatilized, a lower limit of the surface temperature of the substrate is preferably 20°C or higher, more preferably 30°C or higher, and even more preferably 40°C or higher. An upper limit of the surface temperature of the substrate is preferably 70°C or lower, more preferably 60°C or lower, and even more preferably 50°C or lower.

The fixing mechanism that fixes the substrate may be a fixing mechanism that fixes the substrate to a predetermined fixture or a fixing mechanism that sucks and adsorbs the substrate by a negative pressure, and is not particularly limited.

The inkjet head that ejects the above nonaqueous ink composition may be a piezo inkjet head using a piezoelectric element or a thermal inkjet head using a heating element, and is not particularly limited.

In addition, the inkjet recording device may include a plastic tube that connects a container (an ink cartridge, a bottle, or the like) that stores the above nonaqueous ink composition and an inkjet ejecting port that ejects the above nonaqueous ink composition and allows the nonaqueous ink composition to flow therethrough, and may be configured such that the nonaqueous ink composition is supplied to the inkjet head through the plastic tube and ejected by the inkjet method.

When the pigment A1 (perinone pigment), the pigment A2 (diketopyrrolopyrrole pigment), or the pigment A3 (halogenated phthalocyanine pigment) contained in the nonaqueous ink composition is aggregated in the plastic tube, a nozzle is clogged, and the ejection stability may be reduced. Therefore, the inkjet recording device according to the present embodiment preferably includes a mechanism capable of eliminating clogging in the nozzle. The effect of the present invention can be more effectively achieved by providing the mechanism capable of eliminating clogging in the nozzle in addition to the use of the perinone pigment or the diketopyrrolopyrrole pigment having a pH within a predetermined range.

Specifically, the tube connected to the storage mechanism and the inkjet ejecting port is preferably provided with a valve mechanism that adjusts a flow path of the nonaqueous ink composition. By supplying the above nonaqueous ink composition from the storage mechanism to the inkjet ejecting port via the valve mechanism, the ejection stability of the nonaqueous ink composition can be further improved.

A material of the plastic tube is not particularly limited, and examples thereof include a polyolefin resin such as a polyethylene resin, ethylene-propylene-diene rubber, nylon, polyurethane, and PTFE. Among them, the polyethylene resin and the ethylene-propylene-diene rubber are preferred.

In addition, as described above, the inkjet recording device according to the present embodiment can be used for inks of respective colors such as yellow, magenta, cyan, and black, and inks of respective colors such as light magenta, light cyan, light black, orange, green, red, and white, and an order of colors to be printed and a position and configuration of a head are not particularly limited. In addition, the inkjet recording device according to the present embodiment may or may not include a winding mechanism for the recording medium (substrate), a drying mechanism that dries a substrate surface, and an ink circulation mechanism.

[Examples]

Hereinafter, the present invention will be described in more detail with reference to examples, but the present invention is not limited to these descriptions.

(First Embodiment)

1. Preparation of Resin

(1) Acrylic Resin

A mixture of 150g of methyl methacrylate, 50g of butyl methacrylate, and a predetermined amount of t-butylperoxy-2-ethylhexanoate (polymerization initiator) was added dropwise to 300g of diethylene glycol diethyl ether maintained at 100°C over 1.5 hours. After completion of dropwise addition, the obtained mixture was reacted at 100°C for 2 hours and then cooled to give a colorless and transparent polymer solution of methyl methacrylate. Thereafter, a solvent was sufficiently distilled off from the polymer solution to give a polymer of the methyl methacrylate. At this time, an amount of t-butylperoxy-2-ethylhexanoate, which is a polymerization initiator, was changed to control a polymerization average molecular weight of methyl methacrylate (acrylic resin) to 30,000 to 105,000 (A mass of the polymerization initiator used at this time is described in Table 1 below, and is indicated as "initiator amount" in Table 1.).

(2) Vinyl Chloride-Vinyl Acetate Copolymer Resin

After nitrogen substitution, an autoclave equipped with a stirring device was charged with 100 parts of deionized water, 40 parts of methanol, 32 parts of vinyl chloride, 5 parts of vinyl acetate, 0.2 parts of glycidyl methacrylate, 3.55 parts of hydroxypropyl acrylate, 0.1 parts of hydroxypropyl methyl cellulose (suspension agent), 0.026 parts of di-2-ethylhexyl peroxydicarbonate (polymerization initiator), and a predetermined amount of di-3,5,5-trimethylhexanol peroxide (polymerization initiator), and the obtained mixture was heated to 63°C while being stirred in a nitrogen gas atmosphere, and immediately after reaching 63°C, 48 parts of vinyl chloride was continuously injected for 6 hours, and a mixture of 0.6 parts of glycidyl methacrylate and 10.65 parts of hydroxypropyl acrylate was continuously injected for 5.4 hours to carry out a copolymerization reaction. When an internal pressure of the autoclave reached 0.3 MPa, a residual pressure was released, the resultant was cooled, resin slurry was taken out, filtered, and dried to give a vinyl chloride copolymer resin. At this time, the amount of di-3,5,5-trimethylhexanol peroxide, which is a polymerization initiator, was changed to control a polymerization average molecular weight of the vinyl chloride-vinyl acetate copolymer resin to 40,000 to 75,000 (A mass of the polymerization initiator used at this time is described in Table 1 below, and is indicated as "initiator amount" in Table 1.) .

(3) Cellulose Resin

A cellulose resin (CAB551-0.01, CAB553-0.4, and CAP482-0.5 manufactured by EASTMAN CHEMICAL, Co., Ltd.) which is a commercially available product was used.

(4) Polyester Resin

A round bottom flask was charged with 104 parts by mass of terephthalic acid, 104 parts by mass of isophthalic acid, 79 parts by mass of ethylene glycol, 89 parts by mass of neopentyl glycol, and 0.1 parts by mass of tetrabutyl titanate, a temperature of the round bottom flask was gradually increased to 240°C over 4 hours, and esterification reaction was performed while removing a precipitate outside the system. After completion of the esterification reaction, a pressure was reduced to 10 mmHg over 30 minutes, and the temperature was increased to 250°C to perform initial polymerization. Thereafter, late polymerization was performed for 1 hour at 1 mmHg or less to obtain the polyester resin.

(5) Polyurethane Resin

Into a round bottom flask were put 192.5 parts by mass of polycarbonate diol (PLACCEL CD-220, manufactured by Daicel Corporation), 41.6 parts by mass of isophorone diisocyanate (IPDI, manufactured by Evonik), and 100 parts by mass of N,N-diethylformamide (DEF) ,followed by uniformly mixing and then, a mixed liquid of 0.01 parts by mass of T100 BHJ (catalyst) and 0.09 parts by mass of N,N-diethylformamide (DEF) was put into the flask and reacted at 75°C for 3 hours to obtain a prepolymer having an isocyanate group at the end. After 250 parts by mass of N,N-diethylformamide (DEF) was added to the prepolymer and uniformly dissolved therein, a chain extender solution obtained by dissolving 12 parts by mass of 3-aminomethyl-3,5,5-trimethylcyclohexylamine (IPD: manufactured by Evonik) in 100 parts by mass of DEF was added thereto, and the mixture was further stirred at 60°C for 40 minutes. Thereafter, a reaction terminator obtained by dissolving 3.8 parts by mass of monoisopropanolamine (MIPA: Daicel Corporation) in 50 parts by mass of N,N-diethylformamide (DEF) was added, and finally, 250 parts by mass of N,N-diethylformamide (DEF) was added to obtain a polyurethane solution having a solid content of 25.0% by mass.

Table 1 shows a weight average molecular weight (relative molecular mass) of each resin (an acrylic resin, a vinyl chloride-vinyl acetate copolymer resin, a cellulose resin, a polyester resin, and a polyurethane resin) and a ratio of each resin having an intrinsic viscosity at 25°C of 90 mL/g or more. The weight average molecular weight (relative molecular mass) was measured by gel permeation chromatography (GPC) . In addition, in the ratio of each resin having the intrinsic viscosity of 90 mL/g or more, the intrinsic viscosity was obtained by connecting a viscosity detector (ViscoStar III manufactured by WYATT) and a refractive index detector (Optilab T-rEX manufactured by WYATT) to a SEC (GPC) system manufactured by Shimadzu Corporation, allowing a sample to pass through a column heated to 40°C in the SEC (GPC) system manufactured by Shimadzu Corporation using tetrahydrofuran as a dispersion solvent, obtaining a relative viscosity [ηSP] from a passed substance cooled to 25°C by the viscosity detector, obtaining a concentration C by the refractive index detector, and extrapolating the concentration C to 0 in Lim ([ηSP]/C).

[Table 1]

| | | Weight average molecular weight (Relative molecular mass) | Product number | Initiator amount (g) | 90 mL/g or more (mass%) |
|---|---|---|---|---|---|
| Acrylic resin | Acrylic resin 1 | Mw=30000 | - | 1.20 | 0.0 |
| | Acrylic resin 2 | Mw=80000 | - | 0.20 | 2.2 |
| | Acrylic resin 3 | Mw=105000 | - | 0.10 | 8.1 |
| Vinyl chloride-vinyl acetate copolymer resin | Vinyl chloride-vinyl acetate copolymer resin 1 | Mw=40000 | - | 0.58 | 0.3 |
| | Vinyl chloride-vinyl acetate copolymer resin 2 | Mw=50000 | - | 0.37 | 1.4 |
| | Vinyl chloride-vinyl acetate copolymer resin 3 | Mw=75000 | - | 0.14 | 8.2 |
| Cellulose resin | Cellulose resin 1 | - | CAB551-0.01 | - | 4.9 |
| | Cellulose resin 2 | - | CAB553-0.4 | - | 29.0 |
| | Cellulose resin 3 | - | CAP-482-0.5 | - | 40.9 |
| Polyester resin | Polyester resin 1 | Mw=26000 | - | - | 1.5 |
| Polyurethane resin | Polyurethane resin 1 | Mw=36400 | - | - | 2.2 |

2. Synthesis of Pigment A1

Synthetic products 1 to 6 of the pigment A1 were synthesized under conditions described in Table 2. Specifically, 2 parts by mass of a perinone pigment of (a1) in Table 2 was dispersed in a solvent of (a2) in Table 2, and (a4) parts in Table 2 of (a3) in Table 2 was added. After stirring for (a6) in Table 2 under a temperature condition of (a5) in Table 2, the synthetic products 1 and 2 were washed with ethanol, and the synthetic products 3, 4, and 6 were washed with water to obtain synthetic products 1 to 6 of the pigment A1. A pigment Ap (synthetic product 5) in Table 2 is a pigment A1 which is synthesized by a method described in Japanese Patent No. 3076738 and is represented by the formula (1-1).
The synthetic product 5 was not dispersed in a solvent.

[Table 2]

| | (a1) | (a2) | (a3) | (a4) | (a5) | (a6) | (a7 ) |
|---|---|---|---|---|---|---|---|
| | Pigment | Solvent | Substituen t introducti on agent | Part s by mass | Temperatur e condition (°C) | Reactio n time (h) | pH |
| Syntheti c product 1 | P.O.43 Hostaperm Orange GR manufactur ed by Clariant Co., Ltd. | Quinoline | Sulfonated pyridine complex | 2 | 120 | 5 | 2.4 |
| Syntheti c product 2 | P.O.43 Pigment Ap | Quinoline | Sulfonated pyridine complex | 1 | 120 | 3 | 4.1 |

(continued)

| | (a1) | (a2) | (a3) | (a4) | (a5) | (a6) | (a7 ) |
|---|---|---|---|---|---|---|---|
| | Pigment | Solvent | Substituen t introducti on agent | Part s by mass | Temperatur e condition (°C) | Reactio n time (h) | pH |
| Syntheti c product 3 | P.O.43 Hostaperm Orange GR manufactur ed by Clariant Co., Ltd. | Hydrochlor ic acid | None | None | 50 | 5 | 6.0 |
| Syntheti c product 4 | P.O.43 Pigment Ap | Hydrochlor ic acid | None | None | 50 | 3 | 7.7 |
| Syntheti c product 5 | P.O.43 Pigment Ap | - | - | - | - | - | 8.7 |
| Syntheti c product 6 | P.O.43 Hostaperm Orange GR manufactur ed by Clariant Co., Ltd. | Sodium hydroxide solution | None | None | 50 | 3 | 9.4 |
| ("None" in (a3) and (a4) in the table means that a substituent introduction agent was not added.) | | | | | | | |

For the synthetic products 1 to 6 of the pigment A1, a pH was measured by a test method of JIS K5101-17-1:2004 (described in (a7) in Table 2).

3. Preparation of Nonaqueous Ink Composition

Nonaqueous ink compositions in the examples and comparative examples were prepared using the respective organic solvents, resins, dispersants, and pigments (colorants) according to ratios of respective components shown in the following table. Specifically, the respective components were dispersed with zirconia beads using a paint shaker to prepare a nonaqueous ink composition. A unit is mass%. A particle diameter and dispersion time of the zirconia beads are shown in Tables 3 to 10 below.

In addition, a volume-based cumulative 90% particle diameter (D90) of the pigment contained in the nonaqueous ink composition was measured by using a particle diameter distribution measurement device (particle size analyzer NANOTRACWAVE manufactured by Microtrac BEL Co., Ltd.).

4. Evaluation

(Storage Stability)

Storage stability of the nonaqueous ink compositions in the examples, the comparative examples, and reference examples was evaluated. Specifically, the nonaqueous ink composition was stored at 60°C for one month, and changes in viscosity and volume-based cumulative 50% particle diameter (D50) of a pigment before and after a test were observed, and the storage stability was evaluated according to the following standard. The viscosity of the ink was measured under a condition of 20°C using a falling ball type viscosity meter (AMVn manufactured by Anton Paar), and the volume-based cumulative 50% particle diameter (D50) of the pigment was measured under a condition of 25°C using a particle diameter distribution measurement device (NANOTRACWAVE particle size analyzer manufactured by Microtrac BEL Co., Ltd.). In the following evaluation, the nonaqueous ink composition having a larger rate of change between the "viscosity" and the "volume-based cumulative 50% particle diameter (D50)" was evaluated (this is indicated as "storage stability" in the table).

Evaluation Standard

Evaluation 5: The rates of change in both the viscosity and the volume-based cumulative 50% particle diameter (D50) of the pigment are less than 3%.
Evaluation 4: Either the rate of change in the viscosity or the rate of change in volume-based cumulative 50% particle diameter (D50) of the pigment is 30 or more and less than 5%.
Evaluation 3: Either the rate of change in the viscosity or the rate of change in volume-based cumulative 50% particle diameter (D50) of the pigment is 5% or more and less than 8%.
Evaluation 2: Either the rate of change in the viscosity or the rate of change in volume-based cumulative 50% particle diameter (D50) of the pigment is 8% or more and less than 10%.
Evaluation 1: Either the rate of change in the viscosity or the rate of change in volume-based cumulative 50% particle diameter (D50) of the pigment is 10% or more.

(Ejection Stability)

Ejection stability of the nonaqueous ink compositions in the examples, the comparative examples, and the reference examples was evaluated. Specifically, an inkjet printer (trade name: VersaArt RE-640, manufactured by Rowland DG Co., Ltd.) was filled with the nonaqueous ink composition, a solid and a thin line were printed on a recording medium (glued polyvinyl chloride film (IMAGin JT 5829R, manufactured by MACtac) by continuous printing at a substrate surface temperature of 40°C in a high-speed printing mode (360 × 720 dpi) in two directions, presence or absence of dot omission, flight deflection, and ink scattering was visually observed, and the number of occurrences was measured (this is indicated as "ejection stability" in the table).

Evaluation Standard

Evaluation 5: The thin line was correctly reproduced.
Evaluation 4: The thin line is substantially correctly reproduced.
Evaluation 3: Slight deflection is observed in the thin line.
Evaluation 2: A landing position was displaced, and deflection was observed.
Evaluation 1: The deviation of the landing position is severe, and the thin line cannot be reproduced.

(Intermittent Ejection Property)

An intermittent ejection property of the nonaqueous ink compositions in the examples, the comparative examples, and the reference examples was evaluated. Specifically, using an inkjet printer (trade name: VersaArt RE-640, manufactured by Rowland DG Co., Ltd.), intermittent printing was performed on a recording medium (glued polyvinyl chloride film (IMAGin JT 5829R, manufactured by MACtac) in a high-speed printing mode (360 × 720 dpi) in two directions at a substrate surface temperature of 40°C for a long period of time at room temperature, the presence or absence of dot omission, flight deflection, and ink scattering was observed, and the number of occurrences was counted and evaluated (this is indicated as "intermittent ejection property" in the table).

Evaluation Standard

Evaluation 5: In the test period of 24 hours, occurrence of the dot omission, the flight deflection, or the ink scattering was less than 10 times.
Evaluation 4: In the test period of 24 hours, the occurrence of the dot omission, the flight deflection, or the ink scattering was 10 times or more and less than 20 times.
Evaluation 3: In the test period of 24 hours, the occurrence of the dot omission, the flight deflection, or the ink scattering was 20 times or more and less than 30 times.
Evaluation 2: In the test period of 24 hours, the occurrence of the dot omission, the flight deflection, or the ink scattering was 30 times or more and less than 40 times.
Evaluation 1: In the test period of 24 hours, the occurrence of the dot omission, the flight deflection, or the ink

scattering was 40 times or more.

(Solid Filling)

Solid filling of the nonaqueous ink compositions in the examples, the comparative examples, and the reference examples was evaluated. Specifically, using the above inkjet printer (trade name: VersaArt RE-640, manufactured by Rowland DG Co., Ltd.), printing was performed on a recording medium (glued polyvinyl chloride film (IMAGin JT5829R, manufactured by MACtac) in a high-speed printing mode (360 × 720 dpi) in two directions at a substrate surface temperature of 40°C, and filling (white spots) of a portion where solid printing was performed was confirmed (this is indicated as "solid filling" in the table).

Evaluation 5: A uniform solid is formed.
Evaluation 4: No white spots can be visually confirmed but slight color unevenness can be confirmed, design is not impaired.
Evaluation 3: No white spots can be visually confirmed, but color unevenness can be confirmed.
Evaluation 2: White spots can be confirmed.
Evaluation 1: Significant white spots can be confirmed, and a decrease in density is observed.

(Surface Drying Property)

A surface drying property of the nonaqueous ink compositions in the examples, the comparative examples, and the reference examples was evaluated. Specifically, the nonaqueous ink compositions in the examples and comparative examples were used to print a solid image on a recording medium (glued polyvinyl chloride film (IMAGin JT5829R, manufactured by MACtac) in a high-quality printing mode (1440 × 720 dpi) by an inkjet method using an inkjet printer (trade name: VersaArt RE-640, manufactured by Rowland DG Co., Ltd.), and time until the solid image was dried at 40°C was measured (this is indicated as "surface drying property" in the table).

Evaluation Standard

Evaluation 5: Drying is performed in less than 2 minutes.
Evaluation 4: Drying is performed in 2 minutes or more and less than 4 minutes.
Evaluation 3: Drying is performed in 4 minutes or more and less than 6 minutes.
Evaluation 2: Drying is performed for 6 minutes or more and less than 8 minutes.
Evaluation 1: Drying is performed in 8 minutes or more.

(Bleeding Property)

A bleeding property of the nonaqueous ink compositions in the examples, the comparative examples, and the reference examples was evaluated.

Specifically, using the above inkjet printer (trade name: VersaArt RE-640, manufactured by Rowland DG Co., Ltd.), an image having 6 pt characters having a color different from that of a solid portion in a solid portion having each color was printed on a recording medium (glued polyvinyl chloride film (IMAGin JT 5829R, manufactured by MACtac) in a high-quality printing mode (1440 × 720 dpi) at a substrate surface temperature of 50°C, the obtained printed matter was dried in an oven at 60°C for 5 minutes, and then bleeding of the printed matter was visually observed with a loupe (×10).

Evaluation Standard

Evaluation 5: No ink bleeding is observed with the loupe.
Evaluation 4: No ink bleeding is visually observed, and 6 pt characters are clear.
Evaluation 3: Slight ink bleeding is visually observed, but design is not impaired.
Evaluation 2: Bleeding of ink is visually observed, but 6 pt characters are identifiable.
Evaluation 1: Significant bleeding of ink is visually observed, and 6 pt characters cannot be visually recognized.

(Color Development Property)

A color development property of the nonaqueous ink compositions in the examples and the comparative examples was evaluated. Specifically, using the above inkjet printer (trade name: VersaArt RE-640, manufactured by Rowland DG Co., Ltd.), a solid image was printed on a recording medium (glued polyvinyl chloride film (IMAGin JT 5829R, manufactured by MACtac) in a high-quality printing mode (1440 × 720 dpi). A chroma was obtained by performing measurement based on JIS Z 8721 using X-Rite eXact (manufactured by X-Lite Co., Ltd.) under conditions of a viewing angle of 2°, a measurement range of 4 mm(p, and a D65 light source. (This is indicated as "color development property" in the table).

Evaluation Standard

Evaluation 5: The chroma is 100 or more.
Evaluation 4: The chroma is 90 or more and less than 100.
Evaluation 3: The chroma is 80 or more and less than 90.
Evaluation 2: The chroma is 70 or more and less than 80.
Evaluation 1: The chroma is less than 70.

(Weather Resistance)

The weather resistance of the printed matter produced using the nonaqueous ink compositions in the examples, the comparative examples, and the reference examples was evaluated.

The nonaqueous ink compositions in the examples and comparative examples were used to print a solid image on a recording medium (glued polyvinyl chloride film (IMAGin JT5829R, manufactured by MACtac) in a high-quality printing mode (1440 × 720 dpi) by an inkjet method using the inkjet printer (trade name: VersaArt RE-640, manufactured by Rowland DG Co., Ltd.), and the solid image was dried at 40°C for 1 hour. The obtained recorded matter was placed in a xenon weather meter (ATLAS Ci 4000, manufactured by Toyo Seiki Seisaku-sho Co., Ltd.) to perform a cycle test. The test conditions were as follows: based on JIS K-5600-7-7, a black panel temperature was maintained at 63°C, an irradiance of a xenon lamp was maintained at 60W/$m^2$, and a temperature in a test layer was maintained at 38°C, and in segment 1, water irradiation was performed for 102 minutes in a state in which a humidity was kept at 50%, and in segment 2, water irradiation was performed for 18 minutes, which was one cycle.

With 50 cycles as one set, 10 sets of the cycle test were continuously performed. The hue change ΔE before and after the test was evaluated, and the hue was evaluated under the following conditions. Values of L*, a*, and b* were measured using X-Rite eXact (manufactured by X-Rite Corporation) under conditions of a viewing angle of 2°, a measurement range of 4 mmφ, and a D65 light source (this is indicated as "weather resistance" in the table). The hue change ΔE is obtained by the following equation using values of $L^{*1}$, $a^{*1}$, and $b^{*1}$ before the test and $L^{*2}$, $a^{*2}$, and $b^{*2}$ after the test.

$$\Delta E = ((L^{*1} - L^{*2})^2 + (a^{*1} - a^{*2})^2 + (b^{*1} - b^{*2})^2)^{(1/2)}$$

Evaluation Standard

Evaluation 5: ΔE is less than 10.0.
Evaluation 4: ΔE is less than 20.0 and 10.0 or more.
Evaluation 3: ΔE is less than 30.0 and 20.0 or more.
Evaluation 2: ΔE is less than 40.0 and 30.0 or more.
Evaluation 1: ΔE is 50.0 or more.

(Glossiness)

Glossiness of the nonaqueous ink compositions in the examples, the comparative examples, and the reference examples was evaluated. Specifically, the nonaqueous ink compositions in the examples and comparative examples were used to print a solid portion on a recording medium (glued polyvinyl chloride film (IMAGin JT 5829R, manufactured

by MACtac)) in a high-quality printing mode (1440 × 720 dpi) at a substrate surface temperature of 40°C by an inkjet method using the inkjet printer (trade name: VersaArt RE-640, manufactured by Rowland DG Co., Ltd.), the solid portion was dried in an oven at 60°C for 5 minutes, and the 20° glossiness of the printed matter was measured. The glossiness was measured with a handy type gloss meter PhopointIQ-S (manufactured by Konica Minolta Co., Ltd.) (this is indicated as "glossiness" in the table).

Evaluation Standard

Evaluation 5: The 20° gloss is 70 or more.
Evaluation 4: The 20° gloss is 65 or more and less than 70.
Evaluation 3: The 20° gloss is 55 or more and less than 65.
Evaluation 2: The 20° gloss is 50 or more and less than 55.
Evaluation 1: The 20° gloss is less than 50.

(Color Tone Stability (Settleability))

Settleability of the nonaqueous ink compositions in the examples, the comparative examples, and the reference examples was evaluated. Specifically, 30g of the nonaqueous ink composition was stored at room temperature for one month, and 1g of supernatant of the ink after the entire test was taken out, and the supernatant was spread on the recording medium (glued polyvinyl chloride film (IMAGin JT 5829R, manufactured by MACtac) by a bar coater #8 and dried in an oven at 40°C.

A value of the hue change ΔE before and after the test was evaluated, and the hue was evaluated under the following conditions. Values of L*, a*, and b* were measured using X-Rite eXact (manufactured by X-Rite Corporation) under conditions of a viewing angle of 2°, a measurement range of 4 mmφ, and a D65 light source (this is indicated as "color tone stability (settleability)" in the table). The hue change ΔE is obtained by the following equation using values of $L^{*1}$, $a^{*1}$, and $b^{*1}$ before the test and $L^{*2}$, $a^{*2}$, and $b^{*2}$ after the test. $\Delta E = ((L^{-1} - L^{*2})^2 + (a^{*1} - a^{*2})^2 + (b^{*1} - b^{*2})^2)^{(1/2)}$

Evaluation Standard

Evaluation 5: ΔE is less than 2.0.
Evaluation 4: ΔE is less than 2.5 and 2.0 or more.
Evaluation 3: ΔE is less than 3.0 and 2.5 or more.
Evaluation 2: ΔE is less than 3.5 and 3.0 or more.
Evaluation 1: ΔE is 3.5 or more.

[Table 3]

| | | | Example 1-1 | Example 1-2 | Example 1-3 | Example 1-4 | Example 1-5 | Example 1-6 | Example 1-7 | Example 1-8 | Example 1-9 | Reference Example 1-1 |
|---|---|---|---|---|---|---|---|---|---|---|---|---|
| Composition | Classification | Type | | | | | | | | | | |
| Solvent B | Alkyl amide-based solvent (b1) | N,N-diethylformamide | 20.0 | 20.0 | 20.0 | 20.0 | 20.0 | 20.0 | 20.0 | 20.0 | 20.0 | 20.0 |
| | | N,N-diethylpropanamide | | | | | | | | | | |
| | | N,N-diethylacetamide | | | | | | | | | | |
| | | N,N-dimethylformamide | | | | | | | | | | |
| | Cyclic amide-based solvent (b2) | N-methyl-$\varepsilon$-caprolactam | | | | | | | | | | |
| | | N-vinyl caprolactam | | | | | | | | | | |
| | | $\varepsilon$-caprolactam | | | | | | | | | | |
| | | N-methyl-2-pyrolidone | | | | | | | | | | |
| | Lactone-based solvent (b3) | $\gamma$-buryrolactone | | | | | | | | | | |
| | | $\gamma$-valerolactone | | | | | | | | | | |
| | | $\varepsilon$-caprolactone | | | | | | | | | | |
| | | $\gamma$-heptanolactone | | | | | | | | | | |
| | | $\gamma$-hexanolactone | | | | | | | | | | |

(continued)

| | | | Example 1-1 | Example 1-2 | Example 1-3 | Example 1-4 | Example 1-5 | Example 1-6 | Example 1-7 | Example 1-8 | Example 1-9 | Reference Example 1-1 |
|---|---|---|---|---|---|---|---|---|---|---|---|---|
| Composition | Classification | Type | | | | | | | | | | |
| Other solvents | Glycol ether dialkyl | Diethylene glycol diethyl ether | 60.5 | | | | 40.5 | 40.2 | 60.5 | 60.5 | 40.5 | 60.5 |
| | | Diethylene glycol methyl ethyl ether | | 60.5 | | | 20.0 | 20.0 | | | 20.0 | |
| | | Dipropylene glycol dimethyl ether | | | 60.2 | | | | | | | |
| | | Diethylene glycol dibutyl ether | | | | 60.5 | | | | | | |
| | Glycol ether monoalkyl | Dipropylene glycol monomethyl ether | 10.0 | 10.0 | 10.0 | 10.0 | | | | 10.0 | 10.0 | 10.0 |
| | | Triethylene glycol mono-n-butyl ether | | | | | 10.0 | | | | | |
| | | Tetraethyleneglycol monobutyl ether | | | | | | 10.0 | | | | |
| | Carbonic acid ester Carbonic acid ester | Propylene carbonate | | | | | | | 10.0 | | | |

(continued)

| | | Type | Inherent viscosity of90 mL/g or more | | | | | | | | | | |
|---|---|---|---|---|---|---|---|---|---|---|---|---|---|
| Resin | Acrylic resin | Acrylic resin 1 | 0.0% | 3.0 | 3.0 | 3.0 | 3.0 | 3.0 | 3.0 | 3.0 | 3.0 | 3.0 | 3.0 |
| | | Acrylic resin 2 | 2.2% | | | | | | | | | | |
| | | Acrylic resin 3 | 8.1% | | | | | | | | | | |
| | Vinyl chloride-vinyl acetate copolymer resin | Vinyl chloride-vinyl acetate copolymer resin 1 | 0.3% | 1.5 | 1.5 | 1.5 | 1.5 | 1.5 | 1.5 | 1.5 | 1.5 | 1.5 | 1.5 |
| | | Vinyl chloride-vinyl acetate copolymer resin 2 | 1.4% | | | | | | | | | | |
| | | Vinyl chloride-vinyl acetate copolymer resin 3 | 8.2% | | | | | | | | | | |
| | Cellulose resin | CAB-551-0.01 | 4.9% | | | | | | | | | | |
| | | CAB-553-0.4 | 29.0% | | | | | | | | | | |
| | | CAP-482-0.5 | 40.9% | | | | | | | | | | |
| | Polyester resin | Polyester resin 1 | 1.5% | | | | | | | | | | |
| | Polyurethane resin | Polyurethane resin 1 | 2.2% | | | | | | | | | | |
| | Product name | Presence or absence of basic group | Amine value(mg) | | | | | | | | | | |

(continued)

| | | Type | Inherent viscosity of90 mL/g or more | | | | | | | | | | |
|---|---|---|---|---|---|---|---|---|---|---|---|---|---|
| Dispersant | Solsperse32000 (Lubrizol) | Yes | 35 | 1.5 | 1.5 | 1.5 | 1.5 | 1.5 | 1.5 | 1.5 | 1.5 | 1.5 | 1.5 |
| | Solsperse13300 (Lubrizol) | Yes | 123 | | | | | | | | | | |
| | Solsperse13240 (Lubrizol) | Yes | 91 | | | | | | | | | | |
| | Solsperse33000 (Lubrizol) | Yes | 43 | | | | | | | | | | |
| | Solsperse38500 (Lubrizol) | Yes | 20 | | | | | | | | | | |
| | Solsperse76400 (Lubrizol) | Yes | 15 | | | | | | | | | | |
| | Solsperse21000 (Lubrizol) | None | Outside range | | | | | | | | | | |
| | Efka PX4701 (BASF) | Yes | 40 | | | | | | | | | | |
| Dispersion aid | Solsperse22000 (Lubrizol) | | | | | 0.3 | | | 0.3 | | | | |
| Additive | Surfactant | Silicon-based additive | BYK-331 (BYK) | 0.5 | 0.5 | 0.5 | 0.5 | 0.5 | 0.5 | 0.5 | 0.5 | 0.5 | 0.5 |
| | | | BYK-313 (BYK) | | | | | | | | | | |
| | | | pH | | | | | | | | | | |

(continued)

| | | Type | Inherent viscosity of90 mL/g or more | | | | | | | | | | |
|---|---|---|---|---|---|---|---|---|---|---|---|---|---|
| Pigment | C. I. Pigment Orange 43 | Orange A-76 (Arimoto Chemical Co., Ltd.) | 6.0 | 3.0 | 3.0 | 3.0 | 3.0 | 3.0 | 3.0 | 3.0 | | 3.0 | |
| | C. I. Pigment Orange 43 | Hostaperm Orange GR(Clariant) | 7.5 | | | | | | | | 3.0 | | |
| | C. I. Pigment Orange 43 | Synthetic product-1 | 2.4 | | | | | | | | | | |
| | C. I. Pigment Orange 43 | Synthetic product-2 | 4.1 | | | | | | | | | | |
| | C. I. Pigment Orange 43 | Synthetic product-3 | 6.0 | | | | | | | | | | |
| | C. I. Pigment Orange 43 | Synthetic product-4 | 7.7 | | | | | | | | | | |
| | C. I. Pigment Orange 43 | Synthetic product-5 | 8.7 | | | | | | | | | | |
| | C. I. Pigment Orange 43 | Synthetic product-6 | 9.4 | | | | | | | | | | |
| | C. I. Pigment Orange 31 | Cromophtal Orange 4R (BASF) | 7.6 | | | | | | | | | | 3.0 |
| | C. I. Pigment Orange 64 | Cromophtal Orange K 2960 (BASF) | 7.2 | | | | | | | | | | |
| Total | | | | 100.0 | 100.0 | 100.0 | 100.0 | 100.0 | 100.0 | 100.0 | 100.0 | 100.0 | 100.0 |
| Bead diameter(mm) | | | | 1.5 | 1.5 | 1.5 | 1.5 | 1.5 | 1.5 | 1.5 | 1.5 | 1.5 | 1.5 |
| Dispersion time | | | | 2h | 2h | 2h | 2h | 2h | 2h | 2h | 2h | 2h | 2h |

(continued)

| | | Type | Inherent viscosity of90 mL/g or more | | | | | | | | | | |
|---|---|---|---|---|---|---|---|---|---|---|---|---|---|
| Bead diameter(mm) | | | | 0.1 | 0.1 | 0.1 | 0.1 | 0.1 | 0.1 | 0.1 | 0.1 | 0.1 | 0.1 |
| Dispersion time | | | | 4h | 4h | 4h | 4h | 4h | 4h | 4h | 4h | 4h | 4h |
| Value of D90 (nm) | | | | 360 | 348 | 358 | 358 | 358 | 355 | 355 | 368 | 362 | 370 |
| Inherent viscosity of 90 ml/g or more in total amount of resin | | | | 0.10% | 0.10% | 0.10% | 0.10% | 0.10% | 0.10% | 0.10% | 0.10% | 0.10% | 0.10% |
| Evaluation item | | Storage stability | | 5 | 5 | 4 | 4 | 5 | 5 | 5 | 5 | 5 | 4 |
| | | Ejection Stability | | 5 | 5 | 5 | 5 | 5 | 5 | 5 | 5 | 5 | 5 |
| | | Intermittent ejection property | | 5 | 5 | 5 | 5 | 5 | 5 | 4 | 5 | 5 | 5 |
| | | Solid filling | | 5 | 5 | 5 | 5 | 5 | 5 | 5 | 5 | 5 | 5 |
| | | Surface drying property | | 5 | 5 | 5 | 4 | 3 | 3 | 5 | 5 | 5 | 5 |
| | | Bleeding property | | 5 | 5 | 5 | 4 | 4 | 4 | 5 | 5 | 5 | 5 |
| | | Color development property | | 5 | 5 | 5 | 5 | 5 | 5 | 5 | 5 | 5 | 3 |
| | | Weather resistance | | 5 | 5 | 5 | 5 | 5 | 5 | 5 | 5 | 5 | 2 |
| | | Glossiness | | 5 | 5 | 5 | 5 | 5 | 5 | 5 | 5 | 5 | 5 |
| | | Color tone stability (settleability) | | 5 | 5 | 5 | 5 | 5 | 5 | 5 | 5 | 5 | 5 |

[Table 4]

| | | | Reference Example 1-2 | Comparative Example 1-1 | Example 1-10 | Example 1-11 | Example 1-12 | Example 1-13 | Comparative Example 1-2 | Example 1-14 | Example 1-15 | Example 1-16 |
|---|---|---|---|---|---|---|---|---|---|---|---|---|
| Composition | Classification | Type | | | | | | | | | | |
| Solvent B | Alkyl amide-based solvent (b1) | N,N-diethylformamide | 200 | 200 | 200 | 200 | 200 | 200 | 200 | 100 | 200 | 200 |
| | | N,N-diethylpropanamide | | | | | | | | | | |
| | | N,N-diethylacetamide | | | | | | | | | | |
| | | N,N-dimethylformamide | | | | | | | | 100 | | |
| | Cyclic amide-based solvent (b2) | N-methyl-$\varepsilon$-caprolactam | | | | | | | | | | |
| | | N-vinyl caprolactam | | | | | | | | | | |
| | | a -caprolactam | | | | | | | | | | |
| | | N-methyl-2-pyrolidone | | | | | | | | | | |
| | Lactone-based solvent (b3) | $\gamma$-butyrolactone | | | | | | | | | | |
| | | $\gamma$-valerolactone | | | | | | | | | | |
| | | $\varepsilon$-caprolactone | | | | | | | | | | |
| | | $\gamma$-heptanolactone | | | | | | | | | | |
| | | $\gamma$-hexanolactone | | | | | | | | | | |

(continued)

| | | | Reference Example 1-2 | Comparative Example 1-1 | Example 1-10 | Example 1-11 | Example 1-12 | Example 1-13 | Comparative Example 1-2 | Example 1-14 | Example 1-15 | Example 1-16 |
|---|---|---|---|---|---|---|---|---|---|---|---|---|
| Composition | Classification | Type | | | | | | | | | | |
| Other solvents | Glycol ether dialkyl | Diethylene glycol diethyl ether | 60.5 | 60.5 | 60.5 | 30.5 | 200 | 60.5 | 60.5 | 60.5 | 60.5 | 60.5 |
| | | Diethylene glycol methyl ethyl ether | | | | 300 | 40.5 | | | | | |
| | | Dipropylene glycol dimethyl ether | | | | | | | | | | |
| | | Diethylene glycol dibutyl ether | | | | | | | | | | |
| | Glycol ether monoalkyl | Dipropylene glycol monomethyl ether | 100 | 10.0 | 10.0 | 100 | 100 | 100 | 10.0 | 100 | 10.0 | 10.0 |
| | | Triethylene glycol mono-n-butyl ether | | | | | | | | | | |
| | | Tetraethyleneglycol monobutyl ether | | | | | | | | | | |
| | Carbonic acid ester | Propylene carbonate | | | | | | | | | | |

(continued)

| | | Type | Inherent viscosityof90 mL/g or more | | | | | | | | | | |
|---|---|---|---|---|---|---|---|---|---|---|---|---|---|
| Resin | Acrylic resin | Acrylic resin 1 | 0.0% | 3.0 | 3.0 | 3.0 | 3.0 | 3.0 | 3.0 | 3.0 | 3.0 | 3.0 | 3.0 |
| | | Acrylic resin 2 | 2.2% | | | | | | | | | | |
| | | Acrylic resin 3 | 8.1% | | | | | | | | | | |
| | Vinyl chloride-vinyl acetate copolymer resin | Vinyl chloride-vinyl acetate copolymer resin 1 | 0.3% | 1.5 | 1.5 | 1.5 | 1.5 | 1.5 | 1.5 | 1.5 | | | |
| | | Vinyl chloride-vinyl acetate copolymer resin 2 | 1.4% | | | | | | | | 1.5 | | |
| | | Vinyl chloride-vinyl acetate copolymer resin 3 | 8.2% | | | | | | | | | 1.5 | |
| | Cellulose resin | CAB-551-0.01 | 4.9% | | | | | | | | | | 1.5 |
| | | CAB-553-0.4 | 29.0% | | | | | | | | | | |
| | | CAP-482-0.5 | 40.9% | | | | | | | | | | |
| | Polyester resin | Polyester resin 1 | 1.5% | | | | | | | | | | |
| | Polyurethane resin | Polyurethane resin 1 | 2.2% | | | | | | | | | | |
| | Product name | Presence or absence of basic group | Amine value (mg; | | | | | | | | | | |

(continued)

| | | Type | Inherent viscosityof90 mL/g or more | | | | | | | | | | |
|---|---|---|---|---|---|---|---|---|---|---|---|---|---|
| Dispersant | Solsperse32000 (Lubrizol) | Yes | 35 | 1.5 | 1.5 | 1.5 | 1.5 | 1.5 | 1.5 | 1.5 | 1.5 | 1.5 | 1.5 |
| | Solsperse13300 (Lubrizol) | Yes | 123 | | | | | | | | | | |
| | Solsperse13240 (Lubrizol) | Yes | 91 | | | | | | | | | | |
| | Solsperse33000 (Lubrizol) | Yes | 43 | | | | | | | | | | |
| | Solsperse38500 (Lubrizol) | Yes | 20 | | | | | | | | | | |
| | Solsperse76400 (Lubrizol) | Yes | 15 | | | | | | | | | | |
| | Solsperse21000 (Lubrizol) | None | Outside range | | | | | | | | | | |
| | Efka PX4701 (BASF) | Yes | 40 | | | | | | | | | | |
| Dispersion aid | Solsperse22000 (Lubrizol) | | | | | | | | | | | | |
| Additive | Surfactant | Silicon-based additive | BYK-331 (BYK) | 0.5 | 0.5 | 0.5 | 0.5 | 0.5 | 0.5 | 0.5 | 0.5 | 0.5 | 0.5 |
| | | | BYK-313 (BYK) | | | | | | | | | | |
| | | | pH | | | | | | | | | | |

(continued)

| | | Type | Inherent viscosityof90 mL/g or more | | | | | | | | | | |
|---|---|---|---|---|---|---|---|---|---|---|---|---|---|
| Pigment | C. I. Pigment Orange 43 | Orange A-76 (Ar moto Chemical Co., Ltd.) | 6.0 | | | | | | | | 3.0 | 3.0 | 3.0 |
| | C. I. Pigment Orange 43 | Hostaperm Orange GR (Clariant) | 7.5 | | | | | | | | | | |
| | C. I. Pigment Orange 43 | Synthetic product-1 | 2.4 | | 3.0 | | | | | | | | |
| | C. I. Pigment Orange 43 | Synthetic product-2 | 4.1 | | | 3.0 | | | | | | | |
| | C. I. Pigment Orange 43 | Synthetic product-3 | 6.0 | | | | 3.0 | | | | | | |
| | C. I. Pigment Orange 43 | Synthetic product-4 | 7.7 | | | | | 3.0 | | | | | |
| | C. I. Pigment Orange 43 | Synthetic product-5 | 8.7 | | | | | | 3.0 | | | | |
| | C. I. Pigment Orange 43 | Synthetic product-6 | 9.4 | | | | | | | 3.0 | | | |
| | C. I. Pigment Orange 31 | Cromophtal Orange 4R (BASF) | 7.6 | | | | | | | | | | |
| | C. I. Pigment Orange 64 | Cromophtal Orange K 2960 (BASF) | 7.2 | 3.0 | | | | | | | | | |
| Total | | | | 1000 | 1000 | 1000 | 1000 | 1000 | 1000 | 1000 | 1000 | 1000 | 1000 |
| Bead diameter(mm) | | | | 1.5 | 1.5 | 1.5 | 1.5 | 1.5 | 1.5 | 1.5 | 1.5 | 1.5 | 1.5 |
| Dispersion time | | | | 2h | 2h | 2h | 2h | 2h | 2h | 2h | 2h | 2h | 2h |

(continued)

| | | Type | Inherent viscosityof90 mL/g or more | | | | | | | | | | |
|---|---|---|---|---|---|---|---|---|---|---|---|---|---|
| Bead diameter(mm) | | | | 0.1 | 0.1 | 0.1 | 0.1 | 0.1 | 0.1 | 0.1 | 0.1 | 0.1 | 0.1 |
| Dispersion time | | | | 4h | 4h | 4h | 4h | 4h | 4h | 4h | 4h | 4h | 4h |
| Value of D90 (nm) | | | | 360 | 360 | 354 | 348 | 361 | 346 | 347 | 360 | 351 | 358 |
| Inherent viscosity of 90 ml/g or more in total amount of resin | | | | 0.10% | 0.10% | 0.10% | 0.10% | 0.10% | 0.10% | 0.10% | 0.47% | 2.73 % | 1.63% |
| Evaluation item | | Storage stability | | 4 | 1 | 5 | 5 | 4 | 3 | 1 | 5 | 5 | 5 |
| | | Ejection Stability | | 5 | 4 | 5 | 5 | 5 | 3 | 1 | 5 | 5 | 5 |
| | | Intermittent ejection property | | 5 | 5 | 5 | 5 | 5 | 5 | 5 | 5 | 5 | 5 |
| | | Solid filling | | 5 | 3 | 5 | 5 | 5 | 5 | 5 | 5 | 5 | 5 |
| | | Surface drying property | | 5 | 5 | 5 | 5 | 5 | 5 | 5 | 5 | 5 | 5 |
| | | Bleeding property | | 5 | 5 | 5 | 5 | 5 | 5 | 5 | 5 | 5 | 5 |
| | | Color development | | 5 | 5 | 5 | 5 | 5 | 5 | 5 | 5 | 5 | 5 |
| | | property Weather resistance | | 2 | 5 | 5 | 5 | 5 | 5 | 5 | 5 | 5 | 5 |
| | | Glossiness | | 5 | 4 | 5 | 5 | 5 | 5 | 5 | 5 | 5 | 5 |
| | | Color tone stability (settleability) | | 5 | 4 | 5 | 5 | 4 | 3 | 2 | 5 | 5 | 5 |

[Table 5]

| | | | Example 1-17 | Example 1-18 | Example 1-19 | Example 1-20 | Example 1-21 | Example 1-22 | Example 1-23 | Example 1-24 | Example 1-25 | Example 1-26 |
|---|---|---|---|---|---|---|---|---|---|---|---|---|
| Composition | Classification | Type | | | | | | | | | | |
| Solvent B | Alkyl amide-based solvent (b1) | N,N-diethylformamide | 20.0 | 10.0 | 20.0 | 20.0 | 20.0 | 20.0 | 20.0 | 20.0 | 20.0 | 20.0 |
| | | N,N-diethylpropanamide | | | | | | | | | | |
| | | N,N-diethylacetamide | | | | | | | | | | |
| | | N,N-dimethylformamide | | | | | | | | | | |
| | Cyclic amide-based solvent (b2) | N-methyl-$\varepsilon$-caprolactam | | | | | | | | | | |
| | | N-vinyl caprolactam | | | | | | | | | | |
| | | $\varepsilon$ -caprolactam | | | | | | | | | | |
| | | N-methyl-2-pyrolidone | | | | | | | | | | |
| | Lactone-based solvent (b3) | $\gamma$-buryrolactone | | | | | | | | | | |
| | | $\gamma$-valerolactone | | | | | | | | | | |
| | | $\varepsilon$ -caprolactone | | 10.0 | | | | | | | | |
| | | $\gamma$-heptanolactone | | | | | | | | | | |
| | | $\gamma$ -hexanolactone | | | | | | | | | | |

(continued)

| | | | Example 1-17 | Example 1-18 | Example 1-19 | Example 1-20 | Example 1-21 | Example 1-22 | Example 1-23 | Example 1-24 | Example 1-25 | Example 1-26 |
|---|---|---|---|---|---|---|---|---|---|---|---|---|
| Composition | Classification | Type | | | | | | | | | | |
| Other solvents | Glycol ether dialkyl | Diethylene glycol diethyl ether | 60.5 | 60.5 | 60.5 | 60.5 | 60.5 | 60.5 | 60.5 | 60.5 | 60.5 | 60.5 |
| | | Diethylene glycol methyl ethyl ether | | | | | | | | | | |
| | | Dipropylene glycol dimethyl ether | | | | | | | | | | |
| | | Diethylene glycol dibutyl ether | | | | | | | | | | |
| | Glycol ether monoalkyl | Dipropylene glycol monomethyl ether | 10.0 | 10.0 | 10.0 | 10.0 | 10.0 | 10.0 | 10.0 | 10.0 | 10.0 | 10.0 |
| | | Triethylene glycol mono-n-butyl ether | | | | | | | | | | |
| | | Tetraethylene glycol monobutyl ether | | | | | | | | | | |
| | Carbonic acid ester | Propylene carbonate | | | | | | | | | | |

(continued)

| | | Type | Inherent viscosity of 90 mL/g or more | | | | | | | | | | |
|---|---|---|---|---|---|---|---|---|---|---|---|---|---|
| Resin | Acrylic resin | Acrylic resin 1 | 0.0% | 3.0 | | | | | | | | 1.5 | |
| | | Acrylic resin 2 | 2.2% | | 3.0 | 3.0 | 3.0 | | | | | | 4.5 |
| | | Acrylic resin 3 | 8.1% | | | | | 3.0 | | | | | |
| | Vinyl chloride-vinyl acetate copolymer resin | Vinyl chloride-vinyl acetate copolymer resin 1 | 0.3% | | 1.5 | | | 1.5 | 1.5 | 3.0 | 3.0 | | |
| | | Vinyl chloride-vinyl acetate copolymer resin 2 | 1.4% | | | | | | | | | | |
| | | Vinyl chloride-vinyl acetate copolymer resin 3 | 8.2% | | | | | | | | | 3.0 | |
| | Cellulose resin | CAG-551-001 | 4.9% | | | | | | 3.0 | 1.5 | | | |
| | | CAB-553-0.4 | 29.0% | 1.5 | | | | | | | 1.5 | | |
| | | CAP-482-0.5 | 40.9% | | | | | | | | | | |
| | Polyester resin | Polyester resin 1 | 1.5% | | | 1.5 | | | | | | | |
| | Polyurethane resin | Polyurethane resin 1 | 2.2% | | | | 1.5 | | | | | | |
| | Product name | Presence or absence of basic group | Amine value(mg) | | | | | | | | | | |

(continued)

| | | Type | Inherent viscosity of 90 mL/g or more | | | | | | | | | | |
|---|---|---|---|---|---|---|---|---|---|---|---|---|---|
| Dispersant | Solsperse32000 (Lubrizol) | Yes | 35 | 1.5 | 1.5 | 1.5 | 1.5 | 1.5 | 1.5 | 1.5 | 1.5 | 1.5 | 1.5 |
| | Solsperse13300 (Lubrizol) | Yes | 123 | | | | | | | | | | |
| | Solsperse13240 (Lubrizol) | Yes | 91 | | | | | | | | | | |
| | Solsperse33000 (Lubrizol) | Yes | 43 | | | | | | | | | | |
| | Solsperse38500 (Lubrizol) | Yes | 20 | | | | | | | | | | |
| | Solsperse76400 (Lubrizol) | Yes | 15 | | | | | | | | | | |
| | Solsperse21000 (Lubrizol) | None | Outside range | | | | | | | | | | |
| | Efka PX4701 (BASF) | Yes | 40 | | | | | | | | | | |
| Dispersion aid | Solsperse22000 (Lubrizol) | | | | | | | | | | | | |
| Additive | Surfactant | Silicon-based additive | BYK-331 (BYK) | 0.5 | 0.5 | 0.5 | 0.5 | 0.5 | 0.5 | 0.5 | 0.5 | 0.5 | 0.5 |
| | | | BYK-313 (BYK) | | | | | | | | | | |
| | | | pl I | | | | | | | | | | |

(continued)

| | | Type | Inherent viscosity of 90 mL/g or more | | | | | | | | | | |
|---|---|---|---|---|---|---|---|---|---|---|---|---|---|
| Pigment | C. I. Pigment Orange 43 | Orange A-76 (Arimoto Chemical Co., Ltd.) | 6.0 | 3.0 | 3.0 | 3.0 | 3.0 | 3.0 | 3.0 | 3.0 | 3.0 | 3.0 | 3.0 |
| | C. I. Pigment Orange 43 | Ilostaperm Orange GR (Clarlant) | 7.5 | | | | | | | | | | |
| | C. I. Pigment Orange 43 | Synthetic product-1 | 2.4 | | | | | | | | | | |
| | C. I. Pigment Orange 43 | Synthetic product-2 | 4.1 | | | | | | | | | | |
| | C. I. Pigment Orange 43 | Synthetic product-3 | 6.0 | | | | | | | | | | |
| | C. I. Pigment Orange 43 | Synthetic product-4 | 7.7 | | | | | | | | | | |
| | C. I. Pigment Orange 43 | Synthetic product-5 | 8.7 | | | | | | | | | | |
| | C. I. Pigment Orange 43 | Synthetic product-6 | 9.4 | | | | | | | | | | |
| | C. I. Pigment Orange 31 | Cromophtal Orange 4R (BASF) | 7.6 | | | | | | | | | | |
| | C. I. Pigment Orange 64 | Cromophtal Orange K 2960 (BASF) | 7.2 | | | | | | | | | | |
| Total | | | | 100.0 | 100.0 | 100.0 | 100.0 | 100.0 | 100.0 | 100.0 | 100.0 | 100.0 | 100.0 |
| Bead diameter(mm) | | | | 1.5 | 1.5 | 1.5 | 1.5 | 1.5 | 1.5 | 1.5 | 1.5 | 1.5 | 1.5 |
| Dispersion time | | | | 2h | 2h | 2h | 2h | 2h | 2h | 2h | 2h | 2h | 2h |

(continued)

| | | Type | Inherent viscosity of 90 mL/g or more | | | | | | | | | | |
|---|---|---|---|---|---|---|---|---|---|---|---|---|---|
| Bead diameter(mm) | | | | 0.1 | 0.1 | 0.1 | 0.1 | 0.1 | 0.1 | 0.1 | 0.1 | 0.1 | 0.1 |
| Dispersion time | | | | 4h | 4h | 4h | 4h | 4h | 4h | 4h | 4h | 4h | 4h |
| Value of D90 (nm) | | | | 367 | 359 | 346 | 359 | 357 | 359 | 361 | 368 | 368 | 353 |
| Inherent viscosity of 90 ml/g or more in total amount of resin | | | | 9.67% | 1.57% | 2.20% | 2.20% | 5.97% | 3.37% | 1.83% | 9.87% | 5.47% | 2.20% |
| Evaluation item | | Storage stability | | 5 | 5 | 5 | 5 | 5 | 5 | 5 | 5 | 5 | 4 |
| | | Ejection Stability | | 2 | 5 | 5 | 5 | 2 | 5 | 5 | 2 | 2 | 5 |
| | | Intermittent ejection property | | 4 | 5 | 5 | 5 | 3 | 5 | 5 | 4 | 3 | 5 |
| | | Solid filling | | 2 | 5 | 5 | 5 | 3 | 5 | 5 | 2 | 3 | 5 |
| | | Surface drying property | | 5 | 5 | 5 | 5 | 5 | 5 | 5 | 5 | 5 | 5 |
| | | Bleeding property | | 5 | 5 | 5 | 5 | 5 | 5 | 5 | 5 | 5 | 5 |
| | | Color development property | | 5 | 5 | 5 | 5 | 5 | 5 | 5 | 5 | 5 | 5 |
| | | Weather resistance | | 5 | 5 | 5 | 5 | 5 | 5 | 5 | 5 | 5 | 5 |
| | | Glossiness | | 5 | 5 | 5 | 5 | 5 | 5 | 5 | 4 | 4 | 5 |
| | | Color tone stability (settleability) | | 4 | 5 | 5 | 5 | 4 | 5 | 5 | 4 | 4 | 5 |

[Table 6]

| | | | Example 1-27 | Example 1-28 | Example 1-29 | Example 1-30 | Example 1-31 | Example 1-32 | Example 1-33 | Example 1-34 | Example 1-35 | Example 1-36 |
|---|---|---|---|---|---|---|---|---|---|---|---|---|
| Composition | Classification | Type | | | | | | | | | | |
| Solvent B | Alkyl amide-based solvent (b1) | N,N-diethylformamide | 20.0 | 20.0 | 20.0 | 20.0 | | | | 3.0 | 5.0 | 10.0 |
| | | N,N-diethylpropanamide | | | | | | | | | | |
| | | N,N-diethylacetamide | | | | | | | | | | |
| | | N,N-dimethylformamide | | | | | | | | | | |
| | Cyclic amide-based solvent (b2) | N-methyl-ε-caprolactam | | | | | | | | | | |
| | | N-vinyl caprolactam | | | | | | | | | | |
| | | ε -caprolactam | | | | | | | | | | |
| | | N-methyl-2-pyrolidone | | | | | | | | | | |
| | Lactone-based solvent (b3) | γ-buryrolactone | | | | | | | | | | |
| | | γ-valerolactone | | | | | | | | | | |
| | | ε -caprolactone | | | | | | | | | | |
| | | γ-heptanolactone | | | | | | | | | | |
| | | γ -hexanolactone | | | | | | | | | | |

(continued)

| Composition | Classification | Type | Example 1-27 | Example 1-28 | Example 1-29 | Example 1-30 | Example 1-31 | Example 1-32 | Example 1-33 | Example 1-34 | Example 1-35 | Example 1-36 |
|---|---|---|---|---|---|---|---|---|---|---|---|---|
| Other solvents | Glycol ether dialkyl | Diethylene glycol diethyl ether | 60.5 | 60.5 | 60.5 | 60.5 | 80.5 | 80.5 | 80.5 | 77.5 | 75.5 | 70.5 |
| | | Diethylene glycol methyl ethyl ether | | | | | | | | | | |
| | | Dipropylene glycol dimethyl ether | | | | | | | | | | |
| | | Diethylene glycol dibutyl ether | | | | | | | | | | |
| | Glycol ether monoalkyl | Dipropylene glycol monomethyl ether | 10.0 | 10.0 | 10.0 | 10.0 | 10.0 | | | 10.0 | 10.0 | 10.0 |
| | | Triethylene glycol mono-n-butyl ether | | | | | | 10.0 | | | | |
| | | Tetraethylene glycol monobutyl ether | | | | | | | | | | |
| | Carbonic acid ester | Propylene carbonate | | | | | | | 10.0 | | | |

(continued)

| | | Type | Inherent viscosity of 90 mL/g or more | | | | | | | | | | |
|---|---|---|---|---|---|---|---|---|---|---|---|---|---|
| Resin | Acrylic resin | Acrylic resin 1 | 0.0% | | | | | 3.0 | 3.0 | 3.0 | 3.0 | 3.0 | 3.0 |
| | | Acrylic resin 2 | 2.2% | | | | | | | | | | |
| | | Acrylic resin 3 | 8.1% | 4.5 | | | | | | | | | |
| | Vinyl chloride-vinyl acetate copolymer resin | Vinyl chloride-vinyl acetate copolymer resin 1 | 0.3% | | 4.5 | | | 1.5 | 1.5 | 1.5 | 1.5 | 1.5 | 1.5 |
| | | Vinyl chloride-vinyl acetate copolymer resin 2 | 1.4% | | | 4.5 | | | | | | | |
| | | Vinyl chloride-vinyl acetate copolymer resin 3 | 8.2% | | | | 4.5 | | | | | | |
| | Cellulose resin | CAG-551-001 | 4.9% | | | | | | | | | | |
| | | CAB-553-0.4 | 29.0% | | | | | | | | | | |
| | | CAP-482-0.5 | 40.9% | | | | | | | | | | |
| | Polyester resin | Polyester resin 1 | 1.5% | | | | | | | | | | |
| | Polyurethane resin | Polyurethane resin 1 | 2.2% | | | | | | | | | | |
| | Product name | Presence or absence of basic group | Amine value(mg) | | | | | | | | | | |

(continued)

| | | Type | Inherent viscosity of 90 mL/g or more | | | | | | | | | | |
|---|---|---|---|---|---|---|---|---|---|---|---|---|---|
| Dispersant | Solsperse32000 (Lubrizol) | Yes | 35 | 1.5 | 1.5 | 1.5 | 1.5 | 1.5 | 1.5 | 1.5 | 1.5 | 1.5 | 1.5 |
| | Solsperse13300 (Lubrizol) | Yes | 123 | | | | | | | | | | |
| | Solsperse13240 (Lubrizol) | Yes | 91 | | | | | | | | | | |
| | Solsperse33000 (Lubrizol) | Yes | 43 | | | | | | | | | | |
| | Solsperse38500 (Lubrizol) | Yes | 20 | | | | | | | | | | |
| | Solsperse76400 (Lubrizol) | Yes | 15 | | | | | | | | | | |
| | Solsperse21000 (Lubrizol) | None | Outside range | | | | | | | | | | |
| | Efka PX4701 (BASF) | Yes | 40 | | | | | | | | | | |
| Dispersion aid | Solsperse22000 (Lubrizol) | | | | | | | | | | | | |
| Additive | Surfactant | Silicon-based additive | BYK-331 (BYK) | 0.5 | 0.5 | 0.5 | 0.5 | 0.5 | 0.5 | 0.5 | 0.5 | 0.5 | 0.5 |
| | | | BYK-313 (BYK) | | | | | | | | | | |
| | | | pI I | | | | | | | | | | |

(continued)

| | | Type | Inherent viscosity of 90 mL/g or more | | | | | | | | | | |
|---|---|---|---|---|---|---|---|---|---|---|---|---|---|
| Pigment | C. I. Pigment Orange 43 | Orange A-76 (Arimoto Chemical Co., Ltd.) | 6.0 | 3.0 | 3.0 | 3.0 | 3.0 | 3.0 | 3.0 | 3.0 | 3.0 | 3.0 | 3.0 |
| | C. I. Pigment Orange 43 | Ilostaperm Orange GR (Clarlant) | 7.5 | | | | | | | | | | |
| | C. I. Pigment Orange 43 | Synthetic product-1 | 2.4 | | | | | | | | | | |
| | C. I. Pigment Orange 43 | Synthetic product-2 | 4.1 | | | | | | | | | | |
| | C. I. Pigment Orange 43 | Synthetic product-3 | 6.0 | | | | | | | | | | |
| | C. I. Pigment Orange 43 | Synthetic product-4 | 7.7 | | | | | | | | | | |
| | C. I. Pigment Orange 43 | Synthetic product-5 | 8.7 | | | | | | | | | | |
| | C. I. Pigment Orange 43 | Synthetic product-6 | 9.4 | | | | | | | | | | |
| | C. I. Pigment Orange 31 | Cromophtal Orange 4R (BASF) | 7.6 | | | | | | | | | | |
| | C. I. Pigment Orange 64 | Cromophtal Orange K 2960 (BASF) | 7.2 | | | | | | | | | | |
| Total | | | | 100.0 | 100.0 | 100.0 | 100.0 | 100.0 | 100.0 | 100.0 | 100.0 | 100.0 | 100.0 |
| Bead diameter(mm) | | | | 1.5 | 1.5 | 1.5 | 1.5 | 1.5 | 1.5 | 1.5 | 1.5 | 1.5 | 1.5 |
| Dispersion time | | | | 2h | 2h | 2h | 2h | 2h | 2h | 2h | 2h | 2h | 2h |

(continued)

| | | Type | Inherent viscosity of 90 mL/g or more | | | | | | | | | | |
|---|---|---|---|---|---|---|---|---|---|---|---|---|---|
| Bead diameter(mm) | | | | 0.1 | 0.1 | 0.1 | 0.1 | 0.1 | 0.1 | 0.1 | 0.1 | 0.1 | 0.1 |
| Dispersion time | | | | 4h | 4h | 4h | 4h | 4h | 4h | 4h | 4h | 4h | 4h |
| Value of D90 (nm) | | | | 352 | 352 | 355 | 349 | 364 | 346 | 349 | 368 | 361 | 352 |
| Inherent viscosity of 90 ml/g or more in total amount of resin | | | | 8.80 % | 0.30% | 1.40% | 8.20% | 0.10% | 0.10% | 0.10% | 0.10% | 0.10% | 0.10% |
| Evaluation item | | Storage stability | | 4 | 3 | 3 | 3 | 3 | 3 | 3 | 5 | 5 | 5 |
| | | Ejection Stability | | 2 | 5 | 5 | 2 | 3 | 3 | 3 | 5 | 5 | 5 |
| | | Intermittent ejection property | | 4 | 5 | 5 | 4 | 4 | 4 | 4 | 5 | 5 | 5 |
| | | Solid filling | | 2 | 5 | 5 | 2 | 4 | 4 | 4 | 5 | 5 | 5 |
| | | Surface drying property | | 5 | 5 | 5 | 5 | 2 | 2 | 2 | 2 | 4 | 4 |
| | | Bleeding property | | 5 | 5 | 5 | 5 | 2 | 2 | 2 | 3 | 4 | 4 |
| | | Color development property | | 5 | 5 | 5 | 5 | 5 | 5 | 5 | 5 | 5 | 5 |
| | | Weather resistance | | 5 | 5 | 5 | 5 | 5 | 5 | 5 | 5 | 5 | 5 |
| | | Glossiness | | 5 | 5 | 5 | 5 | 4 | 4 | 4 | 5 | 5 | 5 |
| | | Color tone stability (settleability) | | 5 | 5 | 5 | 5 | 3 | 3 | 3 | 3 | 5 | 5 |

[Table 7]

| | | | Example 1-37 | Example 1-38 | Example 1-39 | Example 1-40 | Example 1-41 | Example 1-42 | Example 1-43 | Example 1-44 | Example 1-45 | Example 1-46 |
|---|---|---|---|---|---|---|---|---|---|---|---|---|
| Composition | Classification | Type | | | | | | | | | | |
| Solvent B | Alkyl amide-based solvent (b1) | N,N-diethylformamide | 35.0 | 55.0 | 80.0 | 900 | 95.0 | | | | | |
| | | N,N-diethylpropanamide | | | | | | 20.0 | | | | |
| | | N,N-diethylacetamide | | | | | | | 20.0 | | | |
| | | N,N-dimethylformamide | | | | | | | | | | |
| | Cyclic amide-based solvent (b2) | N-methyl-$\varepsilon$-caprolactam | | | | | | | | | | |
| | | N-vinyl caprolactam | | | | | | | | | | |
| | | $\varepsilon$ -caprolactam | | | | | | | | | | |
| | | N-methyl-2-pyrolidone | | | | | | | | | | |
| | Lactone-based solvent (b3) | $\gamma$ -butyrolactone | | | | | | | | 20.0 | | |
| | | $\gamma$-valerolactone | | | | | | | | | 20.0 | |
| | | $\varepsilon$ -caprolactone | | | | | | | | | | 20.0 |
| | | $\gamma$-heptanolactone | | | | | | | | | | |
| | | $\gamma$ -hexanolactone | | | | | | | | | | |

(continued)

| | | | Example 1-37 | Example 1-38 | Example 1-39 | Example 1-40 | Example 1-41 | Example 1-42 | Example 1-43 | Example 1-44 | Example 1-45 | Example 1-46 |
|---|---|---|---|---|---|---|---|---|---|---|---|---|
| Composition | Classification | Type | | | | | | | | | | |
| Other solvents | Glycol ether dialkyl | Diethylene glycol diethyl ether | 45.5 | 35.5 | 10.5 | 0.5 | 0.5 | 60.5 | 60.5 | 60.5 | 60.5 | 60.5 |
| | | Diethylene glycol methyl ethyl ether | | | | | | | | | | |
| | | Dipropylene glycol dimethyl ether | | | | | | | | | | |
| | | Diethylene glycol dibutyl ether | | | | | | | | | | |
| | Glycol ether monoalkyl | Dipropylene glycol monomethyl ether | 10.0 | | | | | 10.0 | 10.0 | 10.0 | 10.0 | 10.0 |
| | | Triethylene glycol mono-n-butyl ether | | | | | | | | | | |
| | | Tetraethylene glycol monobutyl ether | | | | | | | | | | |
| | Carbonic acid ester | Propylene carbonate | | | | | | | | | | |

(continued)

| | | Type | Inherent viscosity of 90 mL/g or more | | | | | | | | | | |
|---|---|---|---|---|---|---|---|---|---|---|---|---|---|
| Resin | Acrylic resin | Acrylic resin 1 | 0.0% | 3.0 | 3.0 | 3.0 | 3.0 | 1.0 | 3.0 | 3.0 | 3.0 | 3.0 | 3.0 |
| | | Acrylic resin 2 | 2.2% | | | | | | | | | | |
| | | Acrylic resin 3 | 8.1% | | | | | | | | | | |
| | Vinyl chloride-vinyl acetate copolymer resin | Vinyl chloride-vinyl acetate copolymer resin 1 | 0.3% | 1.5 | 1.5 | 1.5 | 1.5 | 1.0 | 1.5 | 1.5 | 1.5 | 1.5 | 1.5 |
| | | Vinyl chloride-vinyl acetate copolymer resin 2 | 1.4% | | | | | | | | | | |
| | | Vinyl chloride-vinyl acetate copolymer resin 3 | 8.2% | | | | | | | | | | |
| | Cellulose resin | CAG-551-001 | 4.9% | | | | | | | | | | |
| | | CAB-553-0.4 | 29.0% | | | | | | | | | | |
| | | CAP-482-0.5 | 40.9% | | | | | | | | | | |
| | Polyester resin | Polyester resin 1 | 1.5% | | | | | | | | | | |
| | Polyurethane resin | Polyurethane resin 1 | 2.2% | | | | | | | | | | |
| | Product name | Presence or absence of basic group | Amine value(mg) | | | | | | | | | | |

(continued)

| | | Type | Inherent viscosity of 90 mL/g or more | | | | | | | | | | |
|---|---|---|---|---|---|---|---|---|---|---|---|---|---|
| Dispersant | Solsperse32000 (Lubrizol) | Yes | 35 | 1.5 | 1.5 | 1.5 | 1.5 | 1.0 | 1.5 | 1.5 | 1.5 | 1.5 | 1.5 |
| | Solsperse13300 (Lubrizol) | Yes | 123 | | | | | | | | | | |
| | Solsperse13240 (Lubrizol) | Yes | 91 | | | | | | | | | | |
| | Solsperse33000 (Lubrizol) | Yes | 43 | | | | | | | | | | |
| | Solsperse38500 (Lubrizol) | Yes | 20 | | | | | | | | | | |
| | Solsperse76400 (Lubrizol) | Yes | 15 | | | | | | | | | | |
| | Solsperse21000 (Lubrizol) | None | Outside range | | | | | | | | | | |
| | Efka PX4701 (BASF) | Yes | 40 | | | | | | | | | | |
| Dispersion aid | Solsperse22000 (Lubrizol) | | | | | | | | | | | | |
| Additive | Surfactant | Silicon-based additive | BYK-331 (BYK) | 0.5 | 0.5 | 0.5 | 0.5 | 0.5 | 0.5 | 0.5 | 0.5 | 0.5 | 0.5 |
| | | | BYK-313 (BYK) | | | | | | | | | | |
| | | | p\| \| | | | | | | | | | | |

(continued)

| | | Type | Inherent viscosity of 90 mL/g or more | | | | | | | | | | |
|---|---|---|---|---|---|---|---|---|---|---|---|---|---|
| Pigment | C. I. Pigment Orange 43 | Orange A-76 (Arimoto Chemical Co., Ltd.) | 6.0 | 3.0 | 3.0 | 3.0 | 3.0 | 1.0 | 3.0 | 3.0 | 3.0 | 3.0 | 3.0 |
| | C. I. Pigment Orange 43 | Ilostaperm Orange GR (Clarlant) | 7.5 | | | | | | | | | | |
| | C. I. Pigment Orange 43 | Synthetic product-1 | 2.4 | | | | | | | | | | |
| | C. I. Pigment Orange 43 | Synthetic product-2 | 4.1 | | | | | | | | | | |
| | C. I. Pigment Orange 43 | Synthetic product-3 | 6.0 | | | | | | | | | | |
| | C. I. Pigment Orange 43 | Synthetic product-4 | 7.7 | | | | | | | | | | |
| | C. I. Pigment Orange 43 | Synthetic product-5 | 8.7 | | | | | | | | | | |
| | C. I. Pigment Orange 43 | Synthetic product-6 | 9.4 | | | | | | | | | | |
| | C. I. Pigment Orange 31 | Cromophtal Orange 4R (BASF) | 7.6 | | | | | | | | | | |
| | C. I. Pigment Orange 64 | Cromophtal Orange K 2960 (BASF) | 7.2 | | | | | | | | | | |
| Total | | | | 100.0 | 100.0 | 100.0 | 100.0 | 100.0 | 100.0 | 100.0 | 100.0 | 100.0 | 100.0 |
| Bead diameter(mm) | | | | 1.5 | 1.5 | 1.5 | 1.5 | 1.5 | 1.5 | 1.5 | 1.5 | 1.5 | 1.5 |
| Dispersion time | | | | 2h | 2h | 2h | 2h | 2h | 2h | 2h | 2h | 2h | 2h |

(continued)

| | | Type | Inherent viscosity of 90 mL/g or more | | | | | | | | | | |
|---|---|---|---|---|---|---|---|---|---|---|---|---|---|
| Bead diameter(mm) | | | | 0.1 | 0.1 | 0.1 | 0.1 | 0.1 | 0.1 | 0.1 | 0.1 | 0.1 | 0.1 |
| Dispersion time | | | | 4h | 4h | 4h | 4h | 4h | 4h | 4h | 4h | 4h | 4h |
| Value of D90 (nm) | | | | 351 | 356 | 345 | 368 | 353 | 362 | 366 | 356 | 349 | 352 |
| Inherent viscosity of 90 ml/g or more in total amount of resin | | | | 0.10% | 0.10% | 0.10% | 0.10% | 0.15% | 0.10% | 0.10% | 0.10% | 0.10% | 0.10% |
| Evaluation item | | Storage stability | | 5 | 5 | 5 | 4 | 4 | 4 | 4 | 4 | 4 | 4 |
| | | Ejection Stability | | 5 | 5 | 5 | 4 | 4 | 5 | 5 | 5 | 5 | 5 |
| | | Intermittent ejection property | | 5 | 5 | 5 | 4 | 4 | 5 | 5 | 5 | 5 | 5 |
| | | Solid filling | | 5 | 5 | 5 | 5 | 5 | 5 | 5 | 4 | 4 | 5 |
| | | Surface drying property | | 5 | 5 | 5 | 5 | 5 | 5 | 5 | 5 | 5 | 5 |
| | | Bleeding property | | 5 | 5 | 5 | 5 | 5 | 5 | 5 | 4 | 4 | 4 |
| | | Color development property | | 5 | 5 | 5 | 4 | 2 | 5 | 5 | 5 | 5 | 5 |
| | | Weather resistance | | 5 | 5 | 5 | 5 | 3 | 5 | 5 | 5 | 5 | 5 |
| | | Glossiness | | 5 | 5 | 4 | 4 | 5 | 5 | 5 | 5 | 5 | 5 |
| | | Color tone stability (settleability) | | 5 | 5 | 5 | 5 | 5 | 5 | 5 | 5 | 5 | 5 |

[Table 8]

| Composition | Classification | Type | Example 1-47 | Example 1-48 | Example 1-49 | Example 1-50 | Example 1-51 | Example 1-52 | Example 1-53 | Example 1-54 | Example 1-55 | Example 1-56 |
|---|---|---|---|---|---|---|---|---|---|---|---|---|
| Solvent B | Alkyl amide-based solvent (b1) | N,N-diethylformamide | | | | | | 20.0 | 20.0 | 10.0 | 10.0 | 20.0 |
| | | N,N-diethylpropanamide | | | | | | | | | | |
| | | N,N-diethylacetamide | | | | | | | | | | |
| | | N,N-dimethylformamide | | | 20.0 | | | | | | | |
| | Cyclic amide-based solvent (b2) | N-methyl- ε -caprolactam | 20.0 | | | | | | | | | |
| | | N-vinyl caprolactam | | | | | | | | | | |
| | | ε -caprolactam | | | | | | | | | | |
| | | N-methyl-2-pyrolidone | | 20.0 | | | | | | | | |
| | Lactone-based solvent (b3) | γ-butyrolactone | | | | | | | | | | |
| | | γ-valerolactone | | | | | | | | | | |
| | | ε -caprolactone | | | | | | | | | | |
| | | γ -heptanolactone | | | | 20.0 | | | | | | |
| | | γ -hexanolactone | | | | | 20.0 | | | | | |

(continued)

| | | | Example 1-47 | Example 1-48 | Example 1-49 | Example 1-50 | Example 1-51 | Example 1-52 | Example 1-53 | Example 1-54 | Example 1-55 | Example 1-56 |
|---|---|---|---|---|---|---|---|---|---|---|---|---|
| Composition | Classification | Type | | | | | | | | | | |
| Other solvents | Glycol ether dialkyl | Diethylene glycol diethyl ether | 60.5 | 60.5 | 60.5 | 60.5 | 60.5 | 64.4 | 63.8 | 63.0 | 60.0 | 60.5 |
| | | Diethylene glycol methyl ethyl ether | | | | | | | | | | |
| | | Dipropylene glycol dimethyl ether | | | | | | | | | | |
| | | Diethylene glycol dibutyl ether | | | | | | | | | | |
| | Glycol ether monoalkyl | Dipropylene glycol monomethyl ether | 10.0 | 10.0 | 10.0 | 10.0 | 10.0 | 10.0 | 10.0 | 10.0 | 10.0 | 10.0 |
| | | Triethylene glycol mono-n-butyl ether | | | | | | | | | | |
| | | Tetraethylene glycol monobutyl ether | | | | | | | | | | |
| | Carbonic acid ester | Propylene carbonate | | | | | | | | | | |

(continued)

| | | Type | Inherent viscosity of 90 mL/g or more | | | | | | | | | | |
|---|---|---|---|---|---|---|---|---|---|---|---|---|---|
| Resin | Acrylic resin | Acrylic resin 1 | 0.0% | 3.0 | 3.0 | 3.0 | 3.0 | 3.0 | 3.0 | 3.0 | 3.0 | 3.0 | 3.0 |
| | | Acrylic resin 2 | 2.2% | | | | | | | | | | |
| | | Acrylic resin 3 | 8.1% | | | | | | | | | | |
| | Vinyl chloride-vinyl acetate copolymer resin | Vinyl chloride-vinyl acetate copolymer resin 1 | 0.3% | 1.5 | 1.5 | 1.5 | 1.5 | 1.5 | 1.5 | 1.5 | 1.5 | 1.5 | 1.5 |
| | | Vinyl chloride-vinyl acetate copolymer resin 2 | 1.4% | | | | | | | | | | |
| | | Vinyl chloride-vinyl acetate copolymer resin 3 | 8.2% | | | | | | | | | | |
| | Cellulose resin | CAG-551-001 | 4.9% | | | | | | | | | | |
| | | CAB-553-0.4 | 29.0% | | | | | | | | | | |
| | | CAP-482-0.5 | 40.9% | | | | | | | | | | |
| | Polyester resin | Polyester resin 1 | 1.5% | | | | | | | | | | |
| | Polyurethane resin | Polyurethane resin 1 | 2.2% | | | | | | | | | | |
| | Product name | Presence or absence of basic group | Amine value(mg) | | | | | | | | | | |

(continued)

| | | Type | Inherent viscosity of 90 mL/g or more | | | | | | | | | | |
|---|---|---|---|---|---|---|---|---|---|---|---|---|---|
| Dispersant | Solsperse32000 (Lubrizol) | Yes | 35 | 1.5 | 1.5 | 1.5 | 1.5 | 1.5 | 0.2 | 0.4 | 4.0 | 5.0 | 1.5 |
| | Solsperse13300 (Lubrizol) | Yes | 123 | | | | | | | | | | |
| | Solsperse13240 (Lubrizol) | Yes | 91 | | | | | | | | | | |
| | Solsperse33000 (Lubrizol) | Yes | 43 | | | | | | | | | | |
| | Solsperse38500 (Lubrizol) | Yes | 20 | | | | | | | | | | |
| | Solsperse76400 (Lubrizol) | Yes | 15 | | | | | | | | | | |
| | Solsperse21000 (Lubrizol) | None | Outside range | | | | | | | | | | |
| | Efka PX4701 (BASF) | Yes | 40 | | | | | | | | | | |
| Dispersion aid | Solsperse22000 (Lubrizol) | | | | | | | | | | | | |
| Additive | Surfactant | Silicon-based additive | BYK-331 (BYK) | 0.5 | 0.5 | 0.5 | 0.5 | 0.5 | 0.5 | 0.5 | 0.5 | | 0.5 |
| | | | BYK-313 (BYK) | | | | | | | | | 0.5 | |
| | | | pl I | | | | | | | | | | |

(continued)

| | | Type | Inherent viscosity of 90 mL/g or more | | | | | | | | | | |
|---|---|---|---|---|---|---|---|---|---|---|---|---|---|
| Pigment | C. I. Pigment Orange 43 | Orange A-76 (Arimoto Chemical Co., Ltd.) | 6.0 | 3.0 | 3.0 | 3.0 | 3.0 | 3.0 | 0.4 | 0.8 | 8.0 | 10.0 | 3.0 |
| | C. I. Pigment Orange 43 | Ilostaperm Orange GR (Clarlant) | 7.5 | | | | | | | | | | |
| | C. I. Pigment Orange 43 | Synthetic product-1 | 2.4 | | | | | | | | | | |
| | C. I. Pigment Orange 43 | Synthetic product-2 | 4.1 | | | | | | | | | | |
| | C. I. Pigment Orange 43 | Synthetic product-3 | 6.0 | | | | | | | | | | |
| | C. I. Pigment Orange 43 | Synthetic product-4 | 7.7 | | | | | | | | | | |
| | C. I. Pigment Orange 43 | Synthetic product-5 | 8.7 | | | | | | | | | | |
| | C. I. Pigment Orange 43 | Synthetic product-6 | 9.4 | | | | | | | | | | |
| | C. I. Pigment Orange 31 | Cromophtal Orange 4R (BASF) | 7.6 | | | | | | | | | | |
| | C. I. Pigment Orange 64 | Cromophtal Orange K 2960 (BASF) | 7.2 | | | | | | | | | | |
| Total | | | | 100.0 | 100.0 | 100.0 | 100.0 | 100.0 | 100.0 | 100.0 | 100.0 | 100.0 | 100.0 |
| Bead diameter(mm) | | | | 1.5 | 1.5 | 1.5 | 1.5 | 1.5 | 1.5 | 1.5 | 1.5 | 1.5 | 1.5 |
| Dispersion time | | | | 2h | 2h | 2h | 2h | 2h | 2h | 2h | 2h | 2h | 2h |

(continued)

| | | Type | Inherent viscosity of 90 mL/g or more | | | | | | | | | | |
|---|---|---|---|---|---|---|---|---|---|---|---|---|---|
| Bead diameter(mm) | | | | 0.1 | 0.1 | 0.1 | 0.1 | 0.1 | 0.1 | 0.1 | 0.1 | 0.1 | 0.2 |
| Dispersion time | | | | 4h | 4h | 4h | 4h | 4h | 4h | 4h | 4h | 4h | 2h |
| Value of D90 (nm) | | | | 364 | 368 | 355 | 350 | 362 | 349 | 353 | 345 | 350 | 402 |
| Inherent viscosity of 90 ml/g or more in total amount of resin | | | | 0.10% | 0.10% | 0.10% | 0.10% | 0.10% | 0.10% | 0.10% | 0.10% | 0.10% | 0.10% |
| Evaluation item | | Storage stability | | 4 | 4 | 3 | 3 | 3 | 5 | 4 | 4 | 2 | 5 |
| | | Ejection Stability | | 5 | 5 | 5 | 5 | 5 | 5 | 5 | 5 | 3 | 5 |
| | | Intermittent ejection property | | 5 | 5 | 5 | 5 | 5 | 5 | 5 | 5 | 5 | 5 |
| | | Solid filling | | 5 | 5 | 4 | 5 | 5 | 3 | 4 | 5 | 5 | 5 |
| | | Surface drying property | | 4 | 4 | 4 | 4 | 4 | 5 | 5 | 5 | 5 | 5 |
| | | Bleeding property | | 4 | 4 | 4 | 4 | 4 | 5 | 5 | 5 | 5 | 5 |
| | | Color development property | | 5 | 5 | 5 | 5 | 5 | 3 | 3 | 5 | 5 | 5 |
| | | Weather resistance | | 5 | 5 | 5 | 5 | 5 | 3 | 3 | 5 | 5 | 5 |
| | | Glossiness | | 5 | 5 | 5 | 5 | 5 | 5 | 5 | 5 | 5 | 5 |
| | | Color tone stability (settleability) | | 5 | 5 | 5 | 5 | 5 | 5 | 5 | 5 | 3 | 5 |

[Table 9]

| | | | Example 1-57 | Example 1-58 | Example 1-59 | Example 1-60 | Example 1-61 | Example 1-62 | Example 1-63 | Example 1-64 | Example 1-65 | Example 1-66 |
|---|---|---|---|---|---|---|---|---|---|---|---|---|
| Composition | Classification | Type | | | | | | | | | | |
| Solvent B | Alkyl amide-based solvent (b1) | N,N-diethylformamide | 20.0 | 20.0 | 20.0 | 20.0 | 20.0 | 20.0 | 20.0 | 20.0 | 20.0 | 20.0 |
| | | N,N-diethylpropanamide | | | | | | | | | | |
| | | N,N-diethylacetamide | | | | | | | | | | |
| | | N,N-dimethylformamide | | | | | | | | | | |
| | Cyclic amide-based solvent (b2) | N-methyl-$\varepsilon$-caprolactam | | | | | | | | | | |
| | | N-vinyl caprolactam | | | | | | | | | | |
| | | $\varepsilon$-caprolactam | | | | | | | | | | |
| | | N-methyl-2-pyrolidone | | | | | | | | | | |
| | Lactone-based solvent (b3) | $\gamma$-buryrolactone | | | | | | | | | | |
| | | $\gamma$-valerolactone | | | | | | | | | | |
| | | $\varepsilon$-caprolactone | | | | | | | | | | |
| | | $\gamma$-heptanolactone | | | | | | | | | | |
| | | $\gamma$-hexanolactone | | | | | | | | | | |

(continued)

| | | | | Example 1-57 | Example 1-58 | Example 1-59 | Example 1-60 | Example 1-61 | Example 1-62 | Example 1-63 | Example 1-64 | Example 1-65 | Example 1-66 |
|---|---|---|---|---|---|---|---|---|---|---|---|---|---|
| Other solvents | Glycol ether dialkyl | Diethylene glycol diethyl ether | | 60.5 | 60.5 | 60.5 | 60.5 | 60.5 | 60.5 | 60.5 | 60.5 | 60.5 | 61.5 |
| | | Diethylene glycol methyl ethyl ether | | | | | | | | | | | |
| | | Dipropylene glycol dimethyl ether | | | | | | | | | | | |
| | | Diethylene glycol dibutyl ether | | | | | | | | | | | |
| | Glycol ether monoalkyl | Dipropylene glycol monomethyl ether | | 10.0 | 10.0 | 10.0 | 10.0 | 10.0 | 10.0 | 10.0 | 10.0 | 10.0 | 10.0 |
| | | Triethylene glycol mono-n-butyl ether | | | | | | | | | | | |
| | | Tetraethylene glycol monobutyl ether | | | | | | | | | | | |
| | Carbonic acid ester | Propylene carbonate | | | | | | | | | | | |
| | | Type | Inherent viscosity of 90 mL/g or more | | | | | | | | | | |

(continued)

| | | | | Example 1-57 | Example 1-58 | Example 1-59 | Example 1-60 | Example 1-61 | Example 1-62 | Example 1-63 | Example 1-64 | Example 1-65 | Example 1-66 |
|---|---|---|---|---|---|---|---|---|---|---|---|---|---|
| Resin | Acrylic resin | Acrylic resin 1 | 0.0% | 3.0 | 3.0 | 3.0 | 3.0 | 3.0 | 3.0 | 3.0 | 3.0 | 3.0 | 3.0 |
| | | Acrylic resin 2 | 2.2% | | | | | | | | | | |
| | | Acrylic resin 3 | 8.1% | | | | | | | | | | |
| | Vinyl chloride-vinyl acetate resin copolymer | Vinyl chloride-vinyl acetate copolymer resin 1 | 0.3% | 1.5 | 1.5 | 1.5 | 1.5 | 1.5 | 1.5 | 1.5 | 1.5 | 1.5 | 1.5 |
| | | Vinyl chloride-vinyl acetate copolymer resin 2 | 1.4% | | | | | | | | | | |
| | | Vinyl chloride-vinyl acetate copolymer resin 3 | 8.2% | | | | | | | | | | |
| | Cellulose resin | CAG-551-001 | 4.9% | | | | | | | | | | |
| | | CAB-553-0.4 | 29.0% | | | | | | | | | | |
| | | CAP-482-0.5 | 40.9% | | | | | | | | | | |
| | Polyester resin | Polyester resin 1 | 1.5% | | | | | | | | | | |
| | Polyurethane resin | Polyurethane resin 1 | 2.2% | | | | | | | | | | |
| | Product name | Presence or absence of basic group | Amine value(mg) | | | | | | | | | | |

(continued)

| | | | | Example 1-57 | Example 1-58 | Example 1-59 | Example 1-60 | Example 1-61 | Example 1-62 | Example 1-63 | Example 1-64 | Example 1-65 | Example 1-66 |
|---|---|---|---|---|---|---|---|---|---|---|---|---|---|
| Dispersant | Solsperse32000 (Lubrizol) | Yes | 35 | 1.5 | 1.5 | 1.5 | | | | | | | 0.5 |
| | Solsperse13300 (Lubrizol) | Yes | 123 | | | | | | | | | 1.5 | |
| | Solsperse13240 (Lubrizol) | Yes | 91 | | | | | | | | 1.5 | | |
| | Solsperse33000 (Lubrizol) | Yes | 43 | | | | | | | 1.5 | | | |
| | Solsperse38500 (Lubrizol) | Yes | 20 | | | | | | 1.5 | | | | |
| | Solsperse76400 (Lubrizol) | Yes | 15 | | | | | 1.5 | | | | | |
| | Solsperse21000 (Lubrizol) | None | Outside range | | | | 1.5 | | | | | | |
| | Efka PX4701 (BASF) | Yes | 40 | | | | | | | | | | |
| Dispersion aid | Solsperse22000 (Lubrizol) | | | | | | | | | | | | |
| Additive | Surfactant | Silicon-based additive | BYK-331 (BYK) | 0.5 | 0.5 | 0.5 | | 0.5 | 0.5 | 0.5 | 0.5 | | 0.5 |
| | | | BYK-313 (BYK) | | | | 0.5 | | | | | 0.5 | |
| | | | pl | | | | | | | | | | |
| | C. I. Pigment Orange 43 | Orange A-76 (Arimoto Chemical Co., Ltd.) | 6.0 | 3.0 | 3.0 | 3.0 | 3.0 | 3.0 | 3.0 | 3.0 | 3.0 | 3.0 | 3.0 |

(continued)

| | | | | Example 1-57 | Example 1-58 | Example 1-59 | Example 1-60 | Example 1-61 | Example 1-62 | Example 1-63 | Example 1-64 | Example 1-65 | Example 1-66 |
|---|---|---|---|---|---|---|---|---|---|---|---|---|---|
| | C. I. Pigment Orange 43 | Ilostaperm Orange GR (Clarlant) | 7.5 | | | | | | | | | | |
| | C. I. Pigment Orange 43 | Synthetic product-1 | 2.4 | | | | | | | | | | |
| | C. I. Pigment Orange 43 | Synthetic product-2 | 4.1 | | | | | | | | | | |
| | C. I. Pigment Orange 43 | Synthetic product-3 | 6.0 | | | | | | | | | | |
| Pigment | C. I. Pigment Orange 43 | Synthetic product-4 | 7.7 | | | | | | | | | | |
| | C. I. Pigment Orange 43 | Synthetic product-5 | 8.7 | | | | | | | | | | |
| | C. I. Pigment Orange 43 | Synthetic product-6 | 9.4 | | | | | | | | | | |
| | C. I. Pigment Orange 31 | Cromophtal Orange 4R (BASF) | 7.6 | | | | | | | | | | |
| | C. I. Pigment Orange 64 | Cromophtal Orange K 2960 (BASF) | 7.2 | | | | | | | | | | |
| Total | | | | 100.0 | 100.0 | 100.0 | 100.0 | 100.0 | 100.0 | 100.0 | 100.0 | 100.0 | 100.0 |
| Bead diameter(mm) | | | | 1.5 | 1.5 | 1.5 | 1.5 | 1.5 | 1.5 | 1.5 | 1.5 | 1.5 | 1.5 |
| Dispersion time | | | | 2h | 2h | 2h | 2h | 2h | 2h | 2h | 2h | 2h | 2h |
| Bead diameter(mm) | | | | 0.5 | 0.8 | - | 0.1 | 0.1 | 0.1 | 0.1 | 0.1 | 0.1 | 0.1 |
| Dispersion time | | | | 2h | 2h | - | 4h | 4h | 4h | 4h | 4h | 4h | 4h |
| Value of D90 (nm) | | | | 452 | 506 | 557 | 353 | 358 | 349 | 361 | 345 | 350 | 347 |
| Inherent viscosity of 90 ml/g or more in total amount of resin | | | | 0.10% | 0.10% | 0.10% | 0.10% | 0.10% | 0.10% | 0.10% | 0.10% | 0.10% | 0.10% |

(continued)

| Evaluation item | | Example 1-57 | Example 1-58 | Example 1-59 | Example 1-60 | Example 1-61 | Example 1-62 | Example 1-63 | Example 1-64 | Example 1-65 | Example 1-66 |
|---|---|---|---|---|---|---|---|---|---|---|---|
| Evaluation item | Storage stability | 5 | 4 | 3 | 2 | 3 | 4 | 5 | 5 | 3 | 2 |
| | Ejection Stability | 4 | 4 | 2 | 3 | 4 | 4 | 5 | 4 | 4 | 5 |
| | Intermittent ejection property | 5 | 5 | 2 | 5 | 5 | 5 | 5 | 5 | 4 | 5 |
| | Solid filling | 5 | 5 | 5 | 5 | 5 | 5 | 5 | 5 | 5 | 5 |
| | Surface drying property | 5 | 5 | 5 | 5 | 5 | 5 | 5 | 5 | 5 | 5 |
| | Bleeding property | 5 | 5 | 5 | 5 | 5 | 5 | 5 | 5 | 5 | 4 |
| | Color development property | 5 | 5 | 4 | 5 | 5 | 5 | 5 | 5 | 4 | 5 |
| | Weather resistance | 5 | 5 | 5 | 5 | 5 | 5 | 5 | 5 | 5 | 5 |
| | Glossiness | 5 | 5 | 5 | 5 | 4 | 5 | 5 | 5 | 5 | 5 |
| | Color tone stability (settleability) | 4 | 3 | 2 | 3 | 3 | 4 | 5 | 5 | 4 | 4 |

[Table 10]

| | | | Example 1-67 | Example 1-68 | Example 1-69 | Example 1-70 | Example 1-71 | Example 1-72 | Example 1-73 | Example 1-74 | Example 1-75 |
|---|---|---|---|---|---|---|---|---|---|---|---|
| Composition | Classification | Type | | | | | | | | | |
| Solvent B | | N,N-diethylformamide | 20.0 | 20.0 | 20.0 | 20.0 | 20.0 | 20.0 | 20.0 | | |
| | amide-based solvent (b1) | N,N-diethylpropanamide | | | | | | | | | |
| | Alkyl | N,N-diethylacetamide | | | | | | | | | |
| | | N,N-dimethylformamide | | | | | | | | | |
| | | N-methyl-$\varepsilon$-caprolactam | | | | | | | | | |
| | amide-based solvent (b2) | N-vinyl caprolactam | | | | | | | | 20.0 | |
| | Cyclic | $\varepsilon$-caprolactam | | | | | | | | | 20.0 |
| | | N-methyl-2-pyrolldone | | | | | | | | | |
| | | $\gamma$-butyrolactone | | | | | | | | | |
| | | $\gamma$-valerolactone | | | | | | | | | |
| | Lactone-based solvent (b3) | $\varepsilon$-caprolactone | | | | | | | | | |
| | | $\gamma$-heptanolactone | | | | | | | | | |
| | | $\gamma$-hexanolactone | | | | | | | | | |

(continued)

| | | | Example 1-67 | Example 1-68 | Example 1-69 | Example 1-70 | Example 1-71 | Example 1-72 | Example 1-73 | Example 1-74 | Example 1-75 |
|---|---|---|---|---|---|---|---|---|---|---|---|
| Composition | Classification | Type | | | | | | | | | |
| Other solvents | | Diethylene glycol diethyl ether | 61.3 | 58.0 | 57.4 | 61.0 | 41.0 | | 20.4 | 20.4 | 20.4 |
| | | Diethylene glycol methyl ethyl ether | | | | | 20.0 | 60.4 | 40.0 | 40.0 | 40.0 |
| | Glycol ether dialkyl | Dipropylene glycol dimethyl ether | | | | | | | | | |
| | | Diethylene glycol dibutyl ether | | | | | | | | | |
| | | Dipropylene glycol monomethyl ether | 10.0 | 10.0 | 10.0 | 10.0 | 10.0 | 10.0 | 5.0 | 5.0 | 5.0 |
| | Glycol ether monoalkyl | Triethylene glycol mono-n-butyl ether | | | | | | | 5.0 | 5.0 | 5.0 |
| | | Tetraethylene glycol monobutyl ether | | | | | | | | | |
| | Carbonic acid ester | Propylene carbonate | | | | | | | | | |

(continued)

| | | Type | Inherent viscosity of 90 mL/g or more | | | | | | | | | |
|---|---|---|---|---|---|---|---|---|---|---|---|---|
| Resin | Acrylic resin | Acrylic resin 1 | 0.0% | 3.0 | 3.0 | 3.0 | 3.0 | 3.0 | 3.2 | 3.2 | 3.2 | 3.2 |
| | | Acrylic resin 2 | 2.2% | | | | | | | | | |
| | | Acrylic resin 3 | 8.1% | | | | | | | | | |
| | Vinyl chloride-vinyl acetate copolymer resin | Vinyl chloride-vinyl acetate copolymerresin 1 | 0.3% | 1.5 | 1.5 | 1.5 | 1.5 | 1.5 | 0.4 | 0.4 | 0.4 | 0.4 |
| | | Vinyl chloride-vinyl acetate copolymerresin 2 | 1.4% | | | | | | | | | |
| | | Vinyl chloride-vinyl acetate copolymerresin 3 | 8.2% | | | | | | | | | |
| | Cellulose resin | CAB-551-0.01 | 4.9% | | | | | | 1.0 | 1.0 | 1.0 | 1.0 |
| | | CAB-553-0.4 | 29.0% | | | | | | | | | |
| | | CAP-482-0.5 | 40.9% | | | | | | 0.4 | 0.4 | 0.4 | 0.4 |
| | Polyester resin | Polyester resin 1 | 1.5% | | | | | | | | | |
| | Polyurethane resin | Polyurethane resin 1 | 2.2% | | | | | | | | | |
| | Product name | Presence or absence of basic group | Amine value (mg) | | | | | | | | | |

(continued)

| | | Type | Inherent viscosity of 90 mL/g or more | | | | | | | | | |
|---|---|---|---|---|---|---|---|---|---|---|---|---|
| Dispersant | Solsperse32000 (Lubrizol) | Yes | 35 | 0.7 | 4.0 | 4.6 | 1.5 | 1.5 | 1.5 | 1.5 | 1.5 | |
| | Solsperse13300 (Lubrlzol) | Yes | 123 | | | | | | | | | |
| | Solsperse13240 (Lubrlzol) | Yes | 91 | | | | | | | | | |
| | Solsperse33000 (Lubrizol) | Yes | 43 | | | | | | | | | |
| | Solsperse38500 (Lubrizol) | Yes | 20 | | | | | | | | | |
| | Solsperse76400 (Lubrizol) | Yes | 15 | | | | | | | | | |
| | Solsperse21000 (Lubrizol) | None | Outside range | | | | | | | | | |
| | Efka PX4701 (BASF) | Yes | 40 | | | | | | | | | 1.5 |
| Dispersion aid | Solsperse22000 (Lubrizol) | | | | | | | | | | | |
| Additive | Surfactant | Silicon-based additive | BYK-331 (BYK) | 0.5 | 0.5 | 0.5 | | | 0.1 | 0.1 | 0.1 | 0.1 |
| | | | BYK-313 (BYK) | | | | | | | | | |
| | | | pH | | | | | | | | | |

(continued)

| | | Type | Inherent viscosity of 90 mL/g or more | | | | | | | | | |
|---|---|---|---|---|---|---|---|---|---|---|---|---|
| Pigment | C. I. Pigment Orange 43 | Orange A-76 (Arimoto Chemical Co., Ltd.) | 6.0 | 3.0 | 3.0 | 3.0 | 3.0 | 3.0 | 3.0 | 3.0 | 3.0 | 3.0 |
| | C. I. Pigment Orange 43 | Hostaperm Orange GR (Clariant) | 7.5 | | | | | | | | | |
| | C. I. Pigment Orange 43 | Synthetic product-1 | 2.4 | | | | | | | | | |
| | C. I. Pigment Orange 43 | Synthetic product-2 | 4.1 | | | | | | | | | |
| | C. I. Pigment Orange 43 | Synthetic product-3 | 6.0 | | | | | | | | | |
| | C. I. Pigment Orange 43 | Synthetic product-4 | 7.7 | | | | | | | | | |
| | C. I. Pigment Orange 43 | Synthetic product-5 | 8.7 | | | | | | | | | |
| | C. I. Pigment Orange 43 | Synthetic product-6 | 9.4 | | | | | | | | | |
| | C. I. Pigment Orange 31 | Cromophtal Orange 4R (BASF) | 7.6 | | | | | | | | | |
| | C. I. Pigment Orange 64 | Cromophtal Orange K 2960 (BASF) | 7.2 | | | | | | | | | |
| Total | | | | 100.0 | 100.0 | 100.0 | 100.0 | 100.0 | 100.0 | 100.0 | 100.0 | 100.0 |
| Bead diameter(mm) | | | | 1.5 | 1.5 | 1.5 | 1.5 | 1.5 | 1.5 | 1.5 | 1.5 | 1.5 |
| Dispersion time | | | | 2h | 2h | 2h | 2h | 2h | 2h | 2h | 2h | 2h |

(continued)

| | | Type | Inherent viscosity of 90 mL/g or more | | | | | | | | | |
|---|---|---|---|---|---|---|---|---|---|---|---|---|
| Bead diameter(mm) | | | | 0.1 | 0.1 | 0.1 | 0.1 | 0.1 | 0.1 | 0.1 | 0.1 | 0.1 |
| Dispersion time | | | | 4h | 4h | 4h | 4h | 4h | 4h | 4h | 4h | 4h |
| Value of D90 (nm) | | | | 352 | 366 | 352 | 365 | 350 | 360 | 360 | 360 | 360 |
| Inherent viscosity of 90 ml/g or more in total amount of resin | | | | 0.10% | 0.10% | 0.10% | 0.10% | 0.10% | 1.10% | 1.10% | 1.10% | 1.10% |
| Evaluation item | | Storage stability | | 4 | 5 | 5 | 5 | 5 | 5 | 5 | 4 | 4 |
| | | Ejection Stability | | 5 | 5 | 5 | 5 | 5 | 5 | 5 | 5 | 5 |
| | | Intermittent ejection property | | 5 | 5 | 5 | 5 | 5 | 5 | 5 | 5 | 5 |
| | | Solid filling | | 5 | 5 | 4 | 5 | 5 | 5 | 5 | 5 | 5 |
| | | Surface drying property | | 5 | 4 | 2 | 5 | 5 | 5 | 5 | 5 | 5 |
| | | Bleeding property | | 5 | 5 | 5 | 4 | 5 | 5 | 5 | 4 | 4 |
| | | Color development property | | 5 | 5 | 4 | 5 | 5 | 5 | 5 | 5 | 5 |
| | | Weather resistance | | 5 | 5 | 5 | 5 | 5 | 5 | 5 | 5 | 5 |
| | | Glossiness | | 5 | 5 | 5 | 2 | 2 | 5 | 5 | 5 | 5 |
| | | Color tone stability (settleability) | | 4 | 4 | 4 | 5 | 5 | 5 | 5 | 5 | 5 |

As can be seen from Tables 3 to 10, the nonaqueous ink compositions of the examples containing the pigment Al represented by the formula (1-1) and having a pH within a range of 3 or more and 9 or less have good various characteristics required for the nonaqueous ink composition ejected by the inkjet method.

In particular, in the nonaqueous ink compositions of Example 1-10 to Example 1-13 in which a pH of the pigment Al was changed, the nonaqueous ink compositions of Example 1-10 to Example 1-12 in which a pH of the pigment Al was in a range of 4 or more and 8 or less had good storage stability as compared with Example 1-13.

Further, in the nonaqueous ink compositions in Example 1-14 to Example 1-30 and Example 1-72 to Example 1-75 in which a content of a resin having an intrinsic viscosity at 25°C of 90 mL/g or more is changed, the nonaqueous ink compositions in the examples in which an amount of the resin having the intrinsic viscosity at 25°C of 90 mL/g or more is in a range of 5% by mass or less in a total amount of the resin have excellent solid filling and intermittent ejection property as compared with that in the nonaqueous ink compositions in the examples in which the amount of the resin is in a range of more than 5% by mass.

In addition, the nonaqueous ink composition of Example 1-1 containing the organic solvent B (at least one selected from the group consisting of the alkyl amide-based solvent (bl), the cyclic amide-based solvent (b2), and the lactone-based solvent (b3)) had better various characteristics required for the nonaqueous ink composition ejected by the inkjet method than the nonaqueous ink compositions of Example 1-31 to Example 1-33 containing no organic solvent B.

In addition, in Example 1-34 to Example 1-41 in which a content of the organic solvent B was changed, the nonaqueous ink compositions of Example 1-34 to Example 1-40 in which the content of the organic solvent B was in a range of 1% by mass or more and 90% by mass or less had good color development property, weather resistance, and better various characteristics required for the nonaqueous ink composition ejected by the inkjet method as compared with the nonaqueous ink composition of Example 1-41.

In addition, in Example 1-42 to Example 1-51, Example 1-74, and Example 1-75 in which a type of the organic solvent B (the alkyl amide-based solvent (bl), the cyclic amide-based solvent (b2), and the lactone-based solvent (b3)) was changed, various characteristics required for the nonaqueous ink composition ejected by the inkjet method were better, and as long as the nonaqueous ink composition contains the organic solvent B (at least one selected from the group consisting of the alkyl amide-based solvent (bl), the cyclic amide-based solvent (b2), and the lactone-based solvent (b3)), the effect of the present invention was particularly effectively exhibited.

It was found that, in Example 1-52 to Example 1-55 in which a content of the pigment Al was changed, the nonaqueous ink compositions of Example 1-52 to Example 1-54 in which the content of the pigment Al was 0.1% by mass or more and 8.0% by mass or less in the total amount of the nonaqueous ink composition had good storage stability and better various characteristics required for the nonaqueous ink composition ejected by the inkjet method as compared with Example 1-55.

In addition, in Example 1-56 to Example 1-59 in which a volume-based cumulative 90% particle diameter (D90) of the pigment Al was changed, there was a tendency that the ejection stability was improved as the volume-based cumulative 90% particle diameter (D90) was smaller.

In addition, in Example 1-60 to Example 1-65 in which a type of the pigment dispersant was changed, the nonaqueous ink compositions of Example 1-61 to Example 1-65 in which the pigment dispersant having a basic group was used had excellent ejection stability as compared with the nonaqueous ink composition of Example 60. Among them, the nonaqueous ink compositions of Example 1-62 to Example 1-64 having an amine value in a range of 20 mgKOH/g or more and 100 mgKOH/g or less exhibited particularly excellent ejection stability.

In addition, in Example 1-66 to Example 1-69 in which a content of the pigment dispersant was changed, ink compositions of Example 1-66 to Example 1-68 in which a content thereof was in a range of 5 parts by mass or more and 150 parts by mass or less with respect to 100 parts by mass of the pigment in the nonaqueous ink composition had excellent color development evaluation and surface drying property as compared with the nonaqueous ink composition of Example 1-69.

In addition, ink compositions of Example 1-70 and Example 1-71 containing no surfactant having a siloxane skeleton had lower glossiness than the ink composition of Example 1-1.

On the other hand, a nonaqueous ink composition of Comparative Example 1-1 containing the pigment Al having a pH of less than 3 had poor storage stability and solid filling, and did not satisfy various characteristics required for the nonaqueous ink composition ejected by the inkjet method. A nonaqueous ink composition of Comparative Example 1-2 containing the pigment Al having a pH of more than 9 had poor storage stability and ejection stability, and did not satisfy various characteristics required for the nonaqueous ink composition ejected by the inkjet method.

It was confirmed that Reference Example 1-1 and Reference Example 1-2 containing C. I. Pigment Orange 31 and C. I. Pigment 64 without containing the pigment Al represented by the formula (1-1) satisfied the characteristics required for the nonaqueous ink composition ejected by the inkjet method, and the fact that the pigment is easily aggregated in the nonaqueous ink composition is a problem unique to the nonaqueous ink composition containing the perinone pigment.

(Second Embodiment)

1. Preparation of Resin

(1) Acrylic Resin

A mixture of 150g of methyl methacrylate, 50g of butyl methacrylate, and a predetermined amount of t-butylperoxy-2-ethylhexanoate (polymerization initiator) was added dropwise to 300g of diethylene glycol diethyl ether maintained at 100°C over 1.5 hours.

After completion of dropwise addition, the obtained mixture was reacted at 100°C for 2 hours and then cooled to give a colorless and transparent polymer solution of methyl methacrylate.

Thereafter, a solvent was sufficiently distilled off from the polymer solution to give a polymer of the methyl methacrylate. At this time, an amount of the t-butylperoxy-2-ethylhexanoate, which is a polymerization initiator, was changed to control a polymerization average molecular weight of methyl methacrylate (acrylic resin) to 30,000 to 105,000 (A mass of the polymerization initiator used at this time is described in Table 11 below, This is indicated as "initiator amount" in Table 11.)

(2) Vinyl Chloride-Vinyl Acetate Copolymer Resin

After nitrogen substitution, an autoclave equipped with a stirring device was charged with 100 parts of deionized water, 40 parts of methanol, 32 parts of vinyl chloride, 5 parts of vinyl acetate, 0.2 parts of glycidyl methacrylate, 3.55 parts of hydroxypropyl acrylate, 0.1 parts of hydroxypropyl methyl cellulose (suspension agent), 0.026 parts of di-2-ethylhexyl peroxydicarbonate (polymerization initiator), and a predetermined amount of di-3,5,5-trimethylhexanol peroxide (polymerization initiator), and the obtained mixture was heated to 63°C while being stirred in a nitrogen gas atmosphere, and immediately after reaching 63°C, 48 parts of vinyl chloride was continuously injected for 6 hours, and a mixture of 0.6 parts of glycidyl methacrylate and 10.65 parts of hydroxypropyl acrylate was continuously injected for 5.4 hours to carry out a copolymerization reaction. When an internal pressure of the autoclave reached 0.3 MPa, a residual pressure was released, the resultant was cooled, resin slurry was taken out, filtered, and dried to give a vinyl chloride copolymer resin. At this time, the amount of di-3,5,5-trimethylhexanol peroxide, which is a polymerization initiator, was changed to control a polymerization average molecular weight of the vinyl chloride-vinyl acetate copolymer resin to 40,000 to 75,000 (A mass of the polymerization initiator used at this time is described in Table 11 below, This is indicated as "initiator amount" in Table 11.)

(3) Cellulose Resin

A cellulose resin (CAB551-0.01, and CAB553-0.4 manufactured by EASTMAN CHEMICAL, Co., Ltd.) which is a commercially available product was used.

(4) Polyester Resin

A round bottom flask was charged with 104 parts by mass of terephthalic acid, 104 parts by mass of isophthalic acid, 79 parts by mass of ethylene glycol, 89 parts by mass of neopentyl glycol, and 0.1 parts by mass of tetrabutyl titanate, a temperature of the round bottom flask was gradually increased to 240°C over 4 hours, and esterification reaction was performed while removing a precipitate outside the system. After completion of the esterification reaction, a pressure was reduced to 10 mmHg over 30 minutes, and the temperature was increased to 250°C to perform initial polymerization. Thereafter, late polymerization was performed for 1 hour at 1 mmHg or less to obtain the polyester resin.

(5) Polyurethane Resin

Into a round bottom flask were put 192.5 parts by mass of polycarbonate diol (PLACCEL CD-220, manufactured by Daicel Corporation), 41.6 parts by mass of isophorone diisocyanate (IPDI, manufactured by Evonik), and 100 parts by mass of N,N-diethylformamide (DEF), followed by uniformly mixing and then, a mixed liquid of 0.01 parts of T100 BHJ (catalyst) and 0.09 parts of N,N-diethylformamide (DEF) was put into the flask and reacted at 75°C for 3 hours to obtain a prepolymer having an isocyanate group at the end. After 250 parts by mass of N,N-diethylformamide (DEF) was added to the prepolymer and uniformly dissolved therein, a chain extender solution obtained by dissolving 12 parts by mass of 3-aminomethyl-3,5,5-trimethylcyclohexylamine (IPD: manufactured by Evonik) in 100 parts by mass of N,N-diethylformamide (DEF) was added thereto, and the mixture was further stirred at 60°C for 40 minutes. Thereafter, a reaction terminator obtained by dissolving 3.8 parts of monoisopropanolamine (MIPA: Daicel Corporation) in 50 parts

by mass of N,N-diethylformamide (DEF) was added, and finally, 250 parts by mass of N,N-diethylformamide (DEF) was added to obtain a polyurethane solution having a solid content of 25.0% by mass.

Table 11 shows a weight average molecular weight (relative molecular mass) of each resin (an acrylic resin, a vinyl chloride-vinyl acetate copolymer resin, a cellulose resin, a polyester resin, and a polyurethane resin) and a ratio of each resin having an intrinsic viscosity at 25°C of 90 mL/g or more. The weight average molecular weight (relative molecular mass) was measured by gel permeation chromatography (GPC) . In addition, in the ratio of each resin having the intrinsic viscosity of 90 mL/g or more, the intrinsic viscosity was obtained by connecting a viscosity detector (ViscoStar III manufactured by WYATT) and a refractive index detector (Optilab T-rEX manufactured by WYATT) to a SEC (GPC) system manufactured by Shimadzu Corporation, allowing a sample to pass through a column heated to 40°C in the SEC (GPC) system manufactured by Shimadzu Corporation using tetrahydrofuran as a dispersion solvent, obtaining a relative viscosity [ηSP] from a passed substance cooled to 25°C by the viscosity detector, obtaining a concentration C by the refractive index detector, and extrapolating the concentration C to 0 in Lim ([ηSP]/C).

[Table 11]

| | | Weight average molecular weight (Relative molecular mass) | Product number | Initiator amount (g) | 90 mL/g or more (mass%) |
|---|---|---|---|---|---|
| Acrylic resin | Acrylic resin 1 | Mw=30000 | - | 1.20 | 0.0 |
| | Acrylic resin 2 | Mw=80000 | - | 0.20 | 2.2 |
| | Acrylic resin 3 | Mw=105000 | - | 0.10 | 8.1 |
| Vinyl chloride-vinyl acetate copolymer resin | Vinyl chloride-vinyl acetate copolymer resin 1 | Mw=40000 | - | 0.58 | 0.3 |
| | Vinyl chloride-vinyl acetate copolymer resin 2 | Mw=50000 | - | 0.37 | 1.4 |
| | Vinyl chloride-vinyl acetate copolymer resin 3 | Mw=75000 | - | 0.14 | 8.2 |
| Cellulose resin | Cellulose resin 1 | - | CAB551-0.01 | - | 4.9 |
| | Cellulose resin 2 | - | CAB553-0.4 | - | 29.0 |
| Polyester resin | Polyester resin 1 | Mw=26000 | - | - | 1.5 |
| Polyurethane resin | Polyurethane resin 1 | Mw=36400 | - | - | 2.2 |

2. Synthesis of Pigment A2

Synthetic products 1 to 3 of the pigment A2 were synthesized under conditions described in Table 12. Specifically, 2 parts by mass of the diketopyrrolopyrrole pigment of (a8) in Table 12 was dispersed in a solvent of (a9) in Table 12, and (a10) in Table 12 was added in an amount of (a11) in Table 12. After stirring for (al3) in Table 12 under a temperature condition of (a12) in Table 12, the mixture was washed with water to obtain synthetic products 1, 2, and 3 of the pigment A2.

[Table 12]

| | (a8) | (a9) | (a10) | (a11) | (a12) | (a13) | (a14) |
|---|---|---|---|---|---|---|---|
| | Pigment | Solvent | Substituent | Parts | Temperature | Reaction | pH |
| | | | introduction agent | by mass | condition(°C) | time (h) | |
| Synthetic product 1 | P.R.254 Chromofine red 6156 EC manufactured by Dainichiseika Color & Chemicals Mfg, Co., Ltd. | Quinoline | Sulfonated pyridine complex | 2 | 120 | 5 | 2.4 |
| Synthetic product 2 | P.O.71 Iragin Orange D2905 Manufactured by BASF SE | Hydrochloric acid | None | None | 50 | 3 | 6.3 |
| Synthetic product 3 | P.O.73 Irgazin Orange L 2990 HD Manufactured by BASF SE | Hydrochloric acid | None | None | 50 | 3 | 6.1 |
| ("None" in (a10) and (a11) in the table means that a substituent introduction agent was not added.) | | | | | | | |

For the synthetic products 1, 2, and 3 of the pigment A2, a pH was measured by the test method of JIS K5101-17-1:2004 ((a14) in Table 12) .

3. Preparation of Nonaqueous Ink Composition

Nonaqueous ink compositions in the examples and comparative examples were prepared using the respective organic solvents, resins, dispersants, and pigments (colorants) according to ratios of respective components shown in the following table. Specifically, the respective components were dispersed with zirconia beads using a paint shaker to prepare a nonaqueous ink composition. A unit is mass%. A particle diameter and dispersion time of the zirconia beads are shown in Tables 13 to 20 below.

In addition, a volume-based cumulative 90% particle diameter (D90) of the pigment contained in the nonaqueous ink composition was measured by using a particle diameter distribution measurement device (particle size analyzer NANOTRACWAVE manufactured by Microtrac BEL Co., Ltd.).

4. Evaluation 1

(Storage Stability)

Storage stability of the nonaqueous ink compositions in the examples, the comparative examples, and reference examples was evaluated. Specifically, the nonaqueous ink composition was stored at 60°C for one month, and changes in viscosity and volume-based cumulative 50% particle diameter (D50) of a pigment before and after a test were observed, and the storage stability was evaluated according to the following standard. The viscosity of the ink was measured under a condition of 20°C using a falling ball type viscosity meter (AMVn manufactured by Anton Paar), and the volume-based cumulative 50% particle diameter (D50) of the pigment was measured under a condition of 25°C using a particle diameter distribution measurement device (NANOTRACWAVE particle size analyzer manufactured by Microtrac BEL Co., Ltd.). In the following evaluation, the nonaqueous ink composition having a larger rate of change between the "viscosity" and the "volume-based cumulative 50% particle diameter (D50)" was evaluated (this is indicated as "storage stability" in the table).

Evaluation Standard

Evaluation 5: The rates of change in both the viscosity and the volume-based cumulative 50% particle diameter (D50) of the pigment are less than 3%.
Evaluation 4: Either the rate of change in the viscosity or the rate of change in volume-based cumulative 50% particle diameter (D50) of the pigment is 3% or more and less than 5%.
Evaluation 3: Either the rate of change in the viscosity or the rate of change in volume-based cumulative 50% particle diameter (D50) of the pigment is 5% or more and less than 8%.
Evaluation 2: Either the rate of change in the viscosity or the rate of change in volume-based cumulative 50% particle diameter (D50) of the pigment is 8% or more and less than 10%.
Evaluation 1: Either the rate of change in the viscosity or the rate of change in volume-based cumulative 50% particle diameter (D50) of the pigment is 10% or more.

(Ejection Stability)

Ejection stability of the nonaqueous ink compositions in the examples, the comparative examples, and the reference examples was evaluated. Specifically, an inkjet printer (trade name: VersaArt RE-640, manufactured by Rowland DG Co., Ltd.) was filled with the nonaqueous ink composition, a solid and a thin line were printed on a recording medium (glued polyvinyl chloride film (IMAGin JT 5829R, manufactured by MACtac) by continuous printing at a substrate surface temperature of 40°C in a high-speed printing mode (360 × 720 dpi) in two directions, presence or absence of dot omission, flight deflection, and ink scattering was visually observed, and the number of occurrences was measured (this is indicated as "ejection stability" in the table).

Evaluation Standard

Evaluation 5: The thin line was correctly reproduced.
Evaluation 4: The thin line is substantially correctly reproduced.
Evaluation 3: Slight deflection is observed in the thin line.
Evaluation 2: A landing position was displaced, and deflection was observed.
Evaluation 1: The deviation of the landing position is severe, and the thin line cannot be reproduced.

(Intermittent Ejection Property)

An intermittent ejection property of the nonaqueous ink compositions in the examples, the comparative examples, and the reference examples was evaluated. Specifically, using an inkjet printer (trade name: VersaArt RE-640, manufactured by Rowland DG Co., Ltd.), intermittent printing was performed on a recording medium (glued polyvinyl chloride film (IMAGin JT 5829R, manufactured by MACtac) in a high-speed printing mode (360 × 720 dpi) in two directions at a substrate surface temperature of 40°C for a long period of time at room temperature, the presence or absence of dot omission, flight deflection, and ink scattering was observed, and the number of occurrences was counted and evaluated (this is indicated as "intermittent ejection property" in the table).

Evaluation Standard

Evaluation 5: In the test period of 24 hours, occurrence of the dot omission, the flight deflection, or the ink scattering was less than 10 times.
Evaluation 4: In the test period of 24 hours, the occurrence of the dot omission, the flight deflection, or the ink scattering was 10 times or more and less than 20 times.
Evaluation 3: In the test period of 24 hours, the occurrence of the dot omission, the flight deflection, or the ink scattering was 20 times or more and less than 30 times.
Evaluation 2: In the test period of 24 hours, the occurrence of the dot omission, the flight deflection, or the ink scattering was 30 times or more and less than 40 times.
Evaluation 1: In the test period of 24 hours, the occurrence of the dot omission, the flight deflection, or the ink scattering was 40 times or more.

(Solid Filling)

Solid filling of the nonaqueous ink compositions in the examples, the comparative examples, and the reference examples was evaluated. Specifically, using the above inkjet printer (trade name: VersaArt RE-640, manufactured by Rowland DG Co., Ltd.), printing was performed on a recording medium (glued polyvinyl chloride film (IMAGin JT5829R, manufactured by MACtac) in a high-speed printing mode (360 × 720 dpi) in two directions at a substrate surface temperature of 40°C, and filling (white spots) of a portion where solid printing was performed was confirmed (this is indicated as "solid filling" in the table).

Evaluation Standard

Evaluation 5: A uniform solid is formed.
Evaluation 4: No white spots can be visually confirmed but slight color unevenness can be confirmed, yet design is not impaired.
Evaluation 3: No white spots can be visually confirmed, but color unevenness can be confirmed.
Evaluation 2: White spots can be confirmed.
Evaluation 1: Significant white spots can be confirmed, and a decrease in density is observed.

(Surface Drying Property)

A surface drying property of the nonaqueous ink compositions in the examples, the comparative examples, and the reference examples was evaluated. Specifically, the nonaqueous ink compositions in the examples and comparative examples were used to print a solid image on a recording medium (glued polyvinyl chloride film (IMAGin JT5829R, manufactured by MACtac) in a high-quality printing mode (1440 × 720 dpi) by an inkjet method using an inkjet printer (trade name: VersaArt RE-640, manufactured by Rowland DG Co., Ltd.), and time until the solid image was dried at 40°C was measured (this is indicated as "surface drying property" in the table).

Evaluation Standard

Evaluation 5: Drying is performed in less than 2 minutes.
Evaluation 4: Drying is performed in 2 minutes or more and less than 4 minutes.
Evaluation 3: Drying is performed in 4 minutes or more and less than 6 minutes.
Evaluation 2: Drying is performed for 6 minutes or more and less than 8 minutes.
Evaluation 1: Drying is performed in 8 minutes or more.

(Bleeding Property)

A bleeding property of the nonaqueous ink compositions in the examples, the comparative examples, and the reference examples was evaluated. Specifically, using the above inkjet printer (trade name: VersaArt RE-640, manufactured by Rowland DG Co., Ltd.), an image having 6 pt characters having a color different from that of a solid portion in a solid portion having each color was printed on a recording medium (glued polyvinyl chloride film (IMAGin JT 5829R, manufactured by MACtac) in a high-quality printing mode (1440 × 720 dpi) at a substrate surface temperature of 50°C, the obtained printed matter was dried in an oven at 60°C for 5 minutes, and then bleeding of the printed matter was visually observed with a loupe (×10).

Evaluation Standard

Evaluation 5: No ink bleeding is observed with the loupe.
Evaluation 4: No ink bleeding is visually observed, and 6 pt characters are clear.
Evaluation 3: Slight ink bleeding is visually observed, but design is not impaired.
Evaluation 2: Bleeding of ink is visually observed, but 6 pt characters are identifiable.
Evaluation 1: Significant bleeding of ink is visually observed, and 6 pt characters cannot be visually recognized.

(Coated Film Rubbing Resistance)

A coated film rubbing resistance of the nonaqueous ink compositions in the examples, the comparative examples, and the reference examples was evaluated. Specifically, the nonaqueous ink compositions in the examples and comparative examples were used to print a solid image on a recording medium (glued polyvinyl chloride film (IMAGin JT5829R, manufactured by MACtac) in a high-quality printing mode (1440 × 720 dpi) by an inkjet method using the inkjet printer (trade name: VersaArt RE-640, manufactured by Rowland DG Co., Ltd.), and the solid image was dried at 40°C.

A printed surface of a printed product was rubbed with a test cloth piece at a load of 200 g and 50 times back and forth, and the rubbing resistance was visually evaluated. (This is indicated as "coated film rubbing resistance" in the table).

Evaluation Standard

Evaluation 5: An ink film was not peeled off, and no ink was adhered to the test cloth piece.
Evaluation 4: The ink film was not peeled off, but the ink was adhered to the test cloth piece.
Evaluation 3: The ink film was slightly peeled off and adhered to the test cloth piece.
Evaluation 2: The ink film was slightly peeled off and adhered to the test cloth piece.
Evaluation 1: Most of the ink film was peeled off, and the ink film was adhered to the test cloth piece.

(Cleaning Recovery Property)

With respect to the nonaqueous ink compositions in the examples, the comparative examples, and the reference examples, it was evaluated whether clogging in a nozzle could be eliminated by a cleaning operation of a printer when the clogging in the nozzle occurred in a head. Specifically, a solid image of 1.80 $m^2$ was printed in a high-quality printing mode (1440 × 720 dpi) by filling ink compositions in the examples and the comparative examples and using the above inkjet printer having a cleaning system (trade name: VersaArt RE-640, manufactured by Rowland DG Co., Ltd.), the solid image was allowed to stand at room temperature of 25°C for 1 week, and then a nozzle check pattern was printed, and cleaning was performed until the omission was eliminated (this is indicated as "cleaning recovery property" in the table).

Evaluation Standard

Evaluation 5: No omissions.
Evaluation 4: The clogging in a nozzle is eliminated by one normal cleaning operation.
Evaluation 3: The clogging in the nozzle is eliminated by the normal cleaning 2 to 3 times.
Evaluation 2: The clogging in the nozzle is eliminated by the normal cleaning 4 to 5 times.
Evaluation 1: The clogging in the nozzle is not eliminated even after six normal cleaning operations.

(Weather Resistance)

The weather resistance of the printed matter produced using the nonaqueous ink compositions in the examples, the comparative examples, and the reference examples was evaluated. The nonaqueous ink compositions in the examples and comparative examples were used to print a solid image on a recording medium (glued polyvinyl chloride film (IMAGin JT5829R, manufactured by MACtac) in a high-quality printing mode (1440 × 720 dpi) by an inkjet method using the inkjet printer (trade name: VersaArt RE-640, manufactured by Rowland DG Co., Ltd.), and the solid image was dried at 40°C for 1 hour. The obtained recorded matter was placed in a xenon weather meter (ATLAS Ci 4000, manufactured by Toyo Seiki Seisaku-sho Co., Ltd.) to perform a cycle test. The test conditions were as follows: based on JIS K-5600-7-7, a black panel temperature was maintained at 63°C, an irradiance of a xenon lamp was maintained at 60W/$m^2$, and a temperature in a test layer was maintained at 38°C, and in segment 1, water irradiation was performed for 102 minutes in a state in which a humidity was kept at 50%, and in segment 2, water irradiation was performed for 18 minutes, which was one cycle. With 50 cycles as one set, 10 sets of the cycle test were continuously performed. A value of the hue change ΔE before and after the test was evaluated, and the hue was evaluated under the following conditions. Values of L*, a*, and b* were measured using X-Rite eXact (manufactured by X-Rite Corporation) under

conditions of a viewing angle of 2°, a measurement range of 4 mmφ, and a D65 light source (this is indicated as "weather resistance" in the table) . The hue change ΔE is obtained by the following equation using values of $L^{*1}$, $a^{*1}$, and $b^{*1}$ before the test and $L^{*2}$, $a^{*2}$, and $b^{*2}$ after the test.

$$\Delta E = ((L^{*1} - L^{*2})^2 + (a^{*1} - a^{*2})^2 + (b^{*1} - b^{*2})^2)^{(1/2)}$$

Evaluation Standard

Evaluation 5: ΔE is less than 10.0.
Evaluation 4: ΔE is less than 20.0 and 10.0 or more.
Evaluation 3: ΔE is less than 30.0 and 20.0 or more.
Evaluation 2: ΔE is less than 40.0 and 30.0 or more.
Evaluation 1: ΔE is 50.0 or more.

[Table 13]

| | | | Example 2-1 | Example 2-2 | Example 2-3 | Example 2-4 | Example 2-5 | Example 2-6 | Example 2-7 | Example 2-8 | Reference Example 2-1 | Reference Example 2-2 |
|---|---|---|---|---|---|---|---|---|---|---|---|---|
| Classification | Type | Name | | | | | | | | | | |
| Solvent B | | N,N-diethylformamide | 20.0 | 20.0 | 20.0 | 20.0 | 20.0 | 20.0 | 20.0 | 20.0 | 20.0 | 20.0 |
| | amide-based solvent (b1) | N,N-diethylpropanamide | | | | | | | | | | |
| | Alkyl | N,N-dlethylacetamlde | | | | | | | | | | |
| | | N,N-dimethylformamide | | | | | | | | | | |
| | | N-methyl-$\varepsilon$-caprolactam | | | | | | | | | | |
| | | N-vinyl caprolactam | | | | | | | | | | |
| | Cyclic amide-based solvent (b2) | $\varepsilon$-caprolactam | | | | | | | | | | |
| | | N-methyl-2-pyrolidone | | | | | | | | | | |
| | | $\gamma$-butyrolactone | | | | | | | | | | |
| | | $\gamma$-valerolactone | | | | | | | | | | |
| | Lactone-based solvent (b3) | $\varepsilon$-caprolactone | | | | | | | | | | |
| | | $\gamma$-heptanolactone | | | | | | | | | | |
| | | $\gamma$-hexanolactone | | | | | | | | | | |

(continued)

| | | | Example 2-1 | Example 2-2 | Example 2-3 | Example 2-4 | Example 2-5 | Example 2-6 | Example 2-7 | Example 2-8 | Reference Example 2-1 | Reference Example 2-2 |
|---|---|---|---|---|---|---|---|---|---|---|---|---|
| Classification | Type | Name | | | | | | | | | | |
| Other solvents | | Diethylene glycol diethyl ether | 60.5 | | | | 40.2 | 60.2 | 60.5 | 30.5 | 60.5 | 60.5 |
| | | Diethylene glycol methyl ethyl ether | | 60.5 | | | 20.0 | | | 30.0 | | |
| | Glycol ether dialkyl | Dipropylene glycol dimethyl ether | | | 60.5 | | | | | | | |
| | | Diethylene glycol dibutyl ether | | | | 60.5 | | | | | | |
| | | Dipropylene glycol monomethyl ether | 100 | 100 | 100 | 10.0 | | | | 100 | 100 | 100 |
| | Glycol ether monoalkyl | Triethylene glycol mono-n-butyl ether | | | | | 100 | | | | | |
| | | Tetraethylene glycol monobutyl ether | | | | | | 100 | | | | |
| | Carbonic acid ester | Propylene carbonate | | | | | | | 100 | | | |

(continued)

| | Type | Name | Inherent viscosity of 90 mL/g or more | | | | | | | | | | |
|---|---|---|---|---|---|---|---|---|---|---|---|---|---|
| Resin | | Acrylic resin 1 | 0.0% | 3.0 | 3.0 | 3.0 | 3.0 | 3.0 | 3.0 | 3.0 | 3.0 | 3.0 | 3.0 |
| | Acrylic resin | Acrylic resin 2 | 22% | | | | | | | | | | |
| | | Acrylic resin 3 | 8.1% | | | | | | | | | | |
| | Vinyl chloride-vinyl acetate | Vinyl chloride-vinyl acetate copolymer resin 1 | 0.3% | 1.5 | 1.5 | 1.5 | 1.5 | 1.5 | 1.5 | 1.5 | 1.5 | 1.5 | 1.5 |
| | resin | Vinyl chloride-vinyl acetate copolymer resin 2 | 1.4% | | | | | | | | | | |
| | copolymer | Vinyl chloride-vinyl acetate copolymer resin 3 | 82% | | | | | | | | | | |
| | | CAB-551-0.01 | 49% | | | | | | | | | | |
| | Cellulose resin | CAB-553-0.4 | 290% | | | | | | | | | | |
| | Polyester resin | Polyester resin 1 | 1.5% | | | | | | | | | | |
| | Polyurethane resin | Polyurethane resin 1 | 22% | | | | | | | | | | |
| | Product name | Presence or absence of basic group | Amine value(mg) | | | | | | | | | | |

(continued)

| | Type | Name | Inherent viscosity of 90 mL/g or more | | | | | | | | | | |
|---|---|---|---|---|---|---|---|---|---|---|---|---|---|
| Dispersant | Solsperse32000 (Lubrizol) | Yes | 35 | 1.5 | 1.5 | 1.5 | 1.5 | 1.5 | 1.5 | 1.5 | 1.5 | 1.5 | 1.5 |
| | Solsperse13300 (Lubrizol) | Yes | 123 | | | | | | | | | | |
| | Solsperse13240 (Lubrizol) | Yes | 91 | | | | | | | | | | |
| | Solsperse33000 (Lubrizol) | Yes | 43 | | | | | | | | | | |
| | Solsperse38500 (Lubrizol) | Yes | 20 | | | | | | | | | | |
| | Solsperse76400 (Lubrizol) | Yes | 15 | | | | | | | | | | |
| | Solsperse21000 (Lubrizol) | None | - | | | | | | | | | | |
| | Efka PX4701 (BASF) | Yes | 40 | | | | | | | | | | |
| Dispersion aid | Solsperse22000 (Lubrizol) | | | | | | | 0.3 | 0.3 | | | | |
| Additive | | BYK-331 (BYK) | | 0.5 | 0.5 | 0.5 | 0.5 | 0.5 | 0.5 | 0.5 | 0.5 | 0.5 | 0.5 |
| | Silicon-based additive | BYK-313 (BYK) | | | | | | | | | | | |
| | Pigment No. | Product name | pH | | | | | | | | | | |

(continued)

| | Type | Name | Inherent viscosity of 90 mL/g or more | | | | | | | | | | |
|---|---|---|---|---|---|---|---|---|---|---|---|---|---|
| Pigment | P.R.254 | Chromofine red 6156 EC (Dainichiseika Color & Chemicals Mfg, Co., Ltd.) | 4.1 | 3.0 | 3.0 | 3.0 | 3.0 | 3.0 | 3.0 | 3.0 | | | |
| | P.R.254 | IRGAPHOR RED BT-CF (BASF) | 7.7 | | | | | | | | | | |
| | P.R.254 | Cinilex DPP Red SR-2P(CINIC) | 8.7 | | | | | | | | | | |
| | P.R.254 | CROMOPHTAL DPP Red(BASF) | 9.4 | | | | | | | | | | |
| | P.O.71 | Cromophtal DPP Orange TR (BASF) | 8.3 | | | | | | | | 3.0 | | |
| | P.R.254 | Synthetic product 1 | 2.4 | | | | | | | | | | |
| | P.O.71 | Synthetic product2 | 6.3 | | | | | | | | | | |
| | P.O.73 | Synthetic product3 | 6.1 | | | | | | | | | | |
| | P.R.149 | Paligen RED K3580(BASF) | 7.2 | | | | | | | | | 3.0 | |
| | P.R.188 | Novoperm Red HF3S(Clariant) | 7.3 | | | | | | | | | | 3.0 |
| Total | | | | 100.0 | 100.0 | 100.0 | 100.0 | 100.0 | 100.0 | 100.0 | 100.0 | 100.0 | 100.0 |
| Bead diameter(mm) | | | | 0.3 | 0.3 | 0.3 | 0.3 | 0.3 | 0.3 | 0.3 | 0.3 | 0.3 | 0.3 |
| Dispersion time | | | | 2h | 2h | 2h | 2h | 2h | 2h | 2h | 2h | 2h | 2h |

(continued)

| | Type | Name | Inherent viscosity of 90 mL/g or more | | | | | | | | | | |
|---|---|---|---|---|---|---|---|---|---|---|---|---|---|
| Value of D90(nm) | | | | 202 | 200 | 198 | 207 | 214 | 191 | 212 | 211 | 220 | 205 |
| Inherent viscosity of 90 ml/g or more in total amount of resin | | | | 0.1% | 0.1% | 0.1% | 0.1% | 0.1% | 0.1% | 0.1% | 0.1% | 0.1% | 0.1% |
| Evaluation item | | Storage stability | | 5 | 5 | 4 | 4 | 5 | 5 | 5 | 5 | 2 | 4 |
| | | Ejection Stability | | 5 | 5 | 5 | 5 | 5 | 5 | 5 | 5 | 5 | 5 |
| | | Intermittent ejection property | | 5 | 5 | 5 | 5 | 5 | 5 | 4 | 5 | 5 | 5 |
| | | Solid filling | | 5 | 5 | 5 | 5 | 5 | 5 | 5 | 5 | 5 | 5 |
| | | Surface drying property | | 5 | 5 | 5 | 4 | 3 | 3 | 5 | 5 | 5 | 5 |
| | | Bleeding property | | 5 | 5 | 5 | 4 | 4 | 4 | 5 | 5 | 5 | 5 |
| | | Coated Film Rubbing Resistance | | 5 | 5 | 5 | 5 | 5 | 5 | 5 | 5 | 4 | 4 |
| | | Cleaning recovery property | | 5 | 5 | 5 | 5 | 5 | 5 | 5 | 5 | 5 | 5 |
| | | Weather resistance | | 5 | 5 | 5 | 5 | 5 | 5 | 5 | 5 | 4 | 2 |

[Table 14]

| | | | Comparative Example 2-1 | Example 2-9 | Example 2-10 | Example 2-11 | Example 2-12 | Comparative Example 2-2 | Example 2-13 | Example 2-14 | Example 2-15 | Example 2-16 |
|---|---|---|---|---|---|---|---|---|---|---|---|---|
| Classification | Type | Name | | | | | | | | | | |
| Solvent B | Alkyl amide-based solvent (b1) | N,N-diethylformamide | 20.0 | 20.0 | 20.0 | 20.0 | 20.0 | 20.0 | 20.0 | 10.0 | 20.0 | 20.0 |
| | | N,N-diethylpropanamide | | | | | | | | | | |
| | | N,N-diethylacetamide | | | | | | | | | | |
| | | N,N-dimethylformamide | | | | | | | | | | |
| | Cyclic amide-based solvent (b2) | N-methyl-ε-caprolactam | | | | | | | | | | |
| | | N-vinyl caprolactam | | | | | | | | | | |
| | | ε-caprolactam | | | | | | | | | | |
| | | N-methyl-2-pyrolidone | | | | | | | | | | |
| | Lactone-based solvent (b3) | γ-butyrolactone | | | | | | | | 10.0 | | |
| | | γ-valerolactone | | | | | | | | | | |
| | | ε-caprolactone | | | | | | | | | | |
| | | γ-heptanolactone | | | | | | | | | | |
| | | γ-hexanolactone | | | | | | | | | | |

(continued)

| | | | Comparative Example 2-1 | Example 2-9 | Example 2-10 | Example 2-11 | Example 2-12 | Comparative Example 2-2 | Example 2-13 | Example 2-14 | Example 2-15 | Example 2-16 |
|---|---|---|---|---|---|---|---|---|---|---|---|---|
| Classification | Type | Name | | | | | | | | | | |
| Other solvents | Glycol ether dialkyl | Diethylene glycol diethyl ether | 60.5 | 40.5 | 60.5 | 60.5 | 60.5 | 60.5 | 40.5 | 60.5 | 60.5 | 60.5 |
| | | Diethylene glycol methyl ethyl ether | | 20.0 | | | | | 20.0 | | | |
| | | Dipropylene glycol dimethyl ether | | | | | | | | | | |
| | | Diethylene glycol dibutyl ether | | | | | | | | | | |
| | Glycol ether monoalkyl | Dipropylene glycol monomethyl ether | 10.0 | 10.0 | 10.0 | 10.0 | 10.0 | 10.0 | 10.0 | 10.0 | 10.0 | 10.0 |
| | | Triethylene glycol mono-n-butyl ether | | | | | | | | | | |
| | | Tetraethyleneglycol monobutyl ether | | | | | | | | | | |
| | Carbonic acid ester | Propylene carbonate | | | | | | | | | | |

(continued)

| | Type | Name | Inherent viscosity of 90 mL/g or more | | | | | | | | | | |
|---|---|---|---|---|---|---|---|---|---|---|---|---|---|
| Resin | Acrylic resin | Acrylic resin 1 | 0.0% | 3.0 | 3.0 | 3.0 | 3.0 | 3.0 | 3.0 | 3.0 | 3.0 | 3.0 | 3.0 |
| | | Acrylic resin 2 | 2.2% | | | | | | | | | | |
| | | Acrylic resin 3 | 8.1% | | | | | | | | | | |
| | Vinyl chloride-vinyl acetate copolymer resin | Vinyl chloride-vinyl acetate copolymer resin 1 | 0.3% | 1.5 | 1.5 | 1.5 | 1.5 | 1.5 | 1.5 | | | | |
| | | Vinyl chloride-vinyl acetate copolymer resin 2 | 1.4% | | | | | | | 1.5 | | | |
| | | Vinyl chloride-vinyl acetate copolymer resin 3 | 8.2% | | | | | | | | 1.5 | | |
| | Cellulose resin | CAB-551-0.01 | 4.9% | | | | | | | | | 1.5 | |
| | | CAB-553-0.4 | 290% | | | | | | | | | | 1.5 |
| | Polyester resin | Polyester resin 1 | 1.5% | | | | | | | | | | |
| | Polyurethane resin | Polyurethane resin 1 | 2.2% | | | | | | | | | | |
| | Product name | Presence or absence of basic group | Amine value(mg) | | | | | | | | | | |

(continued)

| | Type | Name | Inherent viscosity of 90 mL/g or more | | | | | | | | | | |
|---|---|---|---|---|---|---|---|---|---|---|---|---|---|
| Dispersant | Solsperse32000 (Lubrizol) | Yes | 35 | 1.5 | 1.5 | 1.5 | 1.5 | 1.5 | 1.5 | 1.5 | 1.5 | 1.5 | 1.5 |
| | Solsperse13300 (Lubrizol) | Yes | 123 | | | | | | | | | | |
| | Solsperse13240 (Lubrizol) | Yes | 91 | | | | | | | | | | |
| | Solsperse33000 (Lubrizol) | Yes | 43 | | | | | | | | | | |
| | Solsperse38500 (Lubrizol) | Yes | 20 | | | | | | | | | | |
| | Solsperse76400 (Lubrizol) | Yes | 15 | | | | | | | | | | |
| | Solsperse21000 (Lubrizol) | None | - | | | | | | | | | | |
| | Efka PX4701 (BASF) | Yes | 40 | | | | | | | | | | |
| Dispersion aid | Solsperse22000 (LubnzoD | | | | | | | | | | | | |
| Additive | Silicon-based additive | BYK-331 (BYK) | | 0.5 | 0.5 | 0.5 | 0.5 | 0.5 | 0.5 | 0.5 | 0.5 | 0.5 | 0.5 |
| | | BYK-313 (BYK) | | | | | | | | | | | |
| | Pigment No. | Product name | pH | | | | | | | | | | |

(continued)

| | Type | Name | Inherent viscosity of 90 mL/g or more | | | | | | | | | | |
|---|---|---|---|---|---|---|---|---|---|---|---|---|---|
| Pigment | P.R.254 | Chromofine red 6156 EC (Dainichiseika Color & Chemicals Mfg, Co., Ltd.) | 4.1 | | | | | | | 3.0 | 3.0 | 3.0 | 3.0 |
| | P.R.254 | IRGAPHOR RED BT-CF (BASF) | 7.7 | | | | 3.0 | | | | | | |
| | P.R.254 | Cinilex DPP Red SR-2P(CINIC) | 8.7 | | | | | 3.0 | | | | | |
| | P.R.254 | CROMOPHTAL DPP Red (BASF) | 9.4 | | | | | | 3.0 | | | | |
| | P.O.71 | Cromophtal DPP Orange TR (BASF) | 8.3 | | | | | | | | | | |
| | P.R.254 | Synthetic product 1 | 2.4 | 3.0 | | | | | | | | | |
| | P.O.71 | Synthetic product 2 | 6.3 | | 3.0 | | | | | | | | |
| | P.O.73 | Synthetic product 3 | 6.1 | | | 3.0 | | | | | | | |
| | P.R.149 | Paligen RED K3580(BASF) | 7.2 | | | | | | | | | | |
| | P.R.188 | Novoperm Red HF3S(Clariant) | 7.3 | | | | | | | | | | |
| Total | | | | 100.0 | 100.0 | 100.0 | 100.0 | 100.0 | 100.0 | 100.0 | 100.0 | 100.0 | 100.0 |
| Bead diameter(mm) | | | | 0.3 | 0.3 | 0.3 | 0.3 | 0.3 | 0.3 | 0.3 | 0.3 | 0.3 | 0.3 |

(continued)

| | Type | Name | Inherent viscosity of 90 mL/g or more | | | | | | | | | | |
|---|---|---|---|---|---|---|---|---|---|---|---|---|---|
| Dispersion time | | | | 2h | 2h | 2h | 2h | 2h | 2h | 2h | 2h | 2h | 2h |
| Value of D90(nm) | | | | 205 | 191 | 190 | 213 | 197 | 204 | 214 | 215 | 220 | 205 |
| Inherent viscosity of 90 ml/g or more in total amount of resin | | | | 0.1% | 0.1% | 0.1% | 0.1% | 0.1% | 0.1% | 0.5% | 2.7% | 1.6% | 9.7% |
| Evaluation item | | Storage stability | | 3 | 5 | 5 | 5 | 4 | 2 | 5 | 5 | 5 | 5 |
| | | Ejection Stability | | 2 | 5 | 5 | 5 | 4 | 2 | 5 | 5 | 5 | 2 |
| | | Intermittent ejection property | | 5 | 5 | 5 | 5 | 5 | 5 | 5 | 5 | 5 | 4 |
| | | Solid filling | | 4 | 5 | 5 | 5 | 5 | 5 | 5 | 5 | 5 | 2 |
| | | Surface drying property | | 5 | 5 | 5 | 5 | 5 | 5 | 5 | 5 | 5 | 5 |
| | | Bleeding property | | 5 | 5 | 5 | 5 | 5 | 5 | 5 | 5 | 5 | 5 |
| | | Coated Film Rubbing Resistance | | 5 | 5 | 5 | 5 | 5 | 5 | 5 | 4 | 5 | 2 |
| | | Cleaning recovery property | | 1 | 5 | 5 | 5 | 4 | 1 | 5 | 5 | 5 | 5 |
| | | Weather resistance | | 5 | 5 | 5 | 5 | 5 | 5 | 5 | 5 | 5 | 5 |

[Table 15]

| | | | Example 2-17 | Example 2-18 | Example 2-19 | Example 2-20 | Example 2-21 | Example 2-22 | Example 2-23 | Example 2-24 | Example 2-25 | Example 2-26 |
|---|---|---|---|---|---|---|---|---|---|---|---|---|
| Classification | Type | Name | | | | | | | | | | |
| Solvent B | amide-based solvent Alkyl (b1) | N,N-diethylformamide | 100 | 20.0 | 20.0 | 20.0 | 20.0 | 20.0 | 20.0 | 20.0 | 20.0 | 20.0 |
| | | N,N-diethylpropanamide | | | | | | | | | | |
| | | N,N-diethylacetamide | | | | | | | | | | |
| | | N.N-dimethylformamide | | | | | | | | | | |
| | Cyclic amide-based solvent (b2) | N-methyl-$\varepsilon$-ca prolactam | | | | | | | | | | |
| | | N-vinyl caprolactam | | | | | | | | | | |
| | | $\varepsilon$-caprolactam | | | | | | | | | | |
| | | N-methyl-2-pyrolldone | | | | | | | | | | |
| | Lactone-based solvent (b3) | $\gamma$-buryrolactone | | | | | | | | | | |
| | | $\gamma$-valerolactone | | | | | | | | | | |
| | | $\varepsilon$-caprolactone | 100 | | | | | | | | | |
| | | $\gamma$-heptanolactone | | | | | | | | | | |
| | | $\gamma$-hexanolactone | | | | | | | | | | |

(continued)

| | | | Example 2-17 | Example 2-18 | Example 2-19 | Example 2-20 | Example 2-21 | Example 2-22 | Example 2-23 | Example 2-24 | Example 2-25 | Example 2-26 |
|---|---|---|---|---|---|---|---|---|---|---|---|---|
| Classification | Type | Name | | | | | | | | | | |
| Other solvents | Glycol ether dialkyl | Diethylene glycol diethyl ether | 60.5 | 60.5 | 60.5 | 60.5 | 60.5 | 60.5 | 60.5 | 60.5 | 60.5 | 60.5 |
| | | Diethylene glycol methyl ethyl ether | | | | | | | | | | |
| | | Dipropylene glycol dimethyl ether | | | | | | | | | | |
| | | Diethylene glycol dibutyl ether | | | | | | | | | | |
| | Glycol ether monoalkyl | Dipropylene glycol monomethyl ether | 100 | 100 | 100 | 100 | 100 | 100 | 100 | 100 | 100 | 100 |
| | | Triethylene glycol mono-n-butyl ether | | | | | | | | | | |
| | | Tetraethylene glycol monobutyl ether | | | | | | | | | | |
| | Carbonic acid ester | Propylene carbonate | | | | | | | | | | |

(continued)

| | Type | Name | Inherent viscosity of 90 mL/g or more | | | | | | | | | | |
|---|---|---|---|---|---|---|---|---|---|---|---|---|---|
| Resin | Acrylic resin | Acrylic resin 1 | mL/g or more 0.0% | | | | | | | | 1.5 | | |
| | | Acrylic resin 2 | 22% | 3.0 | 3.0 | 3.0 | | | | | | 4.5 | |
| | | Acrylic resin 3 | 8.1% | | | | 3.0 | | | | | | 4.5 |
| | acetate Vinyl chloride-vinyl resin copolymer | Vinyl chloride-vinyl acetate copolymer resin 1 | 0.3% | 1.5 | | | 1.5 | 1.5 | 3.0 | 3.0 | | | |
| | | Vinyl chloride-vinyl acetate copolymer resin 2 | 1.4% | | | | | | | | | | |
| | | Vinyl chloride-vinyl acetate copolymer resin 3 | 82% | | | | | | | | 3.0 | | |
| | Cellulose resin | CAB-551-0.01 | 4.9% | | | | | 3.0 | 1.5 | | | | |
| | | CAB-553-0.4 | 29.0% | | | | | | | 1.5 | | | |
| | Polyester resin | Polyester resin 1 | 1.5% | | 1.5 | | | | | | | | |
| | Polyurethane resin | Polyurethane resin 1 | 22% | | | 1.5 | | | | | | | |
| | Product name | Presence or absence of basic group | Amine value(mg) | | | | | | | | | | |

(continued)

| | Type | Name | Inherent viscosity of 90 mL/g or more | | | | | | | | | | |
|---|---|---|---|---|---|---|---|---|---|---|---|---|---|
| Dispersant | Solsperse32000 (Lubrizol) | Yes | 35 | 1.5 | 1.5 | 1.5 | 1.5 | 1.5 | 1.5 | 1.5 | 1.5 | 1.5 | 1.5 |
| | Solsperse13300 (Lubrizol) | Yes | 123 | | | | | | | | | | |
| | Solsperse13240 (Lubrizol) | Yes | 91 | | | | | | | | | | |
| | Solsperse33000 (Lubrizol) | Yes | 43 | | | | | | | | | | |
| | Solsperse38500 (Lubrizol) | Yes | 20 | | | | | | | | | | |
| | Solsperse76400 (Lubrizol) | Yes | 15 | | | | | | | | | | |
| | Solsperse21000 (Lubrizol) | None | - | | | | | | | | | | |
| | Efka PX4701 (BASF) | Yes | 40 | | | | | | | | | | |
| Dispersion aid | Solsperse22000 (Lubrizol) | | | | | | | | | | | | |
| Additive | Silicon-based additive | BYK-331 (BYK) | | 0.5 | | | | 0.5 | 0.5 | | | 0.5 | 0.5 |
| | | BYK-313 (BYK) | | | 0.5 | 0.5 | 0.5 | | | 0.5 | 0.5 | | |
| | Pigment No. | Product name | pH | | | | | | | | | | |

(continued)

| | Type | Name | Inherent viscosity of 90 mL/g or more | | | | | | | | | | |
|---|---|---|---|---|---|---|---|---|---|---|---|---|---|
| Pigment | P.R.254 | Chromofine red 6156 EC (Dainichiseika Color & Chemicals Mfg, Co., Ltd.) | 4.1 | 3.0 | 3.0 | 3.0 | 3.0 | 3.0 | 3.0 | 3.0 | 3.0 | 3.0 | 30 |
| | P.R.254 | IRGAPHOR RED BT-CF (BASF) | 7.7 | | | | | | | | | | |
| | P.R.254 | Cinilex DPP Red SR-2P(CINIC) | 8.7 | | | | | | | | | | |
| | P.R.254 | CROMOPHTAL DPP Red(BASF) | 9.4 | | | | | | | | | | |
| | P.O.71 | Cromophtal DPP Orange TR (BASF) | 8.3 | | | | | | | | | | |
| | P.R.254 | Synthetic product 1 | 2.4 | | | | | | | | | | |
| | P.O.71 | Synthetic product 2 | 6.3 | | | | | | | | | | |
| | P.O.73 | Synthetic product 3 | 6.1 | | | | | | | | | | |
| | P.R.149 | Paligen RED K3580(BASF) | 7.2 | | | | | | | | | | |
| | P.R.188 | Novoperm Red HF3S(Clariant) | 7.3 | | | | | | | | | | |
| Total | | | | 100.0 | 100.0 | 100.0 | 100.0 | 100.0 | 100.0 | 100.0 | 100.0 | 100.0 | 100.0 |
| Bead diameter(mm) | | | | 0.3 | 0.3 | 0.3 | 0.3 | 0.3 | 0.3 | 0.3 | 0.3 | 0.3 | 0.3 |
| Dispersion time | | | | 2h | 2h | 2h | 2h | 2h | 2h | 2h | 2h | 2h | 2h |

(continued)

| | Type | Name | Inherent viscosity of 90 mL/g or more | | | | | | | | | | |
|---|---|---|---|---|---|---|---|---|---|---|---|---|---|
| Valueof D90(nm) | | | | 213 | 198 | 212 | 198 | 215 | 212 | 198 | 218 | 211 | 204 |
| Inherent viscosity of 90 ml/g or more In total amount of resin | | | | 1.6% | 2.2% | 2.2% | 5.5 % | 3.4% | 1.8% | 9.9% | 5.5 % | 2.2% | 8.1% |
| Evaluation item | | Storage stability | | 5 | 5 | 5 | 5 | 5 | 5 | 5 | 5 | 4 | 4 |
| | | Ejection Stability | | 5 | 5 | 5 | 2 | 5 | 5 | 2 | 2 | 5 | 2 |
| | | Intermittent ejection property | | 5 | 5 | 5 | 3 | 5 | 5 | 4 | 3 | 5 | 4 |
| | | Solid filling | | 5 | 5 | 5 | 3 | 5 | 5 | 2 | 3 | 5 | 2 |
| | | Surface drying property | | 5 | 5 | 5 | 5 | 5 | 5 | 5 | 5 | 5 | 5 |
| | | Bleeding property | | 5 | 5 | 5 | 5 | 5 | 5 | 5 | 5 | 5 | 5 |
| | | Coated Film Rubbing Resistance | | 4 | 4 | 4 | 2 | 5 | 5 | 2 | 3 | 5 | 2 |
| | | Cleaning recovery property | | 5 | 5 | 5 | 5 | 5 | 5 | 5 | 5 | 5 | 5 |
| | | Weather resistance | | 5 | 5 | 5 | 5 | 5 | 5 | 5 | 5 | 5 | 5 |

[Table 16]

| | | | Example 2-27 | Example 2-28 | Example 2-29 | Example 2-30 | Example 2-31 | Example 2-32 | Example 2-33 | Example 2-34 | Example 2-35 | Example 2-36 |
|---|---|---|---|---|---|---|---|---|---|---|---|---|
| Classification | Type | Name | | | | | | | | | | |
| Solvent B | amide-based solvent Alkyl (b1) | N,N-diethylformamide | 20.0 | 20.0 | 20.0 | | | | 3.0 | 50 | 100 | 35.0 |
| | | N,N-diethylpropanamide | | | | | | | | | | |
| | | N,N-diethylacetamide | | | | | | | | | | |
| | | N.N-dimethylformamide | | | | | | | | | | |
| | Cyclic amide-based solvent (b2) | N-methyl-ε-caprolactam | | | | | | | | | | |
| | | N-vinyl caprolactam | | | | | | | | | | |
| | | ε-caprolactam | | | | | | | | | | |
| | | N-methyl-2-pyrolidone | | | | | | | | | | |
| | Lactone-based solvent (b3) | γ-buryrolactone | | | | | | | | | | |
| | | γ-valerolactone | | | | | | | | | | |
| | | ε-caprolactone | | | | | | | | | | |
| | | γ-heptanolactone | | | | | | | | | | |
| | | γ-hexanolactone | | | | | | | | | | |

(continued)

| | | | Example 2-27 | Example 2-28 | Example 2-29 | Example 2-30 | Example 2-31 | Example 2-32 | Example 2-33 | Example 2-34 | Example 2-35 | Example 2-36 |
|---|---|---|---|---|---|---|---|---|---|---|---|---|
| Other solvents | Glycol ether dialkyl | Diethylene glycol diethyl ether | 60.5 | 60.5 | 60.5 | 80.5 | 80.5 | 80.5 | 77.5 | 75.5 | 70.5 | 45.5 |
| | | Diethylene glycol methyl ethyl ether | | | | | | | | | | |
| | | Dipropylene glycol dimethyl ether | | | | | | | | | | |
| | | Diethylene glycol dibutyl ether | | | | | | | | | | |
| | Glycol ether monoalkyl | Dipropylene glycol monomethyl ether | 100 | 100 | 100 | 100 | | | 100 | 100 | 100 | 100 |
| | | Triethylene glycol mono-n-butyl ether | | | | | 100 | | | | | |
| | | Tetraethylene glycol monobutyl ether | | | | | | | | | | |
| | Carbonic acid ester | Propylene carbonate | | | | | | 100 | | | | |

(continued)

| | Type | Name | Inherent viscosity of 90 mL/g or more | | | | | | | | | | |
|---|---|---|---|---|---|---|---|---|---|---|---|---|---|
| Resin | Acrylic resin | Acrylic resin 1 | 0.0% | | | | 3.0 | 3.0 | 3.0 | 3.0 | 3.0 | 3.0 | 3.0 |
| | | Acrylic resin 2 | 22% | | | | | | | | | | |
| | | Acrylic resin 3 | 8.1% | | | | | | | | | | |
| | Vinyl chloride-vinyl acetate copolymer resin | Vinyl chloride-vinyl acetate copolymer resin 1 | 0.3% | 4.5 | | | 1.5 | 1.5 | 1.5 | 1.5 | 1.5 | 1.5 | 1.5 |
| | | Vinyl chloride-vinyl acetate copolymer resin 2 | 1.4% | | 4.5 | | | | | | | | |
| | | Vinyl chloride-vinyl acetate copolymer resin 3 | 82% | | | 4.5 | | | | | | | |
| | Cellulose resin | CAB-551-0.01 | 4.9% | | | | | | | | | | |
| | | CAB-553-0.4 | 29.0% | | | | | | | | | | |
| | Polyester resin | Polyester resin 1 | 1.5% | | | | | | | | | | |
| | Polyurethane resin | Polyurethane resin 1 | 22% | | | | | | | | | | |
| | Product name | Presence or absence of basic group | Amine value(mg) | | | | | | | | | | |

(continued)

| | Type | Name | Inherent viscosity of 90 mL/g or more | | | | | | | | | | |
|---|---|---|---|---|---|---|---|---|---|---|---|---|---|
| Dispersant | Solsperse32000 (Lubrizol) | Yes | 35 | 1.5 | 1.5 | 1.5 | 1.5 | 1.5 | 1.5 | 1.5 | 1.5 | 1.5 | 1.5 |
| | Solsperse13300 (Lubrizol) | Yes | 123 | | | | | | | | | | |
| | Solsperse13240 (Lubrizol) | Yes | 91 | | | | | | | | | | |
| | Solsperse33000 (Lubrizol) | Yes | 43 | | | | | | | | | | |
| | Solsperse38500 (Lubrizol) | Yes | 20 | | | | | | | | | | |
| | Solsperse76400 (Lubrizol) | Yes | 15 | | | | | | | | | | |
| | Solsperse21000 (Lubrizol) | None | - | | | | | | | | | | |
| | Efka PX4701 (BASF) | Yes | 40 | | | | | | | | | | |
| Dispersion aid | Solsperse22000 (Lubrizol) | | | | | | | | | | | | |
| Additive | Silicon-based additive | BYK-331 (BYK) | | 0.5 | 0.5 | 0.5 | 0.5 | 0.5 | 0.5 | 0.5 | 0.5 | 0.5 | 0.5 |
| | | BYK-313 (BYK) | | | | | | | | | | | |
| | Pigment No. | Product name | pH | | | | | | | | | | |

(continued)

| | Type | Name | Inherent viscosity of 90 mL/g or more | | | | | | | | | | |
|---|---|---|---|---|---|---|---|---|---|---|---|---|---|
| Pigment | P.R.254 | Chromofine red 6156 EC (Dainichiseika Color & Chemicals Mfg, Co., Ltd.) | 4.1 | 3.0 | 3.0 | 3.0 | 3.0 | 3.0 | 3.0 | 3.0 | 3.0 | 3.0 | 30 |
| | P.R.254 | IRGAPHOR RED BT-CF (BASF) | 7.7 | | | | | | | | | | |
| | P.R.254 | Cinilex DPP Red SR-2P(CINIC) | 8.7 | | | | | | | | | | |
| | P.R.254 | CROMOPHTAL DPP Red(BASF) | 9.4 | | | | | | | | | | |
| | P.O.71 | Cromophtal DPP Orange TR (BASF) | 8.3 | | | | | | | | | | |
| | P.R.254 | Synthetic product 1 | 2.4 | | | | | | | | | | |
| | P.O.71 | Synthetic product 2 | 6.3 | | | | | | | | | | |
| | P.O.73 | Synthetic product 3 | 6.1 | | | | | | | | | | |
| | P.R.149 | Paligen RED K3580(BASF) | 7.2 | | | | | | | | | | |
| | P.R.188 | Novoperm Red HF3S(Clariant) | 7.3 | | | | | | | | | | |
| Total | | | | 100.0 | 100.0 | 100.0 | 100.0 | 100.0 | 100.0 | 100.0 | 100.0 | 100.0 | 100.0 |
| Bead diameter(mm) | | | | 0.3 | 0.3 | 0.3 | 0.3 | 0.3 | 0.3 | 0.3 | 0.3 | 0.3 | 0.3 |
| Dispersion time | | | | 2h | 2h | 2h | 2h | 2h | 2h | 2h | 2h | 2h | 2h |

(continued)

| | Type | Name | Inherent viscosity of 90 mL/g or more | | | | | | | | | | |
|---|---|---|---|---|---|---|---|---|---|---|---|---|---|
| Valueof D90(nm) | | | | 212 | 209 | 211 | 206 | 219 | 204 | 215 | 205 | 198 | 205 |
| Inherent viscosity of 90 ml/g or more in total amount of resin | | | | 0.3% | 1.4% | 8.2% | 0.1% | 0.1% | 0.1% | 0.1% | 0.1% | 0.1% | 0.1% |
| Evaluation item | | Storage stability | | 3 | 3 | 3 | 3 | 3 | 3 | 5 | 5 | 5 | 5 |
| | | Ejection Stability | | 5 | 5 | 2 | 3 | 3 | 3 | 5 | 5 | 5 | 5 |
| | | Intermittent ejection property | | 5 | 5 | 4 | 4 | 4 | 4 | 5 | 5 | 5 | 5 |
| | | Solid filling | | 5 | 5 | 2 | 4 | 4 | 4 | 5 | 5 | 5 | 5 |
| | | Surface drying property | | 5 | 5 | 5 | 2 | 2 | 2 | 2 | 4 | 4 | 5 |
| | | Bleeding property | | 5 | 5 | 5 | 2 | 2 | 2 | 3 | 4 | 4 | 5 |
| | | Coated Film Rubbing Resistance | | 5 | 5 | 2 | 5 | 5 | 5 | 5 | 5 | 5 | 5 |
| | | Cleaning recovery property | | 5 | 5 | 5 | 3 | 3 | 3 | 3 | 4 | 5 | 5 |
| | | Weather resistance | | 5 | 5 | 5 | 5 | 5 | 5 | 5 | 5 | 5 | 5 |

[Table 17]

| | | | Example 2-37 | Example 2-38 | Example 2-39 | Example 2-40 | Example 2-41 | Example 2-42 | Example 2-43 | Example 2-44 | Example 2-45 | Example 2-46 |
|---|---|---|---|---|---|---|---|---|---|---|---|---|
| Classification | Type | Name | | | | | | | | | | |
| Solvent B | amide-based solvent Alkyl (b1) | N,N-diethylformamide | 55.0 | 80.0 | 900 | 95.0 | | | | | | |
| | | N,N-diethylpropanamide | | | | | 20.0 | | | | | |
| | | N,N-diethylacetamide | | | | | | 20.0 | | | | |
| | | N.N-dimethylformamide | | | | | | | | | | |
| | amide-based solvent (b2) Cyclic | N-methyl-$\varepsilon$-caprolactam | | | | | | | | | | 20.0 |
| | | N-vinyl caprolactam | | | | | | | | | | |
| | | $\varepsilon$-caprolactam | | | | | | | | | | |
| | | N-methyl-2-pyrolldone | | | | | | | | | | |
| | Lactone-based solvent (b3) | $\gamma$-buryrolactone | | | | | | | 20.0 | | | |
| | | $\gamma$-valerolactone | | | | | | | | 20.0 | | |
| | | $\varepsilon$-caprolactone | | | | | | | | | 20.0 | |
| | | $\gamma$-heptanolactone | | | | | | | | | | |
| | | $\gamma$-hexanolactone | | | | | | | | | | |

(continued)

| | | | Example 2-37 | Example 2-38 | Example 2-39 | Example 2-40 | Example 2-41 | Example 2-42 | Example 2-43 | Example 2-44 | Example 2-45 | Example 2-46 |
|---|---|---|---|---|---|---|---|---|---|---|---|---|
| Other solvents | Glycol ether dialkyl | Diethylene glycol diethyl ether | 35.5 | 10.5 | 0.5 | 0.5 | 60.5 | 60.5 | 60.5 | 60.5 | 60.5 | 60.5 |
| | | Diethylene glycol methyl ethyl ether | | | | | | | | | | |
| | | Dipropylene glycol dimethyl ether | | | | | | | | | | |
| | | Diethylene glycol dibutyl ether | | | | | | | | | | |
| | Glycol ether monoalkyl | Dipropylene glycol monomethyl ether | | | | | 100 | 100 | 100 | 100 | 100 | 100 |
| | | Triethylene glycol mono-n-butyl ether | | | | | | | | | | |
| | | Tetraethylene glycol monobutyl ether | | | | | | | | | | |
| | Carbonic acid ester | Propylene carbonate | | | | | | | | | | |

(continued)

| | Type | Name | Inherent viscosity of 90 mL/g or more | | | | | | | | | | |
|---|---|---|---|---|---|---|---|---|---|---|---|---|---|
| Resin | Acrylic resin | Acrylic resin 1 | 0.0% | 3.0 | 3.0 | 3.0 | 1.0 | 3.0 | 3.0 | 3.0 | 3.0 | 3.0 | 3.0 |
| | | Acrylic resin 2 | 22% | | | | | | | | | | |
| | | Acrylic resin 3 | 8.1% | | | | | | | | | | |
| | Vinyl chloride-vinyl acetate copolymer resin | Vinyl chloride-vinyl acetate copolymer resin 1 | 0.3% | 1.5 | 1.5 | 1.5 | 1.0 | 1.5 | 1.5 | 1.5 | 1.5 | 1.5 | 1.5 |
| | | Vinyl chloride-vinyl acetate copolymer resin 2 | 1.4% | | | | | | | | | | |
| | | Vinyl chloride-vinyl acetate copolymer resin 3 | 82% | | | | | | | | | | |
| | Cellulose resin | CAB-551-0.01 | 4.9% | | | | | | | | | | |
| | | CAB-553-0.4 | 29.0% | | | | | | | | | | |
| | Polyester resin | Polyester resin 1 | 1.5% | | | | | | | | | | |
| | Polyurethane resin | Polyurethane resin 1 | 22% | | | | | | | | | | |
| | Product name | Presence or absence of basic group | Amine value(mg) | | | | | | | | | | |

(continued)

| | Type | Name | Inherent viscosity of 90 mL/g or more | | | | | | | | | | |
|---|---|---|---|---|---|---|---|---|---|---|---|---|---|
| Dispersant | Solsperse32000 (Lubrizol) | Yes | 35 | 1.5 | 1.5 | 1.5 | 1.0 | 1.5 | 1.5 | 1.5 | 1.5 | 1.5 | 1.5 |
| | Solsperse13300 (Lubrizol) | Yes | 123 | | | | | | | | | | |
| | Solsperse13240 (Lubrizol) | Yes | 91 | | | | | | | | | | |
| | Solsperse33000 (Lubrizol) | Yes | 43 | | | | | | | | | | |
| | Solsperse38500 (Lubrizol) | Yes | 20 | | | | | | | | | | |
| | Solsperse76400 (Lubrizol) | Yes | 15 | | | | | | | | | | |
| | Solsperse21000 (Lubrizol) | None | - | | | | | | | | | | |
| | Efka PX4701 (BASF) | Yes | 40 | | | | | | | | | | |
| Dispersion aid | Solsperse22000 (Lubrizol) | | | | | | | | | | | | |
| Additive | Silicon-based additive | BYK-331 (BYK) | | 0.5 | 0.5 | 0.5 | 0.5 | 0.5 | 0.5 | 0.5 | 0.5 | 0.5 | 0.5 |
| | | BYK-313 (BYK) | | | | | | | | | | | |
| | Pigment No. | Product name | pH | | | | | | | | | | |

(continued)

| | Type | Name | Inherent viscosity of 90 mL/g or more | | | | | | | | | | |
|---|---|---|---|---|---|---|---|---|---|---|---|---|---|
| Pigment | P.R.254 | Chromofine red 6156 EC (Dainichiseika Color & Chemicals Mfg, Co., Ltd.) | 4.1 | 3.0 | 30 | 30 | 1.0 | 30 | 30 | 30 | 30 | 30 | 30 |
| | P.R.254 | IRGAPHOR RED BT-CF (BASF) | 7.7 | | | | | | | | | | |
| | P.R.254 | Cinilex DPP Red SR-2P(CINIC) | 8.7 | | | | | | | | | | |
| | P.R.254 | CROMOPHTAL DPP Red(BASF) | 9.4 | | | | | | | | | | |
| | P.O.71 | Cromophtal DPP Orange TR (BASF) | 8.3 | | | | | | | | | | |
| | P.R.254 | Synthetic product 1 | 2.4 | | | | | | | | | | |
| | P.O.71 | Synthetic product 2 | 6.3 | | | | | | | | | | |
| | P.O.73 | Synthetic product 3 | 6.1 | | | | | | | | | | |
| | P.R.149 | Paligen RED K3580(BASF) | 7.2 | | | | | | | | | | |
| | P.R.188 | Novoperm Red HF3S(Clariant) | 7.3 | | | | | | | | | | |
| Total | | | | 100.0 | 100.0 | 100.0 | 100.0 | 100.0 | 100.0 | 100.0 | 100.0 | 100.0 | 100.0 |
| Bead diameter(mm) | | | | 0.3 | 0.3 | 0.3 | 0.3 | 0.3 | 0.3 | 0.3 | 0.3 | 0.3 | 0.3 |
| Dispersion time | | | | 2h | 2h | 2h | 2h | 2h | 2h | 2h | 2h | 2h | 2h |

(continued)

| | Type | Name | Inherent viscosity of 90 mL/g or more | | | | | | | | | | |
|---|---|---|---|---|---|---|---|---|---|---|---|---|---|
| Valueof D90(nm) | | | | 207 | 193 | 192 | 201 | 208 | 214 | 192 | 209 | 216 | 205 |
| Inherent viscosity of 90 ml/g or more in total amount of resin | | | | 0.1% | 0.1% | 0.1% | 0.2% | 0.1% | 0.1% | 0.1% | 0.1% | 0.1% | 0.1% |
| Evaluation item | | Storage stability | | 5 | 5 | 4 | 4 | 4 | 4 | 4 | 4 | 4 | 4 |
| | | Ejection Stability | | 5 | 5 | 4 | 4 | 5 | 5 | 5 | 5 | 5 | 5 |
| | | Intermittent ejection property | | 5 | 5 | 4 | 4 | 5 | 5 | 5 | 5 | 5 | 5 |
| | | Solid filling | | 5 | 5 | 5 | 5 | 5 | 5 | 4 | 4 | 5 | 5 |
| | | Surface drying property | | 5 | 5 | 5 | 5 | 5 | 5 | 5 | 5 | 5 | 4 |
| | | Bleeding property | | 5 | 5 | 5 | 5 | 5 | 5 | 4 | 4 | 4 | 4 |
| | | Coated Film Rubbing Resistance | | 5 | 5 | 5 | 2 | 5 | 5 | 5 | 5 | 5 | 5 |
| | | Cleaning recovery property | | 5 | 5 | 5 | 5 | 5 | 5 | 5 | 5 | 5 | 4 |
| | | Weather resistance | | 5 | 5 | 5 | 3 | 5 | 5 | 5 | 5 | 5 | 5 |

[Table 18]

| | | | Example 2-47 | Example 2-48 | Example 2-49 | Example 2-50 | Example 2-51 | Example 2-52 | Example 2-53 | Example 2-54 | Example 2-55 | Example 2-56 |
|---|---|---|---|---|---|---|---|---|---|---|---|---|
| Classification | Type | Name | | | | | | | | | | |
| Solvent B | amide-based solvent Alkyl (b1) | N,N-diethylformamide | | | | | 20.0 | 20.0 | 10.0 | 10.0 | 20.0 | 20.0 |
| | | N,N-diethylpropanamide | | | | | | | | | | |
| | | N,N-diethylacetamide | | | | | | | | | | |
| | | N,N-dimethylformamide | | 20.0 | | | | | | | | |
| | amide-based solvent (b2) Cyclic | N-methyl-$\varepsilon$-caprolactam | | | | | | | | | | |
| | | N-vinyl caprolactam | | | | | | | | | | |
| | | $\varepsilon$-caprolactam | | | | | | | | | | |
| | | N-methyl-2-pyrolidone | 20.0 | | | | | | | | | |
| | Lactone-based solvent (b3) | $\gamma$-butyrolactone | | | | | | | | | | |
| | | $\gamma$-valerolactone | | | | | | | | | | |
| | | $\varepsilon$-caprolactone | | | | | | | | | | |
| | | $\gamma$-heptanolactone | | | 20.0 | | | | | | | |
| | | $\gamma$-hexanolactone | | | | 20.0 | | | | | | |

(continued)

| | | | Example 2-47 | Example 2-48 | Example 2-49 | Example 2-50 | Example 2-51 | Example 2-52 | Example 2-53 | Example 2-54 | Example 2-55 | Example 2-56 |
|---|---|---|---|---|---|---|---|---|---|---|---|---|
| Other solvents | Glycol ether dialkyl | Diethylene glycol diethyl ether | 60.5 | 60.5 | 60.5 | 60.5 | 64.4 | 63.8 | 63.0 | 60.0 | 60.5 | 60.5 |
| | | Diethylene glycol methyl ethyl ether | | | | | | | | | | |
| | | Dipropylene glycol dimethyl ether | | | | | | | | | | |
| | | Diethylene glycol dibutyl ether | | | | | | | | | | |
| | Glycol ether monoalkyl | Dipropylene glycol monomethyl ether | 10.0 | 10.0 | 10.0 | 10.0 | 10.0 | 10.0 | 10.0 | 10.0 | 10.0 | 10.0 |
| | | Triethylene glycol mono-n-butyl ether | | | | | | | | | | |
| | | Tetraethylene glycol monobutyl ether | | | | | | | | | | |
| | Carbonic acid ester | Propylene carbonate | | | | | | | | | | |

(continued)

| | Type | Name | Inherent viscosity of 90 mL/g or more | | | | | | | | | | |
|---|---|---|---|---|---|---|---|---|---|---|---|---|---|
| Resin | Acrylic resin | Acrylic resin 1 | 0.0% | 3.0 | 3.0 | 3.0 | 3.0 | 3.0 | 3.0 | 3.0 | 3.0 | 3.0 | 3.0 |
| | | Acrylic resin 2 | 22% | | | | | | | | | | |
| | | Acrylic resin 3 | 8.1% | | | | | | | | | | |
| | Vinyl chloride-vinyl acetate copolymer resin | Vinyl chloride-vinyl acetate copolymer resin 1 | 0.3% | 1.5 | 1.5 | 1.5 | 1.5 | 1.5 | 1.5 | 1.5 | 1.5 | 1.5 | 1.5 |
| | | Vinyl chloride-vinyl acetate copolymer resin 2 | 1.4% | | | | | | | | | | |
| | | Vinyl chloride-vinyl acetate copolymer resin 3 | 82% | | | | | | | | | | |
| | Cellulose resin | CAB-551-0.01 | 4.9% | | | | | | | | | | |
| | | CAB-553-0.4 | 29.0% | | | | | | | | | | |
| | Polyester resin | Polyester resin 1 | 1.5% | | | | | | | | | | |
| | Polyurethane resin | Polyurethane resin 1 | 22% | | | | | | | | | | |
| | Product name | Presence or absence of basic group | Amine value(mg) | | | | | | | | | | |

(continued)

| | Type | Name | Inherent viscosity of 90 mL/g or more | | | | | | | | | | |
|---|---|---|---|---|---|---|---|---|---|---|---|---|---|
| Dispersant | Solsperse32000 (Lubrizol) | Yes | 35 | 1.5 | 1.5 | 1.5 | 1.5 | 0.2 | 0.4 | 40 | 50 | 1.5 | 1.5 |
| | Solsperse13300 (Lubrizol) | Yes | 123 | | | | | | | | | | |
| | Solsperse13240 (Lubrizol) | Yes | 91 | | | | | | | | | | |
| | Solsperse33000 (Lubrizol) | Yes | 43 | | | | | | | | | | |
| | Solsperse38b00 (Lubrizol) | Yes | 20 | | | | | | | | | | |
| | Solsperse76400 (Lubrizol) | Yes | 15 | | | | | | | | | | |
| | Solsperse21000 (Lubrizol) | None | - | | | | | | | | | | |
| | Efka PX4701 (BASF) | Yes | 40 | | | | | | | | | | |
| Dispersion aid | Solsperse22000 (Lubrizol) | | | | | | | | | | | | |
| Additive | Silicon-based additive | BYK-331 (BYK) | | 0.5 | 0.5 | 0.5 | 0.5 | 0.5 | 0.5 | 0.5 | 0.5 | 0.5 | |
| | | BYK-313 (BYK) | | | | | | | | | | | 0.5 |
| | Pigment No. | Product name | pH | | | | | | | | | | |

(continued)

| | Type | Name | Inherent viscosity of 90 mL/g or more | | | | | | | | | | |
|---|---|---|---|---|---|---|---|---|---|---|---|---|---|
| Pigment | P.R.254 | Chromofine red 61b6 EC (Dainichiseika Color & Chemicals Mfg, Co., Ltd.) | 4.1 | 3.0 | 3.0 | 3.0 | 3.0 | 0.4 | 0.8 | 8.0 | 10.0 | 3.0 | 3.0 |
| | P.R.254 | IRGAPHOR RED BT-CF (BASF) | 7.7 | | | | | | | | | | |
| | P.R.254 | Cinilex DPP Red SR-2P(CINIC) | 8.7 | | | | | | | | | | |
| | P.R.254 | CROMOPHTAL DPP Red(BASF) | 9.4 | | | | | | | | | | |
| | P.O.71 | Cromophtal DPP Orange TR (BASF) | 8.3 | | | | | | | | | | |
| | P.R.254 | Synthetic product 1 | 2.4 | | | | | | | | | | |
| | P.O.71 | Synthetic product 2 | 6.3 | | | | | | | | | | |
| | P.O.73 | Synthetic product 3 | 6.1 | | | | | | | | | | |
| | P.R.149 | Paligen RED K3580(BASF) | 7.2 | | | | | | | | | | |
| | P.R.188 188 | Novoperm Red HF3S(Clariant) Red | 7.3 | | | | | | | | | | |
| P.R.Total Novoperm HF3S(Clariant) | | | | 100.0 | 100.0 | 100.0 | 100.0 | 100.0 | 100.0 | 100.0 | 100.0 | 100.0 | 100.0 |
| Bead diameter(mm) | | | | 0.3 | 0.3 | 0.3 | 0.3 | 0.3 | 0.3 | 0.3 | 0.3 | 0.5 | 0.8 |

(continued)

| | Type | Name | Inherent viscosity of 90 mL/g or more | | | | | | | | | | |
|---|---|---|---|---|---|---|---|---|---|---|---|---|---|
| Dispersion time | | | | 2h | 2h | 2h | 2h | 2h | 2h | 2h | 2h | 2h | 2h |
| Value of D90(nm) | | | | 213 | 199 | 207 | 202 | 209 | 212 | 191 | 210 | 220 | 240 |
| Inherent viscosity of 90 ml/g or more in total amount of resin | | | | 0.1% | 0.1% | 0.1% | 0.1% | 0.1% | 0.1% | 0.1% | 0.1% | 0.1% | 0.1% |
| Evaluation item | | Storage stability | | 4 | 3 | 3 | 3 | 5 | 4 | 4 | 3 | 5 | 5 |
| | | Ejection Stability | | 5 | 5 | 5 | 5 | 5 | 5 | 5 | 3 | 5 | 4 |
| | | Intermittent ejection property | | 5 | 5 | 5 | 5 | 5 | 5 | 5 | 5 | 5 | 5 |
| | | Solid filling | | 5 | 4 | 5 | 5 | 3 | 4 | 5 | 5 | 5 | 5 |
| | | Surface drying property | | 4 | 4 | 4 | 4 | 5 | 5 | 5 | 5 | 5 | 5 |
| | | Bleeding property | | 4 | 4 | 4 | 4 | 5 | 5 | 5 | 5 | 5 | 5 |
| | | Coated Film Rubbing Resistance | | 5 | 5 | 5 | 5 | 5 | 5 | 5 | 5 | 5 | 5 |
| | | Cleaning recovery property | | 4 | 5 | 4 | 4 | 5 | 5 | 5 | 4 | 5 | 5 |
| | | Weather resistance | | 5 | 5 | 5 | 5 | 2 | 3 | 5 | 5 | 5 | 5 |

[Table 19]

| | | | Example 2-57 | Example 2-58 | Example 2-59 | Example 2-60 | Example 2-61 | Example 2-62 | Example 2-63 | Example 2-64 | Example 2-65 | Example 2-66 |
|---|---|---|---|---|---|---|---|---|---|---|---|---|
| Classification | Type | Name | | | | | | | | | | |
| Solvent B | amide-based solvent Alkyl (b1) | N,N-diethylformamide | 20.0 | 20.0 | 20.0 | 20.0 | 20.0 | 20.0 | 20.0 | 20.0 | 20.0 | 20.0 |
| | | N,N-diethylpropanamide | | | | | | | | | | |
| | | N,N-diethylacetamide | | | | | | | | | | |
| | | N.N-dimethylformamide | | | | | | | | | | |
| | amide-based solvent (b2) Cyclic | N-methyl- ε -ca prolactam | | | | | | | | | | |
| | | N-vinyl caprolactam | | | | | | | | | | |
| | | ε -caprolactam | | | | | | | | | | |
| | | N-methyl-2-pyrolidone | | | | | | | | | | |
| | Lactone-based solvent (b3) | γ-buryrolactone | | | | | | | | | | |
| | | γ-valerolactone | | | | | | | | | | |
| | | ε -caprolactone | | | | | | | | | | |
| | | γ -heptanolactone | | | | | | | | | | |
| | | γ-hexanolactone | | | | | | | | | | |

(continued)

| | | | Example 2-57 | Example 2-58 | Example 2-59 | Example 2-60 | Example 2-61 | Example 2-62 | Example 2-63 | Example 2-64 | Example 2-65 | Example 2-66 |
|---|---|---|---|---|---|---|---|---|---|---|---|---|
| Other solvents | Glycol ether dialkyl | Diethylene glycol diethyl ether | 60.5 | 60.5 | 60.5 | 60.5 | 60.5 | 60.5 | 60.5 | 60.5 | 61.5 | 61.3 |
| | | Diethylene glycol methyl ethyl ether | | | | | | | | | | |
| | | Dipropylene glycol dimethyl ether | | | | | | | | | | |
| | | Diethylene glycol dibutyl ether | | | | | | | | | | |
| | Glycol ether monoalkyl | Dipropylene glycol monomethyl ether | 10.0 | 10.0 | 10.0 | 10.0 | 10.0 | 10.0 | 10.0 | 10.0 | 10.0 | 10.0 |
| | | Triethylene glycol mono-n-butyl ether | | | | | | | | | | |
| | | Tetraethylene glycol monobutyl ether | | | | | | | | | | |
| | Carbonic acid ester | Propylene carbonate | | | | | | | | | | |

(continued)

| | Type | Name | Inherent viscosity of 90 mL/g or more | | | | | | | | | | |
|---|---|---|---|---|---|---|---|---|---|---|---|---|---|
| Resin | Acrylic resin | Acrylic resin 1 | 0.0% | 3.0 | 3.0 | 3.0 | 3.0 | 3.0 | 3.0 | 3.0 | 3.0 | 3.0 | 3.0 |
| | | Acrylic resin 2 | 22% | | | | | | | | | | |
| | | Acrylic resin 3 | 8.1% | | | | | | | | | | |
| | acetate Vinyl chloride-vinyl resin copolymer | Vinyl chloride-vinyl acetate copolymer resin 1 | 0.3% | 1.5 | 1.5 | 1.5 | 1.5 | 1.5 | 1.5 | 1.5 | 1.5 | 1.5 | 1.5 |
| | | Vinyl chloride-vinyl acetate copolymer resin 2 | 1.4% | | | | | | | | | | |
| | | Vinyl chloride-vinyl acetate copolymer resin 3 | 82% | | | | | | | | | | |
| | Cellulose resin | CAB-551-0.01 | 4.9% | | | | | | | | | | |
| | | CAB-553-0.4 | 29.0% | | | | | | | | | | |
| | Polyester resin | Polyester resin 1 | 1.5% | | | | | | | | | | |
| | Polyurethane resin | Polyurethane resin 1 | 22% | | | | | | | | | | |
| | Product name | Presence or absence of basic group | Amine value(mg) | | | | | | | | | | |

(continued)

| | Type | Name | Inherent viscosity of 90 mL/g or more | | | | | | | | | | |
|---|---|---|---|---|---|---|---|---|---|---|---|---|---|
| Dispersant | Solsperse32000 (Lubrizol) | Yes | 35 | 1.5 | 1.5 | | | | | | | 0.5 | 0.7 |
| | Solsperse13300 (Lubrizol) | Yes | 123 | | | | | | | | 1.5 | | |
| | Solsperse13240 (Lubrizol) | Yes | 91 | | | | | | | 1.5 | | | |
| | Solsperse33000 (Lubrizol) | Yes | 43 | | | | | | 1.5 | | | | |
| | Solsperse38b00 (Lubrizol) | Yes | 20 | | | | | 1.5 | | | | | |
| | Solsperse76400 (Lubrizol) | Yes | 15 | | | | 1.5 | | | | | | |
| | Solsperse21000 (Lubrizol) | None | - | | | 1.5 | | | | | | | |
| | Efka PX4701 (BASF) | Yes | 40 | | | | | | | | | | |
| Dispersion aid | Solsperse22000 (Lubrizol) | | | | | | | | | | | | |
| Additive | Silicon-based additive | BYK-331 (BYK) | | 0.5 | 0.5 | | 0.5 | 0.5 | 0.5 | | 0.5 | 0.5 | 0.5 |
| | | BYK-313 (BYK) | | | | 0.5 | | | | 0.5 | | | |
| | Pigment No. | Product name | pH | | | | | | | | | | |

(continued)

| | Type | Name | Inherent viscosity of 90 mL/g or more | | | | | | | | | | |
|---|---|---|---|---|---|---|---|---|---|---|---|---|---|
| Pigment | P.R.254 | Chromofine red 61b6 EC (Dainichiseika Color & Chemicals Mfg, Co., Ltd.) | 4.1 | 3.0 | 3.0 | 3.0 | 3.0 | 3.0 | 3.0 | 3.0 | 3.0 | 3.0 | 30 |
| | P.R.254 | IRGAPHOR RED BT-CF (BASF) | 7.7 | | | | | | | | | | |
| | P.R.254 | Cinilex DPP Red SR-2P(CINIC) | 8.7 | | | | | | | | | | |
| | P.R.254 | CROMOPHTAL DPP Red(BASF) | 9.4 | | | | | | | | | | |
| | P.O.71 | Cromophtal DPP Orange TR (BASF) | 8.3 | | | | | | | | | | |
| | P.R.254 | Synthetic product 1 | 2.4 | | | | | | | | | | |
| | P.O.71 | Synthetic product 2 | 6.3 | | | | | | | | | | |
| | P.O.73 | Synthetic product 3 | 6.1 | | | | | | | | | | |
| | P.R.149 | Paligen RED K3580(BASF) | 7.2 | | | | | | | | | | |
| | P.R.188 | Novoperm Red HF3S(Clariant) | 7.3 | | | | | | | | | | |
| Total | | | | 100.0 | 100.0 | 100.0 | 100.0 | 100.0 | 100.0 | 100.0 | 100.0 | 100.0 | 100.0 |
| Bead diameter(mm) | | | | 1.0 | 1.2 | 0.3 | 0.3 | 0.3 | 0.3 | 0.3 | 0.3 | 0.3 | 0.3 |
| Dispersion time | | | | 2h | 2h | 2h | 2h | 2h | 2h | 2h | 2h | 2h | 2h |

(continued)

| | Type | Name | Inherent viscosity of 90 mL/g or more | | | | | | | | | | |
|---|---|---|---|---|---|---|---|---|---|---|---|---|---|
| Valueof D90(nm) | | | | 250 | 270 | 207 | 205 | 208 | 208 | 202 | 218 | 204 | 211 |
| Inherent viscosity of 90 ml/g or more in total amount of resin | | | | 0.1% | 0.1% | 0.1% | 0.1% | 0.1% | 0.1% | 0.1% | 0.1% | 0.1% | 0.1% |
| Evaluation item | | Storage stability | | 4 | 3 | 2 | 3 | 4 | 5 | 5 | 3 | 2 | 4 |
| | | Ejection Stability | | 4 | 2 | 3 | 3 | 4 | 5 | 4 | 4 | 5 | 5 |
| | | Intermittent ejection property | | 5 | 2 | 5 | 5 | 5 | 5 | 5 | 4 | 5 | 5 |
| | | Solid filling | | 5 | 5 | 5 | 5 | 5 | 5 | 5 | 5 | 5 | 5 |
| | | Surface drying property | | 5 | 5 | 5 | 5 | 5 | 5 | 5 | 5 | 5 | 5 |
| | | Bleeding property | | 5 | 5 | 5 | 5 | 5 | 5 | 5 | 5 | 5 | 5 |
| | | Coated Film Rubbing Resistance | | 5 | 5 | 4 | 5 | 5 | 5 | 5 | 4 | 5 | 5 |
| | | Cleaning recovery property | | 5 | 4 | 4 | 5 | 5 | 5 | 5 | 4 | 5 | 5 |
| | | Weather resistance | | 5 | 5 | 5 | 5 | 5 | 5 | 5 | 5 | 5 | 5 |

[Table 20]

| | | | Example 2-67 | Example 2-68 | Example 2-69 | Example 2-70 | Example 2-71 | Example 2-72 |
|---|---|---|---|---|---|---|---|---|
| Classification | Type | Name | | | | | | |
| Solvent B | Alkyl amide-based solvent (b1) | N,N-diethylformamide | 20.0 | 20.0 | 20.0 | 20.0 | | |
| | | N,N-diethylpropanamide | | | | | | |
| | | N,N-diethylacetamide | | | | | | |
| | | N,N-dimethylformamide | | | | | | |
| | Cyclic amide-based solvent (b2) | N-methyl-$\varepsilon$-caprolactam | | | | | | |
| | | N-vinyl caprolactam | | | | | 20.0 | |
| | | $\varepsilon$-caprolactam | | | | | | 20.0 |
| | | N-methyl-2-pyrolidone | | | | | | |
| | Lactone-based solvent (b3) | $\gamma$-butyrolactone | | | | | | |
| | | $\gamma$-valerolactone | | | | | | |
| | | $\varepsilon$-caprolactone | | | | | | |
| | | $\gamma$-heptanolactone | | | | | | |
| | | $\gamma$-hexanolactone | | | | | | |
| Other solvents | Glycol ether dialkyl | Diethylene glycol diethyl ether | 58.0 | 57.4 | 61.0 | 60.5 | 60.5 | 60.5 |
| | | Diethylene glycol methyl ethyl ether | | | | | | |
| | | Dipropylene glycol dimethyl ether | | | | | | |
| | | Diethylene glycol dibutyl ether | | | | | | |
| | Glycol ether monoalkyl | Dipropylene glycol monomethyl ether | 10.0 | 10.0 | 10.0 | 5.0 | 5.0 | 5.0 |
| | | Triethylene glycol mono-n-butyl ether | | | | 5.0 | 5.0 | 5.0 |
| | | Tetraethylene glycol monobutyl ether | | | | | | |
| | Carbonic acid ester | Propylene carbonate | | | | | | |

(continued)

| | Type | Name | Inherent viscosity of 90 mL/g or more | | | | | | |
|---|---|---|---|---|---|---|---|---|---|
| Resin | Acrylic resin | Acrylic resin 1 | 0.0% | 3.0 | 3.0 | 3.0 | 3.0 | 3.0 | 3.0 |
| | | Acrylic resin 2 | 2.2% | | | | | | |
| | | Acrylic resin 3 | 8.1% | | | | | | |
| | Vinyl chloride-vinyl acetate copolymer resin | Vinyl chloride-vinyl acetate copolymer resin 1 | 0.3% | 1.5 | 1.5 | 1.5 | 1.5 | 1.5 | 1.5 |
| | | Vinyl chloride-vinyl acetate copolymer resin 2 | 1.4% | | | | | | |
| | | Vinyl chloride-vinyl acetate copolymer resin 3 | 8.2% | | | | | | |
| | Cellulose resin | CAB-551-0.01 | 4.9% | | | | | | |
| | | CAB-553-0.4 | 29.0% | | | | | | |
| | Polyester resin | Polyester resin 1 | 1.5% | | | | | | |
| | Polyurethane resin | Polyurethane resin 1 | 2.2% | | | | | | |
| | Product name | Presence or absence of basic group | Amine value(mg) | | | | | | |

(continued)

| | Type | Name | Inherent viscosity of 90 mL/g or more | | | | | | |
|---|---|---|---|---|---|---|---|---|---|
| Dispersant | Solsperse32000 (Lubrizol) | Yes | 35 | 4.0 | 4.6 | 1.5 | | | |
| | Solsperse13300 (Lubrizol) | Yes | 123 | | | | | | |
| | Solsperse13240 (Lubrizol) | Yes | 91 | | | | | | |
| | Solsperse33000 (Lubrizol) | Yes | 43 | | | | | | |
| | Solsperse38500 (Lubrizol) | Yes | 20 | | | | | | |
| | Solsperse76400 (Lubrizol) | Yes | 15 | | | | | | |
| | Solsperse21000 (Lubrizol) | None | - | | | | | | |
| | Efka PX4701 (BASF) | Yes | 40 | | | | 1.5 | 1.5 | 1.5 |
| Dispersion aid | Solsperse22000 (Lubrizol) | | | | | | | | |
| Additive | Silicon-based additive | BYK-331 (BYK) | | 0.5 | 0.5 | | 0.5 | 0.5 | 0.5 |
| | | BYK-313 (BYK) | | | | | | | |
| | Pigment No. | Product name | pH | | | | | | |

(continued)

| | Type | Name | Inherent viscosity of 90 mL/g or more | | | | | | |
|---|---|---|---|---|---|---|---|---|---|
| Pigment | P.R.254 | Chromofine red 6156 EC (Dainichiseika Color & Chemicals Mfg, Co., Ltd.) | 4.1 | 3.0 | 3.0 | 3.0 | 3.0 | 3.0 | 3.0 |
| | P.R.254 | IRGAPHOR RED BT-CF (BASF) | 7.7 | | | | | | |
| | P.R.254 | Cinilex DPP Red SR-2P(CINIC) | 8.7 | | | | | | |
| | P.R.254 | CROMOPHTAL DPP Red (BASF) | 9.4 | | | | | | |
| | P.O.71 | Cromophtal DPP Orange TR (BASF) | 3.3 | | | | | | |
| | P.R.254 | Synthetic product 1 | 2.4 | | | | | | |
| | P.O.71 | Synthetic product 2 | 6.3 | | | | | | |
| | P.O.73 | Synthetic product 3 | 6.1 | | | | | | |
| | P.R.149 | Paligen RED K3580(BASF) | 7.2 | | | | | | |
| | P.R.188 | Novoperm Red HF3S(Clariant) | 7.3 | | | | | | |
| Total | | | | 100.0 | 100.0 | 100.0 | 100.0 | 100.0 | 100.0 |
| Bead diameter(mm) | | | | 0.3 | 0.3 | 0.3 | 0.3 | 0.3 | 0.3 |
| Dispersion time | | | | 2h | 2h | 2h | 2h | 2h | 2h |
| Value of D90(nm) | | | | 211 | 191 | 190 | 202 | 202 | 202 |
| Inherent viscosity of 90 ml/g or more in total amount of resin | | | | 0.1% | 0.1% | 0.1% | 0.1% | 0.1% | 0.1% |

(continued)

| | Type | Name | Inherent viscosity of 90 mL/g or more | | | | | | |
|---|---|---|---|---|---|---|---|---|---|
| Evaluation item | | Storage stability | | 5 | 5 | 5 | 5 | 4 | 4 |
| | | Ejection Stability | | 5 | 5 | 5 | 5 | 5 | 5 |
| | | Intermittent ejection property | | 5 | 5 | 5 | 5 | 5 | 5 |
| | | Solid filling | | 5 | 4 | 5 | 5 | 5 | 5 |
| | | Surface drying property | | 3 | 2 | 5 | 5 | 5 | 5 |
| | | Bleeding property | | 5 | 5 | 4 | 5 | 4 | 4 |
| | | Coated Film Rubbing Resistance | | 3 | 2 | 4 | 5 | 5 | 5 |
| | | Cleaning recovery property | | 5 | 5 | 5 | 5 | 5 | 5 |
| | | Weather resistance | | 5 | 5 | 5 | 5 | 5 | 5 |

As can be seen from Tables 13 to 20, the nonaqueous ink compositions in the examples containing the pigment A2 represented by the formula (1-2) and having a pH of 3 or more and 9 or less have high storage stability and a high cleaning recovery property even though a pigment containing a diketopyrrolopyrrole pigment is used as a pigment.

In particular, in the nonaqueous ink compositions of Example 2-9 to Example 2-12 in which a pH of the pigment A2 was changed, the nonaqueous ink compositions of Example 2-10 and Example 2-11 in which a pH of the pigment A2 was in a range of 6 or more and 8 or less had good storage stability as compared with Example 9 and Example 12.

Further, in the nonaqueous ink compositions in Example 2-14 to Example 2-29 in which a content of a resin having an intrinsic viscosity at 25°C of 90 mL/g or more is changed, the nonaqueous ink compositions in the examples in which an amount of the resin having the intrinsic viscosity at 25°C of 90 mL/g or more is in a range of 5% by mass or less in a total amount of the resin have excellent solid filling and an excellent intermittent ejection property as compared with that in the nonaqueous ink compositions in the examples in which the amount of the resin is in a range of more than 5% by mass.

In addition, it is understood that the nonaqueous ink composition of Example 2-1 containing the organic solvent B (at least one selected from the group consisting of the alkyl amide-based solvent (b1), the cyclic amide-based solvent (b2), and the lactone-based solvent (b3)) has high storage stability and a high cleaning recovery property and particularly effectively exhibits the effect of the present invention as compared with the nonaqueous ink compositions of Example 2-30 to Example 2-32 containing no organic solvent B.

In addition, it is understood that, in Example 2-33 to Example 2-40 in which a content of the organic solvent B was changed, the nonaqueous ink compositions of Example 2-33 and Example 2-39 in which the content of the organic solvent B was in a range of 1% by mass or more and 90% by mass or less have high storage stability and a high cleaning recovery property and particularly effectively exhibit the effect of the present invention as compared with the nonaqueous ink composition of Example 2-40.

In addition, it is understood that, in Example 2-41 to Example 2-50, Example 2-71, and Example 2-72 in which a type of the organic solvent B was changed to each of the alkyl amide-based solvent (b1), the cyclic amide-based solvent (b2), and the lactone-based solvent (b3), various characteristics required for the nonaqueous ink composition ejected by the inkjet method were better, and as long as the nonaqueous ink composition contains the organic solvent B (at least one selected from the group consisting of the alkyl amide-based solvent (b1), the cyclic amide-based solvent (b2), and the lactone-based solvent (b3)), the effect of the present invention was particularly effectively exhibited.

In addition, in Example 2-51 to Example 2-54 in which a content of the pigment A2 was changed, the nonaqueous ink compositions of Example 2-51 to Example 2-53 in which the content of the pigment A2 was 0.1% by mass or more and 8.0% by mass or less in the total amount of the nonaqueous ink composition had good storage stability as compared with Example 2-54.

In addition, in Example 2-55 to Example 2-57 in which a volume-based cumulative 90% particle diameter (D90) of the pigment A2 was changed, there was a tendency that the storage stability and the ejection stability was improved as the volume-based cumulative 90% particle diameter (D90) was smaller.

In addition, in Example 2-59 to Example 2-64 and Example 2-70 in which a type of the pigment dispersant was changed, the nonaqueous ink compositions of Example 2-60 to Example 2-64 and Example 2-70 in which the pigment dispersant having a basic group was used had excellent ejection stability as compared with the nonaqueous ink composition of Example 2-60. Among them, the nonaqueous ink compositions of Example 2-60 and Example 2-63 having an amine value in a range of 20 mgKOH/g or more and 100 mgKOH/g or less exhibited particularly excellent ejection stability.

In addition, in Example 2-65 to Example 2-68 in which a content of the pigment dispersant was changed, ink compositions of Example 2-65 to Example 2-67 in which a content thereof was in a range of 5 parts by mass or more and 150 parts by mass or less with respect to 100 parts by mass of the pigment in the nonaqueous ink composition had an excellent surface drying property and excellent coated film rubbing resistance as compared with the nonaqueous ink composition of Example 2-68.

In addition, in an ink composition of Example 2-69 containing no a surfactant having a siloxane skeleton, the coated film rubbing resistance was relatively slightly lowered.

On the other hand, ink compositions of Comparative Example 2-1 and Comparative Example 2-2 containing the pigment A2 having a pH outside the range of 3 or more and 9 or less did not exhibit the effect of the present invention.

It was confirmed that Reference Example 2-1 and Reference Example 2-2 containing C. I. Pigment Red 149 and C. I. Pigment Red 188 without containing the pigment A2 (diketopyrrolopyrrole pigment) represented by the formula (1-2) satisfied the characteristics required for the nonaqueous ink composition ejected by the inkjet method, and the fact that the pigment is easily aggregated in the nonaqueous ink composition is a problem unique to the nonaqueous ink composition containing the diketopyrrolopyrrole pigment.

(Third Embodiment)

1. Preparation of Resin

(1) Acrylic Resin

A mixture of 150g of methyl methacrylate, 50g of butyl methacrylate, and a predetermined amount of t-butylperoxy-2-ethylhexanoate (polymerization initiator) was added dropwise to 300g of diethylene glycol diethyl ether maintained at 100°C over 1.5 hours.

After completion of dropwise addition, the obtained mixture was reacted at 100°C for 2 hours and then cooled to give a colorless and transparent polymer solution of methyl methacrylate. Thereafter, a solvent was sufficiently distilled off from the polymer solution to give a polymer of the methyl methacrylate. At this time, an amount of the t-butylperoxy-2-ethylhexanoate, which is a polymerization initiator, was changed to control a polymerization average molecular weight of methyl methacrylate (acrylic resin) to 30,000 to 105,000 (A mass of the polymerization initiator used at this time is described in Table 1 below, This is indicated as "initiator amount" in Table 21.)

(2) Vinyl Chloride-Vinyl Acetate Copolymer Resin

After nitrogen substitution, an autoclave equipped with a stirring device was charged with 100 parts of deionized water, 40 parts of methanol, 32 parts of vinyl chloride, 5 parts of vinyl acetate, 0.2 parts of glycidyl methacrylate, 3.55 parts of hydroxypropyl acrylate, 0.1 parts of hydroxypropyl methyl cellulose (suspension agent), 0.026 parts of di-2-ethylhexyl peroxydicarbonate (polymerization initiator), and a predetermined amount of di-3,5,5-trimethylhexanol peroxide (polymerization initiator), and the obtained mixture was heated to 63°C while being stirred in a nitrogen gas atmosphere, and immediately after reaching 63°C, 48 parts of vinyl chloride was continuously injected for 6 hours, and a mixture of 0.6 parts of glycidyl methacrylate and 10.65 parts of hydroxypropyl acrylate was continuously injected for 5.4 hours to carry out a copolymerization reaction. When an internal pressure of the autoclave reached 0.3 MPa, a residual pressure was released, the resultant was cooled, resin slurry was taken out, filtered, and dried to give a vinyl chloride copolymer resin. At this time, the amount of di-3,5,5-trimethylhexanol peroxide, which is a polymerization initiator, was changed to control a polymerization average molecular weight of the vinyl chloride-vinyl acetate copolymer resin to 40,000 to 75,000 (A mass of the polymerization initiator used at this time is described in Table 21 below, This is indicated as "initiator amount" in Table 21.)

(3) Cellulose Resin

A cellulose resin (CAB551-0.01, and CAB553-0.4 manufactured by EASTMAN CHEMICAL, Co., Ltd.) which is a commercially available product was used.

(4) Polyester Resin

A round bottom flask was charged with 104 parts by mass of terephthalic acid, 104 parts by mass of isophthalic acid, 79 parts of ethylene glycol, 89 parts by mass of neopentyl glycol, and 0.1 parts by mass of tetrabutyl titanate, a temperature of the round bottom flask was gradually increased to 240°C over 4 hours, and esterification reaction was performed while removing a precipitate outside the system. After completion of the esterification reaction, a pressure was reduced to 10 mmHg over 30 minutes, and the temperature was increased to 250°C to perform initial polymerization. Thereafter, late polymerization was performed for 1 hour at 1 mmHg or less to obtain the polyester resin.

(5) Polyurethane Resin

Into a round bottom flask were put 192.5 parts by mass of polycarbonate diol (PLACCEL CD-220, manufactured by Daicel Corporation), 41.6 parts by mass of isophorone diisocyanate (IPDI, manufactured by Evonik), and 100 parts by mass of N,N-diethylformamide (DEF), followed by uniformly mixing and then, a mixed liquid of 0.01 parts by mass of T100 BHJ (catalyst) and 0.09 parts by mass of N,N-diethylformamide (DEF) was put into the flask and reacted at 75°C for 3 hours to obtain a prepolymer having an isocyanate group at the end. After 250 parts by mass of N,N-diethylformamide (DEF) was added to the prepolymer and uniformly dissolved therein, a chain extender solution obtained by dissolving 12 parts by mass of 3-aminomethyl-3,5,5-trimethylcyclohexylamine (IPD: manufactured by Evonik) in 100 parts by mass of DEF was added thereto, and the mixture was further stirred at 60°C for 40 minutes. Thereafter, a reaction terminator obtained by dissolving 3.8 parts by mass of monoisopropanolamine (MIPA: Daicel Corporation) in 50 parts by mass of N,N-diethylformamide (DEF) was added, and finally, 250 parts by mass of N,N-diethylformamide (DEF) was added to

obtain a polyurethane solution having a solid content of 25.0% by mass.

Table 21 shows a weight average molecular weight (relative molecular mass) of each resin (an acrylic resin, a vinyl chloride-vinyl acetate copolymer resin, a cellulose resin, a polyester resin, and a polyurethane resin) and a ratio of each resin having an intrinsic viscosity at 25°C of 90 mL/g or more. The weight average molecular weight (relative molecular mass) was measured by gel permeation chromatography (GPC) . Further, in the ratio of each resin having an intrinsic viscosity of 90 mL/g or more, the intrinsic viscosity was obtained by connecting a viscosity detector (ViscoStar Type III manufactured by WYATT) and a refractive index detector (Optilab T-rEX manufactured by WYATT) to an SEC (GPC) system manufactured by Shimadzu Corporation, allowing a sample to pass through a column heated to 40°C in the SEC (GPC) system manufactured by Shimadzu Corporation using tetrahyrofuran as a dispersion solvent, obtaining a relative viscosity [ηSP] from a passed substance cooled to 25°C by the viscosity detector, obtaining a concentration C by the refractive index detector, and extrapolating the concentration C to 0 in Lim ([ηSP]/C).

[Table 21]

| | | Weight average molecular weight (Relative molecular mass) | Product number | Initiator amount (g) | 90 mL/g or more (mass%) |
|---|---|---|---|---|---|
| Acrylic resin | Acrylic resin 1 | Mw=30000 | - | 1.20 | 0.0 |
| | Acrylic resin 2 | Mw=80000 | - | 0.20 | 2.2 |
| | Acrylic resin 3 | Mw=105000 | - | 0.10 | 8.1 |
| Vinyl chloride-vinyl acetate copolymer resin | Vinyl chloride-vinyl acetate copolymer resin 1 | Mw=40000 | - | 0.58 | 0.3 |
| | Vinyl chloride-vinyl acetate copolymer resin 2 | Mw=50000 | - | 0.37 | 1.4 |
| | Vinyl chloride-vinyl acetate copolymer resin 3 | Mw=75000 | - | 0.14 | 8.2 |
| Cellulose resin | Cellulose resin 1 | - | CAB551-0.01 | - | 4.9 |
| | Cellulose resin 2 | - | CAB553-0.4 | - | 29.0 |
| Polyester resin | Polyester resin 1 | Mw=26000 | - | - | 1.5 |
| Polyurethane resin | Polyurethane resin 1 | Mw=36400 | - | - | 2.2 |

2. Preparation of Nonaqueous Ink Composition

Nonaqueous ink compositions in the examples and comparative examples were prepared using the respective organic solvents, resins, dispersants, and pigments (colorants) according to ratios of respective components shown in the following table. Specifically, the respective components were dispersed with zirconia beads using a paint shaker to prepare a nonaqueous ink composition.

A unit is mass%. A particle diameter and dispersion time of the zirconia beads are shown in Tables 22 to 29 below.

In addition, a volume-based cumulative 90% particle diameter (D90) of the pigment contained in the nonaqueous ink composition was measured by using a particle diameter distribution measurement device

(particle size analyzer NANOTRACWAVE manufactured by Microtrac BEL Co., Ltd.).

3. Evaluation 1

(Storage Stability)

Storage stability of the nonaqueous ink compositions in the examples, the comparative examples, and reference examples was evaluated. Specifically, the nonaqueous ink composition was stored at 60°C for one month, and changes in viscosity and volume-based cumulative 50% particle diameter (D50) of a pigment before and after a test were observed,

and the storage stability was evaluated according to the following standard. The viscosity of the ink was measured under a condition of 20°C using a falling ball type viscosity meter (AMVn manufactured by Anton Paar), and the volume-based cumulative 50% particle diameter (D50) of the pigment was measured under a condition of 25°C using a particle diameter distribution measurement device (NANOTRACWAVE particle size analyzer manufactured by Microtrac BEL Co., Ltd.). In the following evaluation, the nonaqueous ink composition having a larger rate of change between the "viscosity" and the "volume-based cumulative 50% particle diameter (D50) of the pigment" was evaluated (this is indicated as "storage stability" in the table).

Evaluation Standard

Evaluation 5: The rates of change in both the viscosity and the volume-based cumulative 50% particle diameter (D50) of the pigment are less than 3%.
Evaluation 4: Either the rate of change in the viscosity or the rate of change in volume-based cumulative 50% particle diameter (D50) of the pigment is 3% or more and less than 5%.
Evaluation 3: Either the rate of change in the viscosity or the rate of change in volume-based cumulative 50% particle diameter (D50) of the pigment is 5% or more and less than 8%.
Evaluation 2: Either the rate of change in the viscosity or the rate of change in volume-based cumulative 50% particle diameter (D50) of the pigment is 8% or more and less than 10%.
Evaluation 1: Either the rate of change in the viscosity or the rate of change in volume-based cumulative 50% particle diameter (D50) of the pigment is 10% or more.

(Ejection Stability)

Ejection stability of the nonaqueous ink compositions in the examples, the comparative examples, and the reference examples was evaluated. Specifically, an inkjet printer (trade name: VersaArt RE-640, manufactured by Rowland DG Co., Ltd.) was filled with the nonaqueous ink composition, a solid and a thin line were printed on a recording medium (glued polyvinyl chloride film (IMAGin JT 5829R, manufactured by MACtac) by continuous printing at a substrate surface temperature of 40°C in a high-speed printing mode (360 × 720 dpi) in two directions, presence or absence of dot omission, flight deflection, and ink scattering was visually observed, and the number of occurrences was measured (this is indicated as "ejection stability" in the table).

Evaluation Standard

Evaluation 5: The thin line was correctly reproduced.
Evaluation 4: The thin line is substantially correctly reproduced.
Evaluation 3: Slight deflection is observed in the thin line.
Evaluation 2: A landing position was displaced, and deflection was observed.
Evaluation 1: The deviation of the landing position is severe, and the thin line cannot be reproduced.

(Cleaning Recovery Property)

With respect to the nonaqueous ink compositions in the examples, the comparative examples, and the reference examples, it was evaluated whether clogging in a nozzle could be eliminated by a cleaning operation of a printer when the clogging in the nozzle occurred in a head. Specifically, a solid image of 1.80 $m^2$ was printed in a high-quality printing mode (1440 × 720 dpi) by filling ink compositions in the examples and the comparative examples and using the above inkjet printer having a cleaning system (trade name: VersaArt RE-640, manufactured by Rowland DG Co., Ltd.), the solid image was allowed to stand at room temperature of 25°C for 1 week, and then a nozzle check pattern was printed, and cleaning was performed until the omission was eliminated (this is indicated as "cleaning recovery property" in the table).

Evaluation Standard

Evaluation 5: No omissions.
Evaluation 4: The clogging in a nozzle is eliminated by one cleaning operation.
Evaluation 3: The clogging in the nozzle is eliminated by the cleaning 2 to 3 times.
Evaluation 2: The clogging in the nozzle is eliminated by the cleaning 4 to 5 times.
Evaluation 1: The clogging in the nozzle is not eliminated even after six cleaning operations.

(Color Tone Stability (Settleability))

Settleability of the nonaqueous ink compositions in the examples, the comparative examples, and the reference examples was evaluated. Specifically, 30g of the nonaqueous ink composition was stored at room temperature for one month, and 1g of supernatant of the ink after the entire test was taken out, and the supernatant was spread on the recording medium (glued polyvinyl chloride film (IMAGin JT 5829R, manufactured by MACtac) by a bar coater #8 and dried in an oven at 40°C. A value of the hue change ΔE before and after the test was evaluated, and the hue was evaluated under the following conditions. Values of L*, a*, and b* were measured using X-Rite eXact (manufactured by X-Rite Corporation) under conditions of a viewing angle of 2°, a measurement range of 4 mmφ, and a D65 light source (this is indicated as "color tone stability (settleability)" in the table). The hue change ΔE is obtained by the following equation using values of $L^{*1}$, $a^{*1}$, and $b^{*1}$ before the test and $L^{*2}$, $a^{*2}$, and $b^{*2}$ after the test.

$$\Delta E = ((L^{*1} - L^{*2})^2 + (a^{*1} - a^{*2})^2 + (b^{*1} - b^{*2})^2)^{(1/2)}$$

Evaluation Standard

Evaluation 5: ΔE is less than 2.0.
Evaluation 4: ΔE is less than 2.5 and 2.0 or more.
Evaluation 3: ΔE is less than 3.0 and 2.5 or more.
Evaluation 2: ΔE is less than 3.5 and 3.0 or more.
Evaluation 1: ΔE is 3.5 or more.

(Surface Drying Property)

A surface drying property of the nonaqueous ink compositions in the examples, the comparative examples, and the reference examples was evaluated. Specifically, the nonaqueous ink compositions in the examples and comparative examples were used to print a solid image on a recording medium (glued polyvinyl chloride film (IMAGin JT5829R, manufactured by MACtac) in a high-quality printing mode (1440 × 720 dpi) by an inkjet method using an inkjet printer (trade name: VersaArt RE-640, manufactured by Rowland DG Co., Ltd.), and time until the solid image was dried at 40°C was measured (this is indicated as "surface drying property" in the table).

Evaluation Standard

Evaluation 5: Drying is performed in less than 2 minutes.
Evaluation 4: Drying is performed in 2 minutes or more and less than 4 minutes.
Evaluation 3: Drying is performed in 4 minutes or more and less than 6 minutes.
Evaluation 2: Drying is performed for 6 minutes or more and less than 8 minutes.
Evaluation 1: Drying is performed in 8 minutes or more.

(Bleeding Property)

A bleeding property of the nonaqueous ink compositions in the examples, the comparative examples, and the reference examples was evaluated. Specifically, using the above inkjet printer (trade name: VersaArt RE-640, manufactured by Rowland DG Co., Ltd.), an image having 6 pt characters having a color different from that of a solid portion in a solid portion having each color was printed on a recording medium (glued polyvinyl chloride film (IMAGin JT 5829R, manufactured by MACtac) in a high-quality printing mode (1440 × 720 dpi) at a substrate surface temperature of 50°C, the obtained printed matter was dried in an oven at 60°C for 5 minutes, and then bleeding of the printed matter was

visually observed with a loupe (x10).

Evaluation Standard

Evaluation 5: No ink bleeding is observed with the loupe.
Evaluation 4: No ink bleeding is visually observed, and 6 pt characters are clear.
Evaluation 3: Slight ink bleeding is visually observed, but design is not impaired.
Evaluation 2: Bleeding of ink is visually observed, but 6 pt characters are identifiable.
Evaluation 1: Significant bleeding of ink is visually observed, and 6 pt characters cannot be visually recognized.

(Weather Resistance)

The weather resistance of the printed matter produced using the nonaqueous ink compositions in the examples, the comparative examples, and the reference examples was evaluated. The nonaqueous ink compositions in the examples and comparative examples were used to print a solid image on a recording medium (glued polyvinyl chloride film (IMAGin JT5829R, manufactured by MACtac) in a high-quality printing mode (1440 × 720 dpi) by an inkjet method using the inkjet printer (trade name: VersaArt RE-640, manufactured by Rowland DG Co., Ltd.), and the solid image was dried at 40°C for 1 hour. The obtained recorded matter was placed in a xenon weather meter (ATLAS Ci 4000, manufactured by Toyo Seiki Seisaku-sho Co., Ltd.) to perform a cycle test. The test conditions were as follows: based on JIS K-5600 -7 -7, a black panel temperature was maintained at 63°C, an irradiance of a xenon lamp was maintained at $60W/m^2$, and a temperature in a test layer was maintained at 38°C, and in segment 1, water irradiation was performed for 102 minutes in a state in which a humidity was kept at 50%, and in segment 2, water irradiation was performed for 18 minutes, which was one cycle. With 50 cycles as one set, 10 sets of the cycle test were continuously performed. A value of the hue change ΔE before and after the test was evaluated, and the hue was evaluated under the following conditions. Values of L*, a*, and b* were measured using X-Rite eXact (manufactured by X-Rite Corporation) under conditions of a viewing angle of 2°, a measurement range of 4 mmφ, and a D65 light source. The hue change ΔE is obtained by the following equation using values of $L^{*1}$, $a^{*1}$, and $b^{*1}$ before the test and $L^{*2}$, $a^{*2}$, and $b^{*2}$ after the test.

$$\Delta E = ((L^{*1} - L^{*2})^2 + (a^{*1} - a^{*2})^2 + (b^{*1} - b^{*2})^2)^{(1/2)}$$

Evaluation Standard

Evaluation 5: ΔE is less than 5.0.
Evaluation 4: ΔE is less than 10.0 and 5.0 or more.
Evaluation 3: ΔE is less than 15.0 and 10.0 or more.
Evaluation 2: ΔE is less than 20.0 and 15.0 or more.
Evaluation 1: ΔE is 20.0 or more.

[Table 22]

| | | | Example 3-1 | Example 3-2 | Example 3-3 | Example 3-4 | Example 3-5 | Example 3-6 | Example 3-7 | Comparative Example 3-1 | Comparative Example 3-2 | Comparative Example 3-3 |
|---|---|---|---|---|---|---|---|---|---|---|---|---|
| Classification | Type | Name | | | | | | | | | | |
| Solvent B | Alkyl amide-based solvent (b1) | N,N-diethylformamide | 20.0 | 20.0 | 20.0 | 20.0 | 20.0 | 20.0 | 20.0 | | | |
| | | N,N-diethylpropanamide | | | | | | | | | | |
| | | N,N-diethylacetamide | | | | | | | | | | |
| | | N,N-dimethylformamide | | | | | | | | | | |
| | Cyclic amide-based solvent (b2) | N-methyl-$\varepsilon$-caprolactam | | | | | | | | | | |
| | | N-vinyl caprolactam | | | | | | | | | | |
| | | $\varepsilon$-caprolactam | | | | | | | | | | |
| | | N-methyl-2-pyrolidone | | | | | | | | | | |
| | Lactone-based solvent (b3) | $\gamma$-butyrolactone | | | | | | | | | | |
| | | $\gamma$-valerolactone | | | | | | | | | | |
| | | $\varepsilon$-caprolactone | | | | | | | | | | |
| | | $\gamma$-heptanolactone | | | | | | | | | | |
| | | $\gamma$-hexanolactone | | | | | | | | | | |

(continued)

| | | | Example 3-1 | Example 3-2 | Example 3-3 | Example 3-4 | Example 3-5 | Example 3-6 | Example 3-7 | Comparative Example 3-1 | Comparative Example 3-2 | Comparative Example 3-3 |
|---|---|---|---|---|---|---|---|---|---|---|---|---|
| Classification | Type | Name | | | | | | | | | | |
| | Glycol etherdialkyl | Diethylene glycol diethyl ether | 60.5 | | | | 40.2 | 40.5 | 60.2 | 80.5 | 80.5 | 80.5 |
| | | Diethylene glycol methyl ethyl ether | | 60.5 | | | 20.0 | 20.0 | | | | |
| | | Dipropylene glycol dimethyl ether | | | 60.5 | | | | | | | |
| | | Diethylene glycol dibutyl ether | | | | 60.5 | | | | | | |
| | Glycol ether monoalkyl | Dipropylene glycol monomethyl ether | 10.0 | 10.0 | 10.0 | 10.0 | | | | 10.0 | | |
| | | Triethylene glycol mono-n-butyl ether | | | | | 10.0 | | | | 10.0 | |
| | | Tetraethylene glycol monobutyl ether | | | | | | 10.0 | | | | |
| | Carbonic acid ester | Propylene carbonate | | | | | | | 10.0 | | | 10.0 |

(continued)

| | Type | Name | Inherent viscosity of 90 mL/gormore | | | | | | | | | | |
|---|---|---|---|---|---|---|---|---|---|---|---|---|---|
| Resin | Acrylic resin | Acrylic resin 1 | 0.0% | 3.0 | 3.0 | 3.0 | 3.0 | 3.0 | 3.0 | 3.0 | 3.0 | 3.0 | 3.0 |
| | | Acrylic resin 2 | 2.2% | | | | | | | | | | |
| | | Acrylic resin 3 | 8.1% | | | | | | | | | | |
| | Vinyl chloride-vinyl acetate copolymer resin | Vinyl chloride-vinyl acetate copolymer resin 1 | 0.3% | 1.5 | 1.5 | 1.5 | 1.5 | 1.5 | 1.5 | 1.5 | 1.5 | 1.5 | 1.5 |
| | | Vinyl ch loride-vinyl acetate copolymer resin 2 | 1.4% | | | | | | | | | | |
| | | Vinyl chloride-vinyl acetate copolymer resin 3 | 8.2% | | | | | | | | | | |
| | Cellulose resin | CAB-551-0.01 | 4.9% | | | | | | | | | | |
| | | CAB-553-0.4 | 29.0% | | | | | | | | | | |
| | Polyester resin | Polyester resin 1 | 1.5% | | | | | | | | | | |
| | Polyurethane resin | Polyurethane resin 1 | 2.2% | | | | | | | | | | |
| | Product name | Presence or absence of basic group | Amine value(mg) | | | | | | | | | | |

(continued)

| | Type | Name | Inherent viscosity of 90 mL/gor-more | | | | | | | | | | |
|---|---|---|---|---|---|---|---|---|---|---|---|---|---|
| Dispersant | | YES | 35 | 1.5 | 1.5 | 1.5 | 1.5 | 1.5 | 1.5 | 1.5 | 1.5 | 1.5 | 1.5 |
| | Solsperse32000 (Lubrizol) Solsperse13300 (Lubrizol) | YES | 123 | | | | | | | | | | |
| | Solsperse13240 (Lubrizol) | YES | 91 | | | | | | | | | | |
| | Solsperse33000 (Lubrizol) | YES | 43 | | | | | | | | | | |
| | Solsperse38500 (Lubrizol) | YES | 20 | | | | | | | | | | |
| | Solsperse76400 (Lubrizol) | YES | 15 | | | | | | | | | | |
| | Solsperse21000 (Lubrizol) | None | - | | | | | | | | | | |
| | Efka PX4701 (BASF) | YES | 40 | | | | | | | | | | |
| Dispersion aic | Solsperse5000s (Lubrizol) | | | | | | | 0.3 | | 0.3 | | | |
| Surfactant | Silicon-based additive | BYK-331 (BYK) | | 0.5 | 0.5 | 0.5 | | 0.5 | 0.5 | 0.5 | 0.5 | | 0.5 |
| | | BYK-313 (BYK) | | | | | 0.5 | | | | | 0.5 | |

(continued)

| | Type | Name | Inherent viscosity of 90 mL/gor-more | | | | | | | | | | |
|---|---|---|---|---|---|---|---|---|---|---|---|---|---|
| Pigment | P.G.36① | FASTGEN GREEN 2YK (DIC) | | 3.0 | 3.0 | 3.0 | 3.0 | 3.0 | 3.0 | 3.0 | 3.0 | 3.0 | 3.0 |
| | P.G.36② | yanine Green 5370 (Dain-ichiseika Color & Chemi-cals Mfg, Co., Ltd | | | | | | | | | | | |
| | P.G.7 | FASTGEN GREEN 5740 (DIC) | | | | | | | | | | | |
| | P.G.58 | Fastogen GREEN A110 (DIC) | | | | | | | | | | | |
| | P.B.15:4 | FASTOGEN BLUE 5452K (DIC) | | | | | | | | | | | |
| | P.Y.155 | Ink Jet Yellow 4GC(Clariant) | | | | | | | | | | | |
| Total | | | | 100.0 | 100.0 | 100.0 | 100.0 | 100.0 | 100.0 | 100.0 | 100.0 | 100.0 | 100.0 |
| Bead diameter(mm) | | | | 0.3 | 0.3 | 0.3 | 0.3 | 0.3 | 0.3 | 0.3 | 0.3 | 0.3 | 0.3 |
| Dispersion time | | | | 2h | 2h | 2h | 2h | 2h | 2h | 2h | 2h | 2h | 2h |
| Value of D50(nm) | | | | 100 | 81 | 77 | 93 | 80 | 88 | 87 | 75 | 98 | 73 |
| Value of D90(nm) | | | | 150 | 151 | 169 | 147 | 178 | 162 | 155 | 152 | 179 | 158 |
| Inherent viscosity of 90 ml/g or more in total amountof resin | | | | 0.1% | 0.1% | 0.1% | 0.1% | 0.1% | 0.1% | 0.1% | 0.1% | 0.1% | 0.1% |

(continued)

| | Type | Name | Inherent viscosity of 90 mL/gor-more | | | | | | | | | | |
|---|---|---|---|---|---|---|---|---|---|---|---|---|---|
| Evaluation item | | Storage stability | | 5 | 5 | 4 | 4 | 5 | 5 | 5 | 3 | 3 | 3 |
| | | Ejection Stability | | 5 | 5 | 5 | 5 | 5 | 5 | 5 | 3 | 3 | 3 |
| | | Cleaning recovery property | | 5 | 5 | 5 | 5 | 5 | 5 | 4 | 1 | 1 | 1 |
| | | Color tone stability (settleability) | | 5 | 5 | 5 | 5 | 5 | 5 | 5 | 3 | 3 | 3 |
| | | Surface drying property | | 5 | 5 | 5 | 4 | 3 | 3 | 5 | 2 | 2 | 2 |
| | | Bleeding property | | 5 | 5 | 5 | 4 | 4 | 4 | 5 | 2 | 2 | 2 |
| | | Weather resistance | | 5 | 5 | 5 | 5 | 5 | 5 | 5 | 5 | 5 | 5 |

[Table 23]

| | | | Reference Example 3-1 | Example 3-8 | Example 3-9 | Example 3-10 | Example 3-11 | Example 3-12 | Example 3-13 | Example 3-14 | Example 3-15 | Example 3-16 |
|---|---|---|---|---|---|---|---|---|---|---|---|---|
| Classification | Type | Name | | | | | | | | | | |
| Solvent B | Alkyl amide-based solvent (b1) | N,N-diethylformamide | | 3.0 | 5.0 | 10.0 | 35.0 | 55.0 | 80.0 | 90.0 | | |
| | | N,N-diethylpropanamide | | | | | | | | | 20.0 | |
| | | N,N-diethylacetamide | | | | | | | | | | 20.0 |
| | | N,N-dimethylformamide | | | | | | | | | | |
| | Cyclic amide-based solvent (b2) | N-methyl-ε-caprolactam | | | | | | | | | | |
| | | N-vinyl caprolactam | | | | | | | | | | |
| | | ε -caprolactam | | | | | | | | | | |
| | | N-methyl-2-pyrolidone | | | | | | | | | | |
| | Lactone-based solvent (b3) | γ -buryrolactone | | | | | | | | | | |
| | | γ -valerolactone | | | | | | | | | | |
| | | ε-caprolactone | | | | | | | | | | |
| | | γ -heptanolactone | | | | | | | | | | |
| | | γ -hexanolactone | | | | | | | | | | |

(continued)

| | | | Reference Example 3-1 | Example 3-8 | Example 3-9 | Example 3-10 | Example 3-11 | Example 3-12 | Example 3-13 | Example 3-14 | Example 3-15 | Example 3-16 |
|---|---|---|---|---|---|---|---|---|---|---|---|---|
| Classification | Type | Name | | | | | | | | | | |
| Other solvent | Glycol ether dialkyl | Diethylene glycol diethyl ether | 80.5 | 77.5 | 75.5 | 70.5 | 45.5 | 35.5 | 10.5 | 0.5 | 60.5 | 60.5 |
| | | Diethylene glycol methyl ethyl ether | | | | | | | | | | |
| | | Dipropylene glycol dimethyl ether | | | | | | | | | | |
| | | Diethylene glycol dibutyl ether | | | | | | | | | | |
| | Glycol ether monoalkyl | Dipropylene glycol monomethyl ether | 10.0 | 10.0 | 10.0 | 10.0 | 10.0 | | | | 10.0 | 10.0 |
| | | Triethylene glycol mono-n-butyl ether | | | | | | | | | | |
| | | Tetraethylene glycol monobutyl ether | | | | | | | | | | |
| | Carbonic acid es-ter | Propylene carbonate | | | | | | | | | | |

(continued)

| | Type | Name | Inherent viscosity of 90 mL/g or more | | | | | | | | | | |
|---|---|---|---|---|---|---|---|---|---|---|---|---|---|
| Resin | Acrylic resin | Acrylic resin 1 | 0.0% | 3.0 | 3.0 | 3.0 | 3.0 | 3.0 | 3.0 | 3.0 | 3.0 | 3.0 | 3.0 |
| | | Acrylic resin 2 | 2.2% | | | | | | | | | | |
| | | Acrylic resin 3 | 8.1% | | | | | | | | | | |
| | Vinyl chloride-vinyl acetate copolymer resin | Vinyl chloride-vinyl acetate copolymer resin 1 | 0.3% | 1.5 | 1.5 | 1.5 | 1.5 | 1.5 | 1.5 | 1.5 | 1.5 | 1.5 | 1.5 |
| | | Vinyl chloride-vinyl acetate copolymer resin 2 | 1.4% | | | | | | | | | | |
| | | Vinyl chloride-vinyl acetate copolymer resin 3 | 8.2% | | | | | | | | | | |
| | Cellulose resin | CAB-551-0.01 | 4.9% | | | | | | | | | | |
| | | CAB-553-0.4 | 29.0% | | | | | | | | | | |
| | Polyester resin | Polyester resin 1 | 1.5% | | | | | | | | | | |
| | Polyurethane resin | Polyurethane resin 1 | 2.2% | | | | | | | | | | |
| | Product name | Presence or absence of basic group | Amine value(mg) | | | | | | | | | | |
| | Solsperse32000 (Lubrizol) | YES | 35 | 1.5 | 1.5 | 1.5 | 1.5 | 1.5 | 1.5 | 1.5 | 1.5 | 1.5 | 1.5 |
| | So!sperse13300 (Lubrizol) | YES | 123 | | | | | | | | | | |

(continued)

| | Type | Name | Inherent viscosity of 90 mL/g or more | | | | | | | | | | |
|---|---|---|---|---|---|---|---|---|---|---|---|---|---|
| | Solsperse13240 (Lubrizol) | YES | 91 | | | | | | | | | | |
| | Solsperse33000 (Lubrizol) | YES | 43 | | | | | | | | | | |
| Dispersant | Solsperse38500 (Lubrizol) | YES | 20 | | | | | | | | | | |
| | Solsperse76400 (Lubrizol) | YES | 15 | | | | | | | | | | |
| | Solsperse21000 (Lubrizol) | None | - | | | | | | | | | | |
| | Efka PX4701 (BASF) | YES | 40 | | | | | | | | | | |
| Dispersion alc | Solsperse5000s (Lubrizol) | | | | | | | | | | | | |
| Surfactant | Silicon-based additive | BYK-331 (BYK) | | 0.5 | 0.5 | 0.5 | 0.5 | 0.5 | 0.5 | 0.5 | 0.5 | 0.5 | 0.5 |
| | | BYK-313 (BYK) | | | | | | | | | | | |

(continued)

| | Type | Name | Inherent viscosity of 90 mL/g or more | | | | | | | | | | |
|---|---|---|---|---|---|---|---|---|---|---|---|---|---|
| Pigment | P.G.36① | FASTGEN GREEN 2YK (DIC) | | | 3.0 | 3.0 | 3.0 | 3.0 | 3.0 | 3.0 | 3.0 | 3.0 | 3.0 |
| | P.G.36② | yanine Green 5370 (Dainichiseika Color & Chemicals Mfg, Co., Ltd | | | | | | | | | | | |
| | P.G.7 | FASTGEN GREEN 5740 (DIC) | | | | | | | | | | | |
| | P.G.58 | Fastogen GREEN A110 (DIC) | | | | | | | | | | | |
| | P.B.15:4 | FASTOGEN BLUE 5452K (DIC) | | 3.0 | | | | | | | | | |
| | P.Y.155 | Ink Jet Yellow 4GC(Clariant) | | | | | | | | | | | |
| Total | | | | 100.0 | 100.0 | 100.0 | 100.0 | 100.0 | 100.0 | 100.0 | 100.0 | 100.0 | 100.0 |
| Bead diameter(mm) | | | | 0.3 | 0.3 | 0.3 | 0.3 | 0.3 | 0.3 | 0.3 | 0.3 | 0.3 | 0.3 |
| Dispersion time | | | | 2h | 2h | 2h | 2h | 2h | 2h | 2h | 2h | 2h | 2h |
| Value of D50(nm) | | | | 70 | 76 | 81 | 92 | 93 | 81 | 77 | 76 | 88 | 83 |
| Value of D90(nm) | | | | 165 | 144 | 180 | 158 | 171 | 173 | 167 | 146 | 165 | 158 |
| Inherent viscosity of 90 ml/g or more in total amount of resin | | | | 0.1% | 0.1% | 0.1% | 0.1% | 0.1% | 0.1% | 0.1% | 0.1% | 0.1% | 0.1% |

(continued)

| | Type | Name | Inherent viscosity of 90 mL/g or more | | | | | | | | | | |
|---|---|---|---|---|---|---|---|---|---|---|---|---|---|
| Evaluation item | | Storage stability | | 4 | 5 | 5 | 5 | 5 | 5 | 5 | 4 | 4 | 4 |
| | | Ejection Stability | | 3 | 5 | 5 | 5 | 5 | 5 | 5 | 4 | 5 | 5 |
| | | Cleaning recovery property | | 3 | 5 | 5 | 5 | 5 | 5 | 5 | 4 | 4 | 4 |
| | | Color tone stability (settleability) | | 5 | 3 | 5 | 5 | 5 | 5 | 5 | 5 | 5 | 5 |
| | | Surface drying property | | 2 | 2 | 4 | 4 | 5 | 5 | 5 | 5 | 5 | 5 |
| | | Bleeding property | | 2 | 3 | 4 | 4 | 5 | 5 | 5 | 5 | 4 | 4 |
| | | Weather resistance | | 5 | 5 | 5 | 5 | 5 | 5 | 5 | 5 | 5 | 5 |

[Table 24]

| | | | Example 3-17 | Example 3-18 | Example 3-19 | Example 3-20 | Example 3-21 | Example 3-22 | Example 3-23 | Example 3-24 | Example 3-25 | Example 3-26 |
|---|---|---|---|---|---|---|---|---|---|---|---|---|
| Classification | Type | Name | | | | | | | | | | |
| Solvent B | Alkyl amide-based solvent (b1) | N,N-diethylformamide | | | | | | | | | 20.0 | 20.0 |
| | | N,N-diethylpropanamide | | | | | | | | | | |
| | | N,N-diethylacetamide | | | | | | | | | | |
| | | N,N-dimethylformamide | | | | | | 20.0 | | | | |
| | Cyclic amide-based solvent (b2) | N-methyl- ε -caprolactam | | | | 20.0 | | | | | | |
| | | N-vinyl caprolactam | | | | | | | | | | |
| | | ε -caprolactam | | | | | | | | | | |
| | | N-methyl-2-pyrolidone | | | | | 20.0 | | | | | |
| | Lactone-based solvent (b3) | y -butyrolactone | 20.0 | | | | | | | | | |
| | | γ -valerolactone | | 20.0 | | | | | | | | |
| | | ε -caprolactone | | | 20.0 | | | | | | | |
| | | γ -heptanolactone | | | | | | | 20.0 | | | |
| | | γ -hexanolactone | | | | | | | | 20.0 | | |

(continued)

| | | | Example 3-17 | Example 3-18 | Example 3-19 | Example 3-20 | Example 3-21 | Example 3-22 | Example 3-23 | Example 3-24 | Example 3-25 | Example 3-26 |
|---|---|---|---|---|---|---|---|---|---|---|---|---|
| Classification | Type | Name | | | | | | | | | | |
| Other solvents | Glycol ether dialkyl | Diethylene glycol diethyl ether | 60.5 | 60.5 | 60.5 | 60.5 | 60.5 | 60.5 | 60.5 | 60.5 | 60.5 | 60.5 |
| | | Diethylene glycol methyl ethyl ether | | | | | | | | | | |
| | | Dipropylene glycol dimethyl ether | | | | | | | | | | |
| | | Diethylene glycol dibutyl ether | | | | | | | | | | |
| | Glycol ether monoalkyl | Dipropylene glycol monomethyl ether | 10.0 | 10.0 | 10.0 | 10.0 | 10.0 | 10.0 | 10.0 | 10.0 | 10.0 | 10.0 |
| | | Triethylene glycol mono-n-butyl ether | | | | | | | | | | |
| | | Tetraethylene glycol monobutyl ether | | | | | | | | | | |
| | Carbonic acid es-ter | Propylene carbonate | | | | | | | | | | |

(continued)

| | Type | Name | Inherent viscosity of 90 mL/g or more | | | | | | | | | | |
|---|---|---|---|---|---|---|---|---|---|---|---|---|---|
| Resin | Acrylic resin | Acrylic resin 1 | 0.0% | 3.0 | 3.0 | 3.0 | 3.0 | 3.0 | 3.0 | 3.0 | 3.0 | 3.0 | 3.0 |
| | | Acrylic resin 2 | 2.2% | | | | | | | | | | |
| | | Acrylic resin 3 | 8.1% | | | | | | | | | | |
| | Vinyl chloride-vinyl acetate copolymer resin | Vinyl chloride-vinyl acetate copolymer resin 1 | 0.3% | 1.5 | 1.5 | 1.5 | 1.5 | 1.5 | 1.5 | 1.5 | 1.5 | 1.5 | 1.5 |
| | | Vinyl chloride-vinyl acetate copolymer resin 2 | 1.4% | | | | | | | | | | |
| | | Vinyl chloride-vinyl acetate copolymer resin 3 | 8.2% | | | | | | | | | | |
| | Cellulose resin | CAB-551-0.01 | 4.9% | | | | | | | | | | |
| | | CAB-553-0.4 | 29.0% | | | | | | | | | | |
| | Polyester resin | Polyester resin 1 | 1.5% | | | | | | | | | | |
| | Polyurethane resin | Polyurethane resin 1 | 2.2% | | | | | | | | | | |
| | Product name | Presence or absence of basic group | Amine value(mg) | | | | | | | | | | |

(continued)

| | Type | Name | Inherent viscosity of 90 mL/g or more | | | | | | | | | | |
|---|---|---|---|---|---|---|---|---|---|---|---|---|---|
| Dispersant | Solsperse32000 (Lubrizol) | YES | 35 | 1.5 | 1.5 | 1.5 | 1.5 | 1.5 | 1.5 | 1.5 | 1.5 | 1.5 | 1.5 |
| | Solsperse13300 (Lubrizol) | YES | 123 | | | | | | | | | | |
| | Solsperse13240 (Lubrizol) | YES | 91 | | | | | | | | | | |
| | Solsperse33000 (Lubrizol) | YES | 43 | | | | | | | | | | |
| | Solsperse38500 (Lubrlzol) | YES | 20 | | | | | | | | | | |
| | Solsperse76400 (Lubrizol) | YES | 15 | | | | | | | | | | |
| | Solsperse21000 (Lubrizol) | None | - | | | | | | | | | | |
| | Efka PX4701 (BASF) | YES | 40 | | | | | | | | | | |
| Dispersion aid | Solsperse5000s (Lubrizol) | | | | | | | | | | | | |
| Surfactant | Silicon-based additive | BYK-331 (BYK) | | 0.5 | 0.5 | 0.5 | 0.5 | 0.5 | 0.5 | 0.5 | 0.5 | 0.5 | 0.5 |
| | | BYK-313 (BYK) | | | | | | | | | | | |

(continued)

| | Type | Name | Inherent viscosity of 90 mL/g or more | | | | | | | | | | |
|---|---|---|---|---|---|---|---|---|---|---|---|---|---|
| Pigment | P.G.36① | FASTGEN GREEN 2YK (DIC) | | 3.0 | 3.0 | 3.0 | 3.0 | 3.0 | 3.0 | 3.0 | 3.0 | | |
| | P.G.36② | yanine Green 5370 (Dainichiseika Color & Chemicals Mfg, Co., Ltc | | | | | | | | | | 3.0 | |
| | P.G.7 | FASTGEN GREEN 5740 (DIC) | | | | | | | | | | | 3.0 |
| | P.G.58 | Fastogen GREEN A110 (DIC) | | | | | | | | | | | |
| | P.B.15:4 | FASTOGEN BLUE 5452K (DIC) | | | | | | | | | | | |
| | P.Y.155 | Ink Jet Yellow 4GC(Clariant) | | | | | | | | | | | |
| Total | | | | 100.0 | 100.0 | 100.0 | 100.0 | 100.0 | 100.0 | 100.0 | 100.0 | 100.0 | 100.0 |
| Bead diameter(mm) | | | | 0.3 | 0.3 | 0.3 | 0.3 | 0.3 | 0.3 | 0.3 | 0.3 | 0.3 | 0.3 |
| Dispersion time | | | | 2h | 2h | 2h | 2h | 2h | 2h | 2h | 2h | 2h | 2h |
| Value of D50(nm) | | | | 78 | 90 | 100 | 78 | 94 | 70 | 86 | 76 | 87 | 100 |
| Value of D90(nm) | | | | 172 | 169 | 142 | 173 | 148 | 178 | 173 | 168 | 163 | 151 |
| Inherent viscosity of 90 ml/g or more in total amount of resin | | | | 0.1% | 0.1% | 0.1% | 0.1% | 0.1% | 0.1% | 0.1% | 0.1% | 0.1% | 0.1% |

(continued)

| | Type | Name | Inherent viscosity of 90 mL/g or more | | | | | | | | | | |
|---|---|---|---|---|---|---|---|---|---|---|---|---|---|
| Evaluation item | | Storage stability | | 4 | 4 | 4 | 4 | 4 | 3 | 3 | 3 | 5 | 5 |
| | | Ejection Stability | | 5 | 5 | 5 | 5 | 5 | 5 | 5 | 5 | 5 | 5 |
| | | Cleaning recovery property | | 4 | 4 | 5 | 5 | 5 | 5 | 5 | 5 | 5 | 5 |
| | | Color tone stability (settleability) | | 5 | 5 | 5 | 5 | 5 | 5 | 5 | 5 | 5 | 5 |
| | | Surface drying property | | 5 | 5 | 5 | 4 | 4 | 4 | 4 | 4 | 5 | 5 |
| | | Bleeding property | | 5 | 5 | 5 | 4 | 4 | 4 | 4 | 4 | 5 | 5 |
| | | Weather resistance | | 5 | 5 | 5 | 5 | 5 | 5 | 5 | 5 | 5 | 5 |

[Table 25]

| | | | Example 3-27 | Reference Example 3-2 | Reference Example 3-3 | Reference Example 3-4 | Reference Example 3-5 | Example 3-28 | Example 3-29 | Example 3-30 | Example 3-31 | Example 3-32 |
|---|---|---|---|---|---|---|---|---|---|---|---|---|
| Classification | Type | Name | | | | | | | | | | |
| Solvent B | Alkyl amide-based solvent (bl) | N,N-diethylformamide | 20.0 | 20.0 | | 20.0 | 20.0 | 20.0 | 20.0 | 20.0 | 20.0 | 20.0 |
| | | N,N-diethylpropanamide | | | | | | | | | | |
| | | N,N-diethylacetamide | | | | | | | | | | |
| | | N,N-dimethylformamide | | | | | | | | | | |
| | Cyclic amide-based solvent (b2) | N-methyl- ε -caprolactam | | | | | | | | | | |
| | | N-vinyl caprolactam | | | | | | | | | | |
| | | ε-caprolactam | | | | | | | | | | |
| | | N-methyl-2-pyrolidone | | | | | | | | | | |
| | Lactone-based solvent (b3) | γ -butyrolactone | | | | | | | | | | |
| | | γ -valerolactone | | | | | | | | | | |
| | | ε -caprolactone | | | | | | | | | | |
| | | γ -heptanolactone | | | | | | | | | | |
| | | γ -hexanolactone | | | | | | | | | | |

(continued)

| | | | Example 3-27 | Reference Example 3-2 | Reference Example 3-3 | Reference Example 3-4 | Reference Example 3-5 | Example 3-28 | Example 3-29 | Example 3-30 | Example 3-31 | Example 3-32 |
|---|---|---|---|---|---|---|---|---|---|---|---|---|
| Classification | Type | Name | | | | | | | | | | |
| Other solvents | Glycol ether dialkyl | Diethylene glycol diethyl ether | 60.5 | 63.5 | 83.5 | 63.5 | 63.5 | 60.5 | 60.5 | 60.5 | 60.5 | 60.5 |
| | | Diethylene glycol methyl ethyl ether | | | | | | | | | | |
| | | Dipropylene glycol dimethyl ether | | | | | | | | | | |
| | | Diethylene glycol dibutyl ether | | | | | | | | | | |
| | Glycol ether monoalkyl | Dipropylene glycol monomethyl ether | 10.0 | 10.0 | 10.0 | 10.0 | 10.0 | 10.0 | 10.0 | 10.0 | 10.0 | 10.0 |
| | | Triethylene glycol mono-n-butyl ether | | | | | | | | | | |
| | | Tetraethylene glycol monobutyl ether | | | | | | | | | | |
| | Carbonic acid ester | Propylene carbonate | | | | | | | | | | |

(continued)

| | Type | Name | Inherent viscosity of 90 mL/g or more | | | | | | | | | | |
|---|---|---|---|---|---|---|---|---|---|---|---|---|---|
| Resin | Acrylic resin | Acrylic resin 1 | 0.0% | 3.0 | 3.0 | 3.0 | 3.0 | 3.0 | 3.0 | 3.0 | 3.0 | 3.0 | 3.0 |
| | | Acrylic resin 2 | 2.2% | | | | | | | | | | |
| | | Acrylic resin 3 | 8.1% | | | | | | | | | | |
| | Vinyl chloride-vinyl acetate copolymer resin | Vinyl chloride-vinyl acetate copolymer resin 1 | 0.3% | 1.5 | 1.5 | 1.5 | 1.5 | 1.5 | 1.5 | 1.5 | 1.5 | 1.5 | 1.5 |
| | | Vinyl chloride-vinyl acetate copolymer resin 2 | 1.4% | | | | | | | | | | |
| | | Vinyl chloride-vinyl acetate copolymer resin 3 | 8.2% | | | | | | | | | | |
| | Cellulose resin | CAB-551-0.01 | 4.9% | | | | | | | | | | |
| | | CAB-553-0.4 | 29.0% | | | | | | | | | | |
| | Polyester resin | Polyester resin 1 | 1.5% | | | | | | | | | | |
| | Polyurethane resin | Polyurethane resin 1 | 2.2% | | | | | | | | | | |
| | Product name | Presence or absence of basic group | Amine value(mg) | | | | | | | | | | |

(continued)

| | Type | Name | Inherent viscosity of 90 mL/g or more | | | | | | | | | | |
|---|---|---|---|---|---|---|---|---|---|---|---|---|---|
| Dispersant | Solsperse32000 (Lubrizol) | YES | 35 | 1.5 | 1.5 | 1.5 | 1.5 | 1.5 | 1.5 | 1.5 | 1.5 | 1.5 | 1.5 |
| | Solsperse13300 (Lubrizol) | YES | 123 | | | | | | | | | | |
| | Solsperse13240 (Lubrizol) | YES | 91 | | | | | | | | | | |
| | Solsperse33000 (Lubrizol) | YES | 43 | | | | | | | | | | |
| | Solsperse38500 (Lubrizol) | YES | 20 | | | | | | | | | | |
| | Solsperse76400 (Lubrizol) | YES | 15 | | | | | | | | | | |
| | Solsperse21000 (Lubrizol) | None | - | | | | | | | | | | |
| | Efka PX4701 (BASF) | YES | 40 | | | | | | | | | | |
| Dispersion alc | Solsperse5000s (Lubrizol) | | | | | | | | | | | | |
| Surfactant | Silicon-based additive | BYK-331 (BYK) | | 0.5 | 0.5 | 0.5 | 0.5 | 0.5 | 0.5 | 0.5 | 0.5 | 0.5 | 0.5 |
| | | BYK-313 (BYK) | | | | | | | | | | | |

(continued)

| | Type | Name | Inherent viscosity of 90 mL/g or more | | | | | | | | | | |
|---|---|---|---|---|---|---|---|---|---|---|---|---|---|
| Pigment | P.G.36① | FASTGEN GREEN 2YK CDIC) | | | | | | | 3.0 | 3.0 | 3.0 | 3.0 | 3.0 |
| | P.G.36② | yanine Green 5370 (Dainichiseika Color & Chemicals Mfg, Co., Ltd | | | | | | | | | | | |
| | P.G.7 | FASTGEN GREEN 5740 CDIC) | | | | | | | | | | | |
| | P.G.58 | Fastogen GREEN A110 CDIC) | | 3.0 | | | | | | | | | |
| | P.B.15:4 | FASTOGEN BLUE 5452K CDIC) | | | 1.5 | 3.0 | 3.0 | 3.0 | | | | | |
| | P.Y.155 | Ink Jet Yellow 4GC(Clariant) | | | 1.5 | | | | | | | | |
| Total | | | | 100.0 | 100.0 | 100.0 | 100.0 | 100.0 | 100.0 | 100.0 | 100.0 | 100.0 | 100.0 |
| Bead diameter(mm) | | | | 0.3 | 0.3 | 0.3 | 0.3 | 1.0 | 0.1 | 0.2 | 0.5 | 0.8 | 1.0 |
| Dispersion time | | | | 2h | 2h | 2h | 2h | 2h | 4h | 2h | 2h | 2h | 2h |
| Value of D50(nm) | | | | 84 | 96 | 79 | 76 | 150 | 33 | 56 | 110 | 150 | 150 |
| Value of D90(nm) | | | | 161 | 167 | 180 | 169 | 300 | 51 | 108 | 203 | 251 | 305 |
| Inherent viscosity of 90 ml/g or more in total amount of resin | | | | 0.1% | 0.1% | 0.1% | 0.1% | 0.1% | 0.1% | 0.1% | 0.1% | 0.1% | 0.1% |

(continued)

| | Type | Name | Inherent viscosity of 90 mL/g or more | | | | | | | | | | |
|---|---|---|---|---|---|---|---|---|---|---|---|---|---|
| Evaluation item | | Storage stability | | 4 | 5 | 5 | 5 | 5 | 3 | 5 | 5 | 5 | 5 |
| | | Ejection Stability | | 5 | 5 | 5 | 5 | 4 | 5 | 5 | 5 | 5 | 4 |
| | | Cleaning recovery property | | 5 | 5 | 5 | 5 | 5 | 5 | 5 | 5 | 5 | 4 |
| | | Color tone stability (settleability) | | 5 | 5 | 5 | 5 | 5 | 5 | 5 | 5 | 4 | 3 |
| | | Surface drying property | | 5 | 5 | 1 | 5 | 5 | 5 | 5 | 5 | 5 | 5 |
| | | Bleeding property | | 5 | 5 | 1 | 5 | 5 | 5 | 5 | 5 | 5 | 5 |
| | | Weather resistance | | 5 | 1 | 5 | 5 | 5 | 3 | 5 | 5 | 5 | 5 |

[Table 26]

| | | | Example 3-33 | Example 3-34 | Example 3-35 | Example 3-30 | Example 3-37 | Example 3-38 | Example 3-39 | Example 3-40 | Example 3-41 | Example 3-42 |
|---|---|---|---|---|---|---|---|---|---|---|---|---|
| Classification | Type | Name | | | | | | | | | | |
| Solvent B | Alkyl amide-based solvent (b1) | N,N-diethylformamide | 20.0 | 20.0 | 20.0 | 10.0 | 10.0 | 10.0 | 10.0 | 20.0 | 20.0 | 20.0 |
| | | N,N-diethylpropanamide | | | | | | | | | | |
| | | N,N-diethylacetamide | | | | | | | | | | |
| | | N,N-dimethylformamide | | | | | | | | | | |
| | Cyclic amide-based solvent (b2) | N-methyl-ε-caprolactam | | | | | | | | | | |
| | | N-vinyl caprolactam | | | | | | | | | | |
| | | ε -caprolactam | | | | | | | | | | |
| | | N-methyl-2-pyrolidone | | | | | | | | | | |
| | Lactone-based solvent (b3) | γ -butyrolactone | | | | | | 10.0 | | | | |
| | | γ -valerolactone | | | | | | | | | | |
| | | ε -caprolactone | | | | | | | 10.0 | | | |
| | | γ -heptanolactone | | | | | | | | | | |
| | | γ -hexanolactone | | | | | | | | | | |

(continued)

| | | | Example 3-33 | Example 3-34 | Example 3-35 | Example 3-30 | Example 3-37 | Example 3-38 | Example 3-39 | Example 3-40 | Example 3-41 | Example 3-42 |
|---|---|---|---|---|---|---|---|---|---|---|---|---|
| Classification | Type | Name | | | | | | | | | | |
| Other solvents | Glycol ether dialkyl | Diethylene glycol d iethyl ether | 60.5 | 64.4 | 63.8 | 63.0 | 60.0 | 60.5 | 60.5 | 60.5 | 60.5 | 60.5 |
| | | Diethylene glycol methyl ethyl ether | | | | | | | | | | |
| | | Dipropylene glycol dimethyl ether | | | | | | | | | | |
| | | Diethylene glycol dibutyl ether | | | | | | | | | | |
| | Glycol ether monoalkyl | Dipropylene glycol monomethyl ether | 10.0 | 10.0 | 10.0 | 10.0 | 10.0 | 10.0 | 10.0 | 10.0 | 10.0 | 10.0 |
| | | Triethylene glycol mono-n-butyl ether | | | | | | | | | | |
| | | Tetraethylene glycol monobutyl ether | | | | | | | | | | |
| | Carbonic acid es-ter | Propylene carbonate | | | | | | | | | | |

(continued)

| | Type | Name | Inherent viscosity of 90 mL/g or more | | | | | | | | | | |
|---|---|---|---|---|---|---|---|---|---|---|---|---|---|
| Resin | Acrylic resin | Acrylic resin 1 | 0.0% | 3.0 | 3.0 | 3.0 | 3.0 | 3.0 | 3.0 | 3.0 | 3.0 | 3.0 | |
| | | Acrylic resin 2 | 2.2% | | | | | | | | | | 3.0 |
| | | Acrylic resin 3 | 8.1% | | | | | | | | | | |
| | Vinyl chloride-vinyl acetate copolymer resin | Vinyl chloride-vinyl acetate copolymer resin 1 | 0.3% | 1.5 | 1.5 | 1.5 | 1.5 | 1.5 | | | | | 1.5 |
| | | Vinyl chloride-vinyl acetate copolymer resin 2 | 1.4% | | | | | | 1.5 | | | | |
| | | Vinyl chloride-vinyl acetate copolymer resin 3 | 8.2% | | | | | | | 1.5 | | | |
| | Cellulose resin | CAB-551-0.01 | 4.9% | | | | | | | | 1.5 | | |
| | | CAB-553-0.4 | 29.0% | | | | | | | | | 1.5 | |
| | Polyester resin | Polyester resin 1 | 1.5% | | | | | | | | | | |
| | Polyurethane resin | Polyurethane resin 1 | 2.2% | | | | | | | | | | |
| | Product name | Presence or absence of basic group | Amine value(mg) | | | | | | | | | | |

(continued)

| | Type | Name | Inherent viscosity of 90 mL/g or more | | | | | | | | | | |
|---|---|---|---|---|---|---|---|---|---|---|---|---|---|
| Dispersant | Solsperse32000 (Lubrizol) | YES | 35 | 1.5 | 0.2 | 0.4 | 4.0 | 5.0 | 1.5 | 1.5 | 1.5 | 1.5 | 1.5 |
| | Solsperse13300 (Lubrizol) | YES | 123 | | | | | | | | | | |
| | Solsperse13240 (Lubrizol) | YES | 91 | | | | | | | | | | |
| | Solsperse33000 (Lubrizol) | YES | 43 | | | | | | | | | | |
| | Solsperse38500 (Lubrlzol) | YES | 20 | | | | | | | | | | |
| | Solsperse76400 (Lubrizol) | YES | 15 | | | | | | | | | | |
| | Solsperse21000 (Lubrizol) | None | - | | | | | | | | | | |
| | Efka PX4701 (BASF) | YES | 40 | | | | | | | | | | |
| Dispersion aid | Solsperse5000s (Lubrizol) | | | | | | | | | | | | |
| Surfactant | Silicon-based additive | BYK-331 (BYK) | | 0.5 | 0.5 | 0.5 | 0.5 | 0.5 | 0.5 | 0.5 | | 0.5 | 0.5 |
| | | BYK-313 (BYK) | | | | | | | | | 0.5 | | |

(continued)

| | Type | Name | Inherent viscosity of 90 mL/g or more | | | | | | | | | | |
|---|---|---|---|---|---|---|---|---|---|---|---|---|---|
| Pigment | P.G.36① | FASTGEN GREEN 2YK (DIC) | | 3.0 | 0.4 | 0.8 | 8.0 | 10.0 | 3.0 | 3.0 | 3.0 | 3.0 | 3.0 |
| | P.G.36② | yanine Green 5370 (Dainichiseika Color & Chemicals Mfg, Co., Ltc | | | | | | | | | | | |
| | P.G.7 | FASTGEN GREEN 5740 (DIC) | | | | | | | | | | | |
| | P.G.58 | Fastogen GREEN A110 (DIC) | | | | | | | | | | | |
| | P.B.15:4 | FASTOGEN BLUE 5452K (DIC) | | | | | | | | | | | |
| | P.Y.155 | Ink Jet Yellow 4GC(Clariant) | | | | | | | | | | | |
| Total | | | | 100.0 | 100.0 | 100.0 | 100.0 | 100.0 | 100.0 | 100.0 | 100.0 | 100.0 | 100.0 |
| Bead diameter(mm) | | | | 1.2 | 0.3 | 0.3 | 0.3 | 0.3 | 0.3 | 0.3 | 0.3 | 0.3 | 0.3 |
| Dispersion time | | | | 2h | 2h | 2h | 2h | 2h | 2h | 2h | 2h | 2h | 2h |
| Value of D50(nm) | | | | 207 | 81 | 77 | 93 | 80 | 88 | 87 | 75 | 98 | 73 |
| Value of D90(nm) | | | | 350 | 151 | 169 | 147 | 178 | 162 | 155 | 152 | 179 | 158 |
| Inherent viscosity of 90 ml/g or more in total amount of resin | | | | 0.1% | 0.1% | 0.1% | 0.1% | 0.1% | 0.5% | 2.7% | 1.6% | 9.7% | 1.6% |

(continued)

| | Type | Name | Inherent viscosity of 90 mL/g or more | | | | | | | | | | |
|---|---|---|---|---|---|---|---|---|---|---|---|---|---|
| Evaluation item | | Storage stability | | 4 | 5 | 4 | 4 | 3 | 5 | 5 | 5 | 5 | 5 |
| | | Ejection Stability | | 3 | 5 | 5 | 5 | 3 | 5 | 5 | 5 | 2 | 5 |
| | | Cleaning recovery property | | 3 | 5 | 5 | 5 | 5 | 5 | 5 | 5 | 4 | 5 |
| | | Color tone stability (settleability) | | 2 | 5 | 5 | 4 | 3 | 5 | 5 | 5 | 4 | 5 |
| | | Surface drying property | | 5 | 5 | 5 | 5 | 5 | 5 | 5 | 5 | 5 | 5 |
| | | Bleeding property | | 5 | 5 | 5 | 5 | 5 | 5 | 5 | 5 | 5 | 5 |
| | | Weather resistance | | 5 | 2 | 4 | 5 | 5 | 5 | 5 | 5 | 5 | 5 |

[Table 27]

| | | | Example 3-43 | Example 3-44 | Example 3-45 | Example 3-40 | Example 3-47 | Example 3-48 | Example 3-49 | Example 3-50 | Example 3-51 | Example 3-52 |
|---|---|---|---|---|---|---|---|---|---|---|---|---|
| Classification | Type | Name | | | | | | | | | | |
| Solvent B | Alkyl amide-based solvent (b1) | N,N-diethylformamide | 20.0 | 20.0 | 20.0 | 20.0 | 20.0 | 20.0 | 20.0 | 20.0 | 20.0 | 20.0 |
| | | N,N-diethylpropanamide | | | | | | | | | | |
| | | N,N-diethylacetamide | | | | | | | | | | |
| | | N,N-dimethylformamide | | | | | | | | | | |
| | Cyclic amide-based solvent (b2) | N-methyl-ε-caprolactam | | | | | | | | | | |
| | | N-vinyl caprolactam | | | | | | | | | | |
| | | ε -caprolactam | | | | | | | | | | |
| | | N-methyl-2-pyrolidone | | | | | | | | | | |
| | Lactone-based solvent (b3) | γ -buryrolactone | | | | | | | | | | |
| | | γ -valerolactone | | | | | | | | | | |
| | | ε -caprolactone | | | | | | | | | | |
| | | γ -heptanolactone | | | | | | | | | | |
| | | γ -hexanolactone | | | | | | | | | | |

(continued)

| | | | Example 3-43 | Example 3-44 | Example 3-45 | Example 3-40 | Example 3-47 | Example 3-48 | Example 3-49 | Example 3-50 | Example 3-51 | Example 3-52 |
|---|---|---|---|---|---|---|---|---|---|---|---|---|
| Classification | Type | Name | | | | | | | | | | |
| Other solvents | Glycol ether dialkyl | Diethylene glycol d iethyl ether | 60.5 | 60.5 | 60.5 | 60.5 | 60.5 | 60.5 | 60.5 | 60.5 | 60.5 | 60.5 |
| | | Diethylene glycol methyl ethyl ether | | | | | | | | | | |
| | | Dipropylene glycol dimethyl ether | | | | | | | | | | |
| | | Diethylene glycol dibutyl ether | | | | | | | | | | |
| | Glycol ether monoalkyl | Dipropylene glycol monomethyl ether | 10.0 | 10.0 | 10.0 | 10.0 | 10.0 | 10.0 | 10.0 | 10.0 | 10.0 | 10.0 |
| | | Triethylene glycol mono-n-butyl ether | | | | | | | | | | |
| | | Tetraethylene glycol monobutyl ether | | | | | | | | | | |
| | Carbonic acid ester | Propylene carbonate | | | | | | | | | | |

(continued)

| | Type | Name | Inherent viscosity of 90 mL/g or more | | | | | | | | | | |
|---|---|---|---|---|---|---|---|---|---|---|---|---|---|
| Resin | Acrylic resin | Acrylic resin 1 | 0.0% | | | | | | | 1.5 | | | |
| | | Acrylic resin 2 | 2.2% | 3.0 | 3.0 | | | | | | 4.5 | | |
| | | Acrylic resin 3 | 8.1% | | | 3.0 | | | | | | 4.5 | |
| | Vinyl chloride-vinyl acetate copolymer resin | Vinyl chloride-vinyl acetate copolymer resin 1 | 0.3% | | | 1.5 | 1.5 | 3.0 | 3.0 | | | | 4.5 |
| | | Vinyl chloride-vinyl acetate copolymer resin 2 | 1.4% | | | | | | | | | | |
| | | Vinyl chloride-vinyl acetate copolymer resin 3 | 8.2% | | | | | | | 3.0 | | | |
| | Cellulose resin | CAB-551-0.01 | 4.9% | | | | 3.0 | 1.5 | | | | | |
| | | CAB-553-0.4 | 29.0% | | | | | | 1.5 | | | | |
| | Polyester resin | Polyester resin 1 | 1.5% | 1.5 | | | | | | | | | |
| | Polyurethane resin | Polyurethane resin 1 | 2.2% | | 1.5 | | | | | | | | |
| | Product name | Presence or absence of basic group | Amine value(mg) | | | | | | | | | | |

(continued)

| | Type | Name | Inherent viscosity of 90 mL/g or more | | | | | | | | | | |
|---|---|---|---|---|---|---|---|---|---|---|---|---|---|
| Dispersant | Solsperse32000 (Lubrizol) | YES | 35 | 1.5 | 1.5 | 1.5 | 1.5 | 1.5 | 1.5 | 1.5 | 1.5 | 1.5 | 1.5 |
| | Solsperse13300 (Lubrizol) | YES | 123 | | | | | | | | | | |
| | Solsperse13240 (Lubrizol) | YES | 91 | | | | | | | | | | |
| | Solsperse33000 (Lubrizol) | YES | 43 | | | | | | | | | | |
| | Solsperse38500 (Lubrlzol) | YES | 20 | | | | | | | | | | |
| | Solsperse76400 (Lubrizol) | YES | 15 | | | | | | | | | | |
| | Solsperse21000 (Lubrizol) | None | - | | | | | | | | | | |
| | Efka PX4701 (BASF) | YES | 40 | | | | | | | | | | |
| Dispersion aid | Solsperse5000s (Lubrizol) | | | | | | | | | | | | |
| Surfactant | Silicon-based additive | BYK-331 (BYK) | | | 0.5 | 0.5 | 0.5 | | 0.5 | | | 0.5 | |
| | | BYK-313 (BYK) | | 0.5 | | | | 0.5 | | 0.5 | 0.5 | | 0.5 |

(continued)

| | Type | Name | Inherent viscosity of 90 mL/g or more | | | | | | | | | | |
|---|---|---|---|---|---|---|---|---|---|---|---|---|---|
| Pigment | P.G.36① | FASTGEN GREEN 2YK (DIC) | | 3.0 | 3.0 | 3.0 | 3.0 | 3.0 | 3.0 | 3.0 | 3.0 | 3.0 | 3.0 |
| | P.G.36② | yanine Green 5370 (Dainichiseika Color & Chemicals Mfg, Co., Ltc | | | | | | | | | | | |
| | P.G.7 | FASTGEN GREEN 5740 (DIC) | | | | | | | | | | | |
| | P.G.58 | Fastogen GREEN A110 (DIC) | | | | | | | | | | | |
| | P.B.15:4 | FASTOGEN BLUE 5452K (DIC) | | | | | | | | | | | |
| | P.Y.155 | Ink Jet Yellow 4GC(Clariant) | | | | | | | | | | | |
| Total | | | | 100.0 | 100.0 | 100.0 | 100.0 | 100.0 | 100.0 | 100.0 | 100.0 | 100.0 | 100.0 |
| Bead diameter(mm) | | | | 0.3 | 0.3 | 0.3 | 0.3 | 0.3 | 0.3 | 0.3 | 0.3 | 0.3 | 0.3 |
| Dispersion time | | | | 2h | 2h | 2h | 2h | 2h | 2h | 2h | 2h | 2h | 2h |
| Value of D50(nm) | | | | 70 | 76 | 81 | 92 | 93 | 81 | 77 | 76 | 88 | 83 |
| Value of D90(nm) | | | | 165 | 144 | 180 | 158 | 171 | 173 | 167 | 146 | 165 | 158 |
| Inherent viscosity of 90 ml/g or more in total amount of resin | | | | 2.2% | 2.2% | 5.5% | 3.4% | 1.8% | 9.9% | 5.5% | 2.2% | 8.1% | 0.3% |

(continued)

| | Type | Name | Inherent viscosity of 90 mL/g or more | | | | | | | | | | |
|---|---|---|---|---|---|---|---|---|---|---|---|---|---|
| Evaluation item | | Storage stability | | 5 | 5 | 5 | 5 | 5 | 5 | 5 | 4 | 4 | 3 |
| | | Ejection Stability | | 5 | 5 | 2 | 5 | 5 | 2 | 2 | 5 | 2 | 5 |
| | | Cleaning recovery property | | 5 | 5 | 3 | 5 | 5 | 4 | 3 | 5 | 4 | 5 |
| | | Color tone stability (settleability) | | 5 | 5 | 4 | 5 | 5 | 4 | 4 | 5 | 5 | 5 |
| | | Surface drying property | | 5 | 5 | 5 | 5 | 5 | 5 | 5 | 5 | 5 | 5 |
| | | Bleeding property | | 5 | 5 | 5 | 5 | 5 | 5 | 5 | 5 | 5 | 5 |
| | | Weather resistance | | 5 | 5 | 5 | 5 | 5 | 5 | 5 | 5 | 5 | 5 |

[Table 28]

| | | | Example 3-53 | Example 3-54 | Example 3-55 | Example 3-56 | Example 3-57 | Example 3-58 | Example 3-59 | Example 3-60 | Example 3-61 | Example 3-62 |
|---|---|---|---|---|---|---|---|---|---|---|---|---|
| Classification | Type | Name | | | | | | | | | | |
| Solvent B | Alkyl amide-based solvent (b1) | N,N-diethylformamide | 20.0 | 20.0 | 20.0 | 20.0 | 20.0 | 20.0 | 20.0 | 20.0 | 20.0 | 20.0 |
| | | N,N-diethylpropanamide | | | | | | | | | | |
| | | N,N-diethylacetamide | | | | | | | | | | |
| | | N,N-dimethylformamide | | | | | | | | | | |
| | Cyclic amide-based solvent (b2) | N-methyl-ε-caprolactam | | | | | | | | | | |
| | | N-vinyl caprolactam | | | | | | | | | | |
| | | ε -caprolactam | | | | | | | | | | |
| | | N-methyl-2-pyrolidone | | | | | | | | | | |
| | Lactone-based solvent (b3) | γ -buryrolactone | | | | | | | | | | |
| | | γ -valerolactone | | | | | | | | | | |
| | | ε -caprolactone | | | | | | | | | | |
| | | γ -heptanolactone | | | | | | | | | | |
| | | γ -hexanolactone | | | | | | | | | | |

(continued)

| | | | Example 3-53 | Example 3-54 | Example 3-55 | Example 3-56 | Example 3-57 | Example 3-58 | Example 3-59 | Example 3-60 | Example 3-61 | Example 3-62 |
|---|---|---|---|---|---|---|---|---|---|---|---|---|
| Classification | Type | Name | | | | | | | | | | |
| Other solvents | Glycol ether dialkyl | Diethylene glycol d iethyl ether | 60.5 | 60.5 | 60.5 | 60.5 | 60.5 | 60.5 | 60.5 | 60.5 | 61.5 | 61.3 |
| | | Diethylene glycol methyl ethyl ether | | | | | | | | | | |
| | | Dipropylene glycol dimethyl ether | | | | | | | | | | |
| | | Diethylene glycol dibutyl ether | | | | | | | | | | |
| | Glycol ether monoalkyl | Dipropylene glycol monomethyl ether | 10.0 | 10.0 | 10.0 | 10.0 | 10.0 | 10.0 | 10.0 | 10.0 | 10.0 | 10.0 |
| | | Triethylene glycol mono-n-butyl ether | | | | | | | | | | |
| | | Tetraethylene glycol monobutyl ether | | | | | | | | | | |
| | Carbonic acid es-ter | Propylene carbonate | | | | | | | | | | |

(continued)

| | Type | Name | Inherent viscosity of 90 mL/g or more | | | | | | | | | | |
|---|---|---|---|---|---|---|---|---|---|---|---|---|---|
| Resin | Acrylic resin | Acrylic resin 1 | 0.0% | | | 3.0 | 3.0 | 3.0 | 3.0 | 3.0 | 3.0 | 3.0 | 3.0 |
| | | Acrylic resin 2 | 2.2% | | | | | | | | | | |
| | | Acrylic resin 3 | 8.1% | | | | | | | | | | |
| | Vinyl chloride-vinyl acetate copolymer resin | Vinyl chloride-vinyl acetate copolymer resin 1 | 0.3% | | | 1.5 | 1.5 | 1.5 | 1.5 | 1.5 | 1.5 | 1.5 | 1.5 |
| | | Vinyl chloride-vinyl acetate copolymer resin 2 | 1.4% | 4.5 | | | | | | | | | |
| | | Vinyl chloride-vinyl acetate copolymer resin 3 | 8.2% | | 4.5 | | | | | | | | |
| | Cellulose resin | CAB-551-0.01 | 4.9% | | | | | | | | | | |
| | | CAB-553-0.4 | 29.0% | | | | | | | | | | |
| | Polyester resin | Polyester resin 1 | 1.5% | | | | | | | | | | |
| | Polyurethane resin | Polyurethane resin 1 | 2.2% | | | | | | | | | | |
| | Product name | Presence or absence of basic group | Amine value(mg) | | | | | | | | | | |

(continued)

| | Type | Name | Inherent viscosity of 90 mL/g or more | | | | | | | | | | |
|---|---|---|---|---|---|---|---|---|---|---|---|---|---|
| Dispersant | Solsperse32000 (Lubrizol) | YES | 35 | 1.5 | 1.5 | | | | | | | 0.5 | 0.7 |
| | Solsperse13300 (Lubrizol) | YES | 123 | | | | 1.5 | | | | | | |
| | Solsperse13240 (Lubrizol) | YES | 91 | | | | | 1.5 | | | | | |
| | Solsperse33000 (Lubrizol) | YES | 43 | | | | | | 1.5 | | | | |
| | Solsperse38500 (Lubrlzol) | YES | 20 | | | | | | | 1.5 | | | |
| | Solsperse76400 (Lubrizol) | YES | 15 | | | | | | | | 1.5 | | |
| | Solsperse21000 (Lubrizol) | None | - | | | 1.5 | | | | | | | |
| | Efka PX4701 (BASF) | YES | 40 | | | | | | | | | | |
| Dispersion aid | Solsperse5000s (Lubrizol) | | | | | | | | | | | | |
| Surfactant | Silicon-based additive | BYK-331 (BYK) | | 0.5 | 0.5 | 0.5 | 0.5 | 0.5 | 0.5 | 0.5 | 0.5 | 0.5 | 0.5 |
| | | BYK-313 (BYK) | | | | | | | | | | | |

(continued)

| | Type | Name | Inherent viscosity of 90 mL/g or more | | | | | | | | | | |
|---|---|---|---|---|---|---|---|---|---|---|---|---|---|
| Pigment | P.G.36① | FASTGEN GREEN 2YK (DIC) | | 3.0 | 3.0 | 3.0 | 3.0 | 3.0 | 3.0 | 3.0 | 3.0 | 3.0 | 3.0 |
| | P.G.36② | yanine Green 5370 (Dainichiseika Color & Chemicals Mfg, Co., Ltc | | | | | | | | | | | |
| | P.G.7 | FASTGEN GREEN 5740 (DIC) | | | | | | | | | | | |
| | P.G.58 | Fastogen GREEN A110 (DIC) | | | | | | | | | | | |
| | P.B.15:4 | FASTOGEN BLUE 5452K (DIC) | | | | | | | | | | | |
| | P.Y.155 | Ink Jet Yellow 4GC(Clariant) | | | | | | | | | | | |
| Total | | | | 100.0 | 100.0 | 100.0 | 100.0 | 100.0 | 100.0 | 100.0 | 100.0 | 100.0 | 100.0 |
| Bead diameter(mm) | | | | 0.3 | 0.3 | 0.3 | 0.3 | 0.3 | 0.3 | 0.3 | 0.3 | 0.3 | 0.3 |
| Dispersion time | | | | 2h | 2h | 2h | 2h | 2h | 2h | 2h | 2h | 2h | 2h |
| Value of D50(nm) | | | | 78 | 90 | 100 | 78 | 94 | 70 | 86 | 76 | 87 | 100 |
| Value of D90(nm) | | | | 172 | 169 | 142 | 173 | 148 | 178 | 173 | 168 | 163 | 151 |
| Inherent viscosity of 90 ml/g or more in total amount of resin | | | | 1.4% | 8.2% | 0.1% | 0.1% | 0.1% | 0.1% | 0.1% | 0.1% | 0.1% | 0.1% |

(continued)

| | Type | Name | Inherent viscosity of 90 mL/g or more | | | | | | | | | | |
|---|---|---|---|---|---|---|---|---|---|---|---|---|---|
| Evaluation item | | Storage stability | | 3 | 3 | 2 | 3 | 5 | 5 | 4 | 4 | 2 | 4 |
| | | Ejection Stability | | 5 | 2 | 3 | 4 | 4 | 5 | 4 | 4 | 5 | 5 |
| | | Cleaning recovery property | | 5 | 4 | 5 | 4 | 5 | 5 | 5 | 5 | 5 | 5 |
| | | Color tone stability (settleability) | | 5 | 5 | 4 | 4 | 4 | 4 | 4 | 4 | 4 | 4 |
| | | Surface drying property | | 5 | 5 | 5 | 5 | 5 | 5 | 5 | 5 | 5 | 5 |
| | | Bleeding property | | 5 | 5 | 5 | 5 | 5 | 5 | 5 | 5 | 5 | 5 |
| | | Weather resistance | | 5 | 5 | 5 | 5 | 5 | 5 | 5 | 5 | 5 | 5 |

[Table 29]

| | | | Example 3-63 | Example 3-64 | Example 3-65 | Example 3-66 | Example 3-67 | Example 3-68 |
|---|---|---|---|---|---|---|---|---|
| Classification | Type | Name | | | | | | |
| Solvent B | Alkyl amide-based solvent (b1) | N,N-diethylformamide | 20.0 | 20.0 | 20.0 | 20.0 | | |
| | | N,N-diethyl prop an amide | | | | | | |
| | | N,N-diethylacetamide | | | | | | |
| | | N,N-dimethylformamide | | | | | | |
| | Cyclic amide-based solvent (b2) | N-methyl- ε -caprolactam | | | | | | |
| | | N-vinyl caprolactam | | | | | 20.0 | |
| | | ε -caprolactam | | | | | | 20.0 |
| | | N-methyl-2-pyrolidone | | | | | | |
| | Lactone-based solvent (b3) | γ -butyrolactone | | | | | | |
| | | γ -valerolactone | | | | | | |
| | | ε -caprolactone | | | | | | |
| | | γ -heptanolactone | | | | | | |
| | | γ -hexanolactone | | | | | | |
| Other solvents | Glycol ether dialkyl | Diethylene glycol diethyl ether | 58.0 | 57.4 | 61.0 | 20.5 | 20.5 | 20.5 |
| | | Diethylene glycol methyl ethyl ether | | | | 40.0 | 40.0 | 40.0 |
| | | Dipropylene glycol dimethyl ether | | | | | | |
| | | Diethylene glycol dibutyl ether | | | | | | |
| | Glycol ether monoalkyl | Dipropylene glycol monomethyl ether | 100 | 10.0 | 100 | 5.0 | 5.0 | 5.0 |
| | | Triethylene glycol mono-n-butyl ether | | | | 5.0 | 5.0 | 5.0 |
| | | Tetraethylene glycol monobutyl ether | | | | | | |
| | Carbonic acid ester | Propylene carbonate | | | | | | |

(continued)

| | Type | Name | Inherent viscosity of 90 mL/g or more | | | | | | |
|---|---|---|---|---|---|---|---|---|---|
| Resin | Acrylic resin | Acrylic resin 1 | 0.0% | 3.0 | 3.0 | 3.0 | 3.0 | 3.0 | 3.0 |
| | | Acrylic resin 2 | 2.2% | | | | | | |
| | | Acrylic resin 3 | 8.1% | | | | | | |
| | Vinyl chloride-vinyl acetate copolymer resin | Vinyl chloride-vinyl acetate copolymer resin 1 | 0.3% | 1.5 | 1.5 | 1.5 | 1.5 | 1.5 | 1.5 |
| | | Vinyl chloride-vinyl acetate copolymer resin 2 | 1.4% | | | | | | |
| | | Vinyl chloride-vinyl acetate copolymer resin 3 | 8.2% | | | | | | |
| | Cellulose resin | CAB-551-0.01 | 4.9% | | | | | | |
| | | CAB-553-0.4 | 29.0% | | | | | | |
| | Polyester resin | Polyester resin 1 | 1.5% | | | | | | |
| | Polyurethane resin | Polyurethane resin 1 | 2.2% | | | | | | |
| | Product name | Presence or absence of basic group | Amine value(mg) | | | | | | |

(continued)

| | Type | Name | Inherent viscosity of 90 mL/g or more | | | | | | |
|---|---|---|---|---|---|---|---|---|---|
| Dispersant | Solsperse32000 (Lubrizol) | YES | 35 | 4.0 | 4.6 | 1.5 | | | |
| | Solsperse13300 (Lubrizol) | YES | 123 | | | | | | |
| | Solsperse13240 (Lubrizol) | YES | 91 | | | | | | |
| | Solsperse33000 (Lubrizol) | YES | 43 | | | | | | |
| | Solsperse38500 (Lubrizol) | YES | 20 | | | | | | |
| | Solsperse76400 (Lubrizol) | YES | 15 | | | | | | |
| | Solsperse21000 (Lubrizol) | None | - | | | | | | |
| | Efka PX4701 (BASF) | YES | 40 | | | | 1.5 | 1.5 | 1.5 |
| Dispersion aic | Solsperse5000s (Lubrizol) | | | | | | | | |
| Surfactant | Silicon-based additive | BYK-331 (BYK) | | 0.5 | 0.5 | 0.0 | 0.5 | 0.5 | 0.5 |
| | | BYK-313 (BYK) | | | | | | | |
| Pigment | P.G.36① | FASTGEN GREEN 2YK (DIC) | | 3.0 | 3.0 | 3.0 | 3.0 | 3.0 | 3.0 |
| | P.G.36② | yanine Green 5370 (Dainichiseika Color & Chemicals Mfg, Co., Ltd | | | | | | | |
| | P.G.7 | FASTGEN GREEN 5740 (DIC) | | | | | | | |
| | P.G.58 | Fastogen GREEN A110 (DIC) | | | | | | | |
| | P.B.15:4 | FASTOGEN BLUE 5452K (DIC) | | | | | | | |
| | P.Y.155 | Ink Jet Yellow 4GC(Clariant) | | | | | | | |

(continued)

| | Type | Name | Inherent viscosity of 90 mL/g or more | | | | | | |
|---|---|---|---|---|---|---|---|---|---|
| Total | | | | 100.0 | 100.0 | 100.0 | 100.0 | 100.0 | 100.0 |
| Bead diameter(mm) | | | | 0.3 | 0.3 | 0.3 | 0.3 | 0.3 | 0.3 |
| Dispersion time | | | | 2h | 2h | 2h | 2h | 2h | 2h |
| Value of D50(nm) | | | | 84 | 96 | 76 | 100 | 100 | 100 |
| Value of D90(nm) | | | | 161 | 167 | 169 | 150 | 150 | 150 |
| Inherent viscosity of 90 ml/g or more in total amount of resin | | | | 0.1% | 0.1% | 0.1% | 0.1% | 0.1% | 0.1% |
| Evaluation item | | Storage stability | | 5 | 5 | 5 | 5 | 4 | 4 |
| | | Ejection Stability | | 5 | 5 | 5 | 5 | 5 | 5 |
| | | Cleaning recovery property | | 5 | 5 | 5 | 5 | 5 | 5 |
| | | Color tone stability (settleability) | | 4 | 4 | 5 | 5 | 4 | 4 |
| | | Surface drying property | | 5 | 2 | 5 | 5 | 5 | 5 |
| | | Bleeding property | | 5 | 5 | 4 | 5 | 5 | 5 |
| | | Weather resistance | | 5 | 5 | 5 | 5 | 5 | 5 |

In the tables, "C. I. Pigment Green 7" is chlorinated copper phthalocyanine and corresponds to a halogenated phthalocyanine pigment (density: 2.0 g/cm$^3$).

In the tables, "C. I. Pigment Green 36" is brominated chlorinated copper phthalocyanine and corresponds to the halogenated phthalocyanine pigment (density: 2.7 g/cm$^3$).

In the tables, "C. I. Pigment Green 58" is a halogenated zinc phthalocyanine and corresponds to the halogenated phthalocyanine pigment.

In the tables, "C. I. Pigment Blue 154" (density: 1.6 g/cm$^3$) and "C. I. Pigment Yellow 155" (density: 1.45 g/cm$^3$) correspond to pigments that are not the halogenated phthalocyanine pigment.

As can be seen from Tables 21 to 29, the nonaqueous ink compositions in the examples containing the halogenated phthalocyanine pigment A3 and an organic solvent containing the organic solvent B (at least one selected from the group consisting of the alkyl amide-based solvent (b1), the cyclic amide-based solvent (b2), and the lactone-based solvent (b3)) have high storage stability, color tone stability, and cleaning recovery property even though the halogenated phthalocyanine pigment is contained.

In particular, in the nonaqueous ink compositions of Example 3-8 to Example 3-14 in which a content of the organic solvent B (alkyl amide-based solvent) was changed, the nonaqueous ink compositions of Example 3-9 to Example 3-14 in which the content of the organic solvent B (alkyl amide-based solvent) was 5% by mass or more had better color tone stability than that of Example 3-8.

In addition, in the nonaqueous ink compositions of Example 3-15 to Example 3-24, Example 3-67, and Example 3-68 in which a type of the organic solvent B was changed to each of the alkyl amide-based solvent (b1), the cyclic amide-based solvent (b2), and the lactone-based solvent (b3), the storage stability and the color tone stability were good.

In addition, in the nonaqueous ink compositions of Example 3-25 to Example 3-27 in which a type of the halogenated phthalocyanine pigment A3 was changed, the storage stability and the color tone stability were good as in the nonaqueous ink composition of Example 3-1.

In addition, in the nonaqueous ink compositions of Example 3-28 to Example 3-33 in which a volume-based cumulative 50% particle diameter (D50) and a volume-based cumulative 90% particle diameter (D90) of the halogenated phthalocyanine pigment A3 were changed, in Example 3-28 to Example 3-31 in which D50 was 150 nm or less and D90 was 300 nm or less, the storage stability and the color tone stability were better than those of the nonaqueous ink composition of Example 3-33.

In addition, in the nonaqueous ink compositions of Example 3-34 to Example 3-37 in which a content of the halogenated phthalocyanine pigment A3 was changed, the nonaqueous ink compositions of Example 3-34 to Example 3-36 in which the content of the pigment A3 was 0.1% by mass or more and 8.0% by mass or less had better storage stability and color tone stability than the nonaqueous ink composition of Example 3-37.

Further, in the nonaqueous ink compositions in Example 3-39 to Example 3-54 in which a content of a resin having an intrinsic viscosity at 25°C of 90 mL/g or more is changed, the nonaqueous ink compositions in the examples in which an amount of the resin having the intrinsic viscosity at 25°C of 90 mL/g or more is in a range of 5% by mass or less in a total amount of the resin have excellent solid filling and ejection stability as compared with that in the nonaqueous ink compositions in the examples in which the amount of the resin is in a range of more than 5% by mass.

In addition, in Example 3-55 to Example 3-60 and Example 3-66 in which a type of the pigment dispersant was changed, the nonaqueous ink compositions of Example 3-56 to Example 3-60 and Example 3-66 in which the pigment dispersant having a basic group was used had excellent storage stability and ejection stability as compared with the nonaqueous ink composition of Example 3-55. Among them, the nonaqueous ink compositions of Example 3-57 to Example 3-60 and Example 3-66 having an amine value in a range of 20 mgKOH/g or more and 100 mgKOH/g or less exhibited particularly excellent storage stability and ejection stability.

In addition, in Example 3-61 to Example 3-64 in which a content of the pigment dispersant was changed, ink compositions of Example 3-61 to Example 3-63 in which a content thereof was in a range of 5 parts by mass or more and 150 parts by mass or less with respect to 100 parts by mass of the pigment in the nonaqueous ink composition had an excellent surface drying property as compared with the ink composition of Example 3-64.

In addition, in an ink composition of Example 3-68 containing no a surfactant having a siloxane skeleton, the bleeding property was relatively slightly lowered.

On the other hand, the nonaqueous ink compositions of Comparative Example 3-1 to Comparative Example 3-3 containing no the organic solvent B (at least one selected from the group consisting of the alkyl amide-based solvent (b1), the cyclic amide-based solvent (b2), and the lactone-based solvent (b3)) did not exhibit the effect of the present invention.

Further, the nonaqueous ink composition of Reference Example 3-1 containing no the halogenated phthalocyanine pigment A3 had excellent storage stability and color tone stability even though the organic solvent B was not contained.

4. Evaluation 2

The nonaqueous ink composition of Example 3-1 produced as described above was used and evaluated according to difference in a content of water. Specifically, water (ion-exchanged water) in an amount shown in the following table (parts by mass relative to 100 parts by mass of the nonaqueous ink composition) was added to the nonaqueous ink composition of Example 3-1 produced as described above, and the nonaqueous ink composition after the addition of water was evaluated in the same manner as described above.

The "content of water" in the table is a value obtained using a Karl Fischer Moisture Meter 901 (manufactured by Metrohm Japan Co., Ltd.).

[Table 30]

| | Example 3-1 | Example 3-69 | Example 3-70 |
|---|---|---|---|
| Added amount of water (Parts by mass) | None | 0.10% | 0.50% |
| Content of water (mass%) | 0.28 | 0.40 | 0.83 |
| Storage stability | 5 | 4 | 3 |
| Ejection Stability | 5 | 4 | 4 |
| Cleaning recovery property | 5 | - | - |
| Color tone stability (settleability) | 5 | 4 | 3 |
| Surface drying property | 5 | - | - |
| Evaluation of bleeding property | 5 | - | - |
| Evaluation of weather resistance | 5 | - | - |

As can be seen from Table 30, as a content of water is smaller, the storage stability and the ejection stability are more effectively improved.

## Claims

1. A nonaqueous ink composition to be ejected by an inkjet method, the nonaqueous ink composition comprising: a pigment; a pigment dispersant; and an organic solvent,

the pigment containing at least one of a pigment A1 represented by the following formula (1-1) or a pigment A2 represented by the following formula (1-2),
the pigment A1 and the pigment A2 having a pH within a range of 3 or more and 9 or less,

[Chem. 1]

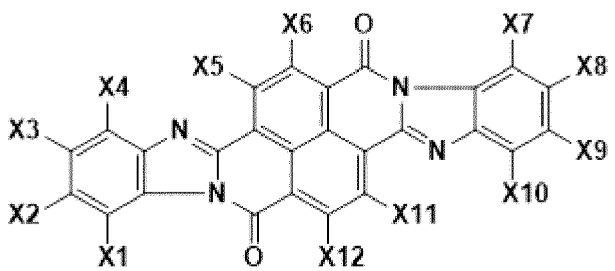

...(1-1)

wherein X1 to X12 each independently represent hydrogen, a halogen atom, an optionally branched alkyl group having 1 or more and 5 or less carbon atoms, an aromatic hydrocarbon group in which hydrogen atom may be replaced, a cyano group, a nitro group, an amino group, - OH, -COOH, -COO-$M^+$, -$SO_3$H, -$SO_3^-M^+$, a phthalimide group in which a hydrogen atom may be replaced, a phthalimidomethyl group, or a heterocyclic compound; and $M^+$ represents a cation,

[Chem. 2]

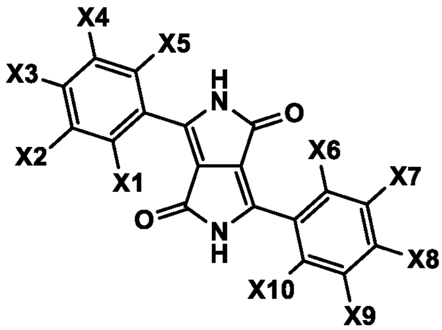

...(1-2)

wherein X1 to X10 each independently represent hydrogen, a halogen atom, an optionally branched alkyl group having 1 or more and 5 or less carbon atoms, an aromatic hydrocarbon group in which a hydrogen atom may be replaced, a cyano group, a nitro group, an amino group, - OH, -COOH, -COO-$M^+$, -$SO_3H$, -$SO_3$-$M^+$, a phthalimide group in which a hydrogen atom may be replaced, a phthalimidomethyl group, or a heterocyclic compound; and $M^+$ represents a cation.

2. The nonaqueous ink composition according to claim 1, wherein the pigment A1 and the pigment A2 have a volume-based cumulative 90% particle diameter (D90) of 500 nm or less.

3. The nonaqueous ink composition according to claim 1 or 2, wherein a content of the pigment A1 and the pigment A2 is 0.1% by mass or more and 8.0% by mass or less in a total amount of the nonaqueous ink composition.

4. The nonaqueous ink composition according to any one of claims 1 to 3, wherein the organic solvent comprises the following organic solvent B,
wherein the organic solvent B is at least one selected from the group consisting of an alkyl amide-based solvent (b1), a cyclic amide-based solvent (b2), and a lactone-based solvent (b3).

5. A nonaqueous ink composition to be ejected by an inkjet method, the nonaqueous ink composition comprising: a pigment; a pigment dispersant; and an organic solvent,
the pigment comprising a halogenated phthalocyanine pigment A3, the organic solvent comprising the following organic solvent B:
at least one selected from the group consisting of an alkyl amide-based solvent (b1), a cyclic amide-based solvent (b2), and a lactone-based solvent (b3).

6. The nonaqueous ink composition according to claim 5, wherein the pigment A3 has a volume-based cumulative 50% particle diameter (D50) of 30 nm or more and 150 nm or less.

7. The nonaqueous ink composition according to claim 5 or 6, wherein the pigment A3 has a volume-based cumulative 90% particle diameter (D90) of 50 nm or more and 300 nm or less.

8. The nonaqueous ink composition according to any one of claims 5 to 7, wherein a content of the pigment A3 is 0.1% by mass or more and 8.0% by mass or less in a total amount of the nonaqueous ink composition.

9. The nonaqueous ink composition according to any one of claims 5 to 8, wherein the pigment A3 is at least one selected from the group consisting of a chlorinated phthalocyanine pigment, a brominated phthalocyanine pigment, and a chlorinated and brominated phthalocyanine pigment.

10. The nonaqueous ink composition according to any one of claims 5 to 9, wherein the pigment A3 is at least one selected from the group consisting of a halogenated copper phthalocyanine pigment and a halogenated zinc phthalocyanine pigment.

11. The nonaqueous ink composition according to any one of claims 5 to 10, wherein the organic solvent comprises a glycol ether-based solvent.

12. The nonaqueous ink composition according to any one of claims 5 to 11, wherein a content of water is in a range of 1.0% by mass or less in the total amount of the nonaqueous ink composition.

13. The nonaqueous ink composition according to any one of claims 4 to 12, wherein the organic solvent B comprises an alkyl amide-based solvent (b1).

14. The nonaqueous ink composition according to claim 13, wherein the alkyl amide-based solvent (b1) is represented by the following general formula (2):

[Chem. 3]

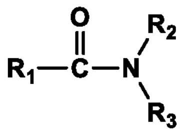
...(2)

wherein $R_1$ represents hydrogen or an alkyl group having 1 or more and 4 or less carbon atoms, and $R_2$ and $R_3$ each independently represent hydrogen or an alkyl group having 1 or more and 4 or less carbon atoms.

15. The nonaqueous ink composition according to claim 14, wherein the alkyl amide-based solvent (b1) contains at least one selected from the group consisting of N,N-diethylformamide, N,N-diethylpropanamide, and N,N-diethylacetamide.

16. The nonaqueous ink composition according to any one of claims 4 to 12, wherein the organic solvent comprises a cyclic amide-based solvent (b2).

17. The nonaqueous ink composition according to claim 16, wherein the cyclic amide-based solvent (b2) is represented by the following general formula (3):

[Chem. 4]

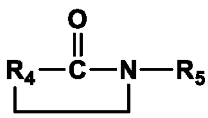
...(3)

wherein $R_4$ represents an alkylene group having 3 or more and 5 or less carbon atoms, and $R_5$ represents hydrogen or an alkyl group or an unsaturated hydrocarbon group having 1 or more and 4 or less carbon atoms.

18. The nonaqueous ink composition according to claim 17, wherein the cyclic amide-based solvent (b2) comprises at least one selected from the group consisting of ε-caprolactam, N-methylcaprolactam, and N-vinylcaprolactam.

19. The nonaqueous ink composition according to any one of claims 4 to 12, wherein the organic solvent contains a lactone-based solvent (b3) .

20. The nonaqueous ink composition according to claim 19, wherein the lactone-based solvent (b3) is represented by the following general formula (4):

[Chem. 5]

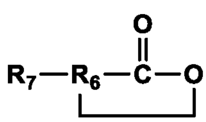
...(4)

wherein $R_6$ represents an alkylene group having 3 or more and 5 or less carbon atoms, and $R_7$ represents hydrogen or an alkyl group having 1 or more and 2 or less carbon atoms.

**21.** The nonaqueous ink composition according to claim 20, wherein the lactone-based solvent (b3) comprises at least one selected from the group consisting of γ-butyrolactone, γ-valerolactone, and ε-caprolactone.

**22.** The nonaqueous ink composition according to any one of claims 4 to 21, wherein a content of the organic solvent B is in a range of 1% by mass or more and 90% by mass or less in the total amount of the nonaqueous ink composition.

**23.** The nonaqueous ink composition according to any one of claims 1 to 22, wherein the pigment dispersant has a basic group.

**24.** The nonaqueous ink composition according to any one of claims 1 to 23, wherein the pigment dispersant has an amine value in a range of 20 mgKOH/g or more and 100 mgKOH/g or less.

**25.** The nonaqueous ink composition according to any one of claims 1 to 24, wherein a content of the pigment dispersant is in a range of 5 parts by mass or more and 150 parts by mass or less with respect to 100 parts by mass of the pigment in the nonaqueous ink composition.

**26.** The nonaqueous ink composition according to any one of claims 1 to 25, further comprising: a resin, wherein the resin comprises a resin having an intrinsic viscosity at 25°C of 90 mL/g or more in a range of 5% by mass or less in a total amount of the resin.

**27.** The nonaqueous ink composition according to claim 26, wherein the resin comprises at least one or more selected from the group consisting of an acrylic resin, a vinyl chloride resin, a cellulose resin, a polyester resin, and a polyurethane resin.

**28.** The nonaqueous ink composition according to any one of claims 1 to 27, further comprising: a surfactant, wherein the surfactant comprises a surfactant having a siloxane skeleton.

**29.** The nonaqueous ink composition according to any one of claims 1 to 28, which is used in an inkjet recording device including a storage mechanism capable of storing a nonaqueous ink composition, an inkjet ejecting port, and a tube that allows the nonaqueous ink composition to flow therethrough, wherein the tube is connected to the storage mechanism and the inkjet ejecting port, and includes a valve mechanism that adjusts a flow path of the nonaqueous ink composition.

**30.** A recording method comprising: ejecting the nonaqueous ink composition according to any one of claims 1 to 29 onto a surface of a substrate by an inkjet method.

**31.** A method for producing a recorded matter comprising: ejecting the nonaqueous ink composition according to any one of claims 1 to 29 onto a surface of a substrate by an inkjet method.

**32.** An ink set comprising: at least the nonaqueous ink composition according to any one of claims 1 to 29.

**33.** A recorded matter comprising a printed layer of the nonaqueous ink composition according to any one of claims 1 to 29 formed on a surface of a substrate.

**34.** An inkjet recording device that ejects the nonaqueous ink composition according to any one of claims 1 to 29 by an inkjet method, comprising:

a storage mechanism capable of storing the nonaqueous ink composition;
an inkjet ejecting port; and
a tube configured that allows the nonaqueous ink composition to flow therethrough,
the tube being connected to the storage mechanism and the inkjet ejecting port, and including a valve mechanism that adjusts a flow path of the nonaqueous ink composition.

**INTERNATIONAL SEARCH REPORT**

International application No.
**PCT/JP2022/016546**

**A. CLASSIFICATION OF SUBJECT MATTER**

***B41J 2/01***(2006.01)i; ***B41J 2/175***(2006.01)i; ***C09D 11/322***(2014.01)i; ***C09D 11/36***(2014.01)i; ***B41M 5/00***(2006.01)i
FI: C09D11/322; C09D11/36; B41J2/01 501; B41J2/175 503; B41J2/175 501; B41M5/00 120; B41M5/00 112

According to International Patent Classification (IPC) or to both national classification and IPC

**B. FIELDS SEARCHED**

Minimum documentation searched (classification system followed by classification symbols)

B41J2/01; B41J2/175; C09D11/322; C09D11/36; B41M5/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2016-084460 A (SEIKO EPSON CORP) 19 May 2016 (2016-05-19) paragraphs [0092]-[0095] | 1-34 |
| X | JP 2013-177597 A (DNP FINE CHEMICALS CO LTD) 09 September 2013 (2013-09-09) paragraphs [0089]-[0091] | 1-34 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **06 June 2022** | **14 June 2022** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2022/016546**

| Patent document cited in search report | Publication date (day/month/year) | Patent family member(s) | Publication date (day/month/year) |
|---|---|---|---|
| JP 2016-084460 A | 19 May 2016 | US 2016/0115330 A1<br>paragraph [0092]<br>EP 3012299 A1<br>CN 105542570 A | |
| JP 2013-177597 A | 09 September 2013 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2012172070 A
- JP 2017132891 A
- JP 2000355665 A
- JP 2993392 B
- JP 3076738 B